(19) Europäisches Patentamt
European Patent Office
Office européen des brevets

(11) **EP 4 675 329 A1**

(12) **EUROPEAN PATENT APPLICATION**
published in accordance with Art. 153(4) EPC

(43) Date of publication:
**07.01.2026 Bulletin 2026/02**

(21) Application number: **24764207.7**

(22) Date of filing: **28.02.2024**

(51) International Patent Classification (IPC):
***G02B 9/64*** *(2006.01)* ***G03B 17/12*** *(2021.01)*
***H04N 23/55*** *(2023.01)* ***G02B 13/00*** *(2006.01)*
***G02B 1/04*** *(2006.01)* ***G02B 3/00*** *(2006.01)*

(52) Cooperative Patent Classification (CPC):
**G02B 1/04; G02B 3/00; G02B 9/64; G02B 13/00; G03B 17/12; H04N 23/55**

(86) International application number:
**PCT/KR2024/002609**

(87) International publication number:
**WO 2024/181808 (06.09.2024 Gazette 2024/36)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **28.02.2023 KR 20230027273**
**28.02.2023 KR 20230027274**
**28.02.2023 KR 20230027275**

(71) Applicant: **LG INNOTEK CO. LTD**
**Gangseo-gu**
**Seoul 07796 (KR)**

(72) Inventor: **SON, Chang Gyun**
**Seoul 07796 (KR)**

(74) Representative: **M. Zardi & Co S.A.**
**Via G. B. Pioda, 6**
**6900 Lugano (CH)**

(54) **OPTICAL SYSTEM AND CAMERA MODULE**

(57) An optical system according to the present embodiment comprises first to seventh lenses arranged along an optical axis, wherein: the first lens has a positive (+) or negative (-) refractive power, the second lens has a positive (+) or negative (-) refractive power, the third lens has a positive (+) refractive power, the fourth lens has a positive (+) refractive power, the fifth lens has a negative (-) refractive power, the sixth lens has a positive (+) refractive power, and the seventh lens has a negative (-) refractive power; the sixth lens and the seventh lens are plastic lenses; and the fifth lens has the smallest radius of curvature on a sensor side from among the first to seventh lenses.

FIG. 1

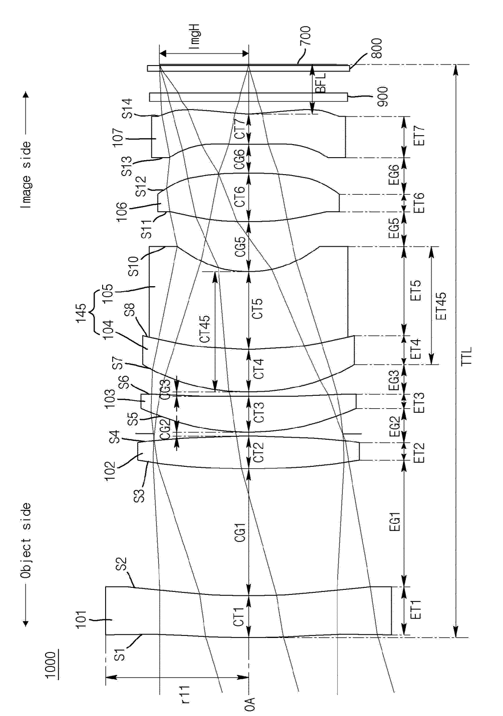


EP 4 675 329 A1

## Description

[Technical Field]

The present invention relates to an optical system for improved optical performance and a camera module including the same.

[Background Art]

Advanced driving assistance system (ADAS) is an advanced driver assistance system that assists the driver in driving being configured to sense the situation ahead, judge the situation with respect to the sensed results, and control the behavior of the vehicle with respect to the situation judgment. For example, an ADAS sensor device detects a vehicle ahead and recognizes a lane. Afterwards, when the target lane, target speed, and target ahead are determined, the vehicle's electrical stability control (ESC), engine management system (EMS), motor driven power steering (MDPS), and the like are controlled. Representatively, ADAS can be implemented as an automatic parking system, a low-speed city driving assistance system, a blind spot warning system, and so on.

Sensor devices for detecting the situation ahead in ADAS include GPS sensors, laser scanners, front radar, LIDAR, and the like, and the most representative one is a camera for taking pictures of the front, rear, and sides of the vehicle.

These cameras can be disposed outside or inside the vehicle to detect the surroundings of the vehicle. In addition, the cameras can be disposed inside the vehicle to detect the situations of the driver and passengers. For example, the camera can photograph the driver at a location adjacent to the driver and detect the driver's health status, whether the driver is drowsy, whether the driver is drinking, and the like. In addition, the camera can photograph the passenger at a location adjacent to the passenger and detect whether the passenger is sleeping, health status, and the like, and provide the driver with information about the passenger.

In particular, the most important element for obtaining an image from a camera is the imaging lens that forms the image. Recently, interest in high performance such as high definition and high resolution has been increasing, and research on an optical system including multiple lenses is being conducted to implement this. However, there is a problem that the characteristics of the optical system change when the camera is exposed to a harsh environment, such as high temperature, low temperature, moisture, or high humidity, outside or inside the vehicle. In this case, the camera has a problem that it is difficult to uniformly derive excellent optical characteristics and aberration characteristics.

Accordingly, new optical systems and cameras that can solve the above-described problems are required.

[Detailed Description of the Invention]

[Technical Subject]

An embodiment is intended to provide an optical system and a camera module having enhanced optical characteristics.

An embodiment is intended to provide an optical system and camera module having excellent optical performance in low-temperature to high-temperature environments.

An embodiment is intended to provide an optical system and camera module capable of preventing or minimizing changes in optical properties over a variety of temperature ranges.

[Technical Solution]

In order to solve the above technical problem, an optical system according to an embodiment of the present invention includes first to seventh lenses disposed along an optical axis, wherein the first lens has a negative (-) refractive power, the second lens has a positive (+) refractive power, the sixth lens has a positive (+) refractive power, and the seventh lens has a negative (-) refractive power, and the distance between the first lens and the second lens on an optical axis may be greater than the distance between the fifth lens and the sixth lens.

Among the first to seventh lenses, the effective diameter of the first lens may be the largest, and among the first to seventh lenses, the effective diameter of the fifth lens may be the smallest.

On the optical axis, the thickness of the fourth lens may be smaller than the thickness of the fifth lens.

On the optical axis, among the first to seventh lenses, the thickness of the fifth lens may be the largest.

On the optical axis, the distance between the first lens and the second lens may be greater than the thickness of the fifth lens.

On the optical axis, the first lens may have a meniscus shape convex toward the object side.

The following Conditional expression can be satisfied. <Conditional expression> 20 < TTL < 30 (In Conditional expression, TTL means the distance from an object side surface of the first lens to an upper surface of the image sensor on the optical axis.)

The following Conditional expression can be satisfied. <Conditional expression> 0 < CT2/CTI < 1 (In Conditional expression, CT1 means the thickness of the first lens on the optical axis and CT2 means the thickness of the second lens on the optical axis.)

In order to solve the above technical problem, an optical system according to an embodiment of the present invention includes first to seventh lenses being disposed along the optical axis, wherein the first lens has a negative (-) refractive power, the second lens has a positive (+) refractive power, the third lens has a positive (+) refractive power, and the thickness of the first lens along the optical axis may be smaller than the thickness of the fifth lens.

Among the first to seventh lenses, the effective diameter of the first lens may be the largest, and among the first to seventh lenses, the effective diameter of the fifth lens may be the smallest.

In the above optical axis, the sixth lens may have a shape in which both surfaces are convex.

On the optical axis, the seventh lens may have a meniscus shape convex toward the object side.

The following Conditional expression can be satisfied. <Conditional expression> 0 <F/L1R1 < 1 (In Conditional expression, F means the total focal length of the optical system, and L1R1 means the radius of curvature on the object side of the first lens.)

The following Conditional expression can be satisfied. <Conditional expression> 5 < TTL / ImgH < 8 (In the Conditional expression, TTL means the distance from an object side surface of the first lens to an upper surface of the image sensor on the optical axis, and ImgH means 1/2 of the maximum diagonal length of the image sensor on the optical axis.)

The following conditional expression can be satisfied. <Conditional expression> 1.8 < n1 < 1.9 (In Conditional expression, n1 means the refractive index of the d-line of the first lens.)

In order to solve the above technical problem, it includes first to seventh lenses disposed along an optical axis, wherein the first lens has a positive (+) or negative (-) refractive power, the second lens has a positive (+) or negative (-) refractive power, the third lens has a positive (+) refractive power, the fourth lens has a positive (+) refractive power, the fifth lens has a negative (-) refractive power, the sixth lens has a positive (+) refractive power, the seventh lens has a negative (-) refractive power, the sixth lens and the seventh lens are plastic lenses, and among the first to seventh lenses, the radius of curvature of a sensor side surface of the fifth lens is the smallest.

Among the first to seventh lenses, the fifth lens may have the smallest focal length.

The fifth lens is a lens disposed adjacent to the object side of the plastic lens, and among the first to seventh lenses, the effective diameter of the sensor side surface of the fifth lens may be the smallest.

The gap between any two adjacent lenses among the first to seventh lenses on the optical axis may be largest for the distance between the fifth lens and the sixth lens.

The optical system includes a cemented lens, and, excluding the cemented lens surface of the cemented lens, there may be no more than one surface among the object side surface and the sensor side surface among the first to seventh lenses having a radius of curvature greater than the radius of curvature of the object side surface of the first lens on an optical axis.

In order to solve the above technical problem, the optical system according to the present embodiment includes first to seventh lenses being disposed along an optical axis, wherein the first lens has a positive (+) or negative (-) refractive power, the second lens has a positive (+) or negative (-) refractive power, the third lens has a positive (+) refractive power, the fourth lens has a positive (+) refractive power, the fifth lens has a negative (-) refractive power, the sixth lens has a positive (+) refractive power, and the seventh lens has a negative (-) refractive power.

The fourth lens and the fifth lens are cemented lenses, and among the maximum values of the absolute values of the slope angles of the object side and sensor side surfaces of the first to seventh lenses, excluding the cemented surface of the cemented lens, the maximum value of the absolute value of the slope angle of the object side surface of the first lens may be the smallest. (Slope angle: normal inclination at any point on the lens surface)

Among the first to seventh lenses, the difference between the sag value on the optical axis of the object side surface of the first lens and the maximum sag value of the object side surface of the first lens may be the smallest.

In order to solve the above technical problem, an optical system according to the present embodiment includes first to seventh lenses being disposed along an optical axis, wherein the third lens has a positive (+) refractive power, the fourth lens has a positive (+) refractive power, the fifth lens has a negative (-) refractive power, the sixth lens has a positive (+) refractive power, and the seventh lens has a negative (-) refractive power, and the fourth and fifth lenses are cemented lenses, and the effective diameter of the first lens among the first to seventh lenses is the largest and can satisfy the following Conditional expression. <Conditional expression> 1.2 < CAL1/ImgH < 1.5 (In Conditional expression, CAL1 is the size of the effective diameter of the first lens, and ImgH is 1/2 of the maximum diagonal length of the image sensor on the optical axis.)

The following Conditional expression can be satisfied. <Conditional expression> 0.2 < CT45/TTL < 0.22 (In Conditional expression, CT45 is the thickness of the cemented lens on the optical axis, and TTL is the distance between the image sensor and the first lens on the optical axis.)

The following Conditional expression can be satisfied. <Conditional expression> $0.5 < \Sigma CT/TTL < 0.75$ (In Conditional expression, ΣCT is the sum of the thicknesses of the first to seventh lenses on the optical axis, and TTL is the distance from the first lens to the image sensor on the optical axis.)

Among the object side and sensor side surfaces of the first to seventh lenses, there may be four or fewer lens surfaces having a radius of curvature greater than 60 mm.

Among the object side and sensor side surfaces of the first to seventh lenses, there may be four or more and five or fewer lens surfaces having a curvature radius smaller than 20 mm.

In order to solve the above technical problem, an optical system according to the present embodiment includes first to seventh lenses being disposed along an optical axis, wherein the first lens has a positive (+) or negative (-) refractive power, the second lens has a positive (+) or negative (-) refractive power, the third lens has a positive (+) refractive power, the fourth lens has a positive (+) refractive power, the fifth lens has a negative (-) refractive power, the sixth lens has a positive (+) refractive power, and the seventh lens has a negative (-) refractive power, wherein the first lens is an aspherical lens made of glass, and the sixth and seventh lenses are plastic lenses, and among the first to seventh lenses, the sensor side curvature radius of the fifth lens is the smallest, and the sensor side curvature radius of the fifth lens may be smaller than the object side curvature radius of the sixth lens.

In order to solve the above technical problem, an optical system according to an embodiment of the present invention includes first to seventh lenses being disposed along an optical axis, wherein the first lens has a negative (-) refractive power, the second lens has a positive (+) refractive power, the sixth lens has a positive (+) refractive power, and the seventh lens has a negative (-) refractive power, and the thickness of the first lens on the optical axis may be greater than the thickness of the third lens.

On the optical axis, the distance between the first lens and the second lens may be smaller than the distance between the second lens and the third lens.

On the optical axis, the seventh lens may have a meniscus shape convex toward the object side.

On the optical axis, the thickness of the third lens may be smaller than the distance between the sixth lens and the seventh lens.

On the optical axis, the thickness of the second lens may be the smallest among the first to seventh lenses.

The third lens may have a positive (+) refractive power, the fourth lens may have a positive (+) refractive power, and the fifth lens may have a negative (-) refractive power.

The following Conditional expression can be satisfied. <Conditional expression> $20 < TTL < 30$ (In Conditional expression, TTL means the distance from the object side surface of the first lens to the upper surface of the image sensor on the optical axis.)

The following Conditional expression can be satisfied. <Conditional expression> $2 < CT1 / CT7 < 3$ (In Conditional expression, CT1 means the thickness of the first lens on the optical axis, and CT7 means the thickness of the seventh lens on the optical axis.)

In order to solve the above technical problem, an optical system according to an embodiment of the present invention includes first to seventh lenses being disposed along an optical axis, wherein the first lens has a negative (-) refractive power, the second lens has a positive (+) refractive power, the third lens has a positive (+) refractive power, and the distance between the first lens and the second lens on the optical axis may be smaller than the distance between the second lens and the third lens.

Among the first to seventh lenses, the effective diameter of the fifth lens may be the smallest.

On the optical axis, the thickness of the first lens among the first to seventh lenses may be the largest.

On the optical axis, the distance between the second lens and the third lens may be greater than the thickness of the sixth lens.

The following Conditional expression can be satisfied. <Conditional expression> $0 < F / |L1R1| < 1$ (In Conditional expression, F means the total focal length of the optical system, and L1R1 means the radius of curvature of the object side of the first lens.)

The following Conditional expression can be satisfied. <Conditional expression> $1.8 < n1 < 1.9$ (In Conditional expression, n1 means the refractive index of the d-line of the first lens.)

Conditional expression below can be satisfied. <Conditional expression> $1.8 < n2 < 1.9$ (In Conditional expression, n2 means the refractive index of the second lens at the d-line.)

[Advantageous Effects]

An optical system and a camera module according to an embodiment may have enhanced optical characteristics. In detail, in an optical system according to an embodiment, a plurality of lenses may have set thicknesses, refractive powers, and gap from adjacent lenses. Accordingly, an optical system and a camera module according to an embodiment may have enhanced MTF characteristics, aberration control characteristics, resolution characteristics, and the like in a range of set angle of view, and may have good optical performance in the edge portion of the angle of view.

In addition, an optical system and a camera module according to an embodiment can have good optical performance in a low temperature to high temperature range (-40°C to 105°C). In detail, a plurality of lenses included in the optical system can have set materials, refractive powers, and refractive indices. Accordingly, when the refractive index of each lens changes according to a temperature change and the focal length of each lens changes due to this, it can be mutually compensated by the plastic lens and the glass lens. That is, the optical system can effectively perform distribution of refractive power in a low temperature to high temperature range, and can prevent or minimize changes in optical characteristics in a low temperature to high temperature range. Therefore, an optical system and a camera module according to an embodiment can maintain enhanced optical characteristics in various temperature ranges.

In addition, an optical system and a camera module according to an embodiment can satisfy the angle of view set through the mixing the plastic lens and the glass lens and implement excellent optical characteristics. Due to this, the optical system can provide a slimmer vehicle camera module. Accordingly, the optical system and camera module can be provided for various applications and devices, and can have excellent optical characteristics even in harsh temperature environments, such as when exposed to the outside of a vehicle or inside a vehicle at high temperatures in the summer.

[Brief Description of Drawings]

FIG. 1 is a side cross-sectional view of an optical system according to the first embodiment and a camera module having the same.

FIG. 2 is a side cross-sectional view for explaining the relationship between the nth and (n-1)th lenses according to FIG. 1.

FIG. 3 is a table showing aspherical coefficients of lenses in an optical system of FIG. 1.

FIG. 4 is a table showing the thickness of each lens and the gap between adjacent lenses in an optical system of FIG. 1.

FIG. 5 is a table showing the Sag values of lens surfaces of first to seventh lenses in an optical system of FIG. 1.

FIG. 6 is a table showing slope angle values of lens surfaces of first to seventh lenses in an optical system of FIG. 1.

FIG. 7 is a table showing chief ray angle (CRA) data at room temperature, low temperature, and high temperature according to the position of the image sensor in an optical system of FIG. 1.

FIG. 8 is a graph showing data on the diffraction modulation transfer function (MTF) of an optical system of FIG. 1 at room temperature.

FIG. 9 is a graph showing data on diffraction MTF of an optical system of FIG. 1 at low temperature.

FIG. 10 is a graph showing data on diffraction MTF of an optical system of FIG. 1 at high temperature.

FIG. 11 is a graph showing data on aberration characteristics of an optical system of FIG. 1 at room temperature.

FIG. 12 is a graph showing data on aberration characteristics of an optical system of FIG. 1 at low temperature.

FIG. 13 is a graph showing data on aberration characteristics of an optical system of FIG. 1 at high temperature.

FIG. 14 is a side cross-sectional view of an optical system according to a second embodiment and a camera module having the same.

FIG. 15 is a side cross-sectional view for explaining the relationship between nth and (n-1)th lenses according to FIG. 14.

FIG. 16 is a table showing aspherical coefficients of lenses in an optical system of FIG. 14.

FIG. 17 is a table showing thickness of each lens and gap between adjacent lenses in an optical system of FIG. 14.

FIG. 18 is a table showing Sag values of lens surfaces of first to seventh lenses in an optical system of FIG. 14.

FIG. 19 is a table showing Slope angle values of lens surfaces of first to seventh lenses in an optical system of FIG. 14.

FIG. 20 is a table showing chief ray angle (CRA) data at room temperature, low temperature, and high temperature according to the position of an image sensor in an optical system of FIG. 14.

FIG. 21 is a graph showing data on diffraction modulation transfer function (MTF) of an optical system of FIG. 14 at room temperature.

FIG. 22 is a graph showing data on diffraction MTF of an optical system of FIG. 14 at low temperature.

FIG. 23 is a graph showing data on diffraction MTF of an optical system of FIG. 14 at high temperature.

FIG. 24 is a graph showing data on aberration characteristics of an optical system of FIG. 14 at room temperature.

FIG. 25 is a graph showing data on aberration characteristics of an optical system of FIG. 14 at low temperature.

FIG. 26 is a graph showing data on aberration characteristics at high temperatures of an optical system of FIG. 14.

FIG. 27 is a side cross-sectional view of an optical system according to a third embodiment and a camera module having the same.

FIG. 28 is a side cross-sectional view for explaining the relationship between the nth and (n-1)th lenses according to FIG. 27.

FIG. 29 is a table showing aspherical coefficients of lenses in an optical system of FIG. 27.

FIG. 30 is a table showing the thickness of each lens and the gap between adjacent lenses in an optical system of FIG. 27.

FIG. 31 is a table showing Sag values of lens surfaces of first to seventh lenses in an optical system of FIG. 27.

FIG. 32 is a table showing Slope angle values of lens surfaces of first to seventh lenses in an optical system of FIG. 27.

FIG. 33 is a table showing chief ray angle (CRA) data at room temperature, low temperature, and high temperature according to the position of an image sensor in an optical system of FIG. 27.

FIG. 34 is a graph showing data on diffraction diffraction modulation transfer function (MTF) of an optical system of FIG. 27 at room temperature.

FIG. 35 is a graph showing data on diffraction MTF of an optical system of FIG. 27 at low temperature.

FIG. 36 is a graph showing data on diffraction MTF of an optical system of FIG. 27 at high temperatures.

FIG. 37 is a graph showing data on aberration characteristics of an optical system of FIG. 27 at room temperatures.

FIG. 38 is a graph showing data on aberration characteristics of an optical system of FIG. 27 at low temperatures.

FIG. 39 is a graph showing data on aberration characteristics of an optical system of FIG. 27 at high temperatures.

FIG. 40 is a cross-sectional side view of an optical system according to a fourth embodiment and a camera module having the same.

FIG. 41 is a cross-sectional view for explaining the relationship between nth and (n-1)th lenses according to FIG. 40.

FIG. 42 is a table showing aspherical coefficients of lenses in an optical system of FIG. 40.

FIG. 43 is a table showing the thickness of each lens and the gap between adjacent lenses in an optical system of FIG. 40.

FIG. 44 is a table showing Sag values of lens surfaces of first to seventh lenses in an optical system of FIG. 40.

FIG. 45 is a table showing Slope angle values of lens surfaces of the first to seventh lenses in an optical system of FIG. 40.

FIG. 46 is a table showing chief ray angle (CRA) data at room temperature, low temperature, and high temperature according to the position of an image sensor in an optical system of FIG. 40.

FIG. 47 is a graph showing data on diffraction modulation transfer function (MTF) of an optical system of FIG. 40 at room temperature.

FIG. 48 is a graph showing data on diffraction MTF of an optical system of FIG. 40 at low temperature.

FIG. 49 is a graph showing data on diffraction MTF of an optical system of FIG. 40 at high temperature.

FIG. 50 is a graph showing data on the aberration characteristics of an optical system of FIG. 40 at room temperature.

FIG. 51 is a graph showing data on aberration characteristics at low temperatures of an optical system of FIG. 40.

FIG. 52 is a graph showing data on aberration characteristics at high temperatures of an optical system of FIG. 40.

FIG. 53 is a side cross-sectional view of an optical system according to a fifth embodiment and a camera module having the same.

FIG. 54 is a side cross-sectional view for explaining the relationship between nth and (n-1)th lenses according to FIG. 53.

FIG. 55 is a table showing aspherical coefficients of lenses in an optical system of FIG. 53.

FIG. 56 is a table showing the thickness of each lens and the gap between adjacent lenses of the optical system of FIG. 53.

FIG. 57 is a table showing Sag values of lens surfaces of first to seventh lenses in an optical system of FIG. 53.

FIG. 58 is a table showing Slope angle values of lens surfaces of first to seventh lenses in an optical system of FIG. 53.

FIG. 59 is a table showing chief ray angle (CRA) data at room temperature, low temperature, and high temperature according to the position of an image sensor in an optical system of FIG. 53.

FIG. 60 is a graph showing data on diffraction modulation transfer function (MTF) at room temperature of the optical system of FIG. 53.

FIG. 61 is a graph showing data on diffraction MTF at low temperatures of an optical system of FIG. 53.

FIG. 62 is a graph showing data on diffraction MTF at high temperatures of an optical system of FIG. 53.

FIG. 63 is a graph showing data on aberration characteristics of an optical system of FIG. 53 at room temperature.

FIG. 64 is a graph showing data on aberration characteristics of an optical system of FIG. 53 at low temperatures.

FIG. 65 is a graph showing data on aberration characteristics of an optical system of FIG. 53 at high temperatures.

FIG. 66 is a side cross-sectional view of an optical system according to a sixth embodiment and a camera module having the same.

FIG. 67 is a side cross-sectional view for explaining the relationship between nth and (n-1)th lenses according to FIG. 66.

FIG. 68 is a table showing aspherical coefficients of lenses in an optical system of FIG. 66.

FIG. 69 is a table showing the thickness of each lens and the gap between adjacent lenses in an optical system of FIG. 66.

FIG. 70 is a table showing Sag values of lens surfaces of first to seventh lenses in an optical system of FIG. 66.

FIG. 71 is a table showing slope angle values of lens surfaces of the first to seventh lenses in an optical system of FIG. 66.

FIG. 72 is a table showing chief ray angle (CRA) data at room temperature, low temperature, and high temperature according to the position of the image sensor in an optical system of FIG. 66.

FIG. 73 is a graph showing data on diffraction modulation transfer function (MTF) of an optical system of FIG. 66 at room temperature.

FIG. 74 is a graph showing data on diffraction MTF of an optical system of FIG. 66 at low temperature.

FIG. 75 is a graph showing data on diffraction MTF of an optical system of FIG. 66 at high temperature.

FIG. 76 is a graph showing data on aberration characteristics of an optical system of FIG. 66 at room temperature.

FIG. 77 is a graph showing data on aberration characteristics of an optical system of FIG. 66 at low temperature.

FIG. 78 is a graph showing data on aberration characteristics of an optical system of FIG. 66 at high temperature.

FIG. 79 is an example of a vehicle having an optical system according to an embodiment of the invention.

[BEST MODE]

Hereinafter, preferred embodiments of the present invention will be described in detail with reference to the accompanying drawings.

However, the technical idea of the present invention is not limited to some embodiments to be described, but may be implemented in various forms, and within the scope of the technical idea of the present invention, one or more of the constituent elements may be selectively combined or substituted between embodiments.

In addition, the terms (including technical and scientific terms) used in the embodiments of the present invention, unless explicitly defined and described, can be interpreted as a meaning that can be generally understood by a person skilled in the art, and commonly used terms such as terms defined in the dictionary may be interpreted in consideration of the meaning of the context of the related technology.

In addition, terms used in the present specification are for describing embodiments and are not intended to limit the present invention.

In the present specification, the singular form may include the plural form unless specifically stated in the phrase, and when described as "at least one (or more than one) of A and B and C", it may include one or more of all combinations that can be combined with A, B, and C.

In addition, in describing the components of the embodiment of the present invention, terms such as first, second, A, B, (a), and (b) may be used. These terms are merely intended to distinguish the components from other components, and the terms do not limit the nature, order or sequence of the components.

And, when a component is described as being 'connected', 'coupled' or 'interconnected' to another component, the component is not only directly connected, coupled or interconnected to the other component, but may also include cases of being 'connected', 'coupled', or 'interconnected' due that another component between that other components.

In addition, when described as being formed or disposed in "on (above)" or "below (under)" of each component, "on (above)" or "below (under)" means that it includes not only the case where the two components are directly in contact with, but also the case where one or more other components are formed or disposed between the two components. In addition, when expressed as "on (above)" or "below (under)", the meaning of not only an upward direction but also a downward direction with respect to one component may be included.

In the description of the invention, the "object side surface" may mean a surface of a lens facing the object side with respect to an optical axis OA, and the "sensor side surface" may mean a surface of a lens facing the imaging surface (image sensor) with respect to an optical axis. The "object side" may be the "object side surface," and the "sensor side surface" may be the "image side." A convex surface of a lens may mean a convex shape on an optical axis or the paraxial region, and a concave surface of a lens may mean a concave shape on an optical axis or the paraxial region. The radius of curvature, the center thickness, and an optical axis gap between lenses described in the table for lens data may mean values (unit: mm) on an optical axis. The vertical direction may mean a direction perpendicular to an optical axis, and the end of a lens or a lens surface may mean the end of an effective area of a lens through which incident light passes. The size of the effective diameter of the lens surface may have a measurement error of up to +0.4 mm depending on the measurement method, and the like. The paraxial region means a very narrow region near an optical axis, and is a region where the distance of light falling from an optical axis **OA** is almost 0. Hereinafter, the meaning of an optical axis may include the center of each lens or a very narrow region near an optical axis.

The optical systems **1000, 1100, 1200, 1300, 1400,** and **1500** according to a first to sixth embodiments of the present invention may include five or more lenses. The optical systems **1000, 1100, 1200, 1300, 1400,** and **1500** and the camera module having the same may be mounted inside or outside a vehicle to monitor a driver or sense external objects or lanes. The material of the lenses may be selected from glass or plastic, and the linear expansion coefficient of glass is smaller than that of plastic. Accordingly, the glass lens is employed to suppress the change in the focal imaging position due to temperature change. However, the glass lens is expensive compared to the plastic lens, and there is a problem that it is difficult to meet the demand for low cost. Therefore, the lenses in the optical systems **1000, 1100, 1200, 1300, 1400,** and **1500** are required to have a configuration in which the glass lens and the plastic lens are mixed. By employing these plastic lenses, the optical systems **1000, 1100, 1200, 1300, 1400,** and **1500** can provide weight reduction and low cost by reducing the thickness of the plastic lenses, and can provide good correction for various aberrations such as spherical aberration and chromatic aberration due to the plastic lenses. In addition, since the plastic lenses can provide aspherical lenses, the distortion portion in the peripheral portion can be minimized.

The optical systems **1000, 1100, 1200, 1300, 1400** and **1500** may include n lenses, where the nth lens may be the last lens adjacent to the image sensor **700,** and the (n-1)th lens may be the lens closest to the last lens. 'n' is an integer greater than or equal to 5, for example, 5 to 8. The n lenses may have a ratio of glass lenses to plastic lenses in a range of 5:2 to 5:3.

At least one lens closest to the object within the optical systems **1000, 1100, 1200, 1300, 1400** and **1500** may be made of glass. Three or more lenses closest to the object, for example, 3 to 5 lenses, may be made of glass. Since the rate of contraction and expansion of lenses made of glass is smaller than that of lenses made of plastic due to temperature changes, lenses made of glass may be disposed in an area adjacent to the outside within the lens barrel.

At least one lens closest to the image sensor **700** within the optical systems **1000, 1100, 1200, 1300, 1400** and **1500** may be made of plastic. For example, at least two lenses closest to the image sensor **700** may be made of plastic, and preferably, at least two lenses adjacent to the image sensor **700** may be made of plastic. That is, since the nth and (n-1)th lenses in the optical systems **1000, 1100, 1200, 1300, 1400** and **1500** are disposed as plastic lenses, various aberrations can be corrected for the incident light of the image sensor **700.**

Within the optical systems **1000, 1100, 1200, 1300, 1400** and **1500,** lenses made of plastic material can be disposed sequentially, and lenses made of glass material can be disposed sequentially. Within the optical systems **1000, 1100, 1200, 1300, 1400** and **1500,** lenses made of plastic material can be disposed between lenses made of glass material. Within the optical systems **1000, 1100, 1200, 1300, 1400** and **1500,** lenses made of glass material can be disposed between lenses made of plastic material.

Each of the lenses **101-107, 201-207, 301-307, 401-407, 501-507** and **601-607** may have an object side surface and a sensor side surface. The optical system can have more lenses with an aspherical sensor side surface and an aspherical object side surface than the number of plastic lenses. The optical system can have fewer lenses with a spherical sensor side surface and a spherical object side surface than the lenses with aspherical surfaces on both surfaces. The optical systems **1000, 1100, 1200, 1300, 1400** and **1500** have more aspherical lenses than spherical lenses, so it can correct various aberrations.

Among the lenses of the optical systems **1000, 1100, 1200, 1300, 1400** and **1500,** a lens having a maximum refractive index can be positioned adjacent to an object. The maximum refractive index can be 1.7 or more. The chromatic dispersion of light incident by the lens having the maximum refractive index can be increased, and the center thickness can be made thinner than the edge thickness. In addition, since the lens having the maximum refractive index is disposed on the object side, it is easy to change the radius of curvature of the second and subsequent lenses, and the center thickness can be increased.

Within the optical systems **1000, 1100, 1200, 1300, 1400** and **1500,** a lens having a maximum effective diameter can be disposed at the center of the object side and the sensor side. The effective diameter of the lens can increase and decrease as it moves from the object side to the sensor side. The effective diameter of the lens can decrease and increase and then decrease again as it moves from the object side to the sensor side. Through this, since the light incident in the optical systems **1000, 1100, 1200, 1300, 1400** and **1500** is structured to move away from an optical axis and then gather back on an optical axis, the optical systems **1000, 1100, 1200, 1300, 1400** and **1500** can form a stable optical path.

The effective diameter may be the diameter of the effective area on which effective light is incident from each lens. The effective diameter is the length in a direction (X, Y) orthogonal to an optical axis, and is the average of the effective diameter of the object side surface of each lens and the effective diameter of the sensor side surface. The "diameter of the lens surface" may mean the "effective diameter of the lens." The "diameter of the lens" may be the diameter of the entire lens including the flange portion of the lens in addition to the effective area of the lens. Although the flange of the lens is not illustrated in the drawings, the flange may be a portion formed by being protruded in a direction perpendicular to an optical axis from the side surface of the lens so that the lens is coupled to the barrel. Effective light may not be incident on the flange. A spacer may be additionally disposed between the flanges of different lenses so that the lens is coupled to the barrel.

Each of the lenses **101-107, 201-207, 301-307, 401-407, 501-507** and **601-607** may include an effective area and an ineffective area. The effective area may be an area through which light incident on each of the lenses passes. In other words, the effective area may be defined as an effective area or effective diameter through which the incident light is refracted to implement optical characteristics. The ineffective area may be disposed around the effective area. The ineffective area may be an area through which effective light is not incident on a plurality of lenses. In other words, the ineffective area may be an area unrelated to the optical characteristics. In addition, an end portion of the ineffective area may be an area fixed to a lens barrel or the like that accommodates the lens.

Within the optical systems **1000, 1100, 1200, 1300, 1400** and **1500,** the total top length (TTL) can be more than 5 times, for example, more than 6 times and less than 8 times, than Imgh. The total track length (TTL) is the distance from the center of the object side surface of the first lens to an upper surface of the image sensor **700** on an optical axis **OA.** Imgh is half the maximum diagonal length of the image sensor **500.** Within the optical systems **1000, 1100, 1200, 1300, 1400,** and **1500,** the effective focal length (EFL) is provided to be more than 10 mm, and the angle of view FOV is provided to be less than 45 degrees, so that the vehicle camera module can be provided as a standard optical system for a vehicle camera module. For example, the optical system and the camera module according to the embodiment can be applied to a camera for an advanced driving assistance system (ADAS) being provided inside or outside a vehicle.

The optical systems **1000, 1100, 1200, 1300, 1400,** and **1500** may have a condition of TTL/Imgh of 5 or more and 8 or less, for example, 5 or more and 6.5 or less. By setting the optical systems **1000, 1100, 1200, 1300, 1400,** and **1500** to have the value of TTL/Imgh of 5 times or more and 8 times or less, a vehicle lens optical system can be provided. Accordingly, the optical systems **1000, 1100, 1200, 1300, 1400,** and **1500** can provide an image without exaggeration or distortion for the image that is being formed.

An effective diameter of at least one plastic lens within the optical systems **1000, 1100, 1200, 1300, 1400,** and **1500** may be smaller than the length of the image sensor **700.** The effective diameter is the diameter or length of the effective area onto which light is incident. The length of the image sensor **700** is the maximum length of a diagonal line in a direction orthogonal to an optical axis **OA.** The number of lenses having an effective diameter larger than the length of the image sensor **700** within the optical systems **1000, 1100, 1200, 1300, 1400,** and **1500** may be 50% or more and 60% or more, and the number of lenses having an effective diameter smaller than the length of the image sensor **700** may be less than 50% or less than 50%.

The optical systems **1000, 1100, 1200, 1300, 1400,** and **1500** may include at least one cemented lenses **145, 245, 345, 445, 545,** and **645** therein. The cemented lenses **145, 245, 345, 445, 545,** and **645** may be lenses in which at least two lenses having different refractive powers are cemented, and a gap between the two lenses may be less than 0.01 mm. The cemented lenses **145, 245, 345, 445, 545,** and **645** may be lenses in which two lenses having different focal lengths are cemented. The cementation of the two lenses may be bonded using an adhesive. An effective diameter of at least one lens or all lenses disposed on the object side with respect to the cemented lenses **145, 245, 345, 445, 545,** and **645** may be larger than the length of the image sensor **700.** The effective diameter of at least one lens disposed on the sensor side with respect to the cemented lenses **145, 245, 345, 445, 545,** and **645** may be smaller than the length of the image sensor **700.** In addition, among the cemented lenses **145, 245, 345, 445, 545,** and **645,** the object side lenses **103, 203, 303, 403, 503,** and **603** may be larger than the length of the image sensor **700,** and the sensor side lenses **104, 204, 304, 404, 504,** and **604** may be larger than the length of the image sensor **700.**

The lenses between the cemented lenses **145, 245, 345, 445, 545,** and **645** and the first lenses **101, 201, 301, 401, 501,** and **601** may be made of glass or plastic. The lenses disposed between the cemented lenses **145, 245, 345, 445, 545,** and **645** and the image sensor **700** may be made of plastic. The lenses between the cemented lenses **145, 245, 345, 445, 545,** and **645** and the first lenses **101, 201, 301, 401, 501,** and **601** may be spherical lenses on both surfaces or aspherical lenses on both surfaces. The lenses disposed between the cemented lenses **145, 245, 345, 445, 545,** and **645** and the image sensor **700** may be aspherical lenses on both surfaces. The both surfaces are the object side surface and the sensor side surface. Therefore, by arranging the aspherical lenses between the cemented lenses **145, 245, 345, 445,**

**545,** and **645** and the image sensor **700,** the optical performance can be improved by correcting the curvature aberration and the chromatic aberration.

A lens unit can be a mixture of glass lenses and plastic lenses. The number of plastic lenses can be 60% or more of the total number of lenses, and may range from 40% to 85% or from 60% to 80%. Accordingly, when more plastic lenses are disposed within the camera module, the weight of the camera module can be reduced, and the plastic material makes it easy to polish and process, is resistant to external impacts, has high price competitiveness, and makes it easy to secure materials. In addition, various aberrations can be corrected by the plastic lens, so that optical performance deterioration can be prevented.

By mixing more plastic lenses into the optical systems **1000, 1100, 1200, 1300, 1400,** and **1500,** an embodiment of the invention can reduce the weight of a camera module, provide a lower manufacturing cost, suppress deterioration of optical characteristics due to temperature change, allow various types of plastic lenses to replace glass lenses, and the lens surface, such as an aspherical surface or a free-form surface, can be easily polished and processed.

The lens units **100, 200, 300, 400, 500,** and **600** may include lenses of a first material and lenses of a second material disposed along an optical axis **OA.** The first material may be a glass material, and the second material may be a plastic material. The lenses of the first material may be disposed between the lenses of the second material. The lenses of the second material may be disposed between the lenses of the first material.

The lens units **100, 200, 300, 400, 500,** and **600** may include a first material lens having an aspherical surface along an optical axis **OA,** lenses of the first material having a spherical surface, and lenses of the second material having an aspherical surface. The first material may be a glass material, and the second material may be a plastic material. The lens of the first material having a spherical surface may be disposed between the lenses of the second material having an aspherical surface. The lens of the second material may be disposed between the lens of the first material having an aspherical surface and the lens of the first material having a spherical surface.

The effective diameter of the lens closest to the object side within the lens units **100, 200, 300, 400, 500,** and **600** may be larger than the effective diameter of the lens closest to the image sensor **700.** Accordingly, the brightness of the optical system can be controlled. The effective diameter may be an average effective diameter of the object side surface and the sensor side surface of each lens. By controlling the effective diameter size of each lens, the optical systems **1000, 1100, 1200, 1300, 1400,** and **1500** can control the incident light to compensate for the deterioration of optical characteristics due to resolution and temperature change, improve chromatic aberration control characteristics, and improve the vignetting characteristics of the optical systems **1000, 1100, 1200, 1300, 1400,** and **1500.**

The lens units **100, 200, 300, 400, 500,** and **600** may include a first lenses **101, 201, 301, 401, 501,** and **601,** a second lenses **102, 202, 302, 402, 502,** and **602,** a third lenses **103, 203, 303, 403, 503,** and **603,** a fourth lenses **104, 204, 304, 404, 504,** and **604,** a fifth lenses **105, 205, 305, 405, 505,** and **605,** a sixth lenses **106, 206, 306, 406, 506,** and **606,** and a seventh lenses **107, 207, 307, 407, 507,** and **607** which are aligned from the object side to the sensor side along an optical axis.

Within the lens units **100, 200, 300, 400, 500,** and **600,** when the focal length is an absolute value, the focal length of the lens closest to the object may be greater than the focal length of the plastic lens. Here, the plastic lens may be at least one lens disposed on the sensor side of the cemented lens, or at least one lens adjacent to the image sensor.

The lens units **100, 200, 300, 400, 500,** and **600** may be disposed in a camera module having an inner barrel on one side or the entire inner surface of a lens barrel. The lens units **100, 200, 300, 400, 500,** and **600** may be disposed in a camera module having a plurality of inner barrels around different lenses of the lens barrel. The lens units **100, 200, 300, 400, 500,** and **600** may be disposed in a camera module having a first inner barrel in contact with an outer surface of at least one lens of the lens barrel and a second inner barrel in contact with the outer surface of at least one lens. The lens units **100, 200, 300, 400, 500,** and **600** may be disposed in a camera module having a plurality of inner barrels each of which is disposed between an outer side of at least one or two or more lenses and a lens barrel. The lens units **100, 200, 300, 400, 500,** and **600** can be disposed in a camera module in which multiple inner barrels have a material different from that of the lens barrel.

Among the lenses constituting the lens units **100, 200, 300, 400, 500,** and **600,** at least a portion of the lenses made of glass may be disposed in the lens barrel, and at least a portion of the lenses made of plastic may be disposed in an inner barrel disposed within the lens barrel. Through this, the optical systems **1000, 1100, 1200, 1300, 1400,** and **1500** may maintain resolution according to temperature change. The lens units **100, 200, 300, 400, 500,** and **600** may be disposed in a camera module having different barrels to minimize decentering of a lens, for example, a plastic lens being expanded according to temperature change. The lens barrel in which the lens units **100, 200, 300, 400, 500,** and **600** is disposed has a plurality of inner barrels within the lens barrel, thereby maintaining the resolution of the optical system according to temperature change and suppressing deformation of the lenses. Therefore, the effective diameter of at least a portion of the glass material lenses included in the lens units **100, 200, 300, 400, 500,** and **600** may be smaller than the effective diameter of at least a portion of the plastic material lenses.

Within the lens units **100, 200, 300, 400, 500,** and **600,** there may be at least one lens, for example, at least two, larger than the average effective diameter of the plastic lenses. When the average effective diameter of the plastic lenses is PLca_Aver and the average effective diameter of the glass lenses is GLca_Aver, the condition of PLca_Aver < GLca_Aver may be satisfied. In addition, the condition of 1 < GLca_Aver / PLca_Aver < 1.5 may be satisfied. In addition, the relationship between the length of the image sensor **700** and the average effective diameter PLca_Aver of the plastic lens may satisfy the condition of 1 ≤ PLca_Aver/(Imgh*2) < 1.5. In addition, the relationship between the average effective diameter of the glass lens and the length of the image sensor **700** may satisfy the condition of 1.1 < GLca_Aver/(Imgh*2) < 1.5. It may be disposed so that the difference between the maximum length of the image sensor **700** and the effective diameter of the plastic lens may not be large. Accordingly, by arranging a plastic lens with a small effective diameter adjacent to the image sensor **700,** the plastic lenses can disperse color from the center portion to the edge portion of the image sensor **700.**

The average effective diameter of the glass materials may be 10 mm or more, for example, in a range of 10 mm to 15 mm. The average effective diameter of the plastic material may be 8 mm or more, for example, in a range of 8 mm to 12 mm. The lens having the minimum effective diameter is made of plastic, and the lens having the maximum effective diameter may be made of glass. Within the lens units **100, 200, 300, 400, 500,** and **600,** the minimum effective diameter may be in a range of 7 mm to 10 mm, and the maximum effective diameter may be in a range of 11 mm to 15 mm. The plastic lens is designed to have a smaller effective diameter than the glass lens and is disposed so as not to touch the lens barrel, thereby minimizing changes in optical performance due to temperature changes. In addition, the optical systems **1000, 1100, 1200, 1300, 1400,** and **1500** can improve the resolution and chromatic aberration control characteristics by controlling the incident light, and can improve the vignetting characteristics of the optical systems **1000, 1100, 1200, 1300, 1400,** and **1500.**

The optical systems **1000, 1100, 1200, 1300, 1400,** and **1500** or camera module may include an image sensor **700.** The image sensor **700** may detect light and convert it into an electrical signal. The image sensor **700** may detect light that has sequentially passed through the lens units **100, 200, 300, 400, 500,** and **600.** The image sensor **700** may include an element capable of detecting incident light, such as a charge coupled device (CCD) or a complementary metal oxide semiconductor (CMOS).

Here, the number of lenses having an effective diameter larger than the length of the image sensor **700** may be 4 to 6, and the number of lenses having an effective diameter smaller than the length of the image sensor **700** may be 1 to 3.

The optical systems **1000, 1100, 1200, 1300, 1400,** and **1500** or the camera module may include a filter **900.** The filter **900** may be disposed between the last lens and the image sensor **700.** The filter **900** may be disposed between the lens closest to the sensor side among the lenses of the lens units **100, 200, 300, 400, 500,** and **600** and the image sensor **700.** For example, the filter **900** may be disposed between the nth lens and the image sensor **700.**

The cover glass **800** is disposed between the filter **900** and the image sensor **700,** and protects the upper portion of the image sensor **192** and can prevent the reliability of the image sensor **700** from being deteriorated. The cover glass **800** can be removed. The cover glass **800** may be a protective glass.

The filter **900** may include an infrared filter or an infrared cut-off filter (IR cut-off). The filter **900** may allow light of a set wavelength band to pass through and filter out light of a different wavelength band. When the filter **900** includes an infrared filter, it may block radiant heat emitted from external light from being transmitted to the image sensor **700.** In addition, the filter **900** may allow visible light to pass through and reflect infrared light.

The optical systems **1000, 1100, 1200, 1300, 1400,** and **1500** according to the embodiment may include an aperture **Stop.** The aperture can adjust the amount of light incident on the optical systems **1000, 1100, 1200, 1300, 1400,** and **1500.** In the lenses being disposed between the object and the aperture, the effective diameter of the lens surfaces tends to increase as it goes from the object side to the aperture. In the lens surfaces being disposed between the aperture and the sensor, the effective diameter of the lens surfaces tends to decrease as it goes from the aperture to the sensor side. The tendency for the effective diameter of the lens surfaces to increase or decrease does not only mean the case where the effective diameter of the lens surfaces increases or decreases. For example, it also includes the case where the effective diameter of the lens surfaces increases and then decreases as it goes from the aperture to the sensor side.

In the optical systems **1000, 1100, 1200, 1300, 1400,** and **1500** of the first to sixth embodiments, the sum of the refractive indices of the lenses of the lens units **100, 200, 300, 400, 500,** and **600** may be 8 or more, for example, in a range of 8 to 15, and the average of the refractive indices may be in a range of 1.58 to 1.7. The sum of the Abbe numbers of each of the lenses may be 270 or more, for example, in a range of 280 to 350, and the average of the Abbe numbers may be 50 or less, for example, in a range of 35 to 47. The sum of the central thicknesses of the entire lens may be 20 mm or more, for example, in a range of 25 mm to 30 mm, and the average of the central thicknesses may be in a range of 3.5 mm to 4.0 mm. The sum of the center gaps between the lenses on an optical axis **OA** may be 3 mm or more, for example, in a range of 4 mm to 6 mm, and less than the sum of the center thicknesses of the lenses. In addition, the average value of the effective diameter of each of lens surfaces **S1** to **S14** of the lens units **100, 200, 300, 400, 500,** and **600** may be provided as 8 mm or more, for example, in a range of 8 mm to 15 mm.

In an optical system according to first to sixth embodiments of the invention, the angle of view (diagonal line) may be 50 degrees or less, for example, in a range of 20 to 50 degrees. The F number of the optical system or the camera module may be 2.4 or less, for example, in a range of 1.4 to 2.4 or 1.5 to 1.8. In the optical system according to an embodiment of the invention, the maximum angle of view (diagonal line) may be 50 degrees or less, for example, in a range of 20 to 50 degrees. A vehicle optical system may have a horizontal angle of view FOV_H in a Y-axis direction that is greater than 20 degrees and less than 40 degrees, for example, in a range of 25 to 35 degrees. In addition, the vertical angle of view is provided at a smaller angle than the horizontal angle of view, and may be 20 degrees or less, for example, in a range of 10 to 20 degrees. At this time, the sensor length in a horizontal direction Y may be 8.064mm+0.5mm, and the sensor height in a vertical direction X may be 4.54mm+0.5mm. The horizontal field of view (FOV_H) is the field of view with respect to the horizontal length of the sensor. Accordingly, it is possible to suppress a change in the focal imaging position according to a change in temperature, and provide a vehicle camera in which various aberrations are well corrected.

Since the embodiment is an optical system applied to a vehicle camera, the first lenses **101, 201, 301, 401, 501,** and **601** can be provided as a glass material even though it is designed using a plastic lens and a glass lens together. This is because the glass material has the advantage of being scratch-resistant and insensitive to external temperature compared to the plastic material. The first lenses **101, 201, 301, 401, 501,** and **601** may be a glass mold lens having an aspherical surface and made of glass material. The glass mold lens can be manufactured by placing an optical glass ingot inside a mold having an aspherical shape and through a heating and compression process.

In order to more effectively prevent scratches caused by foreign substances or by being disposed inside a vehicle, a glass lens may be used as the first lenses **101, 201, 301, 401, 501,** and **601,** and the object side surface of the first lenses **101, 201, 301, 401, 501,** and **601** may have a gently curved shape so as not to come into contact with an external structure. This allows the occurrence of scratches due to contact with an external structure to be minimized. For driver monitoring, front/rear photography of the vehicle, or lane detection and detection of adventitious substances around the vehicle while the vehicle is being driven, the angle of view may be more than 20 degrees and less than 40 degrees, for example, in a range of 25 degrees to 35 degrees. This horizontal angle of view may be a preset angle for an advanced driver assistance system (ADAS).

The optical systems **1000, 1100, 1200, 1300, 1400,** and **1500** according to the embodiment may further include a reflective member for changing the path of light. The reflective member may be implemented as a prism that reflects light incident on the optical systems **1000, 1100, 1200, 1300, 1400,** and **1500** toward the lenses. Hereinafter, the optical system according to the embodiment will be described in detail.

An optical system according to a first embodiment of the invention will be described.

FIG. 1 is a side cross-sectional view of an optical system according to the first embodiment and a camera module having the same; FIG. 2 is a side cross-sectional view for explaining the relationship between the nth and (n-1)th lenses according to FIG. 1; FIG. 3 is a table showing aspherical coefficients of lenses in an optical system of FIG. 1; FIG. 4 is a table showing the thickness of each lens and the gap between adjacent lenses in an optical system of FIG. 1; FIG. 5 is a table showing the Sag values of lens surfaces of first to seventh lenses in an optical system of FIG. 1; FIG. 6 is a table showing slope angle values of lens surfaces of first to seventh lenses in an optical system of FIG. 1; FIG. 7 is a table showing chief ray angle (CRA) data at room temperature, low temperature, and high temperature according to the position of the image sensor in an optical system of FIG. 1; FIGS. 8 to 10 are graphs showing data on the diffraction modulation transfer function (MTF) of an optical system of FIG. 1 at room temperature, low temperature, and high temperature; and FIG. 11 to 13 are graphs showing data on aberration characteristics of an optical system of FIG. 1 at room temperature, low temperature, and high temperature.

Referring to FIGS. 1 and 2, the optical system **1000** includes a lens unit **100,** and the lens unit **100** may include a first lens **101** to a seventh lens **107.** The first to seventh lenses **101** to **107** may be sequentially disposed along an optical axis **OA** of the optical system **1000.** Light corresponding to information of an object may pass through the first lens **101** to the seventh lens **107** and a filter **900** and be incident on an image sensor **700.**

The first lens **101** may be disposed closest to the object side. The first lens **101** may be disposed farthest from the sensor side. The first lens **101** may have a negative (-) refractive power on an optical axis **OA.** The first lens **101** may include a plastic material or a glass material, and may be, for example, a glass material. The first lens **101** made of a glass material can reduce changes in the center position and the radius of curvature due to temperature changes according to the surrounding environment, and can protect the incident side surface of the optical system **1000.**

With respect to an optical axis, the first surface **S1** on the object side of the first lens **101** may be convex, and the second surface **S2** on the sensor side may be concave. The first lens **101** may have a meniscus shape that is convex toward the object side. The first lens **101** is made of glass and may have an aspherical surface. The aspherical coefficients of the first and second surfaces **S1** and **S2** may be provided as L1S1, L1S2 of FIG. 3. The first lens **101** may be manufactured as a lens having an aspherical surface by injection molding a glass material. The first lens **101** may be a glass mold lens having an aspherical surface and made of a glass material. The glass mold lens may be manufactured by placing an optical glass ingot inside a mold that will have an aspherical shape and through a heating and compression process.

The first lens **101** is provided with an aspherical glass material, so that the glass material having high transmittance and refractive index has an aspherical surface, which can reduce the number of lenses in an optical system. The aspherical glass material can maintain optical performance at a constant level when the temperature changes to low or high temperature due to the glass material. In addition, since the aspherical surface is applied to the glass material, even if the lens is designed thin, the refractive index of light does not change significantly. Therefore, unlike an optical system in which the first lens is designed to be thickest in a horizontal angle of view ranging from 30 degrees to 50 degrees, the optical system of the invention can provide a thin first lens made of an aspherical glass material. Here, the thickness of the lens may include a center thickness and an edge thickness.

In addition, the second lens **102** may be further spaced apart from the first lens **101** due to the refractive characteristic of the first lens **101.** That is, the center gap between the first and second lenses **101** and **102** may be the largest within the lens unit. In addition, that is, the edge gap between the first and second lenses **101** and **102** may be the largest within the lens unit. The first surface **S1** of the first lens **101** may have a critical point from an optical axis **OA** to the end of the effective area. When the first surface **S1** has a critical point, it may be located in a range of 80% to 90%, preferably in a range of 82% to 87%, of the effective radius r11 from an optical axis **OA.** The critical point of the first surface **S1** may be located in a range of 5.5 mm to 5.8 mm, preferably in a range of 5.6 mm to 5.7 mm from an optical axis **OA.**

The refractive index n1 of the first lens **101** can satisfy the condition of n1>1.8 or nl>1.82. Since the refractive index n1 of the first lens **101** is the largest in the lens unit **100,** the radius of curvature of the first and second lenses **101** and **102** can be increased, and lens manufacturing can be easy. If the refractive index n1 of the first lens **101** is smaller than the condition, the lens surface must be formed sharply concave or convex in order to increase the refractive power of the first and second lenses **101** and **102.** In this case, lens manufacturing is not easy, the lens defect rate increases, and it can cause a decrease in yield.

The second lens **102** may be disposed second from the object side. The second lens **102** may be disposed sixth from the sensor side. The second lens **102** may be disposed between the first lens **101** and the third lens **103.** The second lens **102** may have a positive (+) refractive power on an optical axis **OA.** The second lens **102** may include a plastic or glass material. For example, the second lens **102** may be provided with a glass material.

With respect to an optical axis **OA,** the object side third surface **S3** of the second lens **102** may be convex, and the sensor side fourth surface **S4** may be convex. The second lens **102** may have a shape in which both surfaces are convex. The second lens **102** is made of glass and may be spherical. At least one or both of the third surface **S3** and the fourth surface **S4** may be spherical.

Since both surfaces of the second lens **102** are provided convexly, the TTL and the number of lenses of the optical system can be minimized, and light can be effectively refracted. In addition, when the radius of curvature of the third surface **S3** of the second lens **102** is L2R1, and the radius of curvature of the fourth surface **S4** is L2R2, the condition of L2RI < | L2R2| can be satisfied. Through this, light can be efficiently refracted by the third surface **S3,** so that the effective diameters of the third to seventh lenses **103** to **107** can be guided so as not to be increased, and the TTL can be reduced. If L2R1 > | L2R2| , aberrations may occur a lot on the object side surface of the second lens **102,** the refractive efficiency of light may be decreased at the sensor side surface, the effective diameters of the rear lenses may be increased, and the TTL may also become larger.

The aperture **Stop** can be disposed around the sensor side fourth surface **S4** of the second lens **102.** The aperture can reduce the TTL within the field of view range, and the optical system can be miniaturized. Accordingly, the yield by weight of the optical system can be prevented from decreasing, and the production efficiency can be improved. In addition, the optical system can be miniaturized by reducing the TTL within the horizontal field of view (FOV_H) of 25 degrees to 36 degrees.

The third lens **103** may be disposed third from the object side. The third lens **103** may be disposed fifth from the sensor side. The third lens **103** may be disposed between the second lens **102** and the fourth lens **104.** The third lens **103** may have a positive (+) refractive power on an optical axis **OA.** The third lens **103** may include a plastic or glass material. For example, the third lens **103** may be provided with a glass material.

With respect to an optical axis, the object side fifth surface **S5** of the third lens **103** may be convex, and the sensor side sixth surface **S6** may be concave. The third lens **103** may have a meniscus shape in which the object side is convex on an optical axis **OA.** The third lens **103** is made of glass and may be spherical. At least one or both of the fifth surface **S5** and the sixth surface **S6** may be spherical. At least one or both of the fifth surface **S5** and the sixth surface **S6** may be provided without a critical point from an optical axis **OA** to the end of the effective area.

The fourth lens **104** may be disposed fourth from the object side. The fourth lens **104** may be disposed fourth from the sensor side. The fourth lens **104** may be disposed between the third lens **103** and the fifth lens **105.** The fourth lens **104** may have a positive (+) or negative (-) refractive power on an optical axis **OA.** The fourth lens **104** may have a positive (+) refractive power. The fourth lens **104** may have a positive (+) refractive power different from the refractive power of the fifth lens **105.** The fourth lens **104** may include a plastic or glass material. For example, the fourth lens **104** may be provided with a glass material. The fourth lens **104** may be provided with the same material as the fifth lens **105.**

With respect to an optical axis, the object side seventh surface **S7** of the fourth lens **104** may be convex, and the sensor side eighth surface **S8** may be concave. The fourth lens **104** may have a meniscus shape that is convex toward the object side. The fourth lens **104** is made of glass and may have a spherical surface. At least one or both of the seventh surface **S7** and the eighth surface **S8** may be spherical. The seventh surface S7 and the eighth surface **S8** may be provided without a critical point from an optical axis **OA** to the end of the effective area.

The fifth lens **105** may be disposed fifth from the object side. The fifth lens **105** may be disposed third from the sensor side. The fifth lens **105** may be disposed between the fourth lens **104** and the sixth lens **106.** The fifth lens **105** may have a positive (+) or negative (-) refractive power on an optical axis **OA.** The fifth lens **105** may have a negative (-) refractive power. The fifth lens **105** may have a negative (-) refractive power that is different from the refractive power of the fourth lens **104.** The fifth lens **105** may include a plastic or glass material. For example, the fifth lens **105** may be provided with a glass material. The fifth lens **105** may be provided with the same material as the fourth lens **104.**

With respect to an optical axis, the ninth surface **S9** of the fifth lens **105** on the object side may be convex, and the tenth surface **S10** on the sensor side may be concave. The fifth lens **105** may have a meniscus shape that is convex from an optical axis **OA** to the object side. The fifth lens **105** is made of glass and may have a spherical surface. At least one surface of the ninth surface **S9** and the tenth surface **S10** may be a spherical surface. At least one or both of the ninth and tenth surfaces **S9** and **S10** of the fifth lens **105** may be provided without a critical point from an optical axis **OA** to the end of the effective area.

The fourth lens **104** and the fifth lens **105** can be cemented. The bonding surface between the fourth lens **104** and the fifth lens **105** can be defined as the eighth surface **S8.** The eighth surface **S8** can be the same surface as the ninth surface **S9** of the fifth lens **105.** The object side surface of the cemented lens **145** can be convex, and the sensor side surface can be concave. The gap between the fourth and fifth lenses **104** and **105** can be less than 0.01 mm, and can be attached with an adhesive. The gap between the fourth and fifth lenses **104** and **105** can be less than 0.01 mm from an optical axis **OA** to the end of the effective area. The fourth and fifth lenses **104** and **105** can have opposite refractive powers. The composite refractive power of the fourth and fifth lenses **104** and **105** can have a negative (-) refractive power.

The value of the radius of curvature of the cemented surface **S8** of the cemented lens **145** may be less than 50. For example, the value of the radius of curvature of the cemented surface **S8** of the cemented lens **145** may be less than 30. The cemented surface **S8** of the cemented lens **145** may be formed in a gentle shape. Through this, the cementing process of the fourth lens **104** and the fifth lens **105** forming the cemented lens **145** is advantageous, and the cementing maintenance strength can be increased.

The product of the refractive power of the object side fourth lens **104** of the cemented lens **145** and the refractive power of the sensor side fifth lens **105** may be less than 0. The product of the focal length of the object side fourth lens **105** of the cemented lens **145** and the focal length of the sensor side fifth lens **105** may be less than 0. Accordingly, the aberration characteristics of the optical system can be improved. If the refractive powers of the two lenses of the cemented lens **145** are the same, there is a limit to the improvement of aberration.

The composite refractive power of the cemented lens **145** has a negative (-) refractive power, and the third lens **103** on the object side and the sixth lens **106** on the sensor side with respect to the cemented lens **145** can have a negative (-) refractive power. Accordingly, the fourth lens **104,** the cemented lens **145,** and the fifth lens **105** can refract a portion of the incident light in a direction of an optical axis.

The effective diameter of the fourth lens **104** may be larger than the diagonal length of the image sensor **700.** The effective diameter of the fourth lens **104** is an average of the effective diameters of the seventh surface **S7** and the eighth surface **S8,** and may be larger than the diagonal length of the image sensor **700.** The effective diameter of the fifth lens **105** may be smaller than the effective diameter of the fourth lens **104** and larger than the diagonal length of the image sensor **700.** The effective diameter of the seventh surface **S7** of the fourth lens **104** may be larger than the diagonal length of the image sensor **700,** and the effective diameter of the tenth surface **S10** of the fifth lens **105** may be smaller than the diagonal length of the image sensor **700.**

When the fifth lens **105** is a spherical lens and the seventh lens **107** is an aspherical lens, the difference in effective diameter between the object side ninth surface **S9** and the sensor side tenth surface **S10** of the fifth lens **105** can be provided to be the largest. For example, when the effective diameters of the ninth surface **S9** and the sensor side tenth surface **S10** of the fifth lens **105** are CA51 and CA52, the condition of CA51 > CA52 is satisfied, and the difference between CA51 and CA52 can be the largest among the differences in effective diameters between the object side surfaces and the sensor side surfaces of each lens. Accordingly, the difference in effective diameters between the object side surface and the sensor side surface of the fifth lens **105** can be set to be maximized, so as to effectively guide light traveling through an aspherical lens having a relatively small effective diameter. Accordingly, a slimmer optical system can be provided. The effective diameter of the fifth lens **105** can satisfy the condition of $1.1 < CA51/CA52 < 1.5$.

The cemented lens **145** is cemented with glass lenses having different refractive indices, has a spherical refractive surface, and at least one lens disposed closer to the sensor than the cemented lens **145** is an aspherical lens, so that spherical aberration can be compensated for. In addition, at least one of the lenses disposed closer to the sensor than the cemented lens **145** is an aspherical lens and is disposed to have a small effective diameter, so that light traveling to the image sensor **700** through the aspherical lens can be effectively guided. Since the cemented lens **145** is disposed between aspherical lenses and between spherical lenses, chromatic aberration correction can be more efficient. By positioning the cemented lens **145** within the optical system, TTL can be reduced.

The sixth lens **106** may be disposed as the sixth lens from the object side. The sixth lens **106** may be disposed as the second lens from the sensor side. The sixth lens **106** may be disposed between the fifth lens **105** and the seventh lens **107.** The sixth lens **106** may have a positive (+) or negative (-) refractive power on an optical axis **OA.** The sixth lens **106** may have a positive (+) refractive power. The sixth lens **106** may include a plastic or glass material. For example, the sixth lens **106** may be provided with a plastic material.

With respect to an optical axis, the sixth lens **106** may have a convex shape on the object side eleventh surface **S11** and a convex shape on the sensor side 12th surface **S12.** The sixth lens **106** may have a convex shape on both surfaces on an optical axis **OA.** At least one or both of the eleventh surface **S11** and the 12th surface **S12** may be aspherical. Aspherical coefficients of the eleventh and 12th surfaces **S11** and **S12** may be provided as L1 and L2 of L6 of FIG. 4.

The eleventh surface **S11** of the sixth lens **106** can be provided without a critical point from an optical axis **OA** to the end of the effective area. The twelfth surface **S12** can be provided without at least one critical point from an optical axis **OA** to the end of the effective area.

The seventh lens **107** may be disposed closest to the sensor side. The seventh lens **107** may be disposed farthest from the object side. The seventh lens **107** may have a positive (+) or negative (-) refractive power on an optical axis **OA.** The seventh lens **107** may have a negative (-) refractive power. The seventh lens **107** may include a plastic or glass material. For example, the seventh lens **107** may be made of a plastic material.

On an optical axis, the object side thirteenth surface **S13** of the seventh lens **107** may be convex, and the sensor side fourteenth surface **S14** may be concave. The seventh lens **107** may have a meniscus shape that is convex toward the object side. At least one of the thirteenth surface **S13** and the fourteenth surface **S14** may be an aspherical surface. For example, both the thirteenth surface **S13** and the fourteenth surface **S14** may be aspherical. Aspherical coefficients of the thirteenth and fourteenth surfaces **S13** and **S14** may be provided as S1 and S2 of L7 in FIG. 3.

The thirteenth surface **S13** of the seventh lens **107** can have a critical point from an optical axis **OA** to the end of the effective area. When the thirteenth surface **S13** has a critical point, it can be located in a range of 35% to 45%, preferably 37% to 42%, of the effective radius r71 from an optical axis **OA.** The critical point of the thirteenth surface **S13** can be located in a range of 1.5 mm to 1.8 mm, preferably 1.6 mm to 1.7 mm from an optical axis **OA.** The thirteenth surface **S13** having such a critical point can refract incident light to the center and edge portions, and improve aberration.

The fourteenth surface **S14** of the seventh lens **107** may have a critical point from an optical axis **OA** to the end of the effective area. When the fourteenth surface **S14** has a critical point, it may be located in a range of 65% to 70%, preferably in a range of 66% to 69%, of the effective radius r72 from an optical axis **OA.** The critical point of the fourteenth surface **S14** may be located in a range of 3 mm to 3.3 mm, preferably in a range of 3 mm to 3.1 mm from an optical axis **OA.**

The critical points of the thirteenth surface **S13** and the fourteenth surface **S14** are points where the sign of the slope value with respect to the optical axis **OA** and the direction perpendicular to the optical axis **OA** changes from positive (+) to negative (-) or from negative (-) to positive (+), and may mean a point where the slope value is 0. In addition, the critical points of the thirteenth surface **S13** and the fourteenth surface **S14** may be points where the slope value of the tangent passing through the lens surface increases and then decreases, or points where it decreases and then increases.

The seventh lens **107** may be a plastic lens that is closest to the image sensor **700.** In addition, by arranging two or more plastic lenses adjacent to the image sensor **700,** aberrations such as spherical aberration and chromatic aberration can be improved by the lens surface having an aspherical surface, and the influence on the resolution can be controlled. In addition, by arranging the plastic lens as the lens adjacent to the image sensor **700,** it can be insensitive to the assembly tolerance compared to a glass lens. In other words, being insensitive to the assembly tolerance means that even if the assembly is performed with a slight difference compared to the design during assembly, the optical performance may not be significantly affected. In addition, by providing the two lenses **106** and **107** adjacent to the image sensor **700** with plastic, the optical performance can be improved by the lens surface having an aspherical surface, and for example, aberration characteristics can be improved and degradation of resolution can be prevented.

The sixth lens **106** and the seventh lens **107** are disposed to be spaced apart from each other, but may include the characteristics of a cemented lens. The sixth lens **106** and the seventh lens **107** may have opposite refractive powers. The product of the refractive power of the sixth lens **106** and the refractive power of the seventh lens **107** may be less than 0. The product of the focal length of the sixth lens **106** and the focal length of the seventh lens **107** may be less than 0. Accordingly, the aberration characteristics of the optical system may be improved. If the signs of the refractive powers of two lenses having the characteristics of a cemented lens are the same, there is a limit to the improvement of aberrations.

The sixth lens **106** and the seventh lens **107** may be made of the same material. The sixth lens **106** and the seventh lens **107** may be made of a plastic material. The sixth lens **106** and the seventh lens **107** may be made of the same material as the cemented lens **145.**

[Table 1]

| Lens | Surface | Radius | Thickness | nd | vd | Semi Aperture | Focal length |
|---|---|---|---|---|---|---|---|
| 1 | S1 | 52.814 | 2.000 | 1.8297 | 24.0394 | 6.741 | -106.072 |

(continued)

| Lens | Surface | Radius | Thickness | nd | vd | Semi Aperture | Focal length |
|---|---|---|---|---|---|---|---|
| | S2 | 32.440 | 6.196 | | | 6.403 | |
| 2 | S3 | 40.055 | 1.600 | 1.7762 | 49.6235 | 5.208 | 29.490 |
| | S4 | -52.484 | 0.100 | | | 5.037 | |
| | Stop | 0.000 | 0.100 | | | 4.900 | |
| 3 | S5 | 14.505 | 1.742 | 1.5521 | 75.4952 | 5.060 | 28.982 |
| | S6 | 148.628 | 0.200 | | | 5.029 | |
| 4 | S7 | 12.081 | 2.093 | 1.8395 | 42.7208 | 4.989 | 26.465 |
| | S8 | 23.657 | 0.000 | | | 4.663 | |
| 5 | S9 | 23.657 | 3.760 | 1.8551 | 23.7844 | 4.663 | -7.059 |
| | S10 | 6.000 | 2.461 | | | 3.664 | |
| 6 | S11 | 15.378 | 2.341 | 1.5373 | 55.7098 | 4.100 | 19.281 |
| | S12 | -30.062 | 1.410 | | | 4.283 | |
| 7 | S13 | 20.542 | 1.500 | 1.6682 | 20.4008 | 4.148 | -25.615 |
| | S14 | 9.063 | 0.597 | | | 4.576 | |
| Filter | S15 | 0.000 | 0.400 | | | 4.630 | |
| | S16 | 0.000 | 1.060 | | | 4.651 | |
| Cover | S17 | 0.000 | 0.300 | | | 4.735 | |
| | S18 | 0.000 | 0.040 | | | 4.751 | |
| Image | | 0.000 | 0.000 | | | 4.754 | |

Table 1 shows the surface number **Surface,** radius of curvature **Radius,** center thickness of each lens or distance between lens surfaces **Thickness,** refractive index **nd,** Abbe number **vd,** effective radius **Semi Aperture,** and focal length **Focal length** of a lens according to a first embodiment of the present invention. At this time, the unit of the radius of curvature and thickness or distance may be mm.

[Table 2]

| Category | Value | Category | Value |
|---|---|---|---|
| F | 14.9017 | ET1 | 2.3181 |
| F2_7 | 12.7859 | ET2 | 1.0179 |
| F3_7 | 39.0259 | ET3 | 0.9163 |
| F4_7 | -35.1987 | ET4 | 1.4790 |
| F5_7 | -7.4412 | ET5 | 4.5414 |
| F6_7 | 47.1779 | ET6 | 1.1663 |
| F4_5 | -24.4456 | ET7 | 2.0701 |
| ΣIndex | 12.0579 | F-number | 1.6117 |
| ΣAbbe | 291.7739 | FOV_D | 34.3055 |
| ΣCT | 15.0356 | EPD | 9.2460 |
| ΣCG | 10.4670 | BFL | 2.3975 |
| CA_max | 13.144 | TD | 25.5025 |
| CA_min | 8.327 | ImgH | 4.6300 |
| CA_Aver | 9.795 | SD | 15.6066 |

(continued)

| Category | Value | Category | Value |
|---|---|---|---|
| CT_max | 3.7595 | TTL | 27.9000 |
| CT_min | 1.5000 | GLca_Aver | 10.2915 |
| CT_Aver | 2.1479 | PLca_Aver | 8.5534 |
| Image sensor | 3840*2160 | | |

Table 2 shows categories of Mathematical expressions described above in the optical system **1000** of the embodiment, including the total top length (TTL) (mm), back focal length (BFL), effective focal length **F** (mm), ImgH (mm), effective diameter **CA** (mm), thickness (mm), TTL (mm), TD (mm), which is an optical axis distance from the first surface **S1** to the fourteenth surface **S14,** composite focal lengths of the first to seventh lenses F2_7, F3_7, F4_7, F5_7, F6_7, and F4_5, (mm), sum of refractive indices, sum of Abbe numbers, sum of thicknesses (mm), sum of gaps between adjacent lenses, effective diameter characteristics, sum of refractive indices of glass lenses, sum of refractive indices of plastic materials, angle of view FOV_H (degree), edge thickness ET, F number, and the like of the optical system **1000.**

As shown in FIGS. 1 and 2, the center thicknesses of the first to seventh lenses **101** to **107** are represented by CT1 to CT7, the edge thicknesses at the ends of the effective areas of each lens are represented by ET1 to ET7, the center gap between two adjacent lenses is represented by CG1 to CG6, and the edge gaps between the edges of each lens are represented by EG1 to EG6. Here, the center thickness of the cemented lens **145** is CT45, and the edge thickness is represented by ET45.

Referring to Fig. 2, back focal length (BFL) is an optical axis distance from the image sensor **700** to the center of the last lens. In FIG. 1, TTL is an optical axis distance from the center of the first surface **S1** of the first lens **101** to an upper surface of the image sensor **700.**

As shown in FIG. 3, among the lenses of the lens unit **100** in a first embodiment, the lens surfaces of the first, sixth, and seventh lenses **101, 106,** and **107** may include aspherical surfaces having a 30th-order aspherical surface coefficient. For example, the first, sixth, and seventh lenses **101, 106,** and **107** may include lens surfaces having a 30th-order aspherical surface coefficient. As described above, since the aspherical surface having the 30th-order aspherical surface coefficient (a value other than "0") can significantly change the aspherical shape of the edge portion, the optical performance of the edge portion of the field of view (FOV) can be well corrected.

As shown in FIG. 4, the thicknesses **T1** to **T7** of the first to seventh lenses **101, 102, 103, 104, 105, 106,** and **107** and the gaps **G1** to **G6** between adjacent two lenses can be set. As shown in FIG. 5, the thicknesses **T1** to **T7** of each lens in a Y-axis direction can be expressed at gaps of 0.1 mm or 0.2 mm or more, and the gaps **G1** to **G6** between each lens can be expressed at gaps of 0.1 mm or 0.2 mm or more.

When compared in terms of the absolute values of the curvature radii of each lens, the curvature radii of the sixth surface **S6** of the third lens **103** on an optical axis **OA** may be the largest among the lenses, and the curvature radii of the tenth surface **S10** of the fifth lens **105** may be the smallest among the lenses. The difference between the maximum curvature radii and the minimum curvature radii may be 8 times or more, for example, 9 to 11 times. The curvature radii of the sensor side surface of the glass material lens disposed on the object side of the plastic material lens may be the smallest among the lenses. The curvature radii of the sensor side surface of the fifth lens **105** disposed on the object side of the sixth lens **106** may be the smallest among the lenses.

Since the effective diameter of a plastic lens is smaller than that of a glass lens, the lens disposed on the object side of the plastic lens can have strong refractive power in order to refract light through the plastic lens. In addition, the radius of curvature of the lens surface can be small in order to strengthen the refractive power.

Among the lenses, the number of surfaces having an absolute value of curvature radii of 10 mm or less among the object side surface and the sensor side surface may be two or less. The absolute value of curvature radii of the sensor side surface (the tenth surface) **S10** of the fifth lens **105** and the sensor side surface (the fourteenth surface) **S14** of the seventh lens **107** may be 10 mm or less. Among the lenses, the number of surfaces having an absolute value of curvature radii of 10 mm or more and 20 mm or less among the object side surface and the sensor side surface may be three or more and five or less. The absolute value of the curvature radii of the object side surface (the fifth surface) **S5** of the third lens **103,** the object side surface (the seventh surface) **S7** of the fourth lens **104,** and the object side surface (the eleventh surface) **S11** of the sixth lens **106** may be 10 mm or more and 20 mm or less. Among the lenses, there may be at least one and no more than four surfaces having an absolute value of curvature radius of 60 mm or more among the object side surface and the sensor side surface. The absolute value of the curvature radius of the sensor side surface (the sixth surface) **S6** of the third lens **103** may be at least 60 mm.

In temperature compensation designs that require resolution to be maintained even when temperatures change from -40 to 100 degrees, a larger radius of curvature can be advantageous. In designs for temperature compensation, aluminum barrels can be used for lens barrels. Aluminum barrels have large manufacturing tolerances, so when the lenses are assembled, the optical axes of each lens are greatly misaligned. Therefore, by designing a large radius of curvature, the sensitivity to manufacturing tolerances can be reduced.

Referring to FIG. 6, the slope angle of the lens surface can be expressed as a value in rad, which is the slope of the lens surface at a point on the lens surface with a 0.1 gap with respect to a Y-axis perpendicular to the optical axis, converted to a tangent value. When explaining the slope angle of the lens surface, the slope angle of the object side surface (the first surface) **S1** of the first lens **101** may be the smallest, excluding the cemented lens among the first to seventh lenses. The number of lenses having a value smaller than the absolute value of the slope angle of the lens surface of the object side surface of the aspherical glass material among the object side surfaces and the sensor side surfaces of the first to seventh lenses may be five or less. Preferably, the number of lenses smaller than the absolute value of the slope angle of the object side surface (the first surface) **S1** of the first lens **101** may be two. The absolute value of the inclination angle of the sensor side surface (the sixth surface) **S6** of the third lens **103** and the object side surface (the thirteenth surface) **S13** of the seventh lens **107** may be smaller than the absolute value of the inclination angle of the object side surface (the first surface) **S1** of the first lens **101.**

The shape of the first lens **101** having an aspherical shape can be designed to be gentle. If the aspherical surface is located at the frontmost in the optical system **1000,** the performance of the lens is improved, but the assemblability may be reduced. In order to improve the assemblability, the shape of the first lens **101** should be designed to be gentle. In order to minimize the influence on the lens disposed on the sensor side when assembling the lens in the barrel, it can be designed to have almost no curvature.

With respect to an optical axis, when describing the center thickness of the lenses, the center thickness **CT3** of the third lens **103** is the largest among the lenses, and the center thickness **CT7** of the seventh lens **107** is the smallest among the lenses. The difference between the maximum central thickness and the minimum center thickness among the lenses may be in the range of 1.5 mm or more and 2.5 mm or less.

When explaining the center gap **CG** between the lenses, the center gap **CG1** between the first lens **101** and the second lens **102** may be the maximum and the center gap **CG2** between the second and third lenses **102** and **103** and the center gap **CG3** between the third and fourth lenses **103** and **104** may be the minimum. Here, the minimum center gap excludes the cemented surface of the cemented lens **145.** The difference between the maximum center gap and the minimum center gap among the gaps of lens being spaced apart may be 5.5 mm or more, for example, in the range of 5.8 mm to 6.5 mm.

When explaining the effective diameter, the lens having the maximum effective diameter may be disposed between the first lens **101** closest to the object and the seventh lens **107** closest to the image sensor **700.** The lens having the maximum effective diameter may be a glass lens. The lens having the maximum effective diameter may be disposed between the first lens **101** and the cemented lens **145.** The lens having the maximum effective diameter may be the first lens **101.** Here, the effective diameter is an average of the effective diameter of the object side surface and the effective diameter of the sensor side surface of each lens. The lens surface having the maximum effective diameter may be the first surface **S1** of the first lens **101.**

The lens having the minimum effective diameter can be either one of the cemented lenses or one of the plastic lenses, for example, the fifth lens **105** or the seventh lens **107** adjacent to the image sensor **700.** For example, the effective diameter of the fifth lens **105** may be the minimum within the lens unit **100.** The lens surface having the minimum effective diameter can be the tenth surface **S10** of the fifth lens **105.** The effective diameter of the plastic lens can be smaller than the effective diameter of the glass lens. The plastic lens can be disposed adjacent to the image sensor.

The effective diameters of each of the first to fourth lenses **101** to **104** adjacent to the object side may be larger than the effective diameters of the fifth, sixth, and seventh lenses **105, 106,** and **107** adjacent to the sensor side. The effective diameters of the first to fourth lenses **101** to **104** may be larger than the diagonal length of the image sensor **700.** The average effective diameter of the seventh lens **107** may be smaller than the diagonal length of the image sensor **700.** Accordingly, light incident through a plurality of lenses aligned along an optical axis may be guided to the image sensor **700.**

When explaining the refractive index, the refractive index of the first lens **101** may be the largest among the lenses and may be greater than 1.8, for example, greater than 1.82. Either or both of the third lens **103** and the sixth lens **106** may have the smallest refractive index among the lenses. For example, the refractive index of the sixth lens **106** may be the smallest among the lenses and may be less than 1.6, for example, less than 1.55. The difference between the maximum refractive index and the minimum refractive index may be 0.2 or more. By providing a high refractive index lens made of glass closest to an object, and providing a lens adjacent to the glass lens and a lens adjacent to the image sensor **700** with a low refractive index lens made of plastic, the incidence efficiency can be increased, and the refractive power between the lenses made of glass and plastic can be adjusted to guide them to the image sensor **700.**

When cmparing the Abbe numbers, the Abbe number of the third lens **103** is the largest among the lenses and may be 70 or more. The Abbe number of the seventh lens **107** is the smallest among the lenses and may be 25 or less. The difference between the maximum refractive index and the minimum Abbe number may be 50 or more. By making the Abbe number of the third lens **103** adjacent to the cemented lens **145** the largest and providing the Abbe number of the seventh lens **107** with a low refractive index adjacent to the image sensor **700** the smallest, the color dispersion of light traveling between the glass lenses can be controlled and the color dispersion between the glass and plastic lenses can be increased to guide it to the image sensor **700.**

The focal lengths **F1, F5,** and **F7** of the first, fifth, and seventh lenses **101, 105,** and **107** may have a negative (-) signs. The first, fifth, and seventh lenses **101, 105,** and **107** may have a negative (-) refractive power. The focal lengths **F2, F3, F4,** and **F6** of the second, third, fourth, and sixth lenses **102, 103, 104,** and **106** may have a positive (+) signs. The second, third, fourth, and sixth lenses **102, 103, 104,** and **106** may have a positive (+) refractive power. The second, third, and fourth lenses **102, 103,** and **104** having positive (+) refractive power may be disposed on the sensor side of the first lens **101** having negative (-) refractive power. Through this, light incident on the object side can move away from an optical axis direction and then gather again along an optical axis direction, thereby forming a stable optical path.

In addition, the sixth lens **106** and the seventh lens **107,** which are adjacently being disposed lenses, can satisfy the following conditions.

The refractive index of the lens with positive refractive power < the refractive index of the lens with negative refractive power    Condition 1:

Dispersion of a lens with positive refractive power > Dispersion of a lens with negative refractive power    Condition 2:

Here, among the plastic lenses, the sixth lens **106** has a positive refractive power and the seventh lens **107** has a negative refractive power, so that according to Conditions 1 and 2, the refractive index of the sixth lens **106** is smaller than that of the seventh lens **107,** and the dispersion value of the sixth lens **106** is larger than that of the seventh lens **107.** Chromatic aberration occurring in the plastic lens can be corrected by the plastic lens. In addition, since the sixth lens **106** and the seventh lens **107,** which are plastic lenses disposed in succession, satisfy the refractive index difference of 0.1 or more and 0.15 or less and the Abbe number difference of 20 or more and 60 or less, the chromatic aberration occurring in the plastic lens can be compensated for by the plastic lens.

The optical system has chromatic aberration, and chromatic aberration is corrected by using cemented lenses or two lenses disposed in series. As the temperature changes from low to high, the lens repeatedly contracts and expands. Since the lens characteristics of lenses of the same material change the same amount according to the temperature change, it is effective to correct chromatic aberration between lenses of the same material even if the temperature changes.

Therefore, in the first embodiment of the present invention, the chromatic aberration occurring in the plastic lens is corrected by using the cemented lens **145,** the sixth lens **106,** and the seventh lens **107.**

The fourth lens **104** and the fifth lens **105,** which are cemented lenses, can compensate for chromatic aberration occurring in a glass lens by satisfying the refractive index difference of 0.1 or more and 0.15 or less and the Abbe number difference of 20 or more and 60 or less. The refractive index difference is rounded off to the third decimal place, and the Abbe number difference is rounded off to the first decimal place to compare the values.

When comparing the focal lengths in absolute values, the focal length of the first lens **101** is the largest among the lenses, and may be 100 or more and 110 or less. Among the lenses, the first lens **101** made of glass may have the largest focal length and the smallest refractive power. The focal length of the fifth lens **105** is the smallest among the lenses, and the absolute value of the focal length of the fifth lens **105** may be 5 or more and 10 or less. Among the lenses, the fifth lens **105** made of glass may have the smallest focal length and the largest refractive power. Since lenses made of a plastic material having small refractive power are disposed on the sensor side of the fifth lens **105,** the refractive power of the fifth lens **105** may increase.

Among the lenses other than the cemented lens **145,** the lens having the minimum focal length may be the third lens **103.** The difference between the maximum focal length and the minimum focal length may be 50 or more or 80 or more. Accordingly, the optical system may have improved MTF characteristics, aberration control characteristics, resolution characteristics, and the like in the set angle of view range, and may have good optical performance in the edge portion of the angle of view.

The thickness **T1** of the first lens **101** may be a difference of 1 or more times the maximum thickness and the minimum thickness, for example, 1 to 1.2 times, and the center thickness **CT1** may be a minimum and the edge thickness **ET1** may be a maximum. The thickness **T2** of the second lens **102** may be a maximum thickness in a range of 1 to 1.2 times the minimum thickness. The second lens **102** may have a maximum center thickness **CT2** and a minimum edge thickness **ET2.** The thickness **T3** of the third lens **103** may be a maximum at the center and a minimum at the edge, and the maximum thickness is a range of 1.5 to 2 times the minimum thickness. The thickness **T4** of the fourth lens **104** may be a maximum at the center and a minimum at the edge, and the maximum thickness is in a range of 1.6 to 2.2 times the minimum thickness. The thickness **T5** of the fifth lens **105** may be minimum at the center and maximum at the edge and the maximum thickness is in a range of 1.2 to 1.5 times the minimum thickness. The thickness **T6** of the sixth lens **106** may be maximum at the center and minimum at the edge and the maximum thickness is in a range of 1 to 1.2 times the minimum thickness. The thickness **T7** of the seventh lens **107** may be minimum at the center and maximum at the edge and the maximum thickness is in a range of 1 to 1.2 times the minimum thickness.

The center thickness **CT45** of the cemented lens **145** may be greater than the edge thickness **ET45.** The center thickness **CT45** of the cemented lens **145** is a distance from the center of the object side seventh surface **S7** of the fourth lens **104** to the center of the tenth surface **S10** of the fifth lens **105,** and the edge thickness **ET45** is a distance from the end of the effective area of the seventh surface **S7** to the tenth surface **S10** along an optical axis direction. The maximum thickness of the cemented lens **145** is at the center, the minimum thickness is at the edge, and the maximum thickness may be in a range of 1 to 1.2 times the minimum thickness.

Among the gaps **G1** to **G6** between the lenses, the first gap **G1** between the first and second lenses **101** and **102** may have a maximum in the center portion and a minimum in the edge portion. The second gap **G2** between the second and third lenses **102** and **103** may have a maximum in the edge portion and a minimum in the center portion. The third gap **G3** between the third and fourth lenses **103** and **104** may have a maximum in the edge portion and a minimum in the center portion. The fifth gap **G5** between the fifth and sixth lenses **105** and **106** may have a maximum in the center portion and a minimum in the edge portion. The sixth gap **G6** between the sixth and seventh lenses **106** and **107** may have a maximum in the center portion and a minimum in the edge portion.

As shown in FIG. 7, in the optical system and camera module of FIG. 1, the chief ray angle (CRA) may be 10 degrees or more, for example, in a range of 10 to 35 degrees or 10 to 25 degrees, at 1-field, which is the end of the diagonal length of the image sensor. In addition, the difference in the angle of the chief ray from a low temperature (-40 degrees) to a high temperature (95 degrees) may be 1 degree or less. Accordingly, even if the temperature changes from a low temperature to a high temperature, the difference in the angle of the chief ray is not large and stable optical performance can be achieved.

FIGS. 8 to 10 are graphs showing diffraction modulation transfer function (MTF) at room temperature, low temperature, and high temperature in the optical system of FIG. 1, and are graphs showing modulation according to spatial frequency. As shown in FIGS. 8 to 10, in a first embodiment of the invention, the deviation of MTF at low temperature or high temperature based on room temperature may be less than 10%, that is, 7% or less.

FIGS. 11 to 13 are graphs showing aberration characteristics at room temperature, low temperature, and high temperature in the optical system of FIG. 1. In the aberration graphs of FIGS. 11 to 13, spherical aberration (longitudinal spherical aberration), astigmatic field curves, and distortion are measured from left to right. In FIGS. 11 to 13, an X-axis may represent a focal length (mm) and a degree of distortion (%), and a Y-axis may represent the height of the image. In addition, the graph for spherical aberration is a graph for light in wavelength bands of about 435 nm, about 486 nm, about 546 nm, about 587 nm, and about 656 nm, and the graphs for astigmatism and distortion are graphs for light in wavelength bands of about 546 nm. In the aberration diagrams of FIGS. 11 to 13, the closer each curve at room temperature, low temperature, and high temperature is to the Y-axis, the better the aberration correction function can be interpreted. It can be seen that the optical system **1000** according to a first embodiment has measurement values close to a Y-axis in almost all areas. That is, the optical system **1000** according to a first embodiment has improved resolution and can have good optical performance not only at the center of the field of view (FOV) but also at the edge portion. Here, the low temperature is -20 degrees or lower, for example, in the range of -20 to -40 degrees, the room temperature is in the range of 22 degrees ±5 degrees or in the range of 18 degrees to 27 degrees, and the high temperature can be in the range of 85 degrees or higher, for example, in the range of 85 degrees to 105 degrees. Accordingly, it can be seen that the decrease in the luminance ratio (modulation) from the low temperature to the high temperature of FIGS. 11 to 13 is less than 10%, for example, 5% or lower, or is hardly changed.

Table 3 compares changes in optical characteristics such as EFL, BFL, F number (F#), TTL, and field of view (FOV) at room temperature, low temperature, and high temperature in an optical system according to a first embodiment, and it can be seen that the change rate of the optical characteristics at low temperature is 5% or less, for example, 3% or less, with respect to room temperature, and it can be seen that the change rate of the optical characteristics at low temperature is 5% or less, for example, 3% or less, with respect to room temperature.

[Table 3]

| | Room temperat ure | Low temperat ure | High temperat ure | Low/Roo m temperatur e | High/Roo m temperatur e |
|---|---|---|---|---|---|
| EFL(F) | 14.9017 | 14.8493 | 14.9652 | 99.65% | 100.43% |
| BFL | 0.0369 | 0.0394 | 0.0348 | 106.78% | 94.31% |
| F# | 1.6117 | 1.6060 | 1.6186 | 99.65% | 100.43% |
| TTL | 27.8600 | 27.8217 | 27.9051 | 99.86% | 100.16% |

(continued)

| | Room temperat ure | Low temperat ure | High temperat ure | Low/Roo m temperatur e | High/Roo m temperatur e |
|---|---|---|---|---|---|
| FOV | 30.0000 | 30.1166 | 29.8633 | 100.39% | 99.54% |

Therefore, as shown in Table 3, it can be seen that the changes in optical characteristics according to the temperature change from low temperature to high temperature, for example, the change rate of effective focal length (EFL), TTL, BFL, F number, and field of view (FOV), are 10% or less, that is, 5% or less, for example, in the range of 0 to 5%. This makes it possible to design temperature compensation for plastic lenses even when using at least one or two or more plastic lenses, thereby preventing a decrease in the reliability of optical characteristics.

The optical system of the first embodiment disclosed above can effectively control aberration characteristics such as chromatic aberration and distortion aberration, and can have good optical performance not only at the center portion of the field of view (FOV) but also at the edge portion.

An optical system according to a second embodiment of the invention will be described.

FIG. 14 is a side cross-sectional view of an optical system according to a second embodiment and a camera module having the same; FIG. 15 is a side cross-sectional view for explaining the relationship between nth and (n-1)th lenses according to FIG. 14; FIG. 16 is a table showing aspherical coefficients of lenses in an optical system of FIG. 14; FIG. 17 is a table showing thickness of each lens and gap between adjacent lenses in an optical system of FIG. 14; FIG. 18 is a table showing Sag values of lens surfaces of first to seventh lenses in an optical system of FIG. 14; FIG. 19 is a table showing Slope angle values of lens surfaces of first to seventh lenses in an optical system of FIG. 14; FIG. 20 is a table showing chief ray angle (CRA) data at room temperature, low temperature, and high temperature according to the position of an image sensor in an optical system of FIG. 14; FIGS. 21 to 22 are graphs showing data on diffraction modulation transfer function (MTF) of an optical system of FIG. 14 at room temperature, low temperature, and high temperature; and FIGS. 23 to 25 are graphs showing data on diffraction MTF of an optical system of FIG. 14 at room temperature, low temperature, and high temperature.

Referring to FIGS. 14 and 15, the optical system **1100** includes a lens unit **200,** and the lens unit **200** may include a first lens **201** to a seventh lens **207.** The first to seventh lenses **201** to **207** may be sequentially disposed along an optical axis **OA** of the optical system **1100.** Light corresponding to information of an object may pass through the first lens **201** to the seventh lens **207** and a filter **900** and be incident on the image sensor **700.**

The first lens **201** may be disposed closest to the object side. The first lens **201** may be disposed farthest from the sensor side. The first lens **201** may have a negative (-) refractive power on an optical axis **OA.** The first lens **201** may include a plastic material or a glass material, and may be, for example, a glass material. The first lens **201** made of a glass material can reduce changes in the center position and the radius of curvature due to temperature changes according to the surrounding environment, and can protect the incident side surface of the optical system **1100.**

With respect to an optical axis, the first surface **S1** on the object side of the first lens **201** may be convex, and the second surface **S2** on the sensor side may be concave. The first lens **201** may have a meniscus shape that is convex toward the object side. The first lens **201** is made of glass and may have an aspherical surface. The aspherical coefficients of the first and second surfaces **S1** and **S2** may be provided as L1S1, L1S2 of FIG. 3. The first lens **201** may be manufactured as a lens having an aspherical surface by injection molding a glass material. The first lens **201** may be a glass mold lens having an aspherical surface and made of a glass material. The glass mold lens may be manufactured by placing an optical glass ingot inside a mold that will have an aspherical shape and through a heating and compression process.

The first lens **201** is provided with an aspherical glass material, so that the glass material having high transmittance and refractive index has an aspherical surface, which can reduce the number of lenses in an optical system. The aspherical glass material can maintain optical performance at a constant level when the temperature changes to low or high temperature due to the glass material. In addition, since the aspherical surface is applied to the glass material, even if the lens is designed thin, the refractive index of light does not change significantly. Therefore, unlike an optical system in which the first lens is designed to be thickest in a horizontal angle of view ranging from 30 degrees to 50 degrees, the optical system of the invention can provide a thin first lens made of an aspherical glass material. Here, the thickness of the lens may include a center thickness and an edge thickness.

In addition, the second lens **202** may be further spaced apart from the first lens **201** due to the refractive characteristic of the first lens **201.** That is, the center gap between the first and second lenses **201** and **202** may be the largest within the lens unit. In addition, that is, the edge gap between the first and second lenses **201** and **202** may be the largest within the lens unit. The first surface **S1** of the first lens **201** may have a critical point from an optical axis **OA** to the end of the effective area. When the first surface **S1** has a critical point, it may be located in a range of 70% to 80%, preferably in a range of 74% to 78%, of the effective radius r11 from an optical axis **OA.** The critical point of the first surface **S1** may be located in a range of 5 mm to 5.3 mm, preferably in a range of 5 mm to 5.1 mm from an optical axis **OA.**

The refractive index n1 of the first lens **201** can satisfy the condition of n1>1.8 or n1>1.82. Since the refractive index n1 of the first lens **201** is the largest in the lens unit **200,** the radius of curvature of the first and second lenses **201** and **202** can be increased, and lens manufacturing can be easy. When the refractive index n1 of the first lens **201** is smaller than the condition, the lens surface must be formed sharply concave or convex in order to increase the refractive power of the first and second lenses **101** and **102.** In this case, lens manufacturing is not easy, the lens defect rate increases, and it can cause a decrease in yield.

The second lens **202** may be disposed second from the object side. The second lens **202** may be disposed sixth from the sensor side. The second lens **202** may be disposed between the first lens **201** and the third lens **203.** The second lens **202** may have a positive (+) refractive power on an optical axis **OA.** The second lens **202** may include a plastic or glass material. For example, the second lens **202** may be provided with a glass material.

With respect to an optical axis **OA,** the object side third surface **S3** of the second lens **202** may be convex, and the sensor side fourth surface **S4** may be convex. The second lens **202** may have a shape in which both surfaces are convex. The second lens **202** is made of glass and may be spherical. At least one or both of the third surface **S3** and the fourth surface **S4** may be spherical.

Since both surfaces of the second lens **202** are provided convexly, the TTL and the number of lenses of the optical system can be minimized, and light can be effectively refracted. In addition, when the radius of curvature of the third surface **S3** of the second lens **202** is L2R1, and the radius of curvature of the fourth surface **S4** is L2R2, the condition of L2RI < | L2R2| can be satisfied. Through this, light can be efficiently refracted by the third surface **S3,** so that the effective diameters of the third to seventh lenses **203** to **207** can be guided so as not to be increased, and the TTL can be reduced. When L2R1 > | L2R2 | , aberrations may occur a lot on the object side surface of the second lens **202,** the refractive efficiency of light may be decreased at the sensor side surface, the effective diameters of the rear lenses may be increased, and the TTL may also become larger.

The aperture **Stop** can be disposed around the sensor side fourth surface **S4** of the second lens **202.** The aperture can reduce the TTL within the field of view range, and the optical system can be miniaturized. Accordingly, the yield by weight of the optical system can be prevented from decreasing, and the production efficiency can be improved. In addition, the optical system can be miniaturized by reducing the TTL within the horizontal field of view (FOV_H) of 25 degrees to 36 degrees.

The third lens **203** may be disposed third from the object side. The third lens **203** may be disposed fifth from the sensor side. The third lens **203** may be disposed between the second lens **102** and the fourth lens **204.** The third lens **203** may have a positive (+) refractive power on an optical axis **OA.** The third lens **203** may include a plastic or glass material. For example, the third lens **203** may be provided with a glass material.

With respect to an optical axis, the object side fifth surface **S5** of the third lens **203** may be convex, and the sensor side sixth surface **S6** may be concave. The third lens **203** may have a meniscus shape in which the object side is convex on an optical axis **OA.** The third lens **203** is made of glass and may be spherical. At least one or both of the fifth surface **S5** and the sixth surface **S6** may be spherical. At least one or both of the fifth surface **S5** and the sixth surface **S6** may be provided without a critical point from an optical axis **OA** to the end of the effective area.

The fourth lens **204** may be disposed fourth from the object side. The fourth lens **204** may be disposed fourth from the sensor side. The fourth lens **204** may be disposed between the third lens **203** and the fifth lens **205.** The fourth lens **204** may have a positive (+) or negative (-) refractive power on an optical axis **OA.** The fourth lens **204** may have a positive (+) refractive power. The fourth lens **204** may have a positive (+) refractive power different from the refractive power of the fifth lens **205.** The fourth lens **204** may include a plastic or glass material. For example, the fourth lens **204** may be provided with a glass material. The fourth lens **204** may be provided with the same material as the fifth lens **205.**

With respect to an optical axis, the object side seventh surface **S7** of the fourth lens **204** may be convex, and the sensor side eighth surface **S8** may be concave. The fourth lens **204** may have a meniscus shape that is convex toward the object side. The fourth lens **204** is made of glass and may have a spherical surface. At least one or both of the seventh surface **S7** and the eighth surface **S8** may be spherical. The seventh surface **S7** and the eighth surface **S8** may be provided without a critical point from an optical axis **OA** to the end of the effective area.

The fifth lens **205** may be disposed fifth from the object side. The fifth lens **205** may be disposed third from the sensor side. The fifth lens **205** may be disposed between the fourth lens **204** and the sixth lens **206.** The fifth lens **205** may have a positive (+) or negative (-) refractive power on an optical axis **OA.** The fifth lens **205** may have a negative (-) refractive power. The fifth lens **205** may have a negative (-) refractive power that is different from the refractive power of the fourth lens **204.** The fifth lens **205** may include a plastic or glass material. For example, the fifth lens **205** may be provided with a glass material. The fifth lens **205** may be provided with the same material as the fourth lens **204.**

With respect to an optical axis, the ninth surface **S9** of the fifth lens **205** on the object side may be convex, and the tenth surface **S10** on the sensor side may be concave. The fifth lens **205** may have a meniscus shape that is convex from an optical axis **OA** to the object side. The fifth lens **205** is made of glass and may have a spherical surface. At least one surface of the ninth surface **S9** and the tenth surface **S10** may be a spherical surface. At least one or both of the ninth and tenth surfaces **S9** and **S10** of the fifth lens **205** may be provided without a critical point from an optical axis **OA** to the end of the effective area.

The fourth lens **204** and the fifth lens **205** can be cemented. The bonding surface between the fourth lens **204** and the fifth lens **205** can be defined as the eighth surface **S8.** The eighth surface **S8** can be the same surface as the ninth surface **S9** of the fifth lens **205.** The object side surface of the cemented lens **245** can be convex, and the sensor side surface can be concave. The gap between the fourth and fifth lenses **204** and **205** can be less than 0.01 mm, and can be attached with an adhesive. The gap between the fourth and fifth lenses **204** and **205** can be less than 0.01 mm from an optical axis **OA** to the end of the effective area. The fourth and fifth lenses **204** and **205** can have opposite refractive powers. The composite refractive power of the fourth and fifth lenses **204** and **205** can have a negative (-) refractive power.

The value of the radius of curvature of the cemented surface **S8** of the cemented lens **245** may be less than 50. For example, the value of the radius of curvature of the cemented surface **S8** of the cemented lens **245** may be less than 40. The cemented surface **S8** of the cemented lens **245** may be formed in a gentle shape. Through this, the cementing process of the fourth lens **204** and the fifth lens **205** forming the cemented lens **245** is advantageous, and the cementing maintenance strength can be increased.

The product of the refractive power of the object side fourth lens **204** of the cemented lens **245** and the refractive power of the sensor side fifth lens **205** may be less than 0. The product of the focal length of the object side fourth lens **205** of the cemented lens **245** and the focal length of the sensor side fifth lens **205** may be less than 0. Accordingly, the aberration characteristics of the optical system can be improved. If the refractive powers of the two lenses of the cemented lens **145** are the same, there is a limit to the improvement of aberration.

The composite refractive power of the cemented lens **245** has a negative (-) refractive power, and the third lens **203** on the object side and the sixth lens **206** on the sensor side with respect to the cemented lens **245** can have a negative (-) refractive power. Accordingly, the fourth lens **204,** the cemented lens **245,** and the fifth lens **205** can refract a portion of the incident light in a direction of an optical axis.

The effective diameter of the fourth lens **204** may be larger than the diagonal length of the image sensor **700.** The effective diameter of the fourth lens **204** is an average of the effective diameters of the seventh surface **S7** and the eighth surface **S8,** and may be larger than the diagonal length of the image sensor **700.** The effective diameter of the fifth lens **205** may be smaller than the effective diameter of the fourth lens **204** and larger than the diagonal length of the image sensor **700.** The effective diameter of the seventh surface **S7** of the fourth lens **204** may be larger than the diagonal length of the image sensor **700,** and the effective diameter of the tenth surface **S10** of the fifth lens **205** may be smaller than the diagonal length of the image sensor **700.**

When the fifth lens **205** is a spherical lens and the seventh lens **207** is an aspherical lens, the difference in effective diameter between the object side ninth surface **S9** and the sensor side tenth surface **S10** of the fifth lens **205** can be provided to be the largest. For example, when the effective diameters of the ninth surface **S9** and the sensor side tenth surface **S10** of the fifth lens **205** are CA51 and CA52, the condition of CA51 > CA52 is satisfied, and the difference between CA51 and CA52 can be the largest among the differences in effective diameters between the object side surfaces and the sensor side surfaces of each lens. Accordingly, the difference in effective diameters between the object side surface and the sensor side surface of the fifth lens **205** can be set to be maximized, so as to effectively guide light traveling through an aspherical lens having a relatively small effective diameter. Accordingly, a slimmer optical system can be provided. The effective diameter of the fifth lens **205** can satisfy the condition of $1.1 < CA51/CA52 < 1.5$.

The cemented lens **245** is cemented with glass lenses having different refractive indices, has a spherical refractive surface, and at least one lens disposed closer to the sensor than the cemented lens **245** is an aspherical lens, so that spherical aberration can be compensated for. In addition, at least one of the lenses disposed closer to the sensor than the cemented lens **245** is an aspherical lens and is disposed to have a small effective diameter, so that light traveling to the image sensor **700** through the aspherical lens can be effectively guided. Since the cemented lens **245** is disposed between aspherical lenses and between spherical lenses, chromatic aberration correction can be more efficient. By positioning the cemented lens **245** within the optical system, TTL can be reduced.

The sixth lens **206** may be disposed as the sixth lens from the object side. The sixth lens **206** may be disposed as the second lens from the sensor side. The sixth lens **206** may be disposed between the fifth lens **205** and the seventh lens **207.** The sixth lens **206** may have a positive (+) or negative (-) refractive power on an optical axis **OA.** The sixth lens **206** may have a positive (+) refractive power. The sixth lens **206** may include a plastic or glass material. For example, the sixth lens **206** may be provided with a plastic material.

With respect to an optical axis, the sixth lens **206** may have a convex shape on the object side eleventh surface **S11** and a convex shape on the sensor side 12th surface **S12.** The sixth lens **206** may have a convex shape on both surfaces on an optical axis **OA.** At least one or both of the eleventh surface **S11** and the 12th surface **S12** may be aspherical. Aspherical coefficients of the eleventh and 12th surfaces **S11** and **S12** may be provided as L1 and L2 of L6 of FIG. 15.

The eleventh surface **S11** of the sixth lens **206** can be provided without a critical point from an optical axis **OA** to the end of the effective area. The twelfth surface **S12** can be provided without at least one critical point from an optical axis

**OA** to the end of the effective area.

The seventh lens **207** may be disposed closest to the sensor side. The seventh lens **207** may be disposed farthest from the object side. The seventh lens **207** may have a positive (+) or negative (-) refractive power on an optical axis **OA.** The seventh lens **207** may have a negative (-) refractive power. The seventh lens **207** may include a plastic or glass material. For example, the seventh lens **207** may be made of a plastic material.

On an optical axis, the object side thirteenth surface **S13** of the seventh lens **207** may be convex, and the sensor side fourteenth surface **S14** may be concave. The seventh lens **207** may have a meniscus shape that is convex toward the object side. At least one of the thirteenth surface **S13** and the fourteenth surface **S14** may be an aspherical surface. For example, both the thirteenth surface **S13** and the fourteenth surface **S14** may be aspherical. Aspherical coefficients of the thirteenth and fourteenth surfaces **S13** and **S14** may be provided as S1 and S2 of L7 in FIG. 15.

The thirteenth surface **S13** of the seventh lens **207** can have a critical point from an optical axis **OA** to the end of the effective area. When the thirteenth surface **S13** has a critical point, it can be located in a range of 40% to 50%, preferably 43% to 47%, of the effective radius r71 from an optical axis **OA.** The critical point of the thirteenth surface **S13** can be located in a range of 1.5 mm to 2.0 mm, preferably 1.8 mm to 1.9 mm from an optical axis **OA.** The thirteenth surface **S13** having such a critical point can refract incident light to the center and edge portions, and improve aberration.

The fourteenth surface **S14** of the seventh lens **207** may have a critical point from an optical axis **OA** to the end of the effective area. When the fourteenth surface **S14** has a critical point, it may be located in a range of 60% to 70%, preferably in a range of 64% to 67%, of the effective radius r72 from an optical axis **OA.** The critical point of the fourteenth surface **S14** may be located in a range of 2.5 mm to 3.1 mm, preferably in a range of 2.9 mm to 3.0 mm from an optical axis **OA.**

The critical points of the thirteenth surface **S13** and the fourteenth surface **S14** are points where the sign of the slope value with respect to an optical axis **OA** and a direction perpendicular to the optical axis **OA** changes from positive (+) to negative (-) or from negative (-) to positive (+), and may mean a point where the slope value is 0. In addition, the critical points of the thirteenth surface **S13** and the fourteenth surface **S14** may be points where the slope value of the tangent passing through the lens surface increases and then decreases, or points where it decreases and then increases.

The seventh lens **207** may be a plastic lens that is closest to the image sensor **700.** In addition, by arranging two or more plastic lenses adjacent to the image sensor **700,** aberrations such as spherical aberration and chromatic aberration can be improved by the lens surface having an aspherical surface, and the influence on the resolution can be controlled. In addition, by arranging the plastic lens as the lens adjacent to the image sensor **700,** it can be insensitive to the assembly tolerance compared to a glass lens. In other words, being insensitive to the assembly tolerance means that even if the assembly is performed with a slight difference compared to the design during assembly, the optical performance may not be significantly affected. In addition, by providing the two lenses **206** and **207** adjacent to the image sensor **700** with plastic, the optical performance can be improved by the lens surface having an aspherical surface, and for example, aberration characteristics can be improved and degradation of resolution can be prevented.

The sixth lens **206** and the seventh lens **207** are disposed to be spaced apart from each other, but may include the characteristics of a cemented lens. The sixth lens **206** and the seventh lens **207** may have opposite refractive powers. The product of the refractive power of the sixth lens **206** and the refractive power of the seventh lens **207** may be less than 0. The product of the focal length of the sixth lens **206** and the focal length of the seventh lens **207** may be less than 0. Accordingly, the aberration characteristics of the optical system may be improved. If the signs of the refractive powers of two lenses having the characteristics of a cemented lens are the same, there is a limit to the improvement of aberrations.

The sixth lens **206** and the seventh lens **207** may be made of the same material. The sixth lens **206** and the seventh lens **207** may be made of a plastic material. The sixth lens **206** and the seventh lens **207** may be made of the same material as the cemented lens **245.**

[Table 4]

| Lens | Surface | Radius | Thickness | nd | vd | Semi Aperture | Focal length |
|---|---|---|---|---|---|---|---|
| 1 | S1 | 51.360 | 2.000 | 1.8297 | 24.0394 | 6.561 | -126.65 |
| | S2 | 33.890 | 5.673 | | | 6.300 | |
| 2 | S3 | 44.404 | 1.481 | 1.7762 | 49.6235 | 5.081 | 33.847 |
| | S4 | -63.405 | 0.100 | | | 4.912 | |
| | Stop | 0.000 | 0.100 | | | 4.800 | |
| 3 | S5 | 17.931 | 1.517 | 1.5521 | 75.4952 | 4.920 | 36.450 |
| | S6 | 159.642 | 0.200 | | | 4.914 | |
| 4 | S7 | 11.423 | 2.415 | 1.8395 | 42.7208 | 4.923 | 25.104 |

(continued)

| Lens | Surface | Radius | Thickness | nd | vd | Semi Aperture | Focal length |
|---|---|---|---|---|---|---|---|
| | S8 | 34.683 | 0.000 | | | 4.607 | |
| 5 | S9 | 34.683 | 4.530 | 1.8551 | 23.7844 | 4.607 | -6.929 |
| | S10 | 5.900 | 1.884 | | | 3.557 | |
| 6 | S11 | 12.280 | 2.418 | 1.5373 | 55.7098 | 4.000 | 20.807 |
| | S12 | -116.26 | 1.297 | | | 4.142 | |
| 7 | S13 | 12.815 | 1.500 | 1.6682 | 20.4008 | 4.000 | -44.662 |
| | S14 | 8.545 | 0.585 | | | 4.500 | |
| Filter | S15 | 0.000 | 0.400 | | | 4.545 | |
| | S16 | 0.000 | 1.060 | | | 4.559 | |
| Cover | S17 | 0.000 | 0.300 | | | 4.616 | |
| | S18 | 0.000 | 0.040 | | | 4.627 | |
| Image | | 0.000 | 0.000 | | | 4.636 | |

Table 4 shows the surface number **Surface,** radius of curvature **Radius,** center thickness of each lens or distance between lens surfaces **Thickness,** refractive index **nd,** Abbe number **vd,** effective radius **Semi Aperture,** and focal length **Focal length** of a lens according to a first embodiment of the present invention. At this time, the unit of the radius of curvature and thickness or distance may be mm.

[Table 5]

| Category | Value | Category | Value |
|---|---|---|---|
| F | 14.7925 | ET1 | 2.2492 |
| F2_7 | 12.9375 | ET2 | 0.9993 |
| F3_7 | 30.8755 | ET3 | 0.9047 |
| F4_7 | -101.8560 | ET4 | 1.6063 |
| F5_7 | -8.2009 | ET5 | 5.4138 |
| F6_7 | 31.2656 | ET6 | 1.2309 |
| F4_5 | -32.3677 | ET7 | 1.9192 |
| ΣIndex | 12.0579 | F-number | 1.6065 |
| ΣAbbe | 291.7739 | FOV_D | 34.2949 |
| ΣCT | 15.86158 | EPD | 9.2082 |
| ΣCG | 9.25357 | BFL | 2.3849 |
| CA_max | 12.861 | TD | 25.1151 |
| CA_min | 8.142 | ImgH | 4.6300 |
| CA_Aver | 9.575 | SD | 15.8609 |
| CT_max | 2.4180 | TTL | 27.5000 |
| CT_min | 1.5000 | GLca_Aver | 10.076 |
| CT_Aver | 2.26594 | PLca_Aver | 8.321 |
| Image sensor | 3840*2160 | | |

Table 5 shows categories of Mathematical expressions described above in the optical system **1100** of the embodiment, including the total top length (TTL) (mm), back focal length (BFL), effective focal length **F** (mm), ImgH (mm), effective diameter **CA** (mm), thickness (mm), TTL (mm), TD (mm), which is an optical axis distance from the first surface **S1** to the fourteenth surface **S14,** composite focal lengths of the first to seventh lenses F2_7, F3_7, F4_7, F5_7, F6_7, and F4_5, (mm), sum of refractive indices, sum of Abbe numbers, sum of thicknesses (mm), sum of gaps between adjacent lenses, effective diameter characteristics, sum of refractive indices of glass lenses, sum of refractive indices of plastic materials, angle of view FOV_H (degree), edge thickness ET, F number, and the like of the optical system **1100.**

As shown in FIGS. 14 and 15, the center thickness of the first to seventh lenses **201** to **207** is represented by CT1 to CT7, the edge thickness at the end of the effective area of each lens is represented by ET1 to ET7, the center gap between two adjacent lenses is represented by CG1 to CG6, and the edge gap between the edges of each lens is represented by EG1 to EG6. Here, the center thickness of the cemented lens **245** is CT45, and the edge thickness is represented by ET45.

Referring to FIG. 15, back focal length (BFL) is an optical axis distance from the image sensor **700** to the center of the last lens. In FIG. 14, TTL is an optical axis distance from the center of the first surface **S1** of the first lens **201** to an upper surface of the image sensor **700.**

As shown in FIG. 16, among the lenses of the lens unit **200** in a first embodiment, the lens surfaces of the first, sixth, and seventh lenses **201, 206,** and **207** may include aspherical surfaces having a 30th-order aspherical surface coefficient. For example, the first, sixth, and seventh lenses **201, 206,** and **207** may include lens surfaces having a 30th-order aspherical surface coefficient. As described above, since the aspherical surface having the 30th-order aspherical surface coefficient (a value other than "0") can significantly change the aspherical shape of the edge portion, the optical performance of the edge portion of the field of view (FOV) can be well corrected.

As shown in FIG. 17, the thicknesses **T1** to **T7** of the first to seventh lenses **201, 202, 203, 204, 205, 206,** and **207** and the gaps **G1** to **G6** between adjacent two lenses can be set. As shown in FIG. 16, the thicknesses **T1** to **T7** of each lens in a Y-axis direction can be expressed at gaps of 0.1 mm or 0.2 mm or more, and the gaps **G1** to **G6** between each lens can be expressed at gaps of 0.1 mm or 0.2 mm or more.

When compared in terms of the absolute values of the curvature radii of each lens, the curvature radii of the sixth surface **S6** of the third lens **203** on an optical axis **OA** may be the largest among the lenses, and the curvature radii of the tenth surface **S10** of the fifth lens **205** may be the smallest among the lenses. The difference between the maximum curvature radii and the minimum curvature radii may be 8 times or more, for example, 9 to 11 times. The curvature radii of the sensor side surface of the glass material lens disposed on the object side of the plastic material lens may be the smallest among the lenses. The curvature radii of the sensor side surface of the fifth lens **205** disposed on the object side of the sixth lens **206** may be the smallest among the lenses.

Since the effective diameter of a plastic lens is smaller than that of a glass lens, the lens disposed on the object side of the plastic lens can have strong refractive power in order to refract light through the plastic lens. In addition, the radius of curvature of the lens surface can be small in order to strengthen the refractive power.

Among the lenses, the number of surfaces having an absolute value of curvature radii of 10 mm or less among the object side surface and the sensor side surface may be two or less. The absolute value of curvature radii of the sensor side surface the tenth surface **S10** of the fifth lens **205** and the sensor side surface (the fourteenth surface) **S14** of the seventh lens **207** may be 10 mm or less. Among the lenses, the number of surfaces having an absolute value of curvature radii of 10 mm or more and 20 mm or less among the object side surface and the sensor side surface may be three or more and five or less. The absolute value of the curvature radii of the object side surface (the fifth surface) **S5** of the third lens **203,** the object side surface (the seventh surface) **S7** of the fourth lens **204,** and the object side surface (the eleventh surface) **S11** of the sixth lens **206** may be 10 mm or more and 20 mm or less. Among the lenses, there may be at least one and no more than four surfaces having an absolute value of a curvature radius of 60 mm or more among the object side surface and the sensor side surface. The absolute values of the curvature radii of the sensor side surface (the fourth surface) **S4** of the second lens **202,** the sensor side surface (the sixth surface) **S6** of the third lens **203,** and the sensor side surface (the twelfth surface) **S12** of the sixth lens **206** may be at least 60 mm.

In temperature compensation designs that require resolution to be maintained even when temperatures change from -40 to 100 degrees, a larger radius of curvature can be advantageous. In designs for temperature compensation, aluminum barrels can be used for lens barrels. Aluminum barrels have large manufacturing tolerances, so when the lenses are assembled, the optical axes of each lens are greatly misaligned. Therefore, by designing a large radius of curvature, the sensitivity to manufacturing tolerances can be reduced.

Referring to FIG. 19, the slope angle of the lens surface can be expressed as a value in rad, which is the slope of the lens surface at a point on the lens surface with a 0.1 gap with respect to a Y-axis perpendicular to an optical axis, converted to a tangent value. When explaining the slope angle of the lens surface, the slope angle of the object side surface (the first surface) **S1** of the first lens **101** may be the smallest, excluding the cemented lens among the first to seventh lenses. The number of lenses having a value smaller than the absolute value of the slope angle of the lens surface of the object side surface of the aspherical glass material among the object side surfaces and the sensor side surfaces of the first to seventh lenses may be five or less. Preferably, there may be one lens smaller than the absolute value of the inclination angle of the object side surface (the first surface) **S1** of the first lens **201.** The absolute value of the inclination angle of the sensor side surface (the sixth surface) **S6** of the third lens **203** may be smaller than the absolute value of the inclination angle of the object side surface (the first surface) **S1** of the first lens **201.**

The shape of the first lens **201** having an aspherical shape can be designed to be gentle. If the aspherical surface is located at the frontmost in the optical system **1100,** the performance of the lens is improved, but the assemblability may be reduced. In order to improve the assemblability, the shape of the first lens **201** should be designed to be gentle. In order to minimize the influence on the lens disposed on the sensor side when assembling the lens in the barrel, it can be designed to have almost no curvature.

With respect to an optical axis, when describing the center thickness of the lenses, the center thickness **CT3** of the third lens **203** is the largest among the lenses, and the center thickness **CT7** of the seventh lens **207** is the smallest among the lenses. The difference between the maximum central thickness and the minimum center thickness among the lenses may be in the range of 1.5 mm or more and 2.5 mm or less.

When explaining the center gap **CG** between the lenses, the center gap **CG1** between the first lens **201** and the second lens **202** may be the maximum and the center gap **CG2** between the second and third lenses **202** and **203** and the center gap **CG3** between the third and fourth lenses **203** and **204** may be the minimum. Here, the minimum center gap excludes the cemented surface of the cemented lens **245.** The difference between the maximum center gap and the minimum center gap among the gaps of lens being spaced apart may be 5.5 mm or more, for example, in the range of 5.8 mm to 6.5 mm.

When explaining the effective diameter, the lens having the maximum effective diameter may be disposed between the first lens **201** closest to the object and the seventh lens **207** closest to the image sensor **700.** The lens having the maximum effective diameter may be a glass lens. The lens having the maximum effective diameter may be disposed between the first lens **201** and the cemented lens **245.** The lens having the maximum effective diameter may be the first lens **201.** Here, the effective diameter is an average of the effective diameter of the object side surface and the effective diameter of the sensor side surface of each lens. The lens surface having the maximum effective diameter may be the first surface **S1** of the first lens **201.**

The lens having the minimum effective diameter can be either one of the cemented lenses or one of the plastic lenses, for example, the fifth lens **205** or the seventh lens **207** adjacent to the image sensor **700.** For example, the effective diameter of the fifth lens 205 may be the minimum within the lens unit 200. The lens surface having the minimum effective diameter can be the tenth surface S10 of the fifth lens 205.

The effective diameters of each of the first to fourth lenses **201 to 204** adjacent to the object side may be larger than the effective diameters of the fifth, sixth, and seventh lenses **205, 206,** and **207** adjacent to the sensor side. The effective diameters of the first to fourth lenses **201** to **204** may be larger than the diagonal length of the image sensor 700. The average effective diameter of the seventh lens 207 may be smaller than the diagonal length of the image sensor 700. Accordingly, light incident through a plurality of lenses aligned along an optical axis may be guided to the image sensor 700.

When explaining the refractive index, the refractive index of the first lens 201 may be the largest among the lenses and may be greater than 1.8, for example, greater than 1.82. Either or both of the third lens **203** and the sixth lens **206** may have the smallest refractive index among the lenses. For example, the refractive index of the sixth lens **206** may be the smallest among the lenses and may be less than 1.6, for example, less than 1.55. The difference between the maximum refractive index and the minimum refractive index may be 0.2 or more. By providing a high refractive index lens made of glass closest to an object, and providing a lens adjacent to the glass lens and a lens adjacent to the image sensor **700** with a low refractive index lens made of plastic, the incidence efficiency can be increased, and the refractive power between the lenses made of glass and plastic can be adjusted to guide them to the image sensor **700.**

When cmparing the Abbe numbers, the Abbe number of the third lens **203** is the largest among the lenses and may be 70 or more. The Abbe number of the seventh lens **207** is the smallest among the lenses and may be 25 or less. The difference between the maximum refractive index and the minimum Abbe number may be 50 or more. By making the Abbe number of the third lens **203** adjacent to the cemented lens **245** the largest and providing the Abbe number of the seventh lens **207** with a low refractive index adjacent to the image sensor **700** the smallest, the color dispersion of light traveling between the glass lenses can be controlled and the color dispersion between the glass and plastic lenses can be increased to guide it to the image sensor **700.**

The focal lengths **F1, F5,** and **F7** of the first, fifth, and seventh lenses **201, 205,** and **207** may have a negative (-) signs. The first, fifth, and seventh lenses **201, 205,** and **207** may have a negative (-) refractive power. The focal lengths F2, F3, F4, and F6 of the second, third, fourth, and sixth lenses **202, 203, 204,** and **206** may have a positive (+) signs. The second, third, fourth, and sixth lenses **202, 203, 204,** and **206** may have a positive (+) refractive power. The second, third, and fourth lenses **202, 203,** and **204** having positive (+) refractive power may be disposed on the sensor side of the first lens 201 having negative (-) refractive power. Through this, light incident on the object side can move away from an optical axis direction and then gather again along an optical axis direction, thereby forming a stable optical path.

In addition, the sixth lens 206 and the seventh lens 207, which are adjacently being disposed lenses, can satisfy the following conditions.

The refractive index of the lens with positive refractive power < the refractive index of the lens with negative refractive power    Condition 1:

Dispersion of a lens with positive refractive power > Dispersion of a lens with negative refractive power    Condition 2:

Here, among the plastic lenses, the sixth lens **206** has a positive refractive power and the seventh lens **207** has a negative refractive power, so that according to Conditions 1 and 2, the refractive index of the sixth lens **206** is smaller than that of the seventh lens **207,** and the dispersion value of the sixth lens **206** is larger than that of the seventh lens **207.** Chromatic aberration occurring in the plastic lens can be corrected by the plastic lens. In addition, since the sixth lens **206** and the seventh lens **207,** which are plastic lenses disposed in succession, satisfy the refractive index difference of 0.1 or more and 0.15 or less and the Abbe number difference of 20 or more and 60 or less, the chromatic aberration occurring in the plastic lens can be compensated for by the plastic lens.

The optical system has chromatic aberration, and chromatic aberration is corrected by using cemented lenses or two lenses disposed in series. As the temperature changes from low to high, the lens repeatedly contracts and expands. Since the lens characteristics of lenses of the same material change the same amount according to the temperature change, it is effective to correct chromatic aberration between lenses of the same material even if the temperature changes.

Therefore, in the first embodiment of the present invention, the chromatic aberration occurring in the plastic lens is corrected by using the cemented lens **245,** the sixth lens **206,** and the seventh lens **207.**

The fourth lens **204** and the fifth lens **205,** which are cemented lenses, can compensate for chromatic aberration occurring in a glass lens by satisfying the refractive index difference of 0.1 or more and 0.15 or less and the Abbe number difference of 20 or more and 60 or less. The refractive index difference is rounded off to the third decimal place, and the Abbe number difference is rounded off to the first decimal place to compare the values.

When comparing the focal lengths in absolute values, the focal length of the first lens **201** is the largest among the lenses, and may be 120 or more and 150 or less. Among the lenses, the first lens **201** made of glass may have the largest focal length and the smallest refractive power. The focal length of the fifth lens **205** is the smallest among the lenses, and the absolute value of the focal length of the fifth lens **205** may be 5 or more and 20 or less. Among the lenses, the fifth lens **205** made of glass may have the smallest focal length and the largest refractive power. Since lenses made of a plastic material having small refractive power are disposed on the sensor side of the fifth lens **205,** the refractive power of the fifth lens **205** may increase.

Among the lenses other than the cemented lens **245,** the lens having the minimum focal length may be the third lens **203.** The difference between the maximum focal length and the minimum focal length may be 50 or more or 80 or more. Accordingly, the optical system may have improved MTF characteristics, aberration control characteristics, resolution characteristics, and the like in the set angle of view range, and may have good optical performance in the edge portion of the angle of view.

The thickness **T1** of the first lens **201** may be a difference of 1 or more times the maximum thickness and the minimum thickness, for example, 1 to 1.2 times, and the center thickness **CT1** may be a minimum and the edge thickness **ET1** may be a maximum. The thickness **T2** of the second lens **202** may be a maximum thickness in a range of 1 to 1.2 times the minimum thickness. The second lens **202** may have a maximum center thickness **CT2** and a minimum edge thickness **ET2.** The thickness **T3** of the third lens **203** may be a maximum at the center and a minimum at the edge, and the maximum thickness is a range of 1.5 to 2 times the minimum thickness. The thickness **T4** of the fourth lens **204** may be a maximum at the center and a minimum at the edge, and the maximum thickness is in a range of 1.6 to 2.2 times the minimum thickness. The thickness **T5** of the fifth lens **205** may be minimum at the center and maximum at the edge and the maximum thickness is in a range of 1.2 to 1.5 times the minimum thickness. The thickness **T6** of the sixth lens **206** may be maximum at the center and minimum at the edge and the maximum thickness is in a range of 1 to 1.2 times the minimum thickness. The thickness **T7** of the seventh lens **207** may be minimum at the center and maximum at the edge and the maximum thickness is in a range of 1 to 1.2 times the minimum thickness.

The center thickness **CT45** of the cemented lens **245** may be greater than the edge thickness **ET45.** The center thickness **CT45** of the cemented lens **245** is a distance from the center of the object side seventh surface S7 of the fourth lens 204 to the center of the tenth surface S10 of the fifth lens 205, and the edge thickness ET45 is a distance from the end of the effective area of the seventh surface S7 to the tenth surface S10 along an optical axis direction. The maximum thickness of the cemented lens 245 is at the center, the minimum thickness is at the edge, and the maximum thickness may be in a range of 1 to 1.2 times the minimum thickness.

Among the gaps G1 to G6 between the lenses, the first gap G1 between the first and second lenses **201** and **202** may have a maximum in the center portion and a minimum in the edge portion. The second gap G2 between the second and third lenses **202** and **203** may have a maximum in the edge portion and a minimum in the center portion. The third gap **G3** between the third and fourth lenses **203** and **204** may have a maximum in the edge portion and a minimum in the center portion. The fifth gap **G5** between the fifth and sixth lenses **205** and **206** may have a maximum in the center portion and a minimum in the edge portion. The sixth gap **G6** between the sixth and seventh lenses **206** and **207** may have a maximum in the center portion and a minimum in the edge portion.

As shown in FIG. 20, in the optical system and camera module of FIG. 14, the chief ray angle (CRA) may be 10 degrees or more, for example, in a range of 10 to 35 degrees or 10 to 25 degrees, at 1-field, which is the end of the diagonal length of the image sensor. In addition, the difference in the angle of the chief ray from a low temperature (-40 degrees) to a high temperature (95 degrees) may be 1 degree or less. Accordingly, even if the temperature changes from a low temperature to a high temperature, the difference in the angle of the chief ray is not large and stable optical performance can be achieved.

FIGS. 21 to 23 are graphs showing diffraction modulation transfer function (MTF) at room temperature, low temperature, and high temperature in the optical system of FIG. 14, and are graphs showing modulation according to spatial frequency. As shown in FIGS. 21 to 23, in a first embodiment of the invention, the deviation of MTF at low temperature or high temperature based on room temperature may be less than 10%, that is, 7% or less.

FIGS. 24 to 26 are graphs showing aberration characteristics at room temperature, low temperature, and high temperature in the optical system of FIG. 14. In the aberration graphs of FIGS. 24 to 26, spherical aberration (longitudinal spherical aberration), astigmatic field curves, and distortion are measured from left to right. In FIGS. 24 to 26, an X-axis may represent a focal length (mm) and a degree of distortion (%), and a Y-axis may represent the height of the image. In addition, the graph for spherical aberration is a graph for light in wavelength bands of about 435 nm, about 486 nm, about 546 nm, about 587 nm, and about 656 nm, and the graphs for astigmatism and distortion are graphs for light in wavelength bands of about 546 nm. In the aberration diagrams of FIGS. 24 to 26, the closer each curve at room temperature, low temperature, and high temperature is to the Y-axis, the better the aberration correction function can be interpreted. It can be seen that the optical system **1100** according to a first embodiment has measurement values close to a Y-axis in almost all areas. That is, the optical system **1100** according to a first embodiment has improved resolution and can have good optical performance not only at the center of the field of view (FOV) but also at the edge portion. Here, the low temperature is -20 degrees or lower, for example, in the range of -20 to -40 degrees, the room temperature is in the range of 22 degrees ±5 degrees or in the range of 18 degrees to 27 degrees, and the high temperature can be in the range of 85 degrees or higher, for example, in the range of 85 degrees to 105 degrees. Accordingly, it can be seen that the decrease in the luminance ratio (modulation) from the low temperature to the high temperature of FIGS. 24 to 26 is less than 10%, for example, 5% or lower, or is hardly changed.

Table 6 compares changes in optical characteristics such as EFL, BFL, F number (F#), TTL, and field of view (FOV_H) at room temperature, low temperature, and high temperature in the optical system according to a second embodiment, and it can be seen that the change rate of the optical characteristics at low temperature is 5% or less, for example, 3% or less, with respect to room temperature, and it can be seen that the change rate of the optical characteristics at low temperature is 5% or less, for example, 3% or less, with respect to room temperature.

[Table 6]

| | Room temperat ure | Low temperat ure | High temperat ure | Low/Roo m temperatur e | High/Roo m temperatur e |
|---|---|---|---|---|---|
| EFL(F) | 14.7925 | 14.7329 | 14.8644 | 99.60% | 100.49% |
| BFL | 0.0342 | 0.0356 | 0.0334 | 104.09% | 97.66% |
| F# | 1.6065 | 1.6000 | 1.6143 | 99.60% | 100.49% |
| TTL | 27.4600 | 27.4228 | 27.5038 | 99.86% | 100.16% |
| FOV_H | 30.0000 | 30.1292 | 29.8489 | 100.43% | 99.50% |

Therefore, as shown in Table 6, it can be seen that the changes in optical characteristics according to the temperature change from low temperature to high temperature, for example, the change rate of effective focal length (EFL), TTL, BFL, F number, and field of view (FOV_H), are less than 10%, that is, less than 5%, for example, in the range of 0 to 5%. This makes it possible to design temperature compensation for plastic lenses even when using at least one or two or more plastic lenses, thereby preventing a decrease in the reliability of optical characteristics.

The optical system of a second embodiment disclosed above can effectively control aberration characteristics such as chromatic aberration and distortion aberration, and can have good optical performance not only at the center portion of the field of view (FOV) but also at the edge portion.

An optical system according to a third embodiment of the invention will be described.

FIG. 27 is a side cross-sectional view of an optical system according to a third embodiment and a camera module having the same; FIG. 28 is a side cross-sectional view for explaining the relationship between the nth and (n-1)th lenses according to FIG. 27; FIG. 29 is a table showing aspherical coefficients of lenses in an optical system of FIG. 27; FIG. 30 is a table showing the thickness of each lens and the gap between adjacent lenses in an optical system of FIG. 27; FIG. 31 is a table showing Sag values of lens surfaces of first to seventh lenses in an optical system of FIG. 27; FIG. 32 is a table showing Slope angle values of lens surfaces of first to seventh lenses in an optical system of FIG. 27; FIG. 33 is a table showing chief ray angle (CRA) data at room temperature, low temperature, and high temperature according to the position of an image sensor in an optical system of FIG. 27; FIGS. 34 to 35 are graphs showing data on diffraction diffraction modulation transfer function (MTF) of an optical system of FIG. 27 at room temperature, low temperature, and high temperature; and FIGS. 37 to 39 are graphs showing data on aberration characteristics of an optical system of FIG. 27 at room temperature, low temperature, and high temperature.

Referring to FIGS. 27 and 28, the optical system **1200** includes a lens unit **300,** and the lens unit **300** may include a first lens **301** to a seventh lens **307.** The first to seventh lenses **301** to **307** may be sequentially disposed along an optical axis **OA** of the optical system **1200.** Light corresponding to information of an object may pass through the first lens 301 to the seventh lens **307** and a filter **900** and be incident on the image sensor **700.**

The first lens 301 can be disposed closest to the object side. The first lens **301** can be disposed farthest from the sensor side. The first lens **301** can have a positive (+) refractive power on an optical axis **OA.** The first lens **301** can include a plastic material or a glass material, and can be, for example, a glass material. The first lens **301** made of a glass material can reduce changes in the center position and the radius of curvature due to temperature changes according to the surrounding environment, and can protect the incident side surface of the optical system **1200.**

With respect to an optical axis, the first surface **S1** on the object side of the first lens **301** may be convex, and the second surface **S2** on the sensor side may be convex. The first lens **301** may have a shape in which both surfaces are convex. The first lens **301** is made of glass and may have an aspherical surface. The aspherical coefficients of the first and second surfaces **S1** and **S2** may be provided as L1S1, L1S2 of FIG. 29. The first lens **301** may be manufactured as a lens having an aspherical surface by injection molding a glass material. The first lens **301** may be a glass mold lens having an aspherical surface and made of a glass material. The glass mold lens may be manufactured by inserting an optical glass ingot into a mold having an aspherical shape and through a heating and compression process.

The first lens **301** is provided with an aspherical glass material, so that the glass material having high transmittance and refractive index has an aspherical surface, which can reduce the number of lenses in an optical system. The aspherical glass material can maintain optical performance at a constant level when the temperature changes to low or high temperature due to the glass material. In addition, since the aspherical surface is applied to the glass material, even if the lens is designed thin, the refractive index of light does not change significantly. Therefore, unlike an optical system in which the first lens is designed to be thickest in a horizontal angle of view ranging from 30 degrees to 50 degrees, the optical system of the invention can provide a thin first lens made of an aspherical glass material. Here, the thickness of the lens may include a center thickness and an edge thickness.

The second lens **302** may be disposed second from the object side. The second lens **302** may be disposed sixth from the sensor side. The second lens **302** may be disposed between the first lens **301** and the third lens **303.** The second lens **302** may have a negative (-) refractive power on an optical axis **OA.** The second lens **302** may include a plastic or glass material. For example, the second lens **302** may be provided as a glass material.

With respect to an optical axis, the object side third surface **S3** of the second lens **302** may be concave, and the sensor side fourth surface **S4** may be convex. The second lens **302** may have a meniscus shape with a convex sensor side. The second lens **302** may be made of glass and may be spherical. At least one or both of the third surface **S3** and the fourth surface **S4** may be spherical.

The aperture **Stop** can be disposed around the sensor side fourth surface **S4** of the second lens **302.** The aperture can reduce the TTL within the field of view range, and the optical system can be miniaturized. Accordingly, the yield by weight of the optical system can be prevented from decreasing, and the production efficiency can be improved. In addition, the optical system can be miniaturized by reducing the TTL within the horizontal field of view (FOV_H) of 25 degrees to 36 degrees.

The third lens 303 may be disposed third from the object side. The third lens 303 may be disposed fifth from the sensor side. The third lens 303 may be disposed between the second lens 302 and the fourth lens 304. The third lens 303 may have a positive (+) refractive power on an optical axis OA. The third lens 303 may include a plastic or glass material. For example, the third lens 303 may be provided with a glass material.

With respect to an optical axis, the object side fifth surface S5 of the third lens 303 may be convex, and the sensor side sixth surface S6 may be convex. The third lens 303 may have a shape in which both surfaces are convex on an optical axis OA. The third lens 303 is made of glass and may be spherical. At least one or both of the fifth surface **S5** and the sixth surface **S6** may be spherical. At least one or both of the fifth surface **S5** and the sixth surface **S6** may be provided without a critical point from an optical axis **OA** to the end of the effective area.

Since both surfaces of the third lens **303** are provided convexly, the TTL and the number of lenses of the optical system can be minimized, and light can be effectively refracted. In addition, when the radius of curvature of the fifth surface

**S5** of the third lens **303** is L3R1, and the radius of curvature of the sixth surface **S6** is L3R2, the condition of L3R1 < | L3R2 | can be satisfied. Through this, light can be efficiently refracted by the third surface **S3,** so that the effective diameters of the third to seventh lenses **303** to **307** can be guided so as not to increase, and the TTL can be reduced. If L3R1 > | L3R2 | , a lot of aberration may occur on the object side surface of the third lens **303,** the refractive efficiency of light may decrease on the sensor side surface, and the effective diameters of the rear lenses may increase and the TTL may also become large.

The fourth lens **304** may be disposed fourth from the object side. The fourth lens **304** may be disposed fourth from the sensor side. The fourth lens **304** may be disposed between the third lens **303** and the fifth lens **305.** The fourth lens **304** may have a positive (+) or negative (-) refractive power on an optical axis **OA.** The fourth lens **304** may have a positive (+) refractive power. The fourth lens **304** may have a positive (+) refractive power different from the refractive power of the fifth lens **305.** The fourth lens **304** may include a plastic or glass material. For example, the fourth lens **304** may be provided with a glass material. The fourth lens **304** may be provided with the same material as the fifth lens 305.

With respect to an optical axis, the object side seventh surface S7 of the fourth lens 304 may be convex, and the sensor side eighth surface S8 may be convex. The fourth lens 304 may have a convex shape on both surfaces. The fourth lens 304 may be made of glass and may have a spherical surface. At least one or both of the seventh surface S7 and the eighth surface S8 may be spherical. The seventh surface S7 and the eighth surface S8 may be provided without a critical point from an optical axis OA to the end of the effective area.

The fifth lens 305 may be disposed fifth from the object side. The fifth lens 305 may be disposed third from the sensor side. The fifth lens 305 may be disposed between the fourth lens **304** and the sixth lens **306.** The fifth lens **305** may have a positive (+) or negative (-) refractive power on an optical axis **OA.** The fifth lens **305** may have a negative (-) refractive power. The fifth lens **305** may have a negative (-) refractive power different from the refractive power of the fourth lens **304.** The fifth lens **305** may include a plastic or glass material. For example, the fifth lens **305** may be provided with a glass material. The fifth lens **305** may be provided with the same material as the fourth lens **304.**

With respect to an optical axis, the ninth surface **S9** on the object side of the fifth lens **305** may be concave, and the tenth surface **S10** on the sensor side may be concave. The fifth lens **305** may have a shape in which both surfaces are concave. The fifth lens **305** is made of glass and may have a spherical surface. At least one surface of the ninth surface **S9** and the tenth surface **S10** may be a spherical surface. At least one or both of the ninth and tenth surfaces **S9** and **S10** of the fifth lens **305** may be provided without a critical point from an optical axis **OA** to the end of the effective area.

The fourth lens **304** and the fifth lens **305** can be cemented. The bonding surface between the fourth lens **304** and the fifth lens **305** can be defined as the eighth surface **S8.** The eighth surface **S8** can be the same surface as the ninth surface **S9** of the fifth lens **305.** The object side surface of the cemented lens **345** can be convex, and the sensor side surface can be concave. The gap between the fourth and fifth lenses **304** and **305** can be less than 0.01 mm and can be attached with an adhesive. The gap between the fourth and fifth lenses **304** and **305** can be less than 0.01 mm from an optical axis **OA** to the end of the effective area. The fourth and fifth lenses **304** and **305** can have opposite refractive powers. The composite refractive power of the fourth and fifth lenses **304** and **305** can have a negative (-) refractive power.

The value of the radius of curvature of the cemented surface **S8** of the cemented lens **345** may be greater than 90. For example, the value of the radius of curvature of the cemented surface **S8** of the cemented lens **345** may be greater than 100. The cemented surface **S8** of the cemented lens **345** may be formed in a gentle shape. Through this, the cementing process of the fourth lens **304** and the fifth lens **305** forming the cemented lens **345** is advantageous, and the cementing maintenance strength can be increased.

The product of the refractive power of the object side fourth lens **304** of the cemented lens **345** and the refractive power of the sensor side fifth lens **305** may be less than 0. The product of the focal length of the object side fourth lens **305** of the cemented lens **345** and the focal length of the sensor side fifth lens **305** may be less than 0. Accordingly, the aberration characteristics of the optical system can be improved. If the refractive powers of the two lenses of the cemented lens **345** are the same, there is a limit to the improvement of aberration.

The composite refractive power of the cemented lens **345** has a negative (-) refractive power, and the third lens **303** on the object side and the sixth lens **306** on the sensor side with respect to the cemented lens **345** can have a negative (-) refractive power. Accordingly, the fourth lens **304,** the cemented lens **345,** and the fifth lens **305** can refract a portion of the incident light in a direction of an optical axis.

The effective diameter of the fourth lens 304 may be larger than the diagonal length of the image sensor 700. The effective diameter of the fourth lens 304 is an average of the effective diameters of the seventh surface S7 and the eighth surface S8, and may be larger than the diagonal length of the image sensor 700. The effective diameter of the fifth lens 305 may be smaller than the effective diameter of the fourth lens 304 and larger than the diagonal length of the image sensor 700. The effective diameter of the seventh surface S7 of the fourth lens 304 may be larger than the diagonal length of the image sensor 700, and the effective diameter of the tenth surface S10 of the fifth lens 305 may be smaller than the diagonal length of the image sensor 700.

When the fifth lens 305 is a spherical lens and the seventh lens 307 is an aspherical lens, the difference in effective diameter between the object side ninth surface **S9** and the sensor side tenth surface **S10** of the fifth lens **305** can be provided to be the largest. For example, when the effective diameters of the ninth surface **S9** and the sensor side tenth surface **S10** of the fifth lens **305** are CA51 and CA52, the condition of CA51 > CA52 is satisfied, and the difference between CA51 and CA52 can be the largest among the differences in effective diameters between the object side surfaces and the sensor side surfaces of each lens. Accordingly, the difference in effective diameters between the object side surface and the sensor side surface of the fifth lens **305** can be set to be maximized, so as to effectively guide light traveling through an aspherical lens having a relatively small effective diameter. Accordingly, a slimmer optical system can be provided. The effective diameter of the fifth lens **305** can satisfy the condition of 1.1 < CA51/CA52 < 1.5.

The cemented lens **345** is cemented with glass lenses having different refractive indices, has a spherical refractive surface, and at least one lens disposed closer to the sensor than the cemented lens **345** is an aspherical lens, so that spherical aberration can be compensated for. In addition, at least one of the lenses disposed closer to the sensor than the cemented lens **345** is an aspherical lens and is disposed to have a small effective diameter, so that light traveling to the image sensor **700** through the aspherical lens can be effectively guided. Since the cemented lens **345** is disposed between aspherical lenses and between spherical lenses, chromatic aberration correction can be more efficient. By positioning the cemented lens **345** within the optical system, TTL can be reduced.

The sixth lens 306 may be disposed as the sixth lens from the object side. The sixth lens 306 may be disposed as the second lens from the sensor side. The sixth lens 306 may be disposed between the fifth lens 305 and the seventh lens 307. The sixth lens 306 may have a positive (+) or negative (-) refractive power on an optical axis OA. The sixth lens 306 may have a positive (+) refractive power. The sixth lens 306 may include a plastic or glass material. For example, the sixth lens 306 may be provided with a plastic material.

With respect to an optical axis, the sixth lens 306 may have a convex shape on the object side eleventh surface S11 and a concave shape on the sensor side twelfth surface S12. The sixth lens 306 may have a convex meniscus shape on the object side. At least one or both of the eleventh surface **S11** and the twelfth surface **S12** may be aspherical. Aspherical coefficients of the eleventh and twelfth surfaces **S11** and **S12** may be provided as L1 and L2 of L6 of FIG. 29.

The eleventh surface **S11** of the sixth lens **306** may be provided without a critical point from an optical axis **OA** to the end of the effective area. The twelfth surface **S12** of the sixth lens **306** may include a critical point from an optical axis **OA** to the end of the effective area. When the twelfth surface **S12** has a critical point, it may be located in a range of 20% to 30%, preferably in a range of 25% to 28%, of the effective radius r62 from an optical axis **OA.** The critical point of the twelfth surface **S12** may be located in a range of 1.0 mm to 1.5 mm, preferably in a range of 1.1 mm to 1.2 mm from an optical axis **OA.**

The seventh lens **307** may be disposed closest to the sensor side. The seventh lens **307** may be disposed farthest from the object side. The seventh lens **307** may have a positive (+) or negative (-) refractive power on an optical axis **OA.** The seventh lens **307** may have a negative (-) refractive power. The seventh lens **307** may include a plastic or glass material. For example, the seventh lens **307** may be made of a plastic material.

On an optical axis, the object side thirteenth surface **S13** of the seventh lens **307** may be convex, and the sensor side fourteenth surface **S14** may be concave. The seventh lens **307** may have a meniscus shape that is convex toward the object side. At least one of the thirteenth surface **S13** and the fourteenth surface **S14** may be an aspherical surface. For example, both the thirteenth surface **S13** and the fourteenth surface **S14** may be aspherical. Aspherical coefficients of the thirteenth and fourteenth surfaces S13 and S14 may be provided as S1 and S2 of L7 in FIG. 29.

The thirteenth surface S13 of the seventh lens 307 can have a critical point from an optical axis OA to the end of the effective area. When the thirteenth surface S13 has a critical point, it can be located in a range of 45% to 50%, preferably 46% to 49%, of the effective radius r71 from an optical axis OA. The critical point of the thirteenth surface S13 can be located in a range of 1.7 mm to 2.2 mm, preferably 1.9 mm to 2.0 mm from an optical axis OA. The thirteenth surface S13 having such a critical point can refract incident light to the center and edge portions, and improve aberration.

The fourteenth surface S14 of the seventh lens 307 may have a critical point from an optical axis **OA** to the end of the effective area. When the fourteenth surface **S14** has a critical point, it may be located in a range of 65% to 70%, preferably in a range of 67% to 70%, of the effective radius r72 from an optical axis **OA.** The critical point of the fourteenth surface **S14** may be located in a range of 3 mm to 3.3 mm, preferably in a range of 3.1 mm to 3.2 mm from an optical axis **OA.**

The critical points of the thirteenth surface **S13** and the fourteenth surface **S14** are points where the sign of the slope value with respect to an optical axis **OA** and a direction perpendicular to the optical axis **OA** changes from positive (+) to negative (-) or from negative (-) to positive (+), and may mean a point where the slope value is 0. In addition, the critical points of the thirteenth surface **S13** and the fourteenth surface **S14** may be points where the slope value of the tangent passing through the lens surface increases and then decreases, or points where it decreases and then increases.

The seventh lens **307** may be a plastic lens that is closest to the image sensor **700.** In addition, by arranging two or more plastic lenses adjacent to the image sensor **700,** aberrations such as spherical aberration and chromatic aberration can be improved by the lens surface having an aspherical surface, and the influence on the resolution can be controlled. In addition, by arranging the plastic lens as the lens adjacent to the image sensor **700,** it can be insensitive to the assembly tolerance compared to a glass lens. In other words, being insensitive to the assembly tolerance means that even if the assembly is performed with a slight difference compared to the design during assembly, the optical performance may not be significantly affected. In addition, by providing the two lenses **306** and **307** adjacent to the image sensor **700** with plastic, the optical performance can be improved by the lens surface having an aspherical surface, and for example, aberration characteristics can be improved and degradation of resolution can be prevented.

The sixth lens **306** and the seventh lens **307** are disposed to be spaced apart from each other, but may include the characteristics of a cemented lens. The sixth lens **306** and the seventh lens **307** may have opposite refractive powers. The product of the refractive power of the sixth lens **306** and the refractive power of the seventh lens **307** may be less than 0. The product of the focal length of the sixth lens **306** and the focal length of the seventh lens **307** may be less than 0. Accordingly, the aberration characteristics of the optical system may be improved. If the signs of the refractive powers of two lenses having the characteristics of a cemented lens are the same, there is a limit to the improvement of aberrations.

The sixth lens **306** and the seventh lens **307** may be made of the same material. The sixth lens **306** and the seventh lens **307** may be made of a plastic material. The sixth lens **306** and the seventh lens **307** may be made of the same material as the cemented lens **345.**

[Table 7]

| Lens | Surface | Radius | Thickness | nd | vd | Semi Aperture | Focal length |
|---|---|---|---|---|---|---|---|
| 1 | S1 | 71.262 | 2.000 | 1.6966 | 53.2000 | 6.092 | 40.0928 |
| | S2 | -45.400 | 0.884 | | | 5.800 | |
| 2 | S3 | -18.468 | 6.428 | 1.6948 | 31.1379 | 5.598 | -54.1181 |
| | S4 | -41.472 | 0.100 | | | 4.829 | |
| | Stop | 0.000 | 0.100 | | | 4.730 | |
| 3 | S5 | 21.809 | 1.692 | 1.5521 | 75.4952 | 4.891 | 28.6130 |
| | S6 | -55.711 | 0.200 | | | 4.953 | |
| 4 | S7 | 10.580 | 2.783 | 1.8083 | 46.5020 | 5.070 | 21.8889 |
| | S8 | -97.270 | 0.000 | | | 4.804 | |
| 5 | S9 | -97.270 | 3.165 | 1.6948 | 31.1379 | 4.804 | -8.6042 |
| | S10 | 5.906 | 2.250 | | | 3.817 | |
| 6 | S11 | 10.713 | 2.700 | 1.5373 | 55.7098 | 4.200 | 21.3716 |
| | S12 | 345.536 | 1.877 | | | 4.324 | |
| 7 | S13 | 14.397 | 1.300 | 1.6682 | 20.4008 | 4.050 | -34.5502 |
| | S14 | 8.546 | 0.619 | | | 4.522 | |
| Filter | S15 | 0.000 | 0.400 | | | 4.598 | |
| | S16 | 0.000 | 1.060 | | | 4.623 | |
| Cover | S17 | 0.000 | 0.300 | | | 4.726 | |
| | S18 | 0.000 | 0.040 | | | 4.746 | |
| Image | | 0.000 | 0.000 | | | 4.630 | |

Table 7 shows the surface number **Surface,** radius of curvature **Radius,** center thickness of each lens or distance between lens surfaces **Thickness,** refractive index **nd,** Abbe number **vd,** effective radius **Semi Aperture,** and focal length **Focal length** of a lens according to a third embodiment of the present invention. At this time, the unit of the radius of curvature and thickness or distance may be mm.

[Table 8]

| Category | Value | Category | Value |
|---|---|---|---|
| F | 14.6648 | ET1 | 1.4040 |
| F2_7 | 23.9416 | ET2 | 7.0149 |
| F3_7 | 16.7426 | ET3 | 0.9165 |
| F4_7 | 116.6020 | ET4 | 1.3846 |

(continued)

| Category | Value | Category | Value |
|---|---|---|---|
| F5_7 | -9.6256 | ET5 | 4.6734 |
| F6_7 | 38.7736 | ET6 | 1.5282 |
| F4_5 | -306.7020 | ET7 | 1.8644 |
| ΣIndex | 11.6521 | F-number | 1.6063 |
| ΣAbbe | 313.5836 | FOV_D | 34.2278 |
| ΣCT | 20.06889 | EPD | 9.1296 |
| ΣCG | 5.41162 | BFL | 2.4195 |
| CA_max | 11.892 | TD | 25.4805 |
| CA_min | 8.524 | ImgH | 4.6300 |
| CA_Aver | 9.679 | SD | 16.0679 |
| CT_max | 6.4282 | TTL | 27.9000 |
| CT_min | 1.3000 | GLca_Aver | 10.131 |
| CT_Aver | 2.86698 | PLca_Aver | 8.547 |
| Image sensor | 3840*2160 | | |

Table 8 shows categories of Mathematical expressions described above in the optical system **1200** of the embodiment, including the total top length (TTL) (mm), back focal length (BFL), effective focal length **F** (mm), ImgH (mm), effective diameter **CA** (mm), thickness (mm), TTL (mm), TD (mm), which is an optical axis distance from the first surface **S1** to the fourteenth surface **S14,** composite focal lengths of the first to seventh lenses F2_7, F3_7, F4_7, F5_7, F6_7, and F4_5, (mm), sum of refractive indices, sum of Abbe numbers, sum of thicknesses (mm), sum of gaps between adjacent lenses, effective diameter characteristics, sum of refractive indices of glass lenses, sum of refractive indices of plastic materials, angle of view FOV_H (degree), edge thickness ET, F number, and the like of the optical system **1200.**

As shown in FIGS. 27 and 28, the center thickness of the first to seventh lenses **301** to **307** is represented by CT1 to CT7, the edge thickness at the end of the effective area of each lens is represented by ET1 to ET7, the center gap between two adjacent lenses is represented by CG1 to CG6, and the edge gap between the edges of each lens is represented by EG1 to EG6. Here, the center thickness of the cemented lens **345** is CT45, and the edge thickness is represented by ET45.

Referring to FIG. 28, back focal length (BFL) is an optical axis distance from the image sensor **700** to the center of the last lens. In FIG. 27, TTL is an optical axis distance from the center of the first surface **S1** of the first lens **301** to an upper surface of the image sensor **700.**

As shown in FIG. 16, among the lenses of the lens unit **300** in a third embodiment, the lens surfaces of the first, sixth, and seventh lenses **301, 306,** and **307** may include aspherical surfaces having a 30th-order aspherical surface coefficient. For example, the first, sixth, and seventh lenses **301, 306,** and **307** may include lens surfaces having a 30th-order aspherical surface coefficient. As described above, since the aspherical surface having the 30th-order aspherical surface coefficient (a value other than "0") can significantly change the aspherical shape of the edge portion, the optical performance of the edge portion of the field of view (FOV) can be well corrected.

As shown in FIG. 30, the thicknesses **T1** to **T7** of the first to seventh lenses **301, 302, 303, 304, 305, 306,** and **307** and the gaps **G1** to **G6** between adjacent two lenses can be set. As shown in FIG. 30, the thicknesses **T1** to **T7** of each lens in a Y-axis direction can be expressed at gaps of 0.1 mm or 0.2 mm or more, and the gaps **G1** to **G6** between each lens can be expressed at gaps of 0.1 mm or 0.2 mm or more.

When compared in terms of the absolute values of the curvature radii of each lens, the curvature radii of the sixth surface **S6** of the third lens **303** on an optical axis **OA** may be the largest among the lenses, and the curvature radii of the tenth surface **S10** of the fifth lens **305** may be the smallest among the lenses. The difference between the maximum curvature radii and the minimum curvature radii may be 25 times or more, for example, 26 to 30 times. The curvature radii of the sensor side surface of the glass material lens disposed on the object side of the plastic material lens may be the smallest among the lenses. The curvature radii of the sensor side surface of the fifth lens **305** disposed on the object side of the sixth lens **306** may be the smallest among the lenses.

Since the effective diameter of a plastic lens is smaller than that of a glass lens, the lens disposed on the object side of the plastic lens can have strong refractive power in order to refract light through the plastic lens. In addition, the radius of curvature of the lens surface can be small in order to strengthen the refractive power.

Among the lenses, the number of surfaces having an absolute value of curvature radii of 10 mm or less among the object side surface and the sensor side surface may be two or less. The absolute value of curvature radii of the sensor side surface (the tenth surface) **S10** of the fifth lens **205** and the sensor side surface (the fourteenth surface) **S14** of the seventh lens **207** may be 10 mm or less. Among the lenses, the number of surfaces having an absolute value of curvature radii of 10 mm or more and 20 mm or less among the object side surface and the sensor side surface may be three or more and five or less. The absolute value of the curvature radii of the object side surface (the fifth surface) **S5** of the third lens **203,** the object side surface (the seventh surface) **S7** of the fourth lens **204,** and the object side surface (the eleventh surface) **S11** of the sixth lens **206** may be 10 mm or more and 20 mm or less. Among the lenses, there may be at least one and no more than four surfaces having an absolute value of a curvature radius of 60 mm or more among the object side surface and the sensor side surface. The absolute values of the curvature radii of the sensor side surface (the fourth surface) **S4** of the second lens **202,** the sensor side surface (the sixth surface) **S6** of the third lens **203,** and the sensor side surface (the twelfth surface) **S12** of the sixth lens **206** may be at least 60 mm.

In temperature compensation designs that require resolution to be maintained even when temperatures change from -40 to 100 degrees, a larger radius of curvature can be advantageous. In designs for temperature compensation, aluminum barrels can be used for lens barrels. Aluminum barrels have large manufacturing tolerances, so when the lenses are assembled, the optical axes of each lens are greatly misaligned. Therefore, by designing a large radius of curvature, the sensitivity to manufacturing tolerances can be reduced.

Referring to FIG. 32, the slope angle of the lens surface can be expressed as a value in rad, which is the slope of the lens surface at a point on the lens surface converted into a tangent value with respect to a Y-axis perpendicular to the optical axis at a gap of 0.1. Regarding the slope angle of the lens surface, the slope angle of the object side surface (the first surface) **S1** of the first lens **301** may be the smallest, excluding the cemented lens among the first to seventh lenses. The number of lenses having a value smaller than the absolute value of the slope angle of the object side surface of the aspherical glass material among the object side surfaces and the sensor side surfaces of the first to seventh lenses may be five or less. Preferably, the number of lenses smaller than the absolute value of the slope angle of the object side surface (the first surface) **S1** of the first lens **301** may be two. The absolute value of the inclination angle of the sensor side surface (the eighth surface) **S8** of the fourth lens **304** and the object side surface (the ninth surface) **S9** of the fifth lens **305** may be smaller than the absolute value of the inclination angle of the object side surface (the first surface) **S1** of the first lens **301.**

The shape of the first lens **301** having an aspherical shape can be designed to be gentle. If the aspherical surface is located at the frontmost in the optical system **1200,** the performance of the lens is improved, but the assemblability may be reduced. In order to improve the assemblability, the shape of the first lens **301** should be designed to be gentle. In order to minimize the influence on the lens disposed on the sensor side when assembling the lens in the barrel, it can be designed to have almost no curvature.

With respect to an optical axis, when describing the center thickness of the lenses, the center thickness CT2 of the second lens 302 is the largest among the lenses, and the center thickness CT7 of the seventh lens 307 is the smallest among the lenses. The difference between the maximum center thickness and the minimum center thickness among the lenses may be in the range of 4.5 mm or more and 5.5 mm or less.

When explaining the center gap CG between the lenses, the center gap CG5 between the fifth lens 305 and the sixth lens 306 may be the maximum, and the center gap CG2 between the second and third lenses 302 and 303 and the center gap CG3 between the third and fourth lenses 303 and 304 may be the minimum. Here, the minimum center gap excludes the cementing surface of the cemented lens 345. The difference between the maximum center gap and the minimum center gap among the spaced lens gaps may be 1.5 mm or more, for example, in the range of 2 mm to 2.5 mm.

When explaining the effective diameter, the lens having the maximum effective diameter may be disposed between the first lens **301** closest to the object and the seventh lens **307** closest to the image sensor **700.** The lens having the maximum effective diameter may be a glass lens. The lens having the maximum effective diameter may be disposed between the first lens **301** and the cemented lens **345.** The lens having the maximum effective diameter may be the first lens **301.** Here, the effective diameter is an average of the effective diameter of the object side surface and the effective diameter of the sensor side surface of each lens. The lens surface having the maximum effective diameter may be the first surface **S1** of the first lens **301.**

The lens having the minimum effective diameter can be either one of the cemented lenses or one of the plastic lenses, for example, the sixth lens **306** or the seventh lens **307** adjacent to the image sensor **700.** For example, the effective diameter of the fifth lens **305** may be the minimum within the lens unit **300.** The lens surface having the minimum effective diameter can be the tenth surface **S10** of the fifth lens **305.** The effective diameter of the plastic lens can be smaller than the effective diameter of the glass lens. The plastic lens can be disposed adjacent to the image sensor.

The effective diameters of each of the first to fourth lenses **301** to **304** adjacent to the object side may be larger than the effective diameters of the fifth, sixth, and seventh lenses **305, 306,** and **307** adjacent to the sensor side. The effective diameters of the first to fourth lenses **301** to **304** may be larger than the diagonal length of the image sensor **700.** The average effective diameter of the seventh lens **307** may be smaller than the diagonal length of the image sensor **700.**

Accordingly, light incident through a plurality of lenses aligned along an optical axis may be guided to the image sensor **700.**

When explaining the refractive index, the refractive index of the fourth lens **304** may be the largest among the lenses and may be greater than 1.77, for example, greater than 1.8. Either or both of the third lens **303** and the sixth lens **306** may have the smallest refractive index among the lenses. For example, the refractive index of the sixth lens **306** may be the smallest among the lenses and may be less than 1.6, for example, less than 1.55. The difference between the maximum refractive index and the minimum refractive index may be 0.2 or more. By providing a high refractive index lens made of glass closest to an object, and providing a lens adjacent to the glass lens and a lens adjacent to the image sensor **700** as low refractive index lenses made of plastic, the incidence efficiency can be increased, and the refractive power between the glass lens and the plastic lens can be adjusted to guide the image sensor **700.**

When cmparing the Abbe numbers, the Abbe number of the third lens **303** is the largest among the lenses and may be 70 or more. The Abbe number of the seventh lens **307** is the smallest among the lenses and may be 25 or less. The difference between the maximum refractive index and the minimum Abbe number may be 50 or more. By making the Abbe number of the third lens **303** adjacent to the cemented lens **345** the largest and providing the Abbe number of the seventh lens **307** with a low refractive index adjacent to the image sensor **700** the smallest, the color dispersion of light traveling between the glass lenses can be controlled and the color dispersion between the glass and plastic lenses can be increased to guide it to the image sensor **700.**

The focal lengths **F2, F5,** and **F7** of the second, fifth, and seventh lenses **302, 305,** and **307** may have a negative (-) signs. The second, fifth, and seventh lenses **302, 305,** and **307** may have a negative (-) refractive power. The focal lengths **F1, F3, F4,** and **F6** of the first, third, fourth, and sixth lenses **301, 303, 304,** and **306** may have a positive (+) signs. The first, third, fourth, and sixth lenses **301, 303, 304,** and **306** may have a positive (+) refractive power. The third and fourth lenses **303** and **304** having positive (+) refractive power may be disposed on the sensor side of the second lens **302** having negative (-) refractive power. Through this, light incident on the object side can move away from an optical axis direction and then gather again along an optical axis direction, thereby forming a stable optical path.

In addition, the sixth lens **306** and the seventh lens **307,** which are adjacently disposed lenses, can satisfy the following conditions.

The refractive index of the lens with positive refractive power < The refractive index of the lens with negative refractive power  Condition 1:

Dispersion of a lens with positive refractive power > Dispersion of a lens with negative refractive power  Condition 2:

Here, among the plastic lenses, the sixth lens **306** has a positive refractive power and the seventh lens **307** has a negative refractive power, so that according to Conditions 1 and 2, the refractive index of the sixth lens **306** is smaller than that of the seventh lens **307,** and the dispersion value of the sixth lens **306** is larger than that of the seventh lens **307.** Chromatic aberration occurring in the plastic lens can be corrected by the plastic lens. In addition, since the sixth lens **306** and the seventh lens **307,** which are plastic lenses disposed in succession, satisfy the refractive index difference of 0.1 or more and 0.15 or less and the Abbe number difference of 20 or more and 60 or less, the chromatic aberration occurring in the plastic lens can be compensated for by the plastic lens.

The optical system has chromatic aberration, and chromatic aberration is corrected by using cemented lenses or two lenses disposed in series. As the temperature changes from low to high, the lens repeatedly contracts and expands. Since the lens characteristics of lenses of the same material change the same amount according to the temperature change, it is effective to correct chromatic aberration between lenses of the same material even if the temperature changes.

Therefore, in a third embodiment of the present invention, the chromatic aberration occurring in the plastic lens is corrected by using the cemented lens **345,** the sixth lens **306,** and the seventh lens **307.**

The fourth lens **304** and the fifth lens **305,** which are cemented lenses, can compensate for chromatic aberration occurring in a glass lens by satisfying the refractive index difference of 0.1 or more and 0.15 or less and the Abbe number difference of 20 or more and 60 or less. The refractive index difference is rounded off to the third decimal place, and the Abbe number difference is rounded off to the first decimal place to compare the values.

When comparing the focal lengths in absolute values, the focal length of the first lens **301** is the largest among the lenses, and may be 35 or more and 50 or less. Among the lenses, the first lens **301** made of glass may have the largest focal length and the smallest refractive power. The focal length of the fifth lens **305** is the smallest among the lenses, and the absolute value of the focal length of the fifth lens **305** may be 5 or more and 10 or less. Among the lenses, the fifth lens **305** made of glass may have the smallest focal length and the largest refractive power. Since lenses made of a plastic material having small refractive power are disposed on the sensor side of the fifth lens **305,** the refractive power of the fifth lens **305** may be increased.

Among the lenses other than the cemented lens **345,** the lens having the minimum focal length may be the sixth lens **306.** The difference between the maximum focal length and the minimum focal length may be 30 or more or 50 or less. Accordingly, the optical system may have improved MTF characteristics, aberration control characteristics, resolution characteristics, and the like in the set angle of view range, and may have good optical performance in the edge portion of the angle of view.

The thickness **T1** of the first lens **301** may have a difference between the maximum thickness and the minimum thickness of 1 time or more, for example, in the range of 1 to 1.2 times, and the center thickness **CT1** may be maximum while the edge thickness **ET1** may be minimum. The thickness **T2** of the second lens **302** may have a maximum thickness in the range of 1 to 1.2 times the minimum thickness. The second lens **302** may have a minimum center thickness **CT2** and a maximum edge thickness **ET2.** The thickness **T3** of the third lens **303** may be maximum at the center and minimum at the edge, and the maximum thickness may be in the range of 1.5 to 2 times the minimum thickness. The thickness **T4** of the fourth lens **304** may be maximum at the center and minimum at the edge, and the maximum thickness may be in the range of 1.6 to 2.2 times the minimum thickness. The thickness **T5** of the fifth lens **305** may be minimum at the center and maximum at the edge, and the maximum thickness may be in the range of 1.2 to 1.5 times the minimum thickness. The thickness **T6** of the sixth lens **306** may be maximum at the center and minimum at the edge, and the maximum thickness may be in the range of 1 to 1.2 times the minimum thickness. The thickness T7 of the seventh lens 307 may be minimum at the center and maximum at the edge, and the maximum thickness may be in the range of 1 to 1.2 times the minimum thickness.

The center thickness CT45 of the cemented lens 345 may be less than its edge thickness ET45. The center thickness CT45 of the cemented lens 345 is the distance from the center of the seventh surface S7 on the object side of the fourth lens 304 to the center of the tenth surface S10 of the fifth lens 305. The edge thickness ET45 is the distance from the end of the effective area of the seventh surface S7 to the tenth surface S10 along an optical axis direction. The maximum thickness of the cemented lens 345 may be at the edge portion, and the minimum thickness may be at the center portion, with the maximum thickness potentially ranging from 1 to 1.2 times the minimum thickness.

Among the gaps **G1** to **G6** between the lenses, the first gap **G1** between the first and second lenses **301** and **302** may have a maximum in the center portion and a minimum in the edge portion. The second gap **G2** between the second and third lenses **302** and **303** may have a maximum in the edge portion and a minimum in the center portion. The third gap **G3** between the third and fourth lenses **303** and **304** may have a maximum in the edge portion and a minimum in the center portion. The fifth gap **G5** between the fifth and sixth lenses **305** and **306** may have a maximum in the center portion and a minimum in the edge portion. The sixth gap **G6** between the sixth and seventh lenses **306** and **307** may have a maximum in the center portion and a minimum in the edge portion.

As shown in FIG. 33, in the optical system and camera module of FIG. 27, the chief ray angle (CRA) may be 10 degrees or more, for example, in a range of 10 to 35 degrees or 10 to 25 degrees, at 1-field, which is the end of the diagonal length of the image sensor. In addition, the difference in the angle of the chief ray from a low temperature (-40 degrees) to a high temperature (95 degrees) may be 1 degree or less. Accordingly, even if the temperature changes from a low temperature to a high temperature, the difference in the angle of the chief ray is not large and stable optical performance can be achieved.

FIGS. 34 to 36 are graphs showing diffraction modulation transfer function (MTF) at room temperature, low temperature, and high temperature in the optical system of FIG. 27, and are graphs showing modulation according to spatial frequency. As shown in FIGS. 34 to 36, in a first embodiment of the invention, the deviation of MTF at low temperature or high temperature based on room temperature may be less than 10%, that is, 7% or less.

FIGS. 37 to 39 are graphs showing aberration characteristics at room temperature, low temperature, and high temperature in the optical system of FIG. 27. In the aberration graphs of FIGS. 37 to 39, spherical aberration (longitudinal spherical aberration), astigmatic field curves, and distortion are measured from left to right. In FIGS. 37 to 39, an X-axis may represent a focal length (mm) and a degree of distortion (%), and a Y-axis may represent the height of the image. In addition, the graph for spherical aberration is a graph for light in wavelength bands of about 435 nm, about 486 nm, about 546 nm, about 587 nm, and about 656 nm, and the graphs for astigmatism and distortion are graphs for light in wavelength bands of about 546 nm. In the aberration diagrams of FIGS. 37 to 39, the closer each curve at room temperature, low temperature, and high temperature is to the Y-axis, the better the aberration correction function can be interpreted. It can be seen that the optical system **1200** according to a third embodiment has measurement values close to a Y-axis in almost all areas. That is, the optical system **1200** according to a third embodiment has improved resolution and can have good optical performance not only at the center of the field of view (FOV) but also at the edge portion. Here, the low temperature is -20 degrees or lower, for example, in the range of -20 to -40 degrees, the room temperature is in the range of 22 degrees ±5 degrees or in the range of 18 degrees to 27 degrees, and the high temperature can be in the range of 85 degrees or higher, for example, in the range of 85 degrees to 305 degrees. Accordingly, it can be seen that the decrease in the luminance ratio (modulation) from the low temperature to the high temperature of FIGS. 37 to 39 is less than 10%, for example, 5% or lower, or is hardly changed.

Table 9 compares changes in optical characteristics such as EFL, BFL, F number (F#), TTL, and field of view (FOV_H) at room temperature, low temperature, and high temperature in the optical system according to a third embodiment, and it can be seen that the change rate of the optical characteristics at low temperature is 5% or less, for example, 3% or less, with respect to room temperature, and it can be seen that the change rate of the optical characteristics at low temperature is 5% or less, for example, 3% or less, with respect to room temperature.

[Table 9]

| | Room temperat ure | Low temperat ure | High temperat ure | Low/Roo m temperatur e | High/Roo m temperatur e |
|---|---|---|---|---|---|
| EFL(F) | 14.6648 | 14.6074 | 14.7336 | 99.61% | 100.47% |
| BFL | 0.0350 | 0.0365 | 0.0337 | 304.29% | 96.29% |
| F# | 1.6063 | 1.6002 | 1.6136 | 99.62% | 100.45% |
| TTL | 27.8600 | 27.8248 | 27.9015 | 99.87% | 100.15% |
| FOV_H | 30.0000 | 30.1193 | 29.8605 | 100.40% | 99.54% |

Therefore, as shown in Table 9, it can be seen that the changes in optical characteristics according to the temperature change from low temperature to high temperature, for example, the change rate of effective focal length (EFL), TTL, BFL, F number, and field of view (FOV_H), are less than 10%, that is, less than 5%, for example, in the range of 0 to 5%. This makes it possible to design temperature compensation for plastic lenses even when using at least one or two or more plastic lenses, thereby preventing a decrease in the reliability of optical characteristics.

The optical system of a third embodiment disclosed above can effectively control aberration characteristics such as chromatic aberration and distortion aberration, and can have good optical performance not only at the center portion of the field of view (FOV) but also at the edge portion.

An optical system according to a fourth embodiment of the invention will be described.

FIG. 40 is a cross-sectional side view of an optical system according to a fourth embodiment and a camera module having the same; FIG. 41 is a cross-sectional view for explaining the relationship between nth and (n-1)th lenses according to FIG. 40; FIG. 42 is a table showing aspherical coefficients of lenses in an optical system of FIG. 40; FIG. 43 is a table showing the thickness of each lens and the gap between adjacent lenses in an optical system of FIG. 40; FIG. 44 is a table showing Sag values of lens surfaces of first to seventh lenses in an optical system of FIG. 40; FIG. 45 is a table showing Slope angle values of lens surfaces of the first to seventh lenses in an optical system of FIG. 40; FIG. 46 is a table showing chief ray angle (CRA) data at room temperature, low temperature, and high temperature according to the position of an image sensor in an optical system of FIG. 40; FIGS. 47 to 48 are graphs showing data on diffraction diffraction modulation transfer function (MTF) of an optical system of FIG. 40 at room temperature, low temperature, and high temperature; and FIGS. 49 to 51 are graphs showing data on aberration characteristics of an optical system of FIG. 40 at room temperature, low temperature, and high temperature.

Referring to FIGS. 40 and 41, the optical system 1300 includes a lens unit 400, and the lens unit 400 may include a first lens 401 to a seventh lens 407. The first to seventh lenses 401 to 407 may be sequentially disposed along an optical axis OA of the optical system 1300. Light corresponding to information of an object may pass through the first lens 401 to the seventh lens 407 and a filter 900 and be incident on the image sensor 700.

The first lens 401 can be disposed closest to the object side. The first lens 401 can be disposed farthest from the sensor side. The first lens 401 can have negaive (-) refractive power on an optical axis OA. The first lens 401 can include a plastic material or a glass material, and can be, for example, a glass material. The first lens 401 made of a glass material can reduce changes in the center position and the radius of curvature due to temperature changes according to the surrounding environment, and can protect the incident side surface of the optical system **1300.**

With respect to an optical axis, the first surface **S1** on the object side of the first lens **401** may be convex, and the second surface **S2** on the sensor side may be convex. The first lens **401** may have a shape in which both surfaces are convex. The first lens **401** is made of glass and may have an aspherical surface. The aspherical coefficients of the first and second surfaces **S1** and **S2** may be provided as L1S1, L1S2 of FIG. 41. The first lens **401** may be manufactured as a lens having an aspherical surface by injection molding a glass material. The first lens **401** may be a glass mold lens having an aspherical surface and made of a glass material. The glass mold lens may be manufactured by inserting an optical glass ingot into a mold having an aspherical shape and through a heating and compression process.

The first lens **401** is provided with an aspherical glass material, so that the glass material having high transmittance and refractive index has an aspherical surface, which can reduce the number of lenses in an optical system. The aspherical glass material can maintain optical performance at a constant level when the temperature changes to low or high temperature due to the glass material. In addition, since the aspherical surface is applied to the glass material, even if the lens is designed thin, the refractive index of light does not change significantly. Therefore, unlike an optical system in which the first lens is designed to be thickest in a horizontal angle of view ranging from 30 degrees to 50 degrees, the optical system of the invention can provide a thin first lens made of an aspherical glass material. Here, the thickness of the lens may include a center thickness and an edge thickness.

The second lens **402** may be disposed second from the object side. The second lens **402** may be disposed sixth from the sensor side. The second lens **402** may be disposed between the first lens **401** and the third lens **403.** The second lens **402** may have a negative (-) refractive power on an optical axis **OA.** The second lens **402** may include a plastic or glass material. For example, the second lens **402** may be provided with a glass material.

With respect to an optical axis, the object side third surface **S3** of the second lens **402** may be concave, and the sensor side fourth surface **S4** may be convex. The second lens **402** may have a meniscus shape with a convex sensor side. The second lens **402** may be made of glass and may be spherical. At least one or both of the third surface **S3** and the fourth surface **S4** may be spherical.

The aperture **Stop** can be disposed around the sensor side fourth surface **S4** of the second lens **402.** The aperture can reduce the TTL within the field of view range, and the optical system can be miniaturized. Accordingly, the yield by weight of the optical system can be prevented from decreasing, and the production efficiency can be improved. In addition, the optical system can be miniaturized by reducing the TTL within the horizontal field of view (FOV_H) of 25 degrees to 36 degrees.

The third lens **403** may be disposed third from the object side. The third lens **403** may be disposed fifth from the sensor side. The third lens **403** may be disposed between the second lens **402** and the fourth lens **404.** The third lens **403** may have a positive (+) refractive power on an optical axis **OA.** The third lens **403** may include a plastic or glass material. For example, the third lens **403** may be provided with a glass material.

With respect to an optical axis, the object side fifth surface **S5** of the third lens **403** may be convex, and the sensor side sixth surface **S6** may be convex. The third lens **403** may have a shape in which both surfaces are convex on an optical axis **OA.** The third lens **403** is made of glass and may be spherical. At least one or both of the fifth surface **S5** and the sixth surface **S6** may be spherical. At least one or both of the fifth surface **S5** and the sixth surface **S6** may be provided without a critical point from an optical axis **OA** to the end of the effective area.

Since both surfaces of the third lens **403** are provided convexly, the TTL and the number of lenses of the optical system can be minimized, and light can be effectively refracted. In addition, when the radius of curvature of the fifth surface S5 of the third lens 403 is L3R1, and the radius of curvature of the sixth surface S6 is L3R2, the condition of $L3R1 < | L3R2 |$ can be satisfied. Through this, light can be efficiently refracted by the third surface S3, so that the effective diameters of the third to seventh lenses 403 to 407 can be guided so as not to increase, and the TTL can be reduced. If $L3R1 > | L3R2 |$, a lot of aberration may occur on the object side surface of the third lens 403, the refractive efficiency of light may decrease on the sensor side surface, and the effective diameters of the rear lenses may increase and the TTL may also become large.

The fourth lens 404 may be disposed fourth from the object side. The fourth lens 404 may be disposed fourth from the sensor side. The fourth lens 404 may be disposed between the third lens 403 and the fifth lens 405. The fourth lens 404 may have a positive (+) or negative (-) refractive power on an optical axis OA. The fourth lens 404 may have a positive (+) refractive power. The fourth lens 404 may have a positive (+) refractive power different from the refractive power of the fifth lens 405. The fourth lens 404 may include a plastic or glass material. For example, the fourth lens 404 may be provided with a glass material. The fourth lens 404 may be provided with the same material as the fifth lens 405.

With respect to an optical axis, the object side seventh surface S7 of the fourth lens 404 may be convex, and the sensor side eighth surface S8 may be convex. The fourth lens **404** may have a convex shape on both surfaces. The fourth lens **404** may be made of glass and may have a spherical surface. At least one or both of the seventh surface S7 and the eighth surface S8 may be spherical. The seventh surface S7 and the eighth surface S8 may be provided without a critical point from an optical axis OA to the end of the effective area.

The fifth lens 405 may be disposed fifth from the object side. The fifth lens 405 may be disposed third from the sensor side. The fifth lens 405 may be disposed between the fourth lens 404 and the sixth lens 406. The fifth lens 405 may have a positive (+) or negative (-) refractive power on an optical axis OA. The fifth lens 405 may have a negative (-) refractive power. The fifth lens 405 may have a negative (-) refractive power different from the refractive power of the fourth lens 404. The fifth lens 405 may include a plastic or glass material. For example, the fifth lens **405** may be provided with a glass material. The fifth lens **405** may be provided with the same material as the fourth lens **404.**

With respect to an optical axis, the ninth surface **S9** on the object side of the fifth lens **405** may be concave, and the tenth surface **S10** on the sensor side may be concave. The fifth lens **405** may have a shape in which both surfaces are concave. The fifth lens **405** is made of glass and may have a spherical surface. At least one surface of the ninth surface **S9** and the tenth surface **S10** may be a spherical surface. At least one or both of the ninth and tenth surfaces **S9** and **S10** of the fifth lens **405** may be provided without a critical point from an optical axis **OA** to the end of the effective area.

The fourth lens **404** and the fifth lens **405** can be cemented. The bonding surface between the fourth lens **404** and the fifth lens **405** can be defined as the eighth surface **S8.** The eighth surface **S8** can be the same surface as the ninth surface **S9** of the fifth lens **405.** The object side surface of the cemented lens **445** can be convex, and the sensor side surface can be concave. The gap between the fourth and fifth lenses **404** and **405** can be less than 0.01 mm and can be attached with an adhesive. The gap between the fourth and fifth lenses **404** and **405** can be less than 0.01 mm from an optical axis **OA** to the end of the effective area. The fourth and fifth lenses **404** and **405** can have opposite refractive powers. The composite refractive power of the fourth and fifth lenses **404** and **405** can have a negative (-) refractive power.

The value of the radius of curvature of the cemented surface **S8** of the cemented lens **445** may be greater than 90. For example, the value of the radius of curvature of the cemented surface **S8** of the cemented lens **445** may be greater than 100. The cemented surface **S8** of the cemented lens **445** may be formed in a gentle shape. Through this, the cementing process of the fourth lens **404** and the fifth lens **405** forming the cemented lens **445** is advantageous, and the cementing maintenance strength can be increased.

The product of the refractive power of the object side fourth lens **404** of the cemented lens **445** and the refractive power of the sensor side fifth lens **405** may be less than 0. The product of the focal length of the object side fourth lens **405** of the cemented lens **445** and the focal length of the sensor side fifth lens **405** may be less than 0. Accordingly, the aberration characteristics of the optical system can be improved. If the refractive powers of the two lenses of the cemented lens **445** are the same, there is a limit to the improvement of aberration.

The composite refractive power of the cemented lens **445** has a negative (-) refractive power, and the third lens **403** on the object side and the sixth lens **406** on the sensor side with respect to the cemented lens **445** can have a negative (-) refractive power. Accordingly, the fourth lens **404,** the cemented lens **445,** and the fifth lens **405** can refract a portion of the incident light in a direction of an optical axis.

The effective diameter of the fourth lens **404** may be larger than the diagonal length of the image sensor **700.** The effective diameter of the fourth lens **404** is an average of the effective diameters of the seventh surface **S7** and the eighth surface **S8,** and may be larger than the diagonal length of the image sensor 700. The effective diameter of the fifth lens 405 may be smaller than the effective diameter of the fourth lens 404 and larger than the diagonal length of the image sensor 700. The effective diameter of the seventh surface S7 of the fourth lens 404 may be larger than the diagonal length of the image sensor 700, and the effective diameter of the tenth surface S10 of the fifth lens 405 may be smaller than the diagonal length of the image sensor 700.

When the fifth lens 405 is a spherical lens and the seventh lens 407 is an aspherical lens, the difference in effective diameter between the object side ninth surface S9 and the sensor side tenth surface S10 of the fifth lens 405 can be provided to be the largest. For example, when the effective diameters of the ninth surface S9 and the sensor side tenth surface **S10** of the fifth lens **405** are CA51 and CA52, the condition of CA51 > CA52 is satisfied, and the difference between CA51 and CA52 can be the largest among the differences in effective diameters between the object side surfaces and the sensor side surfaces of each lens. Accordingly, the difference in effective diameters between the object side surface and the sensor side surface of the fifth lens **405** can be set to be maximized, so as to effectively guide light traveling through an aspherical lens having a relatively small effective diameter. Accordingly, a slimmer optical system can be provided. The effective diameter of the fifth lens **405** can satisfy the condition of $1.1 < CA51/CA52 < 1.5$.

The cemented lens **445** is cemented with glass lenses having different refractive indices, has a spherical refractive surface, and at least one lens disposed closer to the sensor than the cemented lens **445** is an aspherical lens, so that spherical aberration can be compensated for. In addition, at least one of the lenses disposed closer to the sensor than the cemented lens **445** is an aspherical lens and is disposed to have a small effective diameter, so that light traveling to the image sensor **700** through the aspherical lens can be effectively guided. Since the cemented lens **445** is disposed between aspherical lenses and between spherical lenses, chromatic aberration correction can be more efficient. By positioning the cemented lens **445** within the optical system, TTL can be reduced.

The sixth lens **406** may be disposed as the sixth lens from the object side. The sixth lens **406** may be disposed as the second lens from the sensor side. The sixth lens **406** may be disposed between the fifth lens **405** and the seventh lens **407.** The sixth lens **406** may have a positive (+) or negative (-) refractive power on an optical axis **OA.** The sixth lens **406** may have a positive (+) refractive power. The sixth lens **406** may include a plastic or glass material. For example, the sixth lens **406** may be provided with a plastic material.

With respect to an optical axis, the sixth lens **406** may have a convex shape on the object side eleventh surface **S11** and a concave shape on the sensor side twelfth surface **S12.** The sixth lens **406** may have a convex meniscus shape on the object side. At least one or both of the eleventh surface **S11** and the twelfth surface **S12** may be aspherical. Aspherical coefficients of the eleventh and twelfth surfaces **S11** and **S12** may be provided as L1 and L2 of L6 of FIG. 41.

The eleventh surface **S11** of the sixth lens **306** may be provided without a critical point from an optical axis **OA** to the end of the effective area. The twelfth surface **S12** of the sixth lens **306** may include a critical point from an optical axis **OA** to the end of the effective area. When the twelfth surface **S12** has a critical point, it may be located in a range of 30% to 40%, preferably in a range of 34% to 38%, of the effective radius r62 from an optical axis **OA.** The critical point of the twelfth surface **S12** may be located in a range of 1.3 mm to 1.8 mm, preferably in a range of 1.5 mm to 1.6 mm from an optical axis **OA**

The seventh lens **407** may be disposed closest to the sensor side. The seventh lens **407** may be disposed farthest from the object side. The seventh lens **407** may have a positive (+) or negative (-) refractive power on an optical axis **OA.** The seventh lens **407** may have a negative (-) refractive power. The seventh lens **407** may include a plastic or glass material. For example, the seventh lens 407 may be made of a plastic material.

On an optical axis, the object side thirteenth surface S13 of the seventh lens 407 may be convex, and the sensor side fourteenth surface S14 may be concave. The seventh lens 407 may have a meniscus shape that is convex toward the object side. At least one of the thirteenth surface S13 and the fourteenth surface S14 may be an aspherical surface. For example, both the thirteenth surface S13 and the fourteenth surface S14 may be aspherical. Aspherical coefficients of the thirteenth and fourteenth surfaces **S13** and **S14** may be provided as S1 and S2 of L7 in FIG. 41.

The thirteenth surface S13 of the seventh lens 407 can have a critical point from an optical axis OA to the end of the effective area. When the thirteenth surface S13 has a critical point, it can be located in a range of 45% to 50%, preferably 46% to 43%, of the effective radius r71 from an optical axis OA. The critical point of the thirteenth surface S13 can be located in a range of 1.5 mm to 2.0 mm, preferably 1.6 mm to 1.7 mm from an optical axis OA. The thirteenth surface S13 having such a critical point can refract incident light to the center and edge portions, and improve aberration.

The fourteenth surface S14 of the seventh lens 407 may have a critical point from an optical axis OA to the end of the effective area. When the fourteenth surface S14 has a critical point, it may be located in a range of 60% to 70%, preferably in a range of 66% to 69%, of the effective radius r72 from an optical axis OA. The critical point of the fourteenth surface S14 may be located in a range of 3 mm to 3.5 mm, preferably in a range of 3.0 mm to 3.1 mm from an optical axis **OA.**

The critical points of the thirteenth surface **S13** and the fourteenth surface **S14** are points where the sign of the slope value with respect to an optical axis **OA** and a direction perpendicular to the optical axis **OA** changes from positive (+) to negative (-) or from negative (-) to positive (+), and may mean a point where the slope value is 0. In addition, the critical points of the thirteenth surface **S13** and the fourteenth surface **S14** may be points where the slope value of the tangent passing through the lens surface increases and then decreases, or points where it decreases and then increases.

The seventh lens **407** may be a plastic lens that is closest to the image sensor **700.** In addition, by arranging two or more plastic lenses adjacent to the image sensor **700,** aberrations such as spherical aberration and chromatic aberration can be improved by the lens surface having an aspherical surface, and the influence on the resolution can be controlled. In addition, by arranging the plastic lens as the lens adjacent to the image sensor **700,** it can be insensitive to the assembly tolerance compared to a glass lens. In other words, being insensitive to the assembly tolerance means that even if the assembly is performed with a slight difference compared to the design during assembly, the optical performance may not be significantly affected. In addition, by providing the two lenses **406** and **407** adjacent to the image sensor **700** with plastic, the optical performance can be improved by the lens surface having an aspherical surface, and for example, aberration characteristics can be improved and degradation of resolution can be prevented.

The sixth lens **406** and the seventh lens **407** are disposed to be spaced apart from each other, but may include the characteristics of a cemented lens. The sixth lens **406** and the seventh lens **407** may have opposite refractive powers. The product of the refractive power of the sixth lens **406** and the refractive power of the seventh lens **407** may be less than 0. The product of the focal length of the sixth lens **406** and the focal length of the seventh lens **407** may be less than 0. Accordingly, the aberration characteristics of the optical system may be improved. If the signs of the refractive powers of two lenses having the characteristics of a cemented lens are the same, there is a limit to the improvement of aberrations.

The sixth lens **406** and the seventh lens **407** may be made of the same material. The sixth lens **406** and the seventh lens **407** may be made of a plastic material. The sixth lens **406** and the seventh lens **407** may be made of the same material as the cemented lens **445.**

[Table 10]

| Lens | Surface | Radius | Thickness | nd | vd | Semi Aperture | Focal length |
|---|---|---|---|---|---|---|---|
| 1 | S1 | 71.485 | 2.000 | 1.6966 | 53.2000 | 6.162 | 38.9438 |
| | S2 | -43.218 | 0.798 | | | 5.914 | |
| 2 | S3 | -18.980 | 6.158 | 1.6948 | 31.1379 | 5.712 | -54.004 |
| | S4 | -43.516 | 0.510 | | | 4.928 | |
| | Stop | 0.000 | 0.332 | | | 4.700 | |
| 3 | S5 | 21.963 | 1.694 | 1.5521 | 75.4952 | 4.945 | 28.5258 |
| | S6 | -54.122 | 0.200 | | | 5.019 | |
| 4 | S7 | 10.603 | 2.737 | 1.8083 | 46.5020 | 5.157 | 21.9548 |
| | S8 | -304.167 | 0.000 | | | 4.901 | |
| 5 | S9 | -304.167 | 3.121 | 1.6948 | 31.1379 | 4.901 | -8.7349 |
| | S10 | 6.000 | 2.030 | | | 3.887 | |

(continued)

| Lens | Surface | Radius | Thickness | nd | vd | Semi Aperture | Focal length |
|---|---|---|---|---|---|---|---|
| 6 | S11 | 10.498 | 2.392 | 1.5373 | 55.7098 | 4.193 | 21.3563 |
| | S12 | 113.416 | 2.028 | | | 4.282 | |
| 7 | S13 | 25.578 | 1.532 | 1.6682 | 20.4008 | 3.952 | -29.859 |
| | S14 | 10.939 | 0.568 | | | 4.448 | |
| Filter | S15 | 0.000 | 0.400 | | | 4.507 | |
| | S16 | 0.000 | 1.060 | | | 4.528 | |
| Cover | S17 | 0.000 | 0.300 | | | 4.611 | |
| | S18 | 0.000 | 0.040 | | | 4.627 | |
| Image | | 0.000 | 0.000 | | | 4.633 | |

Table 10 shows the surface number **Surface,** radius of curvature **Radius,** center thickness of each lens or distance between lens surfaces **Thickness,** refractive index **nd,** Abbe number **vd,** effective radius **Semi Aperture,** and focal length **Focal length** of a lens according to a fourth embodiment of the present invention. At this time, the unit of the radius of curvature and thickness or distance may be mm.

[Table 11]

| Category | Value | Category | Value |
|---|---|---|---|
| F | 14.7052 | ET1 | 1.3802 |
| F2_7 | 24.9373 | ET2 | 6.7565 |
| F3_7 | 17.0011 | ET3 | 0.8976 |
| F4_7 | 161.8800 | ET4 | 1.2852 |
| F5_7 | -9.1945 | ET5 | 4.6613 |
| F6_7 | 45.8566 | ET6 | 1.2581 |
| F4_5 | -113.8620 | ET7 | 2.1002 |
| ΣIndex | 11.6521 | F-number | 1.6096 |
| ΣAbbe | 313.5836 | FOV_D | 34.2549 |
| ΣCT | 19.63416 | EPD | 9.1359 |
| ΣCG | 5.89787 | BFL | 2.3680 |
| CA_max | 12.075 | TD | 25.5320 |
| CA_min | 8.400 | ImgH | 4.6300 |
| CA_Aver | 9.772 | SD | 16.0664 |
| CT_max | 6.1576 | TTL | 27.9000 |
| CT_min | 1.6943 | GLca_Aver | 10.305 |
| CT_Aver | 2.80488 | PLca_Aver | 8.4377 |
| Image sensor | 3840*2160 | | |

Table 11 shows categories of Mathematical expressions described above in the optical system **1300** of the embodiment, including the total top length (TTL) (mm), back focal length (BFL), effective focal length **F** (mm), ImgH (mm), effective diameter **CA** (mm), thickness (mm), TTL (mm), TD (mm), which is an optical axis distance from the first surface **S1** to the fourteenth surface **S14,** composite focal lengths of the first to seventh lenses F2_7, F3_7, F4_7, F5_7, F6_7, and F4_5, (mm), sum of refractive indices, sum of Abbe numbers, sum of thicknesses (mm), sum of gaps between adjacent lenses, effective diameter characteristics, sum of refractive indices of glass lenses, sum of refractive indices of plastic materials, angle of view FOV_H (degree), edge thickness ET, F number, and the like of the optical system **1300.**

As shown in FIGS. 40 and 41, the center thickness of the first to seventh lenses **401 to 407** is represented by CT1 to CT7, the edge thickness at the end of the effective area of each lens is represented by ET1 to ET7, the center gap between two adjacent lenses is represented by CG1 to CG6, and the edge gap between the edges of each lens is represented by EG1 to EG6. Here, the center thickness of the cemented lens **445** is CT45, and the edge thickness is represented by ET45.

Referring to FIG. 41, back focal length (BFL) is an optical axis distance from the image sensor **700** to the center of the last lens. In FIG. 41, TTL is an optical axis distance from the center of the first surface **S1** of the first lens **401** to an upper surface of the image sensor **700.**

As shown in FIG. 42, among the lenses of the lens unit **400** in a fourth embodiment, the lens surfaces of the first, sixth, and seventh lenses **401, 406,** and **407** may include aspherical surfaces having a 30th-order aspherical surface coefficient. For example, the first, sixth, and seventh lenses **401, 406,** and **407** may include lens surfaces having a 30th-order aspherical surface coefficient. As described above, since the aspherical surface having the 30th-order aspherical surface coefficient (a value other than "0") can significantly change the aspherical shape of the edge portion, the optical performance of the edge portion of the field of view (FOV) can be well corrected.

As shown in FIG. 43, the thicknesses T1 to T7 of the first to seventh lenses **401, 402, 403, 404, 405, 406,** and **407** and the gaps **G1** to **G6** between adjacent two lenses can be set. As shown in FIG. 44, the thicknesses **T1** to **T7** of each lens in a Y-axis direction can be expressed at gaps of 0.1 mm or 0.2 mm or more, and the gaps **G1** to **G6** between each lens can be expressed at gaps of 0.1 mm or 0.2 mm or more.

When compared in terms of the absolute values of the curvature radii of each lens, the curvature radii of the sixth surface **S6** of the third lens **403** on an optical axis **OA** may be the largest among the lenses, and the curvature radii of the tenth surface **S10** of the fifth lens **405** may be the smallest among the lenses. The difference between the maximum curvature radii and the minimum curvature radii may be 15 times or more, for example, 18 to 20 times. The curvature radii of the sensor side surface of the glass material lens disposed on the object side of the plastic material lens may be the smallest among the lenses. The curvature radii of the sensor side surface of the fifth lens **405** disposed on the object side of the sixth lens **406** may be the smallest among the lenses.

Since the effective diameter of a plastic lens is smaller than that of a glass lens, the lens disposed on the object side of the plastic lens can have strong refractive power in order to refract light through the plastic lens. In addition, the radius of curvature of the lens surface can be small in order to strengthen the refractive power.

Among the lenses, the number of surfaces having an absolute value of curvature radii of 10 mm or less among the object side surface and the sensor side surface may be two or less. The number of surfaces having an absolute value of curvature radii of 10 mm or less among the sensor side surface (the tenth surface) **S10** of the fifth lens **405** may be three or more and five or less. The number of surfaces having an absolute value of curvature radii of 10 mm or more and 20 mm or less among the object side surface and the sensor side surface of the lenses may be three or more and five or less. The number of surfaces having an absolute value of curvature radii of the object side surface (the third surface) **S3** of the second lens **402,** the object side surface (the seventh surface) **S7** of the fourth lens **404,** the object side surface (the eleventh surface) **S11** of the sixth lens **406,** and the sensor side surface (the fourteenth surface) **S14** of the seventh lens **407** may be 10 mm or more and 20 mm or less. Among the lenses, there may be at least one and no more than four surfaces having an absolute value of a curvature radius of 60 mm or more among the object side surface and the sensor side surface. The absolute values of the curvature radii of the object side surface (the first surface) **S1** of the first lens **401,** the sensor side surface (the eighth surface) **S8** of the fourth lens **404,** the object side surface (the ninth surface) **S9** of the fifth lens **405,** and the sensor side surface (the twelfth surface) **S12** of the sixth lens **406** may be at least 60 mm.

In temperature compensation designs that require resolution to be maintained even when temperatures change from -40 to 100 degrees, a larger radius of curvature can be advantageous. In designs for temperature compensation, aluminum barrels can be used for lens barrels. Aluminum barrels have large manufacturing tolerances, so when the lenses are assembled, the optical axes of each lens are greatly misaligned. Therefore, by designing a large radius of curvature, the sensitivity to manufacturing tolerances can be reduced.

Referring to FIG. 45, the slope angle of the lens surface can be expressed as a value in rad, which is the slope of the lens surface at a point on the lens surface converted into a tangent value with respect to a Y-axis perpendicular to the optical axis at a gap of 0.1. Regarding the slope angle of the lens surface, the slope angle of the object side surface (the first surface) **S1** of the first lens **401** may be the smallest, excluding the cemented lens among the first to seventh lenses. The number of lenses having a value smaller than the absolute value of the slope angle of the object side surface of the aspherical glass material among the object side surfaces and the sensor side surfaces of the first to seventh lenses may be five or less.

The shape of the first lens **401** having an aspherical shape can be designed to be gentle. If the aspherical surface is located at the frontmost in the optical system **1300,** the performance of the lens is improved, but the assemblability may be reduced. In order to improve the assemblability, the shape of the first lens **401** should be designed to be gentle. In order to minimize the influence on the lens disposed on the sensor side when assembling the lens in the barrel, it can be designed to have almost no curvature.

With respect to an optical axis, when describing the center thickness of the lenses, the center thickness **CT2** of the second lens **402** is the largest among the lenses, and the center thickness **CT7** of the seventh lens **407** is the smallest among the lenses. The difference between the maximum center thickness and the minimum center thickness among the lenses may be in the range of 4.5 mm or more and 5.5 mm or less.

When explaining the center gap **CG** between the lenses, the center gap **CG5** between the fifth lens **405** and the sixth lens **406** may be the maximum, and the center gap **CG2** between the second and third lenses **402** and **403** and the center gap **CG3** between the third and fourth lenses **403** and **404** may be the minimum. Here, the minimum center gap excludes the cementing surface of the cemented lens **445.** The difference between the maximum center gap and the minimum center gap among the spaced lens gaps may be 1.5 mm or more, for example, in the range of 1.8 mm to 2.5 mm.

When explaining the effective diameter, the lens having the maximum effective diameter may be disposed between the first lens **401** closest to the object and the seventh lens **407** closest to the image sensor **700.** The lens having the maximum effective diameter may be a glass lens. The lens having the maximum effective diameter may be disposed between the first lens **401** and the cemented lens **445.** The lens having the maximum effective diameter may be the first lens **401.** Here, the effective diameter is an average of the effective diameter of the object side surface and the effective diameter of the sensor side surface of each lens. The lens surface having the maximum effective diameter may be the first surface **S1** of the first lens **401.**

The lens having the minimum effective diameter can be either one of the cemented lenses or one of the plastic lenses, for example, the fifth lens **405** or the seventh lens **407** adjacent to the image sensor **700.** For example, the effective diameter of the fifth lens **405** may be the minimum within the lens unit **400.** The lens surface having the minimum effective diameter can be the tenth surface **S10** of the fifth lens **405.**

The effective diameters of each of the first to fourth lenses **401** to **404** adjacent to the object side may be larger than the effective diameters of the fifth, sixth, and seventh lenses **405, 406,** and **407** adjacent to the sensor side. The effective diameters of the first to fourth lenses **401 to 404** may be larger than the diagonal length of the image sensor 700. The average effective diameter of the seventh lens 407 may be smaller than the diagonal length of the image sensor **700.** Accordingly, light incident through a plurality of lenses aligned along an optical axis may be guided to the image sensor 700.

When explaining the refractive index, the refractive index of the fourth lens 404 may be the largest among the lenses and may be greater than 1.78, for example, greater than 1.8. Either or both of the third lens 403 and the sixth lens 406 may have the smallest refractive index among the lenses. For example, the refractive index of the sixth lens 406 may be the smallest among the lenses and may be less than 1.6, for example, less than 1.55. The difference between the maximum refractive index and the minimum refractive index may be 0.3 or more. By providing a high refractive index lens made of glass closest to an object, and providing a lens adjacent to the glass lens and a lens adjacent to the image sensor **700** as low refractive index lenses made of plastic, the incidence efficiency can be increased, and the refractive power between the glass lens and the plastic lens can be adjusted to guide the image sensor **700.**

When cmparing the Abbe numbers, the Abbe number of the third lens **403** is the largest among the lenses and may be 70 or more. The Abbe number of the seventh lens **407** is the smallest among the lenses and may be 25 or less. The difference between the maximum refractive index and the minimum Abbe number may be 50 or more. By making the Abbe number of the third lens **403** adjacent to the cemented lens **445** the largest and providing the Abbe number of the seventh lens **407** with a low refractive index adjacent to the image sensor **700** the smallest, the color dispersion of light traveling between the glass lenses can be controlled and the color dispersion between the glass and plastic lenses can be increased to guide it to the image sensor **700.**

The focal lengths **F2, F5,** and **F7** of the second, fifth, and seventh lenses **402, 405,** and **407** may have a negative (-) signs. The second, fifth, and seventh lenses **402, 405,** and **407** may have a negative (-) refractive power. The focal lengths **F1, F3, F4,** and **F6** of the first, third, fourth, and sixth lenses **401, 403, 404,** and **406** may have a positive (+) signs. The first, third, fourth, and sixth lenses **401, 403, 404,** and **406** may have a positive (+) refractive power. The third and fourth lenses **403** and **404** having positive (+) refractive power may be disposed on the sensor side of the second lens **402** having negative (-) refractive power. Through this, light incident on the object side can move away from an optical axis direction and then gather again along an optical axis direction, thereby forming a stable optical path.

In addition, the sixth lens **406** and the seventh lens **407,** which are adjacently disposed lenses, can satisfy the following conditions.

The refractive index of the lens with positive refractive power < The refractive index of the lens with negative refractive power  Condition 1:

Dispersion of a lens with positive refractive power > Dispersion of a lens with negative refractive power  Condition 2:

Here, among the plastic lenses, the sixth lens 406 has a positive refractive power and the seventh lens 407 has a negative refractive power, so that according to Conditions 1 and 2, the refractive index of the sixth lens 406 is smaller than that of the seventh lens 407, and the dispersion value of the sixth lens 406 is larger than that of the seventh lens 407. Chromatic aberration occurring in the plastic lens can be corrected by the plastic lens. In addition, since the sixth lens 406 and the seventh lens 407, which are plastic lenses disposed in succession, satisfy the refractive index difference of 0.1 or more and 0.15 or less and the Abbe number difference of 20 or more and 60 or less, the chromatic aberration occurring in the plastic lens can be compensated for by the plastic lens.

The optical system has chromatic aberration, and chromatic aberration is corrected by using cemented lenses or two lenses disposed in series. As the temperature changes from low to high, the lens repeatedly contracts and expands. Since the lens characteristics of lenses of the same material change the same amount according to the temperature change, it is effective to correct chromatic aberration between lenses of the same material even if the temperature changes.

Therefore, in a fourth embodiment of the present invention, the chromatic aberration occurring in the plastic lens is corrected by using the cemented lens **445,** the sixth lens **406,** and the seventh lens **407.**

The fourth lens **404** and the fifth lens **405,** which are cemented lenses, can compensate for chromatic aberration occurring in a glass lens by satisfying the refractive index difference of 0.1 or more and 0.15 or less and the Abbe number difference of 20 or more and 60 or less. The refractive index difference is rounded off to the third decimal place, and the Abbe number difference is rounded off to the first decimal place to compare the values.

When comparing the focal lengths in absolute values, the focal length of the first lens **401** is the largest among the lenses, and may be 50 or more and 60 or less. Among the lenses, the first lens **401** made of glass may have the largest focal length and the smallest refractive power. The focal length of the fifth lens **405** is the smallest among the lenses, and the absolute value of the focal length of the fifth lens **405** may be 5 or more and 10 or less. Among the lenses, the fifth lens **405** made of glass may have the smallest focal length and the largest refractive power. Since lenses made of a plastic material having small refractive power are disposed on the sensor side of the fifth lens **405,** the refractive power of the fifth lens **405** may be increased.

Among the lenses other than the cemented lens **445,** the lens having the minimum focal length may be the sixth lens **406.** The difference between the maximum focal length and the minimum focal length may be 30 or more or 40 or more. Accordingly, the optical system may have improved MTF characteristics, aberration control characteristics, resolution characteristics, and the like in the set angle of view range, and may have good optical performance in the edge portion of the angle of view.

The thickness **T1** of the first lens **401** may have a difference between the maximum thickness and the minimum thickness of 1 time or more, for example, in the range of 1 to 1.2 times, and the center thickness **CT1** may be maximum while the edge thickness **ET1** may be minimum. The thickness **T2** of the second lens **402** may have a maximum thickness in the range of 1 to 1.2 times the minimum thickness. The second lens **402** may have a minimum center thickness **CT2** and a maximum edge thickness **ET2.** The thickness **T3** of the third lens **403** may be maximum at the center and minimum at the edge, and the maximum thickness may be in the range of 1.5 to 2 times the minimum thickness. The thickness **T4** of the fourth lens **404** may be maximum at the center and minimum at the edge, and the maximum thickness may be in the range of 1.6 to 2.2 times the minimum thickness. The thickness **T5** of the fifth lens **405** may be minimum at the center and maximum at the edge, and the maximum thickness may be in the range of 1.2 to 1.5 times the minimum thickness. The thickness **T6** of the sixth lens **406** may be maximum at the center and minimum at the edge, and the maximum thickness may be in the range of 1 to 1.2 times the minimum thickness. The thickness **T7** of the seventh lens **407** may be minimum at the center and maximum at the edge, and the maximum thickness may be in the range of 1 to 1.2 times the minimum thickness.

The center thickness **CT45** of the cemented lens **445** may be less than its edge thickness **ET45.** The center thickness **CT45** of the cemented lens **345** is the distance from the center of the seventh surface **S7** on the object side of the fourth lens **404** to the center of the tenth surface **S10** of the fifth lens **405.** The edge thickness **ET45** is the distance from the end of the effective area of the seventh surface **S7** to the tenth surface **S10** along an optical axis direction. The maximum thickness of the cemented lens **445** may be at the edge portion, and the minimum thickness may be at the center portion, with the maximum thickness potentially ranging from 1 to 1.2 times the minimum thickness.

Among the gaps **G1** to **G6** between the lenses, the first gap **G1** between the first and second lenses **401** and **402** may have a maximum in the center portion and a minimum in the edge portion. The second gap **G2** between the second and third lenses **402** and **403** may have a maximum in the edge portion and a minimum in the center portion. The third gap **G3** between the third and fourth lenses **403** and **404** may have a maximum in the edge portion and a minimum in the center portion. The fifth gap **G5** between the fifth and sixth lenses **405** and **406** may have a maximum in the center portion and a minimum in the edge portion. The sixth gap **G6** between the sixth and seventh lenses **406** and **407** may have a maximum in the center portion and a minimum in the edge portion.

As shown in FIG. 46, in the optical system and camera module of FIG. 40, the chief ray angle (CRA) may be 10 degrees or more, for example, in a range of 10 to 35 degrees or 10 to 25 degrees, at 1-field, which is the end of the diagonal length of the image sensor. In addition, the difference in the angle of the chief ray from a low temperature (-40 degrees) to a high temperature (95 degrees) may be 1 degree or less. Accordingly, even if the temperature changes from a low temperature to a high temperature, the difference in the angle of the chief ray is not large and stable optical performance can be achieved.

FIGS. 47 to 49 are graphs showing diffraction modulation transfer function (MTF) at room temperature, low temperature, and high temperature in the optical system of FIG. 40, and are graphs showing modulation according to spatial frequency. As shown in FIGS. 47 to 49, in a first embodiment of the invention, the deviation of MTF at low temperature or high temperature based on room temperature may be less than 10%, that is, 7% or less.

FIGS. 50 to 52 are graphs showing aberration characteristics at room temperature, low temperature, and high temperature in the optical system of FIG. 40. In the aberration graphs of FIGS. 50 to 52, spherical aberration (longitudinal spherical aberration), astigmatic field curves, and distortion are measured from left to right. In FIGS. 50 to 52, an X-axis may represent a focal length (mm) and a degree of distortion (%), and a Y-axis may represent the height of the image. In addition, the graph for spherical aberration is a graph for light in wavelength bands of about 435 nm, about 486 nm, about 546 nm, about 587 nm, and about 656 nm, and the graphs for astigmatism and distortion are graphs for light in wavelength bands of about 546 nm. In the aberration diagrams of FIGS. 50 to 52, the closer each curve at room temperature, low temperature, and high temperature is to the Y-axis, the better the aberration correction function can be interpreted. It can be seen that the optical system **1300** according to a fourth embodiment has measurement values close to a Y-axis in almost all areas. That is, the optical system **1300** according to a fourth embodiment has improved resolution and can have good optical performance not only at the center of the field of view (FOV) but also at the edge portion. Here, the low temperature is -20 degrees or lower, for example, in the range of -20 to -40 degrees, the room temperature is in the range of 22 degrees ±5 degrees or in the range of 18 degrees to 27 degrees, and the high temperature can be in the range of 85 degrees or higher, for example, in the range of 85 degrees to 405 degrees. Accordingly, it can be seen that the decrease in the luminance ratio (modulation) from the low temperature to the high temperature of FIGS. 50 to 52 is less than 10%, for example, 5% or lower, or is hardly changed.

Table 12 compares changes in optical characteristics such as EFL, BFL, F number (F#), TTL, and field of view (FOV_H) at room temperature, low temperature, and high temperature in the optical system according to a third embodiment, and it can be seen that the change rate of the optical characteristics at low temperature is 5% or less, for example, 3% or less, with respect to room temperature, and it can be seen that the change rate of the optical characteristics at low temperature is 5% or less, for example, 3% or less, with respect to room temperature.

[Table 12]

| | Room temperat ure | Low temperat ure | High temperat ure | Low/Roo m temperatur e | High/Roo m temperatur e |
|---|---|---|---|---|---|
| EFL(F) | 14.7052 | 14.6513 | 14.7700 | 99.63% | 100.44% |
| BFL | 0.0341 | 0.0360 | 0.0325 | 305.57% | 95.31% |
| F# | 1.6096 | 1.6039 | 1.6164 | 99.65% | 100.42% |
| TTL | 27.8600 | 27.8247 | 27.9016 | 99.87% | 100.15% |
| FOV_H | 30.0001 | 30.1142 | 29.8667 | 100.38% | 99.56% |

Therefore, as shown in Table 12, it can be seen that the changes in optical characteristics according to the temperature change from low temperature to high temperature, for example, the change rate of effective focal length (EFL), TTL, BFL, F number, and field of view (FOV_H), are less than 10%, that is, less than 5%, for example, in the range of 0 to 5%. This makes it possible to design temperature compensation for plastic lenses even when using at least one or two or more plastic lenses, thereby preventing a decrease in the reliability of optical characteristics.

The optical system of a fourth embodiment disclosed above can effectively control aberration characteristics such as chromatic aberration and distortion aberration, and can have good optical performance not only at the center portion of the field of view (FOV) but also at the edge portion.

An optical system according to a fifth embodiment of the invention will be described.

FIG. 53 is a side cross-sectional view of an optical system according to a fifth embodiment and a camera module having the same; FIG. 54 is a side cross-sectional view for explaining the relationship between nth and (n-1)th lenses according to FIG. 53; FIG. 55 is a table showing aspherical coefficients of lenses in an optical system of FIG. 53; FIG. 56 is a table showing the thickness of each lens and the gap between adjacent lenses of the optical system of FIG. 53; FIG. 57 is a table showing Sag values of lens surfaces of first to seventh lenses in an optical system of FIG. 53; FIG. 58 is a table showing Slope angle values of lens surfaces of first to seventh lenses in an optical system of FIG. 53; FIG. 59 is a table showing chief ray angle (CRA) data at room temperature, low temperature, and high temperature according to the position of an image sensor in an optical system of FIG. 53; FIGS. 60 to 62 are graphs showing data on diffraction modulation transfer function (MTF) of an optical system of FIG. 53 at room temperature, low temperature, and high temperature, and FIGS. 63 to 65 are graphs showing data on aberration characteristics of an optical system of FIG. 53 at room temperature, low temperature, and high temperature.

Referring to FIGS. 53 and 54, the optical system **1400** includes a lens unit **500,** and the lens unit **500** may include a first lens **501** to a seventh lens **507.** The first to seventh lenses **501** to **507** may be sequentially disposed along an optical axis **OA** of the optical system **1400.** Light corresponding to information of an object may pass through the first lens **501** to the seventh lens **507** and a filter **900** and be incident on the image sensor **700.**

The first lens **501** can be disposed closest to the object side. The first lens **501** can be disposed farthest from the sensor side. The first lens **501** can have negaive (-) refractive power on an optical axis **OA.** The first lens **501** can include a plastic material or a glass material, and can be, for example, a glass material. The first lens **501** made of a glass material can reduce changes in the center position and the radius of curvature due to temperature changes according to the surrounding environment, and can protect the incident side surface of the optical system **1400.**

With respect to an optical axis, the first surface **S1** on the object side of the first lens **501** may be concave, and the second surface **S2** on the sensor side may be convex. The first lens **501** may have a meniscus shape that is convex toward the sensor side. The first lens **501** is made of glass and may have an aspherical surface. The aspherical coefficients of the first and second surfaces **S1** and **S2** may be provided as L1S1, L1S2 of FIG. 55. The first lens **501** may be manufactured as a lens having an aspherical surface by injection molding a glass material. The first lens **501** may be a glass mold lens having an aspherical surface and made of a glass material. The glass mold lens may be manufactured by inserting an optical glass ingot into a mold having an aspherical shape and through a heating and compression process.

The first lens **501** is provided with an aspherical glass material, so that the glass material having high transmittance and refractive index has an aspherical surface, which can reduce the number of lenses in an optical system. The aspherical glass material can maintain optical performance at a constant level when the temperature changes to low or high temperature due to the glass material. In addition, since the aspherical surface is applied to the glass material, even if the lens is designed thin, the refractive index of light does not change significantly. Therefore, unlike an optical system in which the first lens is designed to be thickest in a horizontal angle of view ranging from 30 degrees to 50 degrees, the optical system of the invention can provide a thin first lens made of an aspherical glass material. Here, the thickness of the lens may include a center thickness and an edge thickness.

The refractive index n1 of the first lens **501** can satisfy the condition of n1>1.8 or n1>1.82. When the refractive index n1 of the first lens **501** satisfies the condition, the radius of curvature of the first and second lenses **501** and **502** can be increased, and lens manufacturing can be facilitated. When the refractive index n1 of the first lens **501** is smaller than the condition, the lens surface must be formed sharply concave or convex in order to increase the refractive power of the first and second lenses **501** and **502.** In this case, lens manufacturing is not easy, the lens defect rate increases, and it can cause a decrease in yield.

The second lens **502** may be disposed second from the object side. The second lens **502** may be disposed sixth from the sensor side. The second lens **502** may be disposed between the first lens **501** and the third lens **503.** The second lens **502** may have a positive (+) refractive power on an optical axis **OA.** The second lens **502** may include a plastic or glass material. For example, the second lens **502** may be provided with a glass material.

With respect to an optical axis **OA,** the object side third surface **S3** of the second lens **502** may be convex, and the sensor side fourth surface **S4** may be convex. The second lens **502** may have a shape in which both surfaces are convex. The second lens **502** is made of glass and may be spherical. At least one or both of the third surface **S3** and the fourth surface **S4** may be spherical.

In addition, due to the refractive characteristics of the second lens **502,** the second lens **502** may be further spaced apart from the third lens **503.** That is, the center gap between the second and third lenses **502** and **503** may be the largest within the lens unit. In addition, that is, the edge gap between the second and third lenses **502** and **503** may be the largest within the lens unit.

Since both surfaces of the second lens **502** are provided convexly, the TTL and the number of lenses of the optical system can be minimized, and light can be effectively refracted. In addition, when the radius of curvature of the third surface **S3** of the second lens **502** is L2R1, and the radius of curvature of the fourth surface **S4** is L2R2, the condition of L2R1 > | L2R2 | can be satisfied. Through this, light can be efficiently refracted by the third surface **S3,** so that the effective diameters of the third to seventh lenses **503** to **507** can be guided so as not to be increased, and the TTL can be reduced. When L2R1 < | L2R2 | , aberrations may occur a lot on the object side surface of the second lens **502,** the refractive efficiency of light may be decreased at the sensor side surface, the effective diameters of the rear lenses may be increased, and the TTL may also become larger.

The aperture **Stop** can be disposed around the sensor side fourth surface **S4** of the second lens **502.** The aperture can reduce the TTL within the field of view range, and the optical system can be miniaturized. Accordingly, the yield by weight of the optical system can be prevented from decreasing, and the production efficiency can be improved. In addition, the optical system can be miniaturized by reducing the TTL within the horizontal field of view (FOV_H) of 25 degrees to 36 degrees.

The third lens **503** may be disposed third from the object side. The third lens **503** may be disposed fifth from the sensor side. The third lens **503** may be disposed between the second lens **502** and the fourth lens **504.** The third lens **503** may have a positive (+) refractive power on an optical axis **OA.** The third lens **503** may include a plastic or glass material. For example, the third lens **503** may be provided with a glass material.

With respect to an optical axis, the object side fifth surface **S5** of the third lens **503** may be convex, and the sensor side sixth surface **S6** may be concave. The third lens **503** may have a shape in which object side is convex on an optical axis **OA.** The third lens **503** is made of glass and may be spherical. At least one or both of the fifth surface **S5** and the sixth surface **S6** may be spherical. At least one or both of the fifth surface **S5** and the sixth surface **S6** may be provided without a critical point from an optical axis **OA** to the end of the effective area.

The fourth lens **504** may be disposed fourth from the object side. The fourth lens **504** may be disposed fourth from the sensor side. The fourth lens **504** may be disposed between the third lens **503** and the fifth lens **505.** The fourth lens **504** may have a positive (+) or negative (-) refractive power on an optical axis **OA.** The fourth lens **504** may have a positive (+) refractive power. The fourth lens **504** may have a positive (+) refractive power different from the refractive power of the fifth lens **505.** The fourth lens **504** may include a plastic or glass material. For example, the fourth lens **504** may be provided with a glass material. The fourth lens **504** may be provided with the same material as the fifth lens **505.**

With respect to an optical axis, the object side seventh surface **S7** of the fourth lens **504** may be convex, and the sensor side eighth surface **S8** may be convex. The fourth lens **504** may have a convex shape on both surfaces. The fourth lens **504** may be made of glass and may have a spherical surface. At least one or both of the seventh surface **S7** and the eighth surface **S8** may be spherical. The seventh surface **S7** and the eighth surface **S8** may be provided without a critical point from an optical axis **OA** to the end of the effective area.

The fifth lens **505** may be disposed fifth from the object side. The fifth lens **505** may be disposed third from the sensor side. The fifth lens **505** may be disposed between the fourth lens **504** and the sixth lens **506.** The fifth lens **505** may have a positive (+) or negative (-) refractive power on an optical axis **OA.** The fifth lens **505** may have a negative (-) refractive power. The fifth lens **505** may have a negative (-) refractive power different from the refractive power of the fourth lens **504.** The fifth lens **505** may include a plastic or glass material. For example, the fifth lens **505** may be provided with a glass material. The fifth lens **505** may be provided with the same material as the fourth lens **504.**

With respect to an optical axis, the ninth surface **S9** on the object side of the fifth lens **505** may be concave, and the tenth surface **S10** on the sensor side may be concave. The fifth lens **505** may have a shape in which both surfaces are concave. The fifth lens **505** is made of glass and may have a spherical surface. At least one surface of the ninth surface **S9** and the tenth surface **S10** may be a spherical surface. At least one or both of the ninth and tenth surfaces **S9** and **S10** of the fifth lens **505** may be provided without a critical point from an optical axis **OA** to the end of the effective area.

The fourth lens **504** and the fifth lens **505** can be cemented. The bonding surface between the fourth lens **504** and the fifth lens **505** can be defined as the eighth surface **S8.** The eighth surface **S8** can be the same surface as the ninth surface **S9** of the fifth lens **505.** The object side surface of the cemented lens **545** can be convex, and the sensor side surface can be concave. The gap between the fourth and fifth lenses **504** and **505** can be less than 0.01 mm and can be attached with an adhesive. The gap between the fourth and fifth lenses **504** and **505** can be less than 0.01 mm from an optical axis **OA** to the end of the effective area. The fourth and fifth lenses **504** and **505** can have opposite refractive powers. The composite refractive power of the fourth and fifth lenses **504** and **505** can have a negative (-) refractive power.

The value of the radius of curvature of the cemented surface **S8** of the cemented lens **545** may be less than 50. For example, the value of the radius of curvature of the cemented surface **S8** of the cemented lens **545** may be less than 40. The cemented surface **S8** of the cemented lens **545** may be formed in a gentle shape. Through this, the cementing process of the fourth lens **504** and the fifth lens **505** forming the cemented lens **545** is advantageous, and the cementing maintenance strength can be increased.

The product of the refractive power of the object side fourth lens **504** of the cemented lens **545** and the refractive power of the sensor side fifth lens **505** may be less than 0. The product of the focal length of the object side fourth lens **505** of the cemented lens **545** and the focal length of the sensor side fifth lens **505** may be less than 0. Accordingly, the aberration characteristics of the optical system can be improved. When the refractive powers of the two lenses of the cemented lens **545** are the same, there is a limit to the improvement of aberration.

The composite refractive power of the cemented lens **545** has a negative (-) refractive power, and the third lens **503** on the object side and the sixth lens **506** on the sensor side with respect to the cemented lens **545** can have a positive (+) refractive power. Accordingly, the fourth lens **504,** the cemented lens **545,** and the fifth lens **505** can refract a portion of the incident light in a direction of an optical axis.

The effective diameter of the fourth lens **504** may be larger than the diagonal length of the image sensor **700.** The effective diameter of the fourth lens **504** is an average of the effective diameters of the seventh surface **S7** and the eighth surface **S8,** and may be larger than the diagonal length of the image sensor **700.** The effective diameter of the fifth lens **505** may be smaller than the effective diameter of the fourth lens **504** and larger than the diagonal length of the image sensor **700.** The effective diameter of the seventh surface **S7** of the fourth lens **504** may be larger than the diagonal length of the image sensor **700,** and the effective diameter of the tenth surface **S10** of the fifth lens **505** may be smaller than the diagonal length of the image sensor **700.**

When the fifth lens **505** is a spherical lens and the seventh lens **507** is an aspherical lens, the difference in effective diameter between the object side ninth surface **S9** and the sensor side tenth surface **S10** of the fifth lens **505** can be provided to be the largest. For example, when the effective diameters of the ninth surface **S9** and the sensor side tenth surface **S10** of the fifth lens **505** are CA51 and CA52, the condition of CA51 > CA52 is satisfied, and the difference between CA51 and CA52 can be the largest among the differences in effective diameters between the object side surfaces and the sensor side surfaces of each lens. Accordingly, the difference in effective diameters between the object side surface and the sensor side surface of the fifth lens **505** can be set to be maximized, so as to effectively guide light traveling through an aspherical lens having a relatively small effective diameter. Accordingly, a slimmer optical system can be provided. The effective diameter of the fifth lens **505** can satisfy the condition of 1.1 < CA51/CA52 < 1.5.

The cemented lens **545** is cemented with glass lenses having different refractive indices, has a spherical refractive surface, and at least one lens disposed closer to the sensor than the cemented lens **545** is an aspherical lens, so that spherical aberration can be compensated for. In addition, at least one of the lenses disposed closer to the sensor than the cemented lens **545** is an aspherical lens and is disposed to have a small effective diameter, so that light traveling to the image sensor **700** through the aspherical lens can be effectively guided. Since the cemented lens **545** is disposed between aspherical lenses and between spherical lenses, chromatic aberration correction can be more efficient. By positioning the cemented lens **545** within the optical system, TTL can be reduced.

The sixth lens **506** may be disposed as the sixth lens from the object side. The sixth lens **506** may be disposed as the second lens from the sensor side. The sixth lens **506** may be disposed between the fifth lens **505** and the seventh lens **507.** The sixth lens **506** may have a positive (+) or negative (-) refractive power on an optical axis **OA.** The sixth lens **506** may have a positive (+) refractive power. The sixth lens **506** may include a plastic or glass material. For example, the sixth lens **506** may be provided with a plastic material.

With respect to an optical axis, the sixth lens **506** may have a convex shape on the object side eleventh surface **S11** and a convex shape on the sensor side 12th surface **S12.** The sixth lens **506** may have a convex shape on both surfaces on an optical axis **OA.** At least one or both of the eleventh surface **S11** and the 12th surface **S12** may be aspherical. Aspherical coefficients of the eleventh and 12th surfaces **S11** and **S12** may be provided as L1 and L2 of L6 of FIG. 56.

The eleventh surface **S11** of the sixth lens **506** can be provided without a critical point from an optical axis **OA** to the end of the effective area. The twelfth surface **S12** can be provided without at least one critical point from an optical axis **OA** to the end of the effective area.

The seventh lens **507** may be disposed closest to the sensor side. The seventh lens **507** may be disposed farthest from the object side. The seventh lens **507** may have a positive (+) or negative (-) refractive power on an optical axis **OA.** The seventh lens **507** may have a negative (-) refractive power. The seventh lens **507** may include a plastic or glass material. For example, the seventh lens **507** may be made of a plastic material.

On an optical axis, the object side thirteenth surface **S13** of the seventh lens **507** may be convex, and the sensor side fourteenth surface **S14** may be concave. The seventh lens **507** may have a meniscus shape that is convex toward the object side. At least one of the thirteenth surface **S13** and the fourteenth surface **S14** may be an aspherical surface. For example, both the thirteenth surface **S13** and the fourteenth surface **S14** may be aspherical. Aspherical coefficients of the thirteenth and fourteenth surfaces **S13** and **S14** may be provided as S1 and S2 of L7 in FIG. 55.

The thirteenth surface **S13** of the seventh lens **507** can have a critical point from an optical axis **OA** to the end of the effective area. When the thirteenth surface **S13** has a critical point, it can be located in a range of 30% to 40%, preferably 34% to 37%, of the effective radius r71 from an optical axis **OA.** The critical point of the thirteenth surface **S13** can be located in a range of 1.3 mm to 1.7 mm, preferably 1.4 mm to 1.5 mm from an optical axis **OA.** The thirteenth surface **S13** having such a critical point can refract incident light to the center and edge portions, and improve aberration.

The fourteenth surface **S14** of the seventh lens **507** may have a critical point from an optical axis **OA** to the end of the effective area. When the fourteenth surface **S14** has a critical point, it may be located in a range of 65% to 75%, preferably in a range of 68% to 71%, of the effective radius r72 from an optical axis **OA.** The critical point of the fourteenth surface **S14** may be located in a range of 3 mm to 3.3 mm, preferably in a range of 3.2 mm to 3.3 mm from an optical axis **OA.**

The critical points of the thirteenth surface **S13** and the fourteenth surface **S14** are points where the sign of the slope value with respect to an optical axis **OA** and a direction perpendicular to the optical axis **OA** changes from positive (+) to negative (-) or from negative (-) to positive (+), and may mean a point where the slope value is 0. In addition, the critical points of the thirteenth surface **S13** and the fourteenth surface **S14** may be points where the slope value of the tangent passing through the lens surface increases and then decreases, or points where it decreases and then increases.

The seventh lens **507** may be a plastic lens that is closest to the image sensor **700.** In addition, by arranging two or more plastic lenses adjacent to the image sensor **700,** aberrations such as spherical aberration and chromatic aberration can be improved by the lens surface having an aspherical surface, and the influence on the resolution can be controlled. In addition, by arranging the plastic lens as the lens adjacent to the image sensor **700,** it can be insensitive to the assembly tolerance compared to a glass lens. In other words, being insensitive to the assembly tolerance means that even if the assembly is performed with a slight difference compared to the design during assembly, the optical performance may not be significantly affected. In addition, by providing the two lenses **506** and **507** adjacent to the image sensor **700** with plastic, the optical performance can be improved by the lens surface having an aspherical surface, and for example, aberration characteristics can be improved and degradation of resolution can be prevented.

The sixth lens **506** and the seventh lens **507** are disposed to be spaced apart from each other, but may include the characteristics of a cemented lens. The sixth lens **506** and the seventh lens **507** may have opposite refractive powers. The product of the refractive power of the sixth lens **506** and the refractive power of the seventh lens **507** may be less than 0. The product of the focal length of the sixth lens **506** and the focal length of the seventh lens **507** may be less than 0. Accordingly, the aberration characteristics of the optical system may be improved. If the signs of the refractive powers of two lenses having the characteristics of a cemented lens are the same, there is a limit to the improvement of aberrations.

The sixth lens **506** and the seventh lens **507** may be made of the same material. The sixth lens **506** and the seventh lens **507** may be made of a plastic material. The sixth lens **506** and the seventh lens **507** may be made of the same material as the cemented lens **545.**

[Table 13]

| Lens | Surface | Radius | Thickness | nd | vd | Semi Aperture | Focal length |
|---|---|---|---|---|---|---|---|
| 1 | S1 | -41.417 | 5.155 | 1.8297 | 24.0394 | 5.694 | -67.060 |
| | S2 | -171.171 | 0.200 | | | 5.338 | |
| 2 | S3 | 100.983 | 1.415 | 1.8396 | 43.1284 | 5.258 | 38.6711 |
| | S4 | -47.549 | 0.100 | | | 5.142 | |
| | Stop | 0.000 | 3.232 | | | 5.020 | |
| 3 | S5 | 26.492 | 1.736 | 1.5521 | 75.4952 | 5.893 | 38.2729 |
| | S6 | -501.943 | 0.200 | | | 5.944 | |
| 4 | S7 | 11.411 | 3.725 | 1.8396 | 43.1284 | 6.062 | 22.4192 |
| | S8 | -30.248 | 0.000 | | | 5.710 | |
| 5 | S9 | -30.248 | 2.162 | 1.7231 | 29.6196 | 5.710 | -9.9568 |
| | S10 | 6.900 | 1.316 | | | 4.491 | |
| 6 | S11 | 11.908 | 2.858 | 1.5373 | 55.7098 | 4.534 | 27.5362 |
| | S12 | 55.883 | 2.370 | | | 4.560 | |
| 7 | S13 | 45.714 | 2.086 | 1.6682 | 20.4008 | 4.062 | -31.644 |
| | S14 | 14.193 | 0.543 | | | 4.607 | |
| Filter | S15 | 0.000 | 0.400 | | | 4.653 | |
| | S16 | 0.000 | 1.060 | | | 4.670 | |
| Cover | S17 | 0.000 | 0.300 | | | 4.736 | |
| | S18 | 0.000 | 0.040 | | | 4.749 | |
| Image | | 0.000 | 0.000 | | | 4.635 | |

Table 13 shows the surface number **Surface,** radius of curvature **Radius,** center thickness of each lens or distance between lens surfaces **Thickness,** refractive index **nd,** Abbe number **vd,** effective radius **Semi Aperture,** and focal length **Focal length** of a lens according to a fifth embodiment of the present invention. At this time, the unit of the radius of curvature and thickness or distance may be mm.

[Table 14]

| Category | Value | Category | Value |
|---|---|---|---|
| F | 14.7849 | ET1 | 5.5267 |
| F2_7 | 12.1170 | ET2 | 0.9998 |

(continued)

| Category | Value | Category | Value |
|---|---|---|---|
| F3_7 | 21.2409 | ET3 | 0.9076 |
| F4_7 | 152.1520 | ET4 | 1.4794 |
| F5_7 | -9.2571 | ET5 | 4.3183 |
| F6_7 | 81.8039 | ET6 | 1.8333 |
| F4_5 | -451.3180 | ET7 | 2.6561 |
| ΣIndex | 11.9895 | F-number | 1.6046 |
| ΣAbbe | 291.5216 | FOV_D | 34.2163 |
| ΣCT | 19.13826 | EPD | 9.2143 |
| ΣCG | 7.41835 | BFL | 2.3434 |
| CA_max | 11.838 | TD | 26.5566 |
| CA_min | 8.670 | ImgH | 4.6300 |
| CA_Aver | 10.429 | SD | 19.6866 |
| CT_max | 5.1550 | TTL | 28.9000 |
| CT_min | 1.4150 | GLca_Aver | 11.049 |
| CT_Aver | 2.73404 | PLca_ Aver | 8.8817 |
| Image sensor | 3840*2160 | | |

Table 14 shows categories of Mathematical expressions described above in the optical system **1400** of the embodiment, including the total top length (TTL) (mm), back focal length (BFL), effective focal length **F** (mm), ImgH (mm), effective diameter **CA** (mm), thickness (mm), TTL (mm), TD (mm), which is an optical axis distance from the first surface **S1** to the fourteenth surface **S14,** composite focal lengths of the first to seventh lenses F2_7, F3_7, F4_7, F5_7, F6_7, and F4_5, (mm), sum of refractive indices, sum of Abbe numbers, sum of thicknesses (mm), sum of gaps between adjacent lenses, effective diameter characteristics, sum of refractive indices of glass lenses, sum of refractive indices of plastic materials, angle of view FOV_H (degree), edge thickness ET, F number, and the like of the optical system **1400.**

As shown in FIGS. 53 and 54, the center thickness of the first to seventh lenses **501** to **507** is represented by CT1 to CT7, the edge thickness at the end of the effective area of each lens is represented by ET1 to ET7, the center gap between two adjacent lenses is represented by CG1 to CG6, and the edge gap between the edges of each lens is represented by EG1 to EG6. Here, the center thickness of the cemented lens **545** is CT45, and the edge thickness is represented by ET45.

Referring to FIG. 54, back focal length (BFL) is an optical axis distance from the image sensor **700** to the center of the last lens. In FIG. 54, TTL is an optical axis distance from the center of the first surface **S1** of the first lens **501** to an upper surface of the image sensor **700.**

As shown in FIG. 55, among the lenses of the lens unit **500** in a fourth embodiment, the lens surfaces of the first, sixth, and seventh lenses **501, 506,** and **507** may include aspherical surfaces having a 30th-order aspherical surface coefficient. For example, the first, sixth, and seventh lenses **501, 506,** and **507** may include lens surfaces having a 30th-order aspherical surface coefficient. As described above, since the aspherical surface having the 30th-order aspherical surface coefficient (a value other than "0") can significantly change the aspherical shape of the edge portion, the optical performance of the edge portion of the field of view (FOV) can be well corrected.

As shown in FIG. 56, the thicknesses **T1** to **T7** of the first to seventh lenses **501, 502, 503, 504, 505, 506,** and **507** and the gaps **G1** to **G6** between adjacent two lenses can be set. As shown in FIG. 44, the thicknesses **T1** to **T7** of each lens in a Y-axis direction can be expressed at gaps of 0.1 mm or 0.2 mm or more, and the gaps **G1** to **G6** between each lens can be expressed at gaps of 0.1 mm or 0.2 mm or more.

When compared in terms of the absolute values of the curvature radii of each lens, the curvature radii of the sixth surface **S6** of the third lens **503** on an optical axis **OA** may be the largest among the lenses, and the curvature radii of the tenth surface **S10** of the fifth lens **505** may be the smallest among the lenses. The difference between the maximum curvature radii and the minimum curvature radii may be 8 times or more, for example, 9 to 11 times. The curvature radii of the sensor side surface of the glass material lens disposed on the object side of the plastic material lens may be the smallest among the lenses. The curvature radii of the sensor side surface of the fifth lens **505** disposed on the object side of the sixth lens **506** may be the smallest among the lenses.

Since the effective diameter of a plastic lens is smaller than that of a glass lens, the lens disposed on the object side of the plastic lens can have strong refractive power in order to refract light through the plastic lens. In addition, the radius of curvature of the lens surface can be small in order to strengthen the refractive power.

Among the lenses, the number of surfaces having an absolute value of curvature radii of 10 mm or less among the object side surface and the sensor side surface may be two or less. The number of surfaces having an absolute value of curvature radii of 10 mm or less among the sensor side surface (the tenth surface) **S10** of the fifth lens **405** may be three or more and five or less. The number of surfaces having an absolute value of curvature radii of 10 mm or more and 20 mm or less among the object side surface and the sensor side surface of the lenses may be three or more and five or less. The number of surfaces having an absolute value of curvature radii of the object side surface (the seventh surface) **S7** of the fourth lens **404,** the object side surface (the eleventh surface) **S11** of the sixth lens **406,** and the sensor side surface (the fourteenth surface) **S14** of the seventh lens **407** may be 10 mm or more and 20 mm or less. Among the lenses, there may be at least one and no more than four surfaces having curvature radii of 60 mm or more among the object side surface and the sensor side surface. The absolute values of the curvature radii of the sensor side surface (the first surface) **S1** of the first lens **501,** the object side surface (the third surface) **S3** of the second lens **502,** and the sensor side surface (the sixth surface) **S6** of the third lens **503** may be 60 mm or more.

In temperature compensation designs that require resolution to be maintained even when temperatures change from -40 to 100 degrees, a larger radius of curvature can be advantageous. In designs for temperature compensation, aluminum barrels can be used for lens barrels. Aluminum barrels have large manufacturing tolerances, so when the lenses are assembled, the optical axes of each lens are greatly misaligned. Therefore, by designing a large radius of curvature, the sensitivity to manufacturing tolerances can be reduced.

Referring to FIG. 58, the slope angle of the lens surface can be expressed as a value in radians, which is the slope of the lens surface at a point on the lens surface with a 0.1 gap based on a Y-axis perpendicular to the optical axis, converted to a tangent value. Regarding the slope angle of the lens surface, the slope angle of the object side surface (the first surface) **S1** of the first lens **501** may be the smallest, excluding the cemented lens among the first to seventh lenses. The number of lenses having a value smaller than the absolute value of the slope angle of the lens surface of the object side surface of the aspherical glass material among the object side surfaces and the sensor side surfaces of the first to seventh lenses may be five or less. Preferably, the number of lenses smaller than the absolute value of the slope angle of the object side surface (the first surface) **S1** of the first lens **501** may be four. The absolute value of the inclination angle of the object side surface (the third surface) **S3** and the sensor side surface (the fourth surface) **S4** of the second lens **502,** the sensor side surface (the sixth surface) **S6** of the third lens **503,** the sensor side surface (the eighth surface) **S8** of the fourth lens **504,** and the object side surface (the ninth surface) **S9** of the fifth lens **505** may be smaller than the absolute value of the inclination angle of the object side surface (the first surface) **S1** of the first lens **501.**

The shape of the first lens **501** having an aspherical shape can be designed to be gentle. If the aspherical surface is located at the frontmost in the optical system **1400,** the performance of the lens is improved, but the assemblability may be reduced. In order to improve the assemblability, the shape of the first lens **501** should be designed to be gentle. In order to minimize the influence on the lens disposed on the sensor side when assembling the lens in the barrel, it can be designed to have almost no curvature.

With respect to an optical axis, when describing the center thickness of the lenses, the center thickness **CT3** of the first lens **501** is the largest among the lenses, and the center thickness **CT2** of the second lens **502** is the smallest among the lenses. The difference between the maximum center thickness and the minimum center thickness among the lenses may be in the range of 3.5 mm or more and 5.5 mm or less.

When explaining the center gap **CG** between the lenses, the center gap **CG2** between the second lens **502** and the third lens **503** may be the maximum, and the center gap **CG1** between the first and second lenses **501** and **502** and the center gap **CG3** between the third and fourth lenses **503** and **504** may be the minimum. Here, the minimum center gap excludes the bonding surface of the cemented lens **545.** The difference between the maximum center gap and the minimum center gap among the spaced lens gaps may be 3.0 mm or more, for example, in the range of 3.0 mm to 3.5 mm.

When explaining the effective diameter, the lens having the maximum effective diameter may be disposed between the first lens **501** closest to the object and the seventh lens **507** closest to the image sensor **700.** The lens having the maximum effective diameter may be a glass lens. The lens having the maximum effective diameter may be disposed between the first lens **501** and the cemented lens **545.** The lens having the maximum effective diameter may be the third lens **503.** Here, the effective diameter is the average of the effective diameter of the object side surface and the effective diameter of the sensor side surface of each lens. The lens surface having the maximum effective diameter may be the seventh surface **S7** of the fourth lens **504.**

The lens having the minimum effective diameter can be either one of the cemented lenses or one of the plastic material lenses, for example, the fifth lens **505** or the seventh lens **507** adjacent to the image sensor **700.** For example, the effective diameter of the seventh lens **507** can be the minimum within the lens unit **500.** The lens surface having the minimum effective diameter can be the thirteenth surface **S13** of the seventh lens **507.** The effective diameter of the plastic material lens can be smaller than the effective diameter of the glass material lens. The plastic material lens can be disposed adjacent to the image sensor.

The effective diameters of each of the first to fifth lenses **501** to **505** adjacent to the object side may be larger than the effective diameters of the sixth and seventh lenses **506** and **507** adjacent to the sensor side. The effective diameters of the first to fifth lenses **501** to **505** may be larger than the diagonal length of the image sensor **700.** The average effective diameters of the sixth and seventh lenses **506** and **507** may be smaller than the diagonal length of the image sensor **700.** Accordingly, light incident through a plurality of lenses aligned along an optical axis may be guided to the image sensor **700.**

When explaining the refractive index, the refractive index of the third lens **503** may be the largest among the lenses and may be greater than 1.8, for example, greater than 1.82. Either or both of the third lens **503** and the sixth lens **506** may have the smallest refractive index among the lenses. For example, the refractive index of the sixth lens **506** may be the smallest among the lenses and may be less than 1.6, for example, less than 1.55. The difference between the maximum refractive index and the minimum refractive index may be 0.2 or more. By providing a high refractive index lens made of glass closest to an object, and providing a lens adjacent to the glass lens and a lens adjacent to the image sensor **700** with a low refractive index lens made of plastic, the incidence efficiency can be increased, and the refractive power between the lenses made of glass and plastic can be adjusted to guide them to the image sensor **700.**

When cmparing the Abbe numbers, the Abbe number of the third lens **503** is the largest among the lenses and may be 70 or more. The Abbe number of the seventh lens **507** is the smallest among the lenses and may be 25 or less. The difference between the maximum refractive index and the minimum Abbe number may be 50 or more. By making the Abbe number of the third lens **503** adjacent to the cemented lens **545** the largest and providing the Abbe number of the seventh lens **507** with a low refractive index adjacent to the image sensor **700** the smallest, the color dispersion of light traveling between the glass lenses can be controlled and the color dispersion between the glass and plastic lenses can be increased to guide it to the image sensor **700.**

The focal lengths **F1, F5,** and **F7** of the first, fifth, and seventh lenses **501, 505,** and **507** may have a negative (-) signs. The first, fifth, and seventh lenses **501, 505,** and **507** may have a negative (-) refractive power. The focal lengths **F2, F3, F4,** and **F6** of the second, third, fourth, and sixth lenses **502, 503, 504,** and **506** may have a positive (+) signs. The second, third, fourth, and sixth lenses **502, 503, 504,** and **506** may have a positive (+) refractive power. The second, third, and fourth lenses **502, 503,** and **504** having positive (+) refractive power may be disposed on the sensor side of the first lens **501** having negative (-) refractive power. Through this, light incident on the object side can move away from an optical axis direction and then gather again along an optical axis direction, thereby forming a stable optical path.

In addition, the sixth lens **506** and the seventh lens **507,** which are adjacently being disposed lenses, can satisfy the following conditions.

The refractive index of the lens with positive refractive power < the refractive index of the lens with negative refractive power — Condition 1:

Dispersion of a lens with positive refractive power > Dispersion of a lens with negative refractive power — Condition 2:

Here, among the plastic lenses, the sixth lens **506** has a positive refractive power and the seventh lens **507** has a negative refractive power, so that according to Conditions 1 and 2, the refractive index of the sixth lens **506** is smaller than that of the seventh lens **507,** and the dispersion value of the sixth lens **506** is larger than that of the seventh lens **507.** Chromatic aberration occurring in the plastic lens can be corrected by the plastic lens. In addition, since the sixth lens **506** and the seventh lens **507,** which are plastic lenses disposed in succession, satisfy the refractive index difference of 0.1 or more and 0.15 or less and the Abbe number difference of 20 or more and 60 or less, the chromatic aberration occurring in the plastic lens can be compensated for by the plastic lens.

The optical system has chromatic aberration, and chromatic aberration is corrected by using cemented lenses or two lenses disposed in series. As the temperature changes from low to high, the lens repeatedly contracts and expands. Since the lens characteristics of lenses of the same material change the same amount according to the temperature change, it is effective to correct chromatic aberration between lenses of the same material even if the temperature changes.

Therefore, in a fifth embodiment of the present invention, the chromatic aberration occurring in the plastic lens is corrected by using the cemented lens **545,** the sixth lens **506,** and the seventh lens **507.**

The fourth lens **504** and the fifth lens **505,** which are cemented lenses, can compensate for chromatic aberration occurring in a glass lens by satisfying the refractive index difference of 0.1 or more and 0.15 or less and the Abbe number difference of 20 or more and 60 or less. The refractive index difference is rounded off to the third decimal place, and the Abbe number difference is rounded off to the first decimal place to compare the values.

When comparing the focal lengths in absolute values, the focal length of the first lens **501** is the largest among the lenses, and may be 50 or more and 80 or less. Among the lenses, the first lens **501** made of glass may have the largest focal length and the smallest refractive power. The focal length of the fifth lens **505** is the smallest among the lenses, and the absolute value of the focal length of the fifth lens **505** may be 5 or more and 10 or less. Among the lenses, the fifth lens **505** made of glass may have the smallest focal length and the largest refractive power. Since lenses made of a plastic material having small refractive power are disposed on the sensor side of the fifth lens **505,** the refractive power of the fifth lens **505** may be increased.

Among the lenses other than the cemented lens **545,** the lens having the minimum focal length may be the sixth lens **506.** The difference between the maximum focal length and the minimum focal length may be 30 or more or 40 or more. Accordingly, the optical system may have improved MTF characteristics, aberration control characteristics, resolution characteristics, and the like in the set angle of view range, and may have good optical performance in the edge portion of the angle of view.

The thickness **T1** of the first lens **501** may have a difference between the maximum thickness and the minimum thickness of 1 time or more, for example, in the range of 1 to 1.2 times, and the center thickness **CT1** may be minimum while the edge thickness **ET1** may be maximum. The thickness **T2** of the second lens **502** may have a maximum thickness in the range of 1.2 to 1.5 times the minimum thickness. The second lens **502** may have a minimum center thickness **CT2** and a maximum edge thickness **ET2.** The thickness **T3** of the third lens **503** may be maximum at the center and minimum at the edge, and the maximum thickness may be in the range of 1.5 to 2 times the minimum thickness. The thickness **T4** of the fourth lens **504** may be maximum at the center and minimum at the edge, and the maximum thickness may be in the range of 2.4 to 2.6 times the minimum thickness. The thickness **T5** of the fifth lens **505** may be minimum at the center and maximum at the edge, and the maximum thickness may be in the range of 1.4 to 1.6 times the minimum thickness. The thickness **T6** of the sixth lens **506** may be maximum at the center and minimum at the edge, and the maximum thickness may be in the range of 1.4 to 1.6 times the minimum thickness. The thickness **T7** of the seventh lens **507** may be minimum at the center and maximum at the edge, and the maximum thickness may be in the range of 1.1 to 1.4 times the minimum thickness.

The center thickness **CT45** of the cemented lens **545** may be greater than its edge thickness **ET45.** The center thickness **CT45** of the cemented lens **545** is the distance from the center of the seventh surface **S7** on the object side of the fourth lens **504** to the center of the tenth surface **S10** of the fifth lens **505.** The edge thickness **ET45** is the distance from the end of the effective area of the seventh surface **S7** to the tenth surface **S10** along an optical axis direction. The maximum thickness of the cemented lens **545** may be at the center portion, and the minimum thickness may be at the edge portion, with the maximum thickness potentially ranging from 1 to 1.2 times the minimum thickness.

Among the gaps **G1** to **G6** between the lenses, the first gap **G1** between the first and second lenses **501** and **502** may have a maximum in the edge portion and a minimum in the center portion. The second gap **G2** between the second and third lenses **502** and **503** may have a maximum in the edge portion and a minimum in the center portion. The third gap **G3** between the third and fourth lenses **503** and **504** may have a maximum in the edge portion and a minimum in the center portion. The fifth gap **G5** between the fifth and sixth lenses **505** and **506** may have a maximum in the center portion and a minimum in the edge portion. The sixth gap **G6** between the sixth and seventh lenses **506** and **507** may have a maximum in the center portion and a minimum in the edge portion.

As shown in FIG. 59, in the optical system and camera module of FIG. 53, the chief ray angle (CRA) may be 10 degrees or more, for example, in a range of 10 to 35 degrees or 10 to 25 degrees, at 1-field, which is the end of the diagonal length of the image sensor. In addition, the difference in the angle of the chief ray from a low temperature (-40 degrees) to a high temperature (95 degrees) may be 1 degree or less. Accordingly, even if the temperature changes from a low temperature to a high temperature, the difference in the angle of the chief ray is not large and stable optical performance can be achieved.

FIGS. 60 to 62 are graphs showing diffraction modulation transfer function (MTF) at room temperature, low temperature, and high temperature in the optical system of FIG. 53, and are graphs showing modulation according to spatial frequency. As shown in FIGS. 60 to 62, in a fifth embodiment of the invention, the deviation of MTF at low temperature or high temperature based on room temperature may be less than 10%, that is, 7% or less.

FIGS. 63 to 65 are graphs showing aberration characteristics at room temperature, low temperature, and high temperature in the optical system of FIG. 53. In the aberration graphs of FIGS. 63 to 65, spherical aberration (longitudinal spherical aberration), astigmatic field curves, and distortion are measured from left to right. In FIGS. 63 to 65, an X-axis may represent a focal length (mm) and a degree of distortion (%), and a Y-axis may represent the height of the image. In addition, the graph for spherical aberration is a graph for light in wavelength bands of about 435 nm, about 486 nm, about 546 nm, about 587 nm, and about 656 nm, and the graphs for astigmatism and distortion are graphs for light in wavelength bands of about 546 nm. In the aberration diagrams of FIGS. 50 to 52, the closer each curve at room temperature, low temperature, and high temperature is to the Y-axis, the better the aberration correction function can be interpreted. It can be seen that the optical system **1400** according to a fifth embodiment has measurement values close to a Y-axis in almost all areas. That is, the optical system **1400** according to a fifth embodiment has improved resolution and can have good optical performance not only at the center of the field of view (FOV) but also at the edge portion. Here, the low temperature is -20 degrees or lower, for example, in the range of -20 to -40 degrees, the room temperature is in the range of 22 degrees ±5 degrees or in the range of 18 degrees to 27 degrees, and the high temperature can be in the range of 85 degrees or higher, for example, in the range of 85 degrees to 505 degrees. Accordingly, it can be seen that the decrease in the luminance ratio (modulation) from the low temperature to the high temperature of FIGS. 63 to 65 is less than 10%, for example, 5% or lower, or is hardly changed.

Table 15 compares changes in optical characteristics such as EFL, BFL, F number (F#), TTL, and field of view (FOV_H) at room temperature, low temperature, and high temperature in the optical system according to a fifth embodiment, and it can be seen that the change rate of the optical characteristics at low temperature is 5% or less, for example, 3% or less, with respect to room temperature, and it can be seen that the change rate of the optical characteristics at low temperature is 5% or less, for example, 3% or less, with respect to room temperature.

[Table 15]

| | Room temperat ure | Low temperat ure | High temperat ure | Low/Roo m temperatur e | High/Roo m temperatur e |
|---|---|---|---|---|---|
| EFL(F) | 14.7849 | 14.7315 | 14.8486 | 99.64% | 100.43% |
| BFL | 0.0329 | 0.0339 | 0.0320 | 503.04% | 97.26% |
| F# | 1.6046 | 1.5988 | 1.6114 | 99.64% | 100.42% |
| TTL | 28.8600 | 28.8601 | 28.9070 | 99.86% | 100.16% |
| FOV_H | 30.0000 | 30.1088 | 29.8725 | 100.36% | 99.57% |

Therefore, as shown in Table 15, it can be seen that the changes in optical characteristics according to the temperature change from low temperature to high temperature, for example, the change rate of effective focal length (EFL), TTL, BFL, F number, and field of view (FOV_H), are less than 10%, that is, less than 5%, for example, in the range of 0 to 5%. This makes it possible to design temperature compensation for plastic lenses even when using at least one or two or more plastic lenses, thereby preventing a decrease in the reliability of optical characteristics.

The optical system of a fifth embodiment disclosed above can effectively control aberration characteristics such as chromatic aberration and distortion aberration, and can have good optical performance not only at the center portion of the field of view (FOV) but also at the edge portion.

An optical system according to a sixth embodiment of the invention will be described.

FIG. 66 is a side cross-sectional view of an optical system according to a sixth embodiment and a camera module having the same; FIG. 67 is a side cross-sectional view for explaining the relationship between nth and (n-1)th lenses according to FIG. 66; FIG. 68 is a table showing aspherical coefficients of lenses in an optical system of FIG. 66; FIG. 69 is a table showing the thickness of each lens and the gap between adjacent lenses in an optical system of FIG. 66; FIG. 70 is a table showing Sag values of lens surfaces of first to seventh lenses in an optical system of FIG. 66; FIG. 71 is a table showing slope angle values of lens surfaces of the first to seventh lenses in an optical system of FIG. 66; FIG. 72 is a table showing chief ray angle (CRA) data at room temperature, low temperature, and high temperature according to the position of the image sensor in an optical system of FIG. 66; FIGS. 73 to 74 are graphs showing data on diffraction modulation transfer function (MTF) of an optical system of FIG. 66 at room temperature, low temperature, and high temperature; and FIGS. 75 to 77 are graphs showing data on aberration of an optical system of FIG. 66 at room temperature, low temperature, and high temperature.

Referring to FIGS. 66 and 67, the optical system **1500** includes a lens unit **600,** and the lens unit **600** may include a first lens **601** to a seventh lens **607.** The first to seventh lenses **601** to **607** may be sequentially disposed along an optical axis **OA** of the optical system **1500.** Light corresponding to information of an object may pass through the first lens **601** to the seventh lens **607** and a filter **900** and be incident on the image sensor **700.**

The first lens **601** can be disposed closest to the object side. The first lens **601** can be disposed farthest from the sensor side. The first lens **601** can have negaive (-) refractive power on an optical axis **OA.** The first lens **601** can include a plastic material or a glass material, and can be, for example, a glass material. The first lens **601** made of a glass material can reduce changes in the center position and the radius of curvature due to temperature changes according to the surrounding environment, and can protect the incident side surface of the optical system **1500.**

With respect to an optical axis, the first surface **S1** on the object side of the first lens **601** may be concave, and the second surface **S2** on the sensor side may be convex. The first lens **601** may have a meniscus shape that is convex toward the sensor side. The first lens **601** is made of glass and may have an aspherical surface. The aspherical coefficients of the first and second surfaces **S1** and **S2** may be provided as L1S1, L1S2 of FIG. 67. The first lens **601** may be manufactured as a lens having an aspherical surface by injection molding a glass material. The first lens **601** may be a glass mold lens having an aspherical surface and made of a glass material. The glass mold lens may be manufactured by inserting an optical glass ingot into a mold having an aspherical shape and through a heating and compression process.

The first lens **601** is provided with an aspherical glass material, so that the glass material having high transmittance and refractive index has an aspherical surface, which can reduce the number of lenses in an optical system. The aspherical glass material can maintain optical performance at a constant level when the temperature changes to low or high temperature due to the glass material. In addition, since the aspherical surface is applied to the glass material, even if the lens is designed thin, the refractive index of light does not change significantly. Therefore, unlike an optical system in which the first lens is designed to be thickest in a horizontal angle of view ranging from 30 degrees to 50 degrees, the optical system of the invention can provide a thin first lens made of an aspherical glass material. Here, the thickness of the lens may include a center thickness and an edge thickness.

The refractive index n1 of the first lens **601** can satisfy the condition of n1>1.8 or n1>1.82. When the refractive index n1 of the first lens **601** satisfies the condition, the radius of curvature of the first and second lenses **601** and **602** can be increased, and lens manufacturing can be facilitated. When the refractive index n1 of the first lens **601** is smaller than the condition, the lens surface must be formed sharply concave or convex in order to increase the refractive power of the first and second lenses **601** and **602.** In this case, lens manufacturing is not easy, the lens defect rate increases, and it can cause a decrease in yield.

The second lens **602** may be disposed second from the object side. The second lens **602** may be disposed sixth from the sensor side. The second lens **602** may be disposed between the first lens **601** and the third lens **603.** The second lens **602** may have a positive (+) refractive power on an optical axis **OA.** The second lens **602** may include a plastic or glass material. For example, the second lens **602** may be provided with a glass material.

With respect to an optical axis **OA,** the object side third surface **S3** of the second lens **602** may be convex, and the sensor side fourth surface **S4** may be convex. The second lens **602** may have a shape in which both surfaces are convex. The second lens **602** is made of glass and may be spherical. At least one or both of the third surface **S3** and the fourth surface **S4** may be spherical.

Since both surfaces of the second lens **602** are provided convexly, the TTL and the number of lenses of the optical system can be minimized, and light can be effectively refracted. In addition, when the radius of curvature of the third surface **S3** of the second lens **602** is L2R1, and the radius of curvature of the fourth surface **S4** is L2R2, the condition of L2R1 > | L2R2 | can be satisfied. Through this, light can be efficiently refracted by the third surface **S3,** so that the effective diameters of the third to seventh lenses **603** to **607** can be guided so as not to be increased, and the TTL can be reduced. When L2R1 < | L2R2 |, aberrations may occur a lot on the object side surface of the second lens **602,** the refractive efficiency of light may be decreased at the sensor side surface, the effective diameters of the rear lenses may be increased, and the TTL may also become larger.

The aperture **Stop** can be disposed around the sensor side fourth surface **S4** of the second lens **602.** The aperture can reduce the TTL within the field of view range, and the optical system can be miniaturized. Accordingly, the yield by weight of the optical system can be prevented from decreasing, and the production efficiency can be improved. In addition, the optical system can be miniaturized by reducing the TTL within the horizontal field of view (FOV_H) of 25 degrees to 36 degrees.

The third lens **603** may be disposed third from the object side. The third lens **603** may be disposed fifth from the sensor side. The third lens **603** may be disposed between the second lens **602** and the fourth lens **604.** The third lens **603** may have a positive (+) refractive power on an optical axis **OA.** The third lens **603** may include a plastic or glass material. For example, the third lens **603** may be provided with a glass material.

With respect to an optical axis, the object side fifth surface **S5** of the third lens **603** may be convex, and the sensor side sixth surface **S6** may be convex. The third lens **603** may have a shape in which both surfaces are convex on an optical axis **OA.** The third lens **603** is made of glass and may be spherical. At least one or both of the fifth surface **S5** and the sixth surface **S6** may be spherical. At least one or both of the fifth surface **S5** and the sixth surface **S6** may be provided without a critical point from an optical axis **OA** to the end of the effective area.

The fourth lens **604** may be disposed fourth from the object side. The fourth lens **604** may be disposed fourth from the sensor side. The fourth lens **604** may be disposed between the third lens **603** and the fifth lens **605.** The fourth lens **604** may have a positive (+) or negative (-) refractive power on an optical axis **OA.** The fourth lens **604** may have a positive (+) refractive power. The fourth lens **604** may have a positive (+) refractive power different from the refractive power of the fifth lens **605.** The fourth lens **604** may include a plastic or glass material. For example, the fourth lens **604** may be provided with a glass material. The fourth lens **604** may be provided with the same material as the fifth lens **605.**

With respect to an optical axis, the object side seventh surface **S7** of the fourth lens **604** may be convex, and the sensor side eighth surface **S8** may be concave. The fourth lens **604** may have a maniscus shape toward object side. The fourth lens **604** may be made of glass and may have a spherical surface. At least one or both of the seventh surface **S7** and the eighth surface **S8** may be spherical. The seventh surface **S7** and the eighth surface **S8** may be provided without a critical point from an optical axis **OA** to the end of the effective area.

The fifth lens **605** may be disposed fifth from the object side. The fifth lens **605** may be disposed third from the sensor side. The fifth lens **605** may be disposed between the fourth lens **604** and the sixth lens **606.** The fifth lens **605** may have a positive (+) or negative (-) refractive power on an optical axis **OA.** The fifth lens **605** may have a negative (-) refractive power. The fifth lens **605** may have a negative (-) refractive power different from the refractive power of the fourth lens **604.** The fifth lens **605** may include a plastic or glass material. For example, the fifth lens **605** may be provided with a glass material. The fifth lens **605** may be provided with the same material as the fourth lens **604.**

With respect to an optical axis, the ninth surface **S9** on the object side of the fifth lens **605** may be concave, and the tenth surface **S10** on the sensor side may be concave. The fifth lens **605** may have a shape in which both surfaces are concave. The fifth lens **605** is made of glass and may have a spherical surface. At least one surface of the ninth surface **S9** and the tenth surface **S10** may be a spherical surface. At least one or both of the ninth and tenth surfaces **S9** and **S10** of the fifth lens **605** may be provided without a critical point from an optical axis **OA** to the end of the effective area.

The fourth lens **604** and the fifth lens **605** can be cemented. The bonding surface between the fourth lens **604** and the fifth lens **605** can be defined as the eighth surface **S8.** The eighth surface **S8** can be the same surface as the ninth surface **S9** of the fifth lens **605.** The object side surface of the cemented lens **545** can be convex, and the sensor side surface can be concave. The gap between the fourth and fifth lenses **604** and **605** can be less than 0.01 mm and can be attached with an adhesive. The gap between the fourth and fifth lenses **604** and **605** can be less than 0.01 mm from an optical axis **OA** to the end of the effective area. The fourth and fifth lenses **604** and **605** can have opposite refractive powers. The composite refractive power of the fourth and fifth lenses **604** and **605** can have a negative (-) refractive power.

The value of the radius of curvature of the cemented surface **S8** of the cemented lens **645** may be less than 50. For example, the value of the radius of curvature of the cemented surface **S8** of the cemented lens **645** may be less than 40. The cemented surface **S8** of the cemented lens **645** may be formed in a gentle shape. Through this, the cementing process of the fourth lens **604** and the fifth lens **605** forming the cemented lens **645** is advantageous, and the cementing maintenance strength can be increased.

The product of the refractive power of the object side fourth lens **604** of the cemented lens **645** and the refractive power of the sensor side fifth lens **605** may be less than 0. The product of the focal length of the object side fourth lens **605** of the cemented lens **645** and the focal length of the sensor side fifth lens **605** may be less than 0. Accordingly, the aberration characteristics of the optical system can be improved. When the refractive powers of the two lenses of the cemented lens **645** are the same, there is a limit to the improvement of aberration.

The composite refractive power of the cemented lens **645** has a negative (-) refractive power, and the third lens **603** on the object side and the sixth lens **606** on the sensor side with respect to the cemented lens **645** can have a positive (+) refractive power. Accordingly, the fourth lens **604,** the cemented lens **545,** and the fifth lens **605** can refract a portion of the incident light in a direction of an optical axis.

The effective diameter of the fourth lens **604** may be larger than the diagonal length of the image sensor **700.** The effective diameter of the fourth lens **604** is an average of the effective diameters of the seventh surface **S7** and the eighth surface **S8,** and may be larger than the diagonal length of the image sensor **700.** The effective diameter of the fifth lens **605** may be smaller than the effective diameter of the fourth lens **604** and larger than the diagonal length of the image sensor **700.** The effective diameter of the seventh surface **S7** of the fourth lens **604** may be larger than the diagonal length of the image sensor **700,** and the effective diameter of the tenth surface **S10** of the fifth lens **605** may be smaller than the diagonal length of the image sensor **700.**

When the fifth lens **605** is a spherical lens and the seventh lens **607** is an aspherical lens, the difference in effective diameter between the object side ninth surface **S9** and the sensor side tenth surface **S10** of the fifth lens **605** can be provided to be the largest. For example, when the effective diameters of the ninth surface **S9** and the sensor side tenth surface **S10** of the fifth lens **605** are CA51 and CA52, the condition of CA51 > CA52 is satisfied, and the difference between CA51 and CA52 can be the largest among the differences in effective diameters between the object side surfaces and the sensor side surfaces of each lens. Accordingly, the difference in effective diameters between the object side surface and the sensor side surface of the fifth lens **605** can be set to be maximized, so as to effectively guide light traveling through an aspherical lens having a relatively small effective diameter. Accordingly, a slimmer optical system can be provided. The effective diameter of the fifth lens **605** can satisfy the condition of $1.1 < CA51/CA52 < 1.5$.

The cemented lens **645** is cemented with glass lenses having different refractive indices, has a spherical refractive surface, and at least one lens disposed closer to the sensor than the cemented lens **645** is an aspherical lens, so that spherical aberration can be compensated for. In addition, at least one of the lenses disposed closer to the sensor than the cemented lens **645** is an aspherical lens and is disposed to have a small effective diameter, so that light traveling to the image sensor **700** through the aspherical lens can be effectively guided. Since the cemented lens **645** is disposed between aspherical lenses and between spherical lenses, chromatic aberration correction can be more efficient. By positioning the cemented lens **645** within the optical system, TTL can be reduced.

The sixth lens **606** may be disposed as the sixth lens from the object side. The sixth lens **606** may be disposed as the second lens from the sensor side. The sixth lens **606** may be disposed between the fifth lens **605** and the seventh lens **607.** The sixth lens **606** may have a positive (+) or negative (-) refractive power on an optical axis **OA.** The sixth lens **606** may have a positive (+) refractive power. The sixth lens **606** may include a plastic or glass material. For example, the sixth lens **606** may be provided with a plastic material.

With respect to an optical axis, the sixth lens **606** may have a convex shape on the object side eleventh surface **S11** and a concave shape on the sensor side 12th surface **S12.** The sixth lens **606** may have a meniscus shape convex on object side. At least one or both of the eleventh surface **S11** and the 12th surface **S12** may be aspherical. Aspherical coefficients of the eleventh and 12th surfaces **S11** and **S12** may be provided as L1 and L2 of L6 of FIG. 67.

The eleventh surface **S11** of the sixth lens **606** can be provided without a critical point from an optical axis **OA** to the end of the effective area. The twelfth surface **S12** can be provided without at least one critical point from an optical axis **OA** to the end of the effective area.

The seventh lens **607** may be disposed closest to the sensor side. The seventh lens **607** may be disposed farthest from the object side. The seventh lens **607** may have a positive (+) or negative (-) refractive power on the optical axis **OA.** The seventh lens **607** may have a negative (-) refractive power. The seventh lens **607** may include a plastic or glass material. For example, the seventh lens **607** may be made of a plastic material.

On an optical axis, the object side thirteenth surface **S13** of the seventh lens **607** may be convex, and the sensor side fourteenth surface **S14** may be concave. The seventh lens **607** may have a meniscus shape that is convex toward the object side. At least one of the thirteenth surface **S13** and the fourteenth surface **S14** may be an aspherical surface. For example, both the thirteenth surface **S13** and the fourteenth surface **S14** may be aspherical. Aspherical coefficients of the thirteenth and fourteenth surfaces **S13** and **S14** may be provided as S1 and S2 of L7 in FIG. 67.

The thirteenth surface **S13** of the seventh lens **607** can have a critical point from an optical axis **OA** to the end of the effective area. When the thirteenth surface **S13** has a critical point, it can be located in a range of 40% to 50%, preferably 40% to 43%, of the effective radius r71 from an optical axis **OA.** The critical point of the thirteenth surface **S13** can be located in a range of 1.5 mm to 2.0 mm, preferably 1.7 mm to 1.8 mm from an optical axis **OA.** The thirteenth surface **S13** having such a critical point can refract incident light to the center and edge portions, and improve aberration.

The fourteenth surface **S14** of the seventh lens **407** may have a critical point from an optical axis **OA** to the end of the effective area. When the fourteenth surface **S14** has a critical point, it may be located in a range of 60% to 70%, preferably in a range of 68% to 70%, of the effective radius r72 from an optical axis **OA.** The critical point of the fourteenth surface **S14** may be located in a range of 3 mm to 3.5 mm, preferably in a range of 3.2 mm to 3.3 mm from an optical axis **OA.**

The critical points of the thirteenth surface **S13** and the fourteenth surface **S14** are points where the sign of the slope value with respect to an optical axis **OA** and a direction perpendicular to the optical axis **OA** changes from positive (+) to negative (-) or from negative (-) to positive (+), and may mean a point where the slope value is 0. In addition, the critical points of the thirteenth surface **S13** and the fourteenth surface **S14** may be points where the slope value of the tangent passing through the lens surface increases and then decreases, or points where it decreases and then increases.

The seventh lens **607** may be a plastic lens that is closest to the image sensor **700.** In addition, by arranging two or more plastic lenses adjacent to the image sensor **700,** aberrations such as spherical aberration and chromatic aberration can be improved by the lens surface having an aspherical surface, and the influence on the resolution can be controlled. In addition, by arranging the plastic lens as the lens adjacent to the image sensor **700,** it can be insensitive to the assembly tolerance compared to a glass lens. In other words, being insensitive to the assembly tolerance means that even if the assembly is performed with a slight difference compared to the design during assembly, the optical performance may not be significantly affected. In addition, by providing the two lenses **606** and **607** adjacent to the image sensor **700** with plastic, the optical performance can be improved by the lens surface having an aspherical surface, and for example, aberration characteristics can be improved and degradation of resolution can be prevented.

The sixth lens **606** and the seventh lens **607** are disposed to be spaced apart from each other, but may include the characteristics of a cemented lens. The sixth lens **606** and the seventh lens **607** may have opposite refractive powers. The product of the refractive power of the sixth lens **606** and the refractive power of the seventh lens **607** may be less than 0. The product of the focal length of the sixth lens **606** and the focal length of the seventh lens **607** may be less than 0. Accordingly, the aberration characteristics of the optical system may be improved. If the signs of the refractive powers of two lenses having the characteristics of a cemented lens are the same, there is a limit to the improvement of aberrations.

The sixth lens **606** and the seventh lens **607** may be made of the same material. The sixth lens **606** and the seventh lens **607** may be made of a plastic material. The sixth lens **606** and the seventh lens **607** may be made of the same material as the cemented lens **645.**

[Table 16]

| Lens | Surface | Radius | Thickness | nd | vd | Semi Aperture | Focal length |
|---|---|---|---|---|---|---|---|
| 1 | S1 | -53.000 | 5.248 | 1.8297 | 24.0394 | 5.777 | -69.441 |
| | S2 | -691.337 | 0.456 | | | 5.326 | |
| 2 | S3 | 507.725 | 1.300 | 1.8396 | 43.1284 | 5.213 | 41.6884 |
| | S4 | -51.563 | 0.100 | | | 5.505 | |

(continued)

| Lens | Surface | Radius | Thickness | nd | vd | Semi Aperture | Focal length |
|---|---|---|---|---|---|---|---|
| | Stop | 0.000 | 2.923 | | | 4.967 | |
| 3 | S5 | 24.716 | 1.783 | 1.5521 | 75.4952 | 5.841 | 35.5196 |
| | S6 | -92.461 | 0.200 | | | 5.892 | |
| 4 | S7 | 11.374 | 3.757 | 1.8396 | 43.1284 | 6.005 | 22.4561 |
| | S8 | -34.002 | 0.000 | | | 5.620 | |
| 5 | S9 | -34.002 | 2.139 | 1.7231 | 29.6196 | 5.620 | -9.9519 |
| | S10 | 6.929 | 1.609 | | | 4.455 | |
| 6 | S11 | 14.420 | 2.474 | 1.5373 | 55.7098 | 4.499 | 27.1363 |
| | S12 | 1230.902 | 2.367 | | | 4.638 | |
| 7 | S13 | 29.563 | 2.146 | 1.6682 | 20.4008 | 4.128 | -31.167 |
| | S14 | 11.863 | 0.599 | | | 4.608 | |
| Filter | S15 | 0.000 | 0.400 | | | 4.648 | |
| | S16 | 0.000 | 1.060 | | | 4.665 | |
| Cover | S17 | 0.000 | 0.300 | | | 4.736 | |
| | S18 | 0.000 | 0.040 | | | 4.749 | |
| Image | | 0.000 | 0.000 | | | 4.633 | |

Table 16 shows the surface number **Surface,** radius of curvature **Radius,** center thickness of each lens or distance between lens surfaces **Thickness,** refractive index **nd,** Abbe number **vd,** effective radius **Semi Aperture,** and focal length **Focal length** of a lens according to a fifth embodiment of the present invention. At this time, the unit of the radius of curvature and thickness or distance may be mm.

[Table 17]

| Category | Value | Category | Value |
|---|---|---|---|
| F | 14.7925 | ET1 | 5.6035 |
| F2_7 | 12.1343 | ET2 | 0.9242 |
| F3_7 | 20.0340 | ET3 | 0.9082 |
| F4_7 | 545.7320 | ET4 | 1.6199 |
| F5_7 | -9.3818 | ET5 | 4.1814 |
| F6_7 | 82.2510 | ET6 | 1.4292 |
| F4_5 | -512.4640 | ET7 | 2.7616 |
| ∑Index | 11.9895 | F-number | 1.6040 |
| ∑Abbe | 291.5216 | FOV_D | 34.6068 |
| ∑CT | 18.84635 | EPD | 9.6071 |
| ∑CG | 7.65486 | BFL | 2.3988 |
| CA_max | 11.734 | TD | 26.5012 |
| CA_min | 8.736 | ImgH | 4.6300 |
| CA_Aver | 10.390 | SD | 19.3971 |
| CT_max | 5.2485 | TTL | 28.9000 |
| CT_min | 1.3000 | GLca_Aver | 10.971 |
| CT_Aver | 2.69234 | PLca_Aver | 8.936 |

(continued)

| Category | Value | Category | Value |
|---|---|---|---|
| Image sensor | 3840*2160 | | |

Table 17 shows categories of Mathematical expressions described above in the optical system **1500** of the embodiment, including the total top length (TTL) (mm), back focal length (BFL), effective focal length **F** (mm), ImgH (mm), effective diameter **CA** (mm), thickness (mm), TTL (mm), TD (mm), which is an optical axis distance from the first surface **S1** to the fourteenth surface **S14,** composite focal lengths of the first to seventh lenses F2_7, F3_7, F4_7, F5_7, F6_7, and F4_5, (mm), sum of refractive indices, sum of Abbe numbers, sum of thicknesses (mm), sum of gaps between adjacent lenses, effective diameter characteristics, sum of refractive indices of glass lenses, sum of refractive indices of plastic materials, angle of view FOV_H (degree), edge thickness ET, F number, and the like of the optical system **1500.**

As shown in FIGS. 66 and 67, the center thickness of the first to seventh lenses **601** to **607** is represented by CT1 to CT7, the edge thickness at the end of the effective area of each lens is represented by ET1 to ET7, the center gap between two adjacent lenses is represented by CG1 to CG6, and the edge gap between the edges of each lens is represented by EG1 to EG6. Here, the center thickness of the cemented lens **645** is CT45, and the edge thickness is represented by ET45.

Referring to FIG. 67, back focal length (BFL) is an optical axis distance from the image sensor **700** to the center of the last lens. In FIG. 66, TTL is an optical axis distance from the center of the first surface **S1** of the first lens **501** to an upper surface of the image sensor **700.**

As shown in FIG. 68, among the lenses of the lens unit **600** in a fourth embodiment, the lens surfaces of the first, sixth, and seventh lenses **601, 606,** and **607** may include aspherical surfaces having a 30th-order aspherical surface coefficient. For example, the first, sixth, and seventh lenses **601, 606,** and **607** may include lens surfaces having a 30th-order aspherical surface coefficient. As described above, since the aspherical surface having the 30th-order aspherical surface coefficient (a value other than "0") can significantly change the aspherical shape of the edge portion, the optical performance of the edge portion of the field of view (FOV) can be well corrected.

As shown in FIG. 69, the thicknesses **T1** to **T7** of the first to seventh lenses **601, 602, 603, 604, 605, 606,** and **607** and the gaps **G1** to **G6** between adjacent two lenses can be set. As shown in FIG. 68, the thicknesses **T1** to **T7** of each lens in a Y-axis direction can be expressed at gaps of 0.1 mm or 0.2 mm or more, and the gaps **G1** to **G6** between each lens can be expressed at gaps of 0.1 mm or 0.2 mm or more.

When compared in terms of the absolute values of the curvature radii of each lens, the curvature radii of the sixth surface **S6** of the third lens **603** on an optical axis **OA** may be the largest among the lenses, and the curvature radii of the tenth surface **S10** of the fifth lens **605** may be the smallest among the lenses. The difference between the maximum curvature radii and the minimum curvature radii may be 200 times or more, for example, 200 to 210 times. The curvature radii of the sensor side surface of the glass material lens disposed on the object side of the plastic material lens may be the smallest among the lenses. The curvature radii of the sensor side surface of the fifth lens **605** disposed on the object side of the sixth lens **606** may be the smallest among the lenses.

Since the effective diameter of a plastic lens is smaller than that of a glass lens, the lens disposed on the object side of the plastic lens can have strong refractive power in order to refract light through the plastic lens. In addition, the radius of curvature of the lens surface can be small in order to strengthen the refractive power.

Among the lenses, the number of surfaces having an absolute value of curvature radii of 10 mm or less among the object side surface and the sensor side surface may be two or less. The number of surfaces having an absolute value of curvature radii of 10 mm or less among the sensor side surface (the tenth surface) **S10** of the fifth lens **405** may be three or more and five or less. The number of surfaces having an absolute value of curvature radii of 10 mm or more and 20 mm or less among the object side surface and the sensor side surface of the lenses may be three or more and five or less. The number of surfaces having an absolute value of curvature radii of the object side surface (the seventh surface) **S7** of the fourth lens **404,** the object side surface (the eleventh surface) **S11** of the sixth lens **406,** and the sensor side surface (the fourteenth surface) **S14** of the seventh lens **407** may be 10 mm or more and 20 mm or less. Among the lenses, there may be at least one and no more than four surfaces having curvature radii of 60 mm or more among the object side surface and the sensor side surface. The absolute values of the curvature radii of the sensor side surface (the first surface) **S1** of the first lens **601,** the object side surface (the third surface) **S3** of the second lens **602,** and the sensor side surface (the sixth surface) **S6** of the third lens **603** may be 60 mm or more.

In temperature compensation designs that require resolution to be maintained even when temperatures change from -40 to 100 degrees, a larger radius of curvature can be advantageous. In designs for temperature compensation, aluminum barrels can be used for lens barrels. Aluminum barrels have large manufacturing tolerances, so when the lenses are assembled, the optical axes of each lens are greatly misaligned. Therefore, by designing a large radius of curvature, the sensitivity to manufacturing tolerances can be reduced.

Referring to FIG. 71, the slope angle of the lens surface can be expressed as a value in radians, which is the slope of the lens surface at a point on the lens surface with a 0.1 gap based on a Y-axis perpendicular to the optical axis, converted to a tangent value. Regarding the slope angle of the lens surface, the slope angle of the object side surface (the first surface) **S1** of the first lens **501** may be the smallest, excluding the cemented lens among the first to seventh lenses. The number of lenses having a value smaller than the absolute value of the slope angle of the lens surface of the object side surface of the aspherical glass material among the object side surfaces and the sensor side surfaces of the first to seventh lenses may be five or less. Preferably, the number of lenses smaller than the absolute value of the slope angle of the object side surface (the first surface) **S1** of the first lens **501** may be five. The absolute value of the inclination angle of the object side surface (the third surface) **S3** and the sensor side surface (the fourth surface) **S4** of the second lens **502,** the sensor side surface (the sixth surface) **S6** of the third lens **503,** the sensor side surface (the eighth surface) **S8** of the fourth lens **504,** and the object side surface (the ninth surface) **S9** of the fifth lens **505** may be smaller than the absolute value of the inclination angle of the object side surface (the first surface) **S1** of the first lens **501.**

The shape of the first lens **601** having an aspherical shape can be designed to be gentle. If the aspherical surface is located at the frontmost in the optical system **1500,** the performance of the lens is improved, but the assemblability may be reduced. In order to improve the assemblability, the shape of the first lens **601** should be designed to be gentle. In order to minimize the influence on the lens disposed on the sensor side when assembling the lens in the barrel, it can be designed to have almost no curvature.

With respect to an optical axis, when describing the center thickness of the lenses, the center thickness **CT3** of the first lens **601** is the largest among the lenses, and the center thickness **CT2** of the second lens **602** is the smallest among the lenses. The difference between the maximum center thickness and the minimum center thickness among the lenses may be in the range of 3.5 mm or more and 4.0 mm or less.

When explaining the center gap **CG** between the lenses, the center gap **CG2** between the second lens **602** and the third lens **603** may be the maximum, and the center gap **CG3** between the third and fourth lenses **603** and **604** may be the minimum. Here, the minimum center gap excludes the bonding surface of the cemented lens **645.** The difference between the maximum center gap and the minimum center gap among the spaced lens gaps may be 2.5 mm or more, for example, in the range of 2.5 mm to 3 mm.

When explaining the effective diameter, the lens having the maximum effective diameter may be disposed between the first lens **601** closest to the object and the seventh lens **607** closest to the image sensor **700.** The lens having the maximum effective diameter may be a glass lens. The lens having the maximum effective diameter may be disposed between the first lens **601** and the cemented lens **645.** The lens having the maximum effective diameter may be the third lens **603.** Here, the effective diameter is the average of the effective diameter of the object side surface and the effective diameter of the sensor side surface of each lens. The lens surface having the maximum effective diameter may be the seventh surface **S7** of the fourth lens **604.**

The lens having the minimum effective diameter can be either one of the cemented lenses or one of the plastic material lenses, for example, the fifth lens **605** or the seventh lens **607** adjacent to the image sensor **700.** For example, the effective diameter of the seventh lens **607** can be the minimum within the lens unit **600.** The lens surface having the minimum effective diameter can be the thirteenth surface **S13** of the seventh lens **607.**

The effective diameters of each of the first to fifth lenses **601** to **605** adjacent to the object side may be larger than the effective diameters of the sixth and seventh lenses **606** and **607** adjacent to the sensor side. The effective diameters of the first to fifth lenses **601** to **605** may be larger than the diagonal length of the image sensor **700.** The average effective diameters of the sixth and seventh lenses **606** and **607** may be smaller than the diagonal length of the image sensor **700.** Accordingly, light incident through a plurality of lenses aligned along an optical axis may be guided to the image sensor **700.**

When explaining the refractive index, the refractive index of any one or both among the second lens **602** and the fourth lens **604** may have the highest refractive index among the lenses. and may be greater than 1.8, for example, greater than 1.82. Either or both of the third lens **603** and the sixth lens **606** may have the smallest refractive index among the lenses. For example, the refractive index of the sixth lens **606** may be the smallest among the lenses and may be less than 1.6, for example, less than 1.55. The difference between the maximum refractive index and the minimum refractive index may be 0.2 or more. By providing a high refractive index lens made of glass closest to an object, and providing a lens adjacent to the glass lens and a lens adjacent to the image sensor 700 with a low refractive index lens made of plastic, the incidence efficiency can be increased, and the refractive power between the lenses made of glass and plastic can be adjusted to guide them to the image sensor **700.**

When cmparing the Abbe numbers, the Abbe number of the third lens **503** is the largest among the lenses and may be 70 or more. The Abbe number of the seventh lens **607** is the smallest among the lenses and may be 25 or less. The difference between the maximum refractive index and the minimum Abbe number may be 50 or more. By making the Abbe number of the third lens **603** adjacent to the cemented lens **645** the largest and providing the Abbe number of the seventh lens **607** with a low refractive index adjacent to the image sensor **700** the smallest, the color dispersion of light traveling between the glass lenses can be controlled and the color dispersion between the glass and plastic lenses can be increased to guide it to the image sensor **700.**

The focal lengths **F1, F5,** and **F7** of the first, fifth, and seventh lenses **601, 605,** and **607** may have a negative (-) signs. The first, fifth, and seventh lenses **601, 605,** and **607** may have a negative (-) refractive power. The focal lengths **F2, F3, F4,** and **F6** of the second, third, fourth, and sixth lenses **602, 603, 604,** and **606** may have a positive (+) signs. The second, third, fourth, and sixth lenses **602, 603, 604,** and **606** may have a positive (+) refractive power. The second, third, and fourth lenses **602, 603,** and **604** having positive (+) refractive power may be disposed on the sensor side of the first lens **601** having negative (-) refractive power. Through this, light incident on the object side can move away from an optical axis direction and then gather again along an optical axis direction, thereby forming a stable optical path.

In addition, the sixth lens **606** and the seventh lens **607,** which are adjacently being disposed lenses, can satisfy the following conditions.

The refractive index of the lens with positive refractive power < the refractive index of the lens with negative refractive power    Condition 1:

Dispersion of a lens with positive refractive power > Dispersion of a lens with negative refractive power    Condition 2:

Here, among the plastic lenses, the sixth lens **606** has a positive refractive power and the seventh lens **607** has a negative refractive power, so that according to Conditions 1 and 2, the refractive index of the sixth lens **606** is smaller than that of the seventh lens **607,** and the dispersion value of the sixth lens **606** is larger than that of the seventh lens **607.** Chromatic aberration occurring in the plastic lens can be corrected by the plastic lens. In addition, since the sixth lens **606** and the seventh lens **607,** which are plastic lenses disposed in succession, satisfy the refractive index difference of 0.1 or more and 0.15 or less and the Abbe number difference of 20 or more and 60 or less, the chromatic aberration occurring in the plastic lens can be compensated for by the plastic lens.

The optical system has chromatic aberration, and chromatic aberration is corrected by using cemented lenses or two lenses disposed in series. As the temperature changes from low to high, the lens repeatedly contracts and expands. Since the lens characteristics of lenses of the same material change the same amount according to the temperature change, it is effective to correct chromatic aberration between lenses of the same material even if the temperature changes.

Therefore, in a fifth embodiment of the present invention, the chromatic aberration occurring in the plastic lens is corrected by using the cemented lens **645,** the sixth lens **606,** and the seventh lens **607.**

The fourth lens **604** and the fifth lens **605,** which are cemented lenses, can compensate for chromatic aberration occurring in a glass lens by satisfying the refractive index difference of 0.1 or more and 0.15 or less and the Abbe number difference of 20 or more and 60 or less. The refractive index difference is rounded off to the third decimal place, and the Abbe number difference is rounded off to the first decimal place to compare the values.

When comparing the focal lengths in absolute values, the focal length of the first lens **601** is the largest among the lenses, and may be 50 or more and 70 or less. Among the lenses, the first lens **601** made of glass may have the largest focal length and the smallest refractive power. The focal length of the fifth lens **605** is the smallest among the lenses, and the absolute value of the focal length of the fifth lens **605** may be 5 or more and 10 or less. Among the lenses, the fifth lens **605** made of glass may have the smallest focal length and the largest refractive power. Since lenses made of a plastic material having small refractive power are disposed on the sensor side of the fifth lens **605,** the refractive power of the fifth lens **605** may be increased.

Among the lenses other than the cemented lens **645,** the lens having the minimum focal length may be the sixth lens **606.** The difference between the maximum focal length and the minimum focal length may be 50 or more or 40 or more. Accordingly, the optical system may have improved MTF characteristics, aberration control characteristics, resolution characteristics, and the like in the set angle of view range, and may have good optical performance in the edge portion of the angle of view.

The thickness **T1** of the first lens **601** may have a difference between the maximum thickness and the minimum thickness of 1 time or more, for example, in the range of 1 to 1.2 times, and the center thickness **CT1** may be minimum while the edge thickness **ET1** may be maximum. The thickness **T2** of the second lens **602** may have a maximum thickness in the range of 1.2 to 1.45 times the minimum thickness. The second lens **602** may have a minimum center thickness **CT2** and a maximum edge thickness **ET2.** The thickness **T3** of the third lens **603** may be maximum at the center and minimum at the edge, and the maximum thickness may be in the range of 1.7 to 2 times the minimum thickness. The thickness **T4** of the fourth lens **604** may be maximum at the center and minimum at the edge, and the maximum thickness may be in the range of 2 to 2.5 times the minimum thickness. The thickness **T5** of the fifth lens **605** may be minimum at the center and maximum at the edge, and the maximum thickness may be in the range of 1.5 to 2 times the minimum thickness. The thickness **T6** of the sixth lens **606** may be maximum at the center and minimum at the edge, and the maximum thickness may be in the range of 1.5 to 2 times the minimum thickness. The thickness **T7** of the seventh lens **607** may be minimum at the center and maximum at the edge, and the maximum thickness may be in the range of 1.2 to 1.4 times the minimum thickness.

The center thickness **CT45** of the cemented lens **645** may be greater than its edge thickness **ET45.** The center thickness **CT45** of the cemented lens **645** is the distance from the center of the seventh surface **S7** on the object side of the fourth lens **604** to the center of the tenth surface **S10** of the fifth lens **605.** The edge thickness **ET45** is the distance from the end of the effective area of the seventh surface **S7** to the tenth surface **S10** along an optical axis direction. The maximum thickness of the cemented lens **545** may be at the center portion, and the minimum thickness may be at the edge portion, with the maximum thickness potentially ranging from 1 to 1.2 times the minimum thickness.

Among the gaps **G1** to **G6** between the lenses, the first gap **G1** between the first and second lenses **601** and **602** may have a minimum in the edge portion and a maximum in the center portion. The second gap **G2** between the second and third lenses **602** and **603** may have a maximum in the edge portion and a minimum in the center portion. The third gap **G3** between the third and fourth lenses **603** and **604** may have a maximum in the edge portion and a minimum in the center portion. The fifth gap **G5** between the fifth and sixth lenses **605** and **606** may have a maximum in the center portion and a minimum in the edge portion. The sixth gap **G6** between the sixth and seventh lenses **606** and **607** may have a maximum in the center portion and a minimum in the edge portion.

As shown in FIG. 72, in the optical system and camera module of FIG. 66, the chief ray angle (CRA) may be 10 degrees or more, for example, in a range of 10 to 35 degrees or 10 to 25 degrees, at 1-field, which is the end of the diagonal length of the image sensor. In addition, the difference in the angle of the chief ray from a low temperature (-40 degrees) to a high temperature (95 degrees) may be 1 degree or less. Accordingly, even if the temperature changes from a low temperature to a high temperature, the difference in the angle of the chief ray is not large and stable optical performance can be achieved.

FIGS. 73 to 75 are graphs showing diffraction modulation transfer function (MTF) at room temperature, low temperature, and high temperature in the optical system of FIG. 66, and are graphs showing modulation according to spatial frequency. As shown in FIGS. 60 to 62, in a fifth embodiment of the invention, the deviation of MTF at low temperature or high temperature based on room temperature may be less than 10%, that is, 7% or less.

FIGS. 76 to 78 are graphs showing aberration characteristics at room temperature, low temperature, and high temperature in the optical system of FIG. 66. In the aberration graphs of FIGS. 76 to 78, spherical aberration (longitudinal spherical aberration), astigmatic field curves, and distortion are measured from left to right. In FIGS. 76 to 78, an X-axis may represent a focal length (mm) and a degree of distortion (%), and a Y-axis may represent the height of the image. In addition, the graph for spherical aberration is a graph for light in wavelength bands of about 435 nm, about 486 nm, about 546 nm, about 587 nm, and about 656 nm, and the graphs for astigmatism and distortion are graphs for light in wavelength bands of about 546 nm. In the aberration diagrams of FIGS. 76 to 78, the closer each curve at room temperature, low temperature, and high temperature is to the Y-axis, the better the aberration correction function can be interpreted. It can be seen that the optical system **1500** according to a fifth embodiment has measurement values close to a Y-axis in almost all areas. That is, the optical system **1500** according to a fifth embodiment has improved resolution and can have good optical performance not only at the center of the field of view (FOV) but also at the edge portion. Here, the low temperature is -20 degrees or lower, for example, in the range of -20 to -40 degrees, the room temperature is in the range of 22 degrees ±5 degrees or in the range of 18 degrees to 27 degrees, and the high temperature can be in the range of 85 degrees or higher, for example, in the range of 85 degrees to 95 degrees. Accordingly, it can be seen that the decrease in the luminance ratio (modulation) from the low temperature to the high temperature of FIGS. 76 to 78 is less than 10%, for example, 5% or lower, or is hardly changed.

Table 18 compares changes in optical characteristics such as EFL, BFL, F number (F#), TTL, and field of view (FOV_H) at room temperature, low temperature, and high temperature in the optical system according to a sixth embodiment, and it can be seen that the change rate of the optical characteristics at low temperature is 5% or less, for example, 3% or less, with respect to room temperature, and it can be seen that the change rate of the optical characteristics at low temperature is 5% or less, for example, 3% or less, with respect to room temperature.

[Table 18]

| | Room temperature | Low temperature | High temperature | Low/Room temperature | High/Room temperature |
|---|---|---|---|---|---|
| EFL(F) | 14.7682 | 14.7165 | 14.8300 | 99.65% | 100.42% |
| BFL | 0.0324 | 0.0339 | 0.0310 | 504.63% | 95.68% |
| F# | 1.6040 | 1.6040 | 1.6040 | 100.00% | 100.00% |
| TTL | 28.8600 | 28.8209 | 28.9061 | 99.86% | 100.16% |
| FOV_H | 30.0001 | 30.5053 | 29.8767 | 100.35% | 99.59% |

Therefore, as shown in Table 18, it can be seen that the changes in optical characteristics according to the temperature change from low temperature to high temperature, for example, the change rate of effective focal length (EFL), TTL, BFL, F number, and field of view (FOV_H), are less than 10%, that is, less than 5%, for example, in the range of 0 to 5%. This makes it possible to design temperature compensation for plastic lenses even when using at least one or two or more plastic lenses, thereby preventing a decrease in the reliability of optical characteristics.

The optical system of a sixth embodiment disclosed above can effectively control aberration characteristics such as chromatic aberration and distortion aberration, and can have good optical performance not only at the center portion of the field of view (FOV) but also at the edge portion.

The optical systems **1000, 1100, 1200, 1300, 1400,** and **1500** according to the first to sixth embodiments disclosed above can satisfy at least one or two or more of Mathematical expressions described below. Accordingly, the optical systems **1000, 1100, 1200, 1300, 1400,** and **1500** according to the first to sixth embodiments can have improved optical characteristics. For example, when the optical systems **1000, 1100, 1200, 1300, 1400,** and **1500** satisfies at least one Mathematical expression, the optical systems **1000, 1100, 1200, 1300, 1400,** and **1500** can effectively control aberration characteristics such as chromatic aberration and distortion aberration, and can have good optical performance not only at the center portion of the field of view (FOV) but also at the edge portion. In addition, the optical systems **1000, 1100, 1200, 1300, 1400,** and **1500** can have improved resolution. In addition, the thickness of the lens on an optical axis **OA** and the gap of adjacent lenses on an optical axis **OA** described in the mathematical formulas can refer to the first to sixth embodiments disclosed above.

[Mathematical expression 1]

$$0.5 < CT1 / ET1 < 1.5$$

In Mathematical expression 1, CT1 is the center thickness of the first lenses **101, 201, 301, 401, 501,** and **601,** and ET1 is the edge thickness of the first lenses **101, 201, 301, 401, 501,** and **601.** Through this, a factor affecting the angle of view of the optical system can be set, and a factor affecting the effective focal length (EFL) can be set. Mathematical expression 1 can preferably satisfy $0.8 \leq CT1 / ET1 < 1$ in the first to second embodiments and the fifth to sixth embodiments. Mathematical expression 1 can preferably satisfy $1.3 < CT1 / ET1 < 1.5$ in the third to fourth embodiments.

[Mathematical expression 2]

$$0.1 < CT1/CA_L1S1 < 0.5$$

In Mathematical expression 2, CT1 is the center thickness of the first lenses **101, 201, 301, 401, 501,** and **601,** and CA_L1S1 is the effective diameter CA_L1S1 of the object side surface **S1** of the first lenses **101, 201, 301, 401, 501,** and **601.** When Mathematical expression 2 is satisfied, the strength and optical properties of the injection-molded lens made of glass can be prevented from being deteriorated. If it is lower than the range of Mathematical expression 2, the lens may be broken or injection molding may be difficult, and if it is larger than the range, TTL may increase and the weight of the optical system may become heavy. Mathematical expression 2 can preferably satisfy $0.1 < CT1/CA_L1S1 < 0.3$ in the first to fourth embodiments. Mathematical expression 2 can preferably satisfy $0.3 < CT1/CA_L1S1 < 0.5$ in the fifth and sixth embodiments.

[Mathematical expression 3-1]

$$f1 < 0$$

In Mathematical expression 3, f1 represents the sign of the focal length of the first lenses **101, 201, 501,** and **601.** In the first to second embodiments and the fifth to sixth embodiments, it can be set to have a short effective focal length compared to TTL in the optical system for the performance of the optical system. If Mathematical expression 3 is satisfied, light incident on the first lenses **101, 201, 501,** and **601** from the object side can be spread in a direction away from the optical axis. A structure that spreads and then gathers light may be stable for the entire optical system.

[Mathematical expression 3-2]

$$f1 > 0$$

In Mathematical expression 3, f1 represents the sign of the focal length of the first lenses **301** and **401.** In the third and fourth embodiments, it can be set to have a short effective focal length compared to TTL in the optical system for the performance of the optical system. If Mathematical expression 3 is satisfied, light incident on the object side to the first lenses **301** and **401** can be guided in a direction where it gathers on an optical axis. The entire optical system can have a stable structure that spreads light and then gathers it.

[Mathematical expression 4]

$$1.6 < n1 < 1.9$$

In Mathematical expression 4, n1 is the refractive index of the d-line of the first lenses **101, 201, 301, 401, 501,** and **601.** Mathematical expression 4 sets the refractive index of the first lenses **101, 201, 301, 401, 501,** and **601** to be high, thereby controlling factors affecting the reduction of the third-order aberration (Seidel aberration) of the optical system, and reducing aberrations that may occur when the TTL becomes somewhat longer. Mathematical expression 4 can preferably satisfy 1.8 < n1 < 1.85 in the first to second embodiments and the fifth to sixth embodiments. Mathematical expression 4 can preferably satisfy 1.65 < n1 < 1.7 in the third to fourth embodiments.

If designed to be lower than the lower limit of Mathematical expression 4, it may not be effective in reducing aberrations, and the power of the first lenses **101, 201, 301, 401, 501,** and **601** may be weakened, making it difficult to collect light efficiently, which may deteriorate the performance of the optical system. If designed to be higher than the upper limit of Mathematical expression 4, there is a disadvantage in that it becomes difficult to obtain materials. In addition, when the refractive index of the first lenses **101, 201, 301, 401, 501,** and **601** is designed to be lower than the lower limit of Mathematical expression 4, the radius of curvature of the first lenses **101, 201, 301, 401, 501,** and **601** and the second lenses **102** and **202** must be increased in order to increase the refractive power of the first lenses **101, 201, 301, 401, 501,** and **601** and the second lenses **102** and **202.** In this case, lens manufacturing becomes more difficult, the lens defect rate increases, and the yield may decrease.

[Mathematical expression 4-1]

$$1.7 \leq Aver(n1:n7) \leq 1.8$$

In Mathematical expression 4-1, Aver(n1:n7) is an average of the refractive index values at the d-line of the first to seventh lenses **101-107, 201-207, 301-307, 401-407, 501-507** and **601-607.** When the optical systems **1000, 1100, 1200, 1300, 1400,** and **1500** according to the first to sixth embodiments satisfies Mathematical expression 4-1, the optical systems **1000, 1100, 1200, 1300, 1400,** and **1500** can set the resolution and suppress the influence on TTL.

[Mathematical expression 5]

$$30 < FOV_H < 38$$

In Mathematical expression 5, FOV_H represents a horizontal angle of view and can set the range of the vehicle optical system. Mathematical expression 5 can preferably satisfy 32 < FOV_H < 36 or a range of 34 degrees ± 3 degrees in the first to sixth embodiments, and the sensor length in the horizontal direction at this time is based on 8.064 mm ± 0.5 mm. In addition, if Mathematical expression 5 is satisfied, when the temperature changes from room temperature to high temperature, the change rate of the effective focal length and the change rate of the angle of view can be set to 5% or less, for example, 0 to 5%. In addition, even if two or more, for example, three or more, plastic lenses are mixed and used in the optical systems **1000, 1100, 1200, 1300, 1400,** and **1500,** the deterioration of the optical characteristics can be prevented through temperature compensation of the plastic lenses.

[Mathematical expression 6]

$$0 < (CT7*CA7)/(CT1*CA1) < 0.7$$

In Mathematical expression 6, CT7 is the center thickness of the seventh lenses **107** and **207,** CA7 is the effective diameter of the seventh lenses **107** and **207,** CT1 is the center thickness of the first lenses **101, 201, 301, 401, 501,** and **601,** and CA1 is the effective diameter of the first lenses **101, 201, 301, 401, 501,** and **601.** The effective diameter is an average of the effective diameters of the object side surface and the sensor side surface of the first and seventh lenses. In the first to sixth embodiments, Mathematical expression 6 can preferably satisfy 0.3 < (CT7*CA7)/(CT1*CA1) < 0.6. In addition, in the first to sixth embodiments, the conditions of CT7 < CT1 and CA7 < CA1 can be satisfied. By setting the thickness and effective diameter of the aspherical first and seventh lenses, the optical system can improve spherical aberration. In addition, heat compensation is possible by the center thickness and effective diameter of the first glass lenses **101, 201, 301, 401, 501,** and **601** through Mathematical Expression 6, and the influence on optical characteristics can be reduced.

[Mathematical expression 7]

$$1 < L7S2_max_sag\ to\ Sensor < 3$$

In Mathematical expression 7, L7S2_max_sag to Sensor means a straight line distance from the maximum Sag value of the seventh lenses **107, 207, 307, 407, 507,** and **607** to the image sensor **700.** If this is satisfied, TTL can be reduced and conditions for manufacturing a camera module can be set. In addition, L7S2_max_sag to Sensor can set a space in which a filter **900** and a cover glass **800** located between the image sensor **700** and the seventh lenses **107, 207, 307, 407, 507,** and **607** can be disposed. If the range of Mathematical expression 7 is smaller than the lower limit, the space in which circuit structures such as filters and image sensors are disposed becomes restricted, and the process of assembling circuit structures such as filters and image sensors into the optical system may become difficult. When the range of Mathematical expression 7 exceeds the upper limit, the process of assembling circuit structures such as filters and image sensors into the optical system becomes easy, but the TTL becomes longer, making it difficult to miniaturize the optical system.

That is, Mathematical expression 7 can set the minimum distance between the image sensor **700** and the last lens, and preferably satisfies 2 < L7S2_max_sag to Sensor < BFL. In addition, if there is no point **P2** where the last lens is protruded further toward the image sensor than the center of the sensor side surface, the value of Mathematical expression 7 can be equal to back focal length (BFL). BFL is an optical axis distance from the image sensor **700** to the center of the sensor side surface of the last lens. In detail, if 2.0 < L7S2_max_sag to Sensor < 3.0 is satisfied, manufacturing convenience and TTL reduction are easier.

[Mathematical expression 8]

$$1 < CT1 / CT7 < 3$$

In Mathematical expression 8, CT1 is the center thickness of the first lenses **101, 201, 301, 401, 501,** and **601,** and CT7 is the center thickness of the seventh lenses **107** and **207.** When Mathematical expression 8 is satisfied, aberration characteristics can be improved and an effect on reduction of the optical system can be set. In the first and second embodiments, Mathematical expression 8 can preferably satisfy 1 < CT1 / CT7 < 1.5. In the third and fourth embodiments, Mathematical expression 8 can preferably satisfy 1.2 < CT1 / CT7 < 1.6. In the fifth and sixth embodiments, Mathematical expression 8 can preferably satisfy 2 < CT1 / CT7 < 2.5. Mathematical expression 8 can set an object side lens and a sensor side lens of the optical system to be made of glass and a plastic lens, respectively, and limit the difference in their center thicknesses. Accordingly, the chromatic aberration of the optical system can be improved, good optical performance can be achieved at the set angle of view, and total top length (TTL) can be controlled.

[Mathematical expression 9]

$$2 < CT45 / CT6 < 4$$

In Mathematical expression 9, CT45 is the center thickness of the fourth lenses **104, 204, 304, 404, 504,** and **604** and the fifth lenses **105, 205, 305, 405, 505,** and **605,** for example, the center thickness of the cemented lenses **145, 245, 345, 445, 545,** and **645,** and CT6 is the center thickness of the sixth lenses **106, 206, 306, 406, 506,** and **606.** When the optical system satisfies Mathematical expression 9, the thickness of the cemented lens and the adjacent sixth lenses **106, 206, 306, 406, 506,** and **606** can be set to improve the aberration characteristics. In the first to sixth embodiments, Mathematical expression 9 can preferably satisfy 2 < CT45 / CT6 < 3. CT45 may be greater than the center thickness CT1 to CT7 of each of the first to seventh lenses. Here, the condition of CT45 < ET45 may be satisfied.

[Mathematical expression 10]

$$0 < (ET45 - CT45) < 0.3$$

In Mathematical expression 10, CT45 is the center thickness of the fourth lenses **104, 204, 304, 404, 504,** and **604** and the fifth lenses **105, 205, 305, 405, 505,** and **605,** for example, the center thickness of the cemented lenses **145, 245, 345, 445, 545,** and **645,** and ET45 is an optical axis distance from the end of the effective area of the object side surface of the fourth lenses **104, 204, 304, 404, 504,** and **604** to the end of the effective area of the sensor side surface of the fifth lenses **105, 205, 305, 405, 505,** and **605.** When the optical system satisfies Mathematical expression 10, the aberration characteristics can be improved by setting the center thickness and edge thickness of the cemented lens. In the first to sixth embodiments, Mathematical expression 10 may preferably satisfy 0 < (ET45 - CT45) < 0.15. ET45 may be greater than the edge thickness (ET1 - ET7) of each of the first to seventh lenses.

[Mathematical expression 11]

$$0.5 < CA_L1S1 / CA_L4S1 < 2$$

In Mathematical expression 11, CA_L1S1 denotes an effective diameter of the first surface **S1** of the first lenses **101, 201, 301, 401, 501,** and **601,** and CA_L4S1 denotes an effective diameter of the seventh surface **S7** of the fourth lenses **104, 204, 304, 404, 504,** and **604.** The lens barrel in which the lens unit is disposed has at least one inner barrel within the lens barrel, and at least a portion of the plastic material lenses included in the lens unit can be disposed in the inner barrel. In the case of a plastic material lens, since the amount of expansion is large at high temperatures, a wider space is required within the lens barrel. Therefore, if Mathematical expression 11, which sets the relationship between the effective diameter of the first lenses **101, 201, 301, 401, 501,** and **601** made of glass and the effective diameter of the fourth lenses **104, 204, 304, 404, 504,** and **604** made of plastic, is satisfied, the deterioration of optical characteristics due to temperature change can be suppressed, and the optical systems **1000, 1100, 1200, 1300, 1400,** and **1500** can control the incident light and set factors affecting aberration. In the first and second embodiments, Mathematical expression 11 can preferably satisfy 1.2 < CA_L1S1 / CA_L4S1 < 1.5. In the third and fourth embodiments, Mathematical expression 11 can preferably satisfy 1.1 < CA_L1S1 / CA_L4S1 < 1.3. In the fifth and sixth embodiments, Mathematical expression 11 can preferably satisfy 0.5 < CA_L1S1 / CA_L4S1 < 1.

[Mathematical expression 12]

$$1 < CA_L7S2 / CA_L5S2 < 2$$

In Mathematical expression 12, CA_L5S2 denotes the effective diameter of the tenth surface **S10** of the fifth lenses **105, 205, 305, 405, 505,** and **605,** and CA_L7S2 denotes the effective diameter of the fourteenth surface **S14** of the seventh lenses **107, 207, 307, 407, 507,** and **607.** When Mathematical expression 12 is satisfied, the optical systems **1000, 1100, 1200, 1300, 1400,** and **1500** can control the incident light path, and set factors for performance changes according to CRA and temperature. In the first and second embodiments, preferably, Mathematical expression 12 can satisfy 1.1 < CA_L7S2 / CA_L5S2 < 1.5. In the third and fourth embodiments, preferably, Mathematical expression 12 can satisfy 1.1 < CA_L7S2 / CA_L5S2 < 1.3. In the fifth and sixth embodiments, preferably, Mathematical expression 12 can satisfy 1 < CA_L7S2 / CA_L5S2 < 1.5.

[Mathematical expression 13]

$$1 < CA_L1S2 / CA_L2S1 < 2$$

In Mathematical expression 12, CA_L5S2 denotes the effective diameter of the tenth surface **S10** of the fifth lenses **105, 205, 305, 405, 505,** and **605,** and CA_L7S2 denotes the effective diameter of the fourteenth surface **S14** of the seventh lenses **107, 207, 307, 407, 507,** and **607.** When Mathematical expression 12 is satisfied, the optical systems **1000, 1100, 1200, 1300, 1400,** and **1500** can control the incident light path, and set factors for performance changes according to CRA and temperature. In the first and second embodiments, preferably, Mathematical expression 12 can satisfy 1.1 < CA_L7S2 / CA_L5S2 < 1.5. In the third and fourth embodiments, preferably, Mathematical expression 12 can satisfy 1.1 < CA_L7S2 / CA_L5S2 < 1.3. In the fifth and sixth embodiments, preferably, Mathematical expression 12 can satisfy 1 < CA_L7S2 / CA_L5S2 < 1.5.

[Mathematical expression 14]

$$1 < CA_L4S1 / CA_L5S2 < 2$$

In Mathematical expression 14, CA_L4S1 denotes the effective diameter of the seventh surface **S7** of the fourth lenses **104, 204, 304, 404, 504,** and **604,** and CA_L5S2 denotes the effective diameter of the tenth surface **S10** of the fifth lenses **105, 205, 305, 405, 505,** and **605.** When the optical systems **1000, 1100, 1200, 1300, 1400,** and **1500** satisfies Mathematical expression 14, chromatic aberration can be improved, and the size between the object side surface and the sensor side surface can be set within the cemented lenses **145, 245, 345, 445, 545,** and **645.** Accordingly, by setting the size of the effective diameter of the cemented lens, which is disposed closer to the object side than the aspherical lens, light incident through the cemented lens can be effectively guided to the aspherical lens. In the first to fourth embodiments, Mathematical expression 14 can preferably satisfy 1.2 < CA_L4S1 / CA_L5S2 < 1.5. In the fifth to sixth embodiments, Mathematical expression 14 can preferably satisfy 1 < CA_L4S1 / CA_L5S2 < 1.5.

[Mathematical expression 15]

$$2 < L3R1/(CA_L3S1)/2 < 5$$

In Mathematical expression 15, L3R1 represents the radius of curvature of the object side surface of the third lenses **103, 203, 303, 403, 503,** and **603,** and CA_L3S1 represents the effective diameter of the object side fifth surface **S5** of the third lenses **103, 203, 303, 403, 503,** and **603.** When the third lenses **103, 203, 303, 403, 503,** and **603** having both convex surfaces satisfies Mathematical expression 15, the optical systems **1000, 1100, 1200, 1300, 1400,** and **1500** can improve chromatic aberration. If it is smaller than the lower limit value of Mathematical expression 15, the aberration caused by the fifth surface **S5** increases, and if it is larger than the upper limit value, the aberration caused by the fifth surface **S5** decreases, but since the radius of curvature of the sixth surface **S6** must be smaller, the aberration caused by the sixth surface **S6** increases, and there is a problem of affecting the aberration of the fourth to seventh lenses **104-107, 204-207, 304-307, 404-407, 504-507,** and **604-607.** Preferably, if the range of 2 < L3R1/(CA_L3S1/2) < 4 is satisfied, the radius of curvature of the sixth surface **S6** can be designed to be large while reducing the aberration caused by the fifth surface **S5,** making it easy to manufacture the third lenses **103** and **203.** The aberration occurring in the optical system can be reduced, the production of the third lenses **103** and **203** can be made easier, and the yield can be increased. In the first to fourth embodiments, Mathematical expression 15 can preferably satisfy 2.5 < L3R1/(CA_L3S1/2) < 4. In the fifth to sixth embodiments, Mathematical expression 15 can preferably satisfy 4 < L3R1/(CA_L3S1/2) < 5.

[Mathematical expression 15-1] $CA_L4 > CA_L5 > CA_L6 > CA_L7$

[Mathematical expression 15-2] $CA_L7S1 < (Imgh*2)$

In Mathematical expressions 15-1 to 15-2, CA_L4, CA_L5, CA_L6, and CA_L7 represent effective diameters (average effective diameters) of the fourth to seventh lenses **104-107, 204-207, 304-307, 404-407, 504-507,** and **604-607,** which represent the distance from an optical axis **OA** to the diagonal end of the image sensor **700** or half of the maximum diagonal length of the image sensor **700.** Accordingly, the light path can be set to the area of the image sensor **700** by the effective diameters of the fourth to seventh lenses. Since the sixth and seventh lenses are plastic lenses having aspherical surfaces, and the fourth and fifth lenses are glass lenses having spherical surfaces, aberrations between the lenses can be mutually compensated.

[Mathematical expression 16]

$$1 < CA_GL_AVER/CA_PL_AVER < 1.5$$

In Mathematical expression 16, CA_GL_AVER represents an average effective diameter of glass lenses, and CA_PL_AVER represents an average effective diameter of plastic lenses. A lens barrel in which a lens unit is disposed has at least one inner barrel within the lens barrel, and at least a portion of the plastic material lenses included in the lens unit can be disposed in the inner barrel. In the case of a plastic material lens, since the amount of expansion is large at high temperatures, a wider space is required within the lens barrel. In Mathematical expression 16, by setting the effective diameter size of the glass lens and the effective diameter size of the plastic lens, it is possible to suppress deterioration of optical characteristics due to temperature change, and the optical systems **1000, 1100, 1200, 1300, 1400,** and **1500** can control incident light and set factors affecting aberration. In the first to sixth embodiments, Mathematical expression 16 can preferably satisfy 1.1 < CA_GL_AVER/CA_PL_AVER < 1.3.

Here, nGL > nPL can be satisfied. nGL is the number of glass lenses, and nPL is the number of plastic lenses. Also, the condition of nGL (-) nPL = 0 or 1 can be satisfied.

[Mathematical expression 17]

$$1 < GL_CA1_AVER/PL_CA1_AVER < 1.5$$

In Mathematical expression 17, GL_CA1_AVER is an average of effective diameters of object side surfaces of glass material lenses, for example, an average of effective diameters of object side surfaces of the first to fifth lenses **101-105, 201-205, 301-305, 401-405, 501-505,** and **601-605.** PL_CA1_AVER is an average of effective diameters of object side surfaces of plastic material lenses, for example, an average of effective diameters of object side surfaces of the sixth and seventh lenses **106-107, 206-207, 306-307, 406-407, 506-507,** and **606-607.** A lens barrel in which a lens unit is disposed has at least one inner barrel within the lens barrel, and at least a portion of the plastic material lenses included in the lens unit can be disposed in the inner barrel. In the case of a lens made of plastic, since the amount of expansion is large at high temperatures, a wider space is required inside the lens barrel. By setting the effective diameter size of the glass lens and the effective diameter size of the plastic lens in Mathematical expression 17, the deterioration of optical characteristics due to temperature change can be suppressed, and the optical systems **1000, 1100, 1200, 1300, 1400,** and **1500** can control the incident light and set factors affecting aberration. In the first and second embodiments, Mathematical expression 17 can preferably satisfy $1.1 \leq GL_CA1_AVER / PL_CA1_AVER \leq 1.4$. In the third to sixth embodiments, Mathematical expression 17 can preferably satisfy $1.2 \leq GL_CA1_AVER / PL_CA1_AVER \leq 1.4$.

[Mathematical expression 18-1]

$$CG3 < CG5 < CG1$$

In Mathematical expression 18, CG1 may be a center gap between the first and second lenses, CG3 may be a center gap between the third and fourth lenses, and CG5 may be a center gap between the fifth and sixth lenses. In the first and second embodiments and the fifth and sixth embodiments, when Mathematical expression 18 is satisfied, the center gap between glass lenses having relatively thick thicknesses can be reduced, thereby reducing the TTL and improving the optical performance of the edge portion of the field of view (FOV).

[Mathematical expression 18-2]

$$CG3 < CG1 < CG5$$

In Mathematical expression 18, CG1 may be a center gap between the first and second lenses, CG3 may be a center gap between the third and fourth lenses, and CG5 may be a center gap between the fifth and sixth lenses. In the third and fourth embodiments, when Mathematical expression 18 is satisfied, the center gap between glass lenses having relatively thick thicknesses may be reduced, thereby reducing TTL and improving optical performance of the edge portion of the field of view (FOV).

[Mathematical expression 19]

$$0.5 < CT7 / CG6 < 2$$

In Mathematical expression 19, CG6 is the center gap or an optical axis distance between the sixth and seventh lenses. By setting the center thickness CT7 of the seventh lenses **107, 207, 307, 407, 507,** and **607** and the center gap between the sixth and seventh lenses in Mathematical expression 19, the optical performance at the edge portion of the angle of view can be improved. In the first to second embodiments and the fifth to sixth embodiments, Mathematical expression 19 can preferably satisfy $1 < CT7 / CG6 < 1.5$. In the third to fourth embodiments, Mathematical expression 19 can preferably satisfy $0.5 < CT7 / CG6 < 1$.

[Mathematical expression 20]

$$0.5 < 2(CG5+CG6)/CT45 < 2$$

In Mathematical expression 20, CT45 is the center thickness of the cemented lenses **145, 245, 345, 445, 545,** and **645.** Since the center thickness of the cemented lenses is arranged to be greater than twice the sum of the center gap CG5 between the fifth and sixth lenses and the center gap CG6 between the sixth and seventh lenses, the resolution and chromatic aberration can be improved and the center gaps can be reduced. In the first and second embodiments and the fifth and sixth embodiments, Mathematical expression 20 can preferably satisfy $0.5 < 2(CG5+CG6)/CT45 < 1.5$. In the third and fourth embodiments, Mathematical expression 20 can preferably satisfy $0.5 < 2(CG5+CG6)/CT45 < 1$.

[Mathematical expression 21]

$$0 < CT2/CT1 < 4$$

In Mathematical expression 21, CT1 is the center thickness of the first lenses **101, 201, 301, 401, 501,** and **601,** and CT2 is the center thickness of the second lenses **102, 202, 302, 402, 502,** and **602.** By setting the center thickness CT2 of the second lens to be thicker than the center thickness CT1 of the first lens in Mathematical expression 21, factors affecting aberration can be controlled. In the first to fourth embodiments, Mathematical expression 21 can preferably satisfy 0.5 < CT2/CT1 < 1. In the fifth to sixth embodiments, Mathematical expression 21 can preferably satisfy 0.1 < CT2/CT1 < 0.5.

[Mathematical expression 22]

$$5 < L7R1 / CT7 < 25$$

In Mathematical expression 22, L7R1 is the radius of curvature of the 13th surface S13 of the seventh lenses **107, 207, 307, 407, 507,** and **607,** and CT7 is the center thickness of the seventh lenses **107, 207, 307, 407, 507,** and **607.** By setting the radius of curvature L7R1 of the object side surface of the seventh lenses **107, 207, 307, 407, 507,** and **607** and the center thickness of the seventh lenses **107, 207, 307, 407, 507,** and **607** in Mathematical expression 22, the refractive power of the seventh lenses **107, 207, 307, 407, 507,** and **607** can be controlled. Accordingly, good optical performance can be achieved at the center and edge portion of the angle of view. In the first and second embodiments, preferably, Mathematical expression 22 can satisfy 8 < L7R1 / CT7 < 14. In the third and fourth embodiments, preferably, Mathematical expression 22 can satisfy 11 < L7R1 / CT7 < 17. In the fifth and sixth embodiments, preferably, Mathematical expression 22 can satisfy 12 < L7R1 / CT7 < 22.

[Mathematical expression 23]

$$0 < CT_Max / CG_Max < 4$$

In Mathematical expression 23, CT_Max is the maximum center thickness among the lenses, and CG_Max is the maximum gap between adjacent lenses. When Mathematical expression 23 is satisfied, the optical system can have good optical performance at a focal length at a set angle of view, and can reduce TTL. In the first and second embodiments, Mathematical expression 23 can preferably satisfy 0.5 < CT_Max / CG_Max < 1. In the third and fourth embodiments, Mathematical expression 23 can preferably satisfy 2.5 < CT_Max / CG_Max < 3.5. In the fifth and sixth embodiments, Mathematical expression 23 can preferably satisfy 1.2 < CT_Max / CG_Max < 1.8.

[Mathematical expression 24]

$$1 < \Sigma CT / \Sigma CG < 5$$

In Mathematical expression 24, ΣCT is the sum of the center thicknesses of the lenses, and ΣCG is the sum of the gaps between adjacent lenses. When Mathematical expression 24 is satisfied, the optical system can have good optical performance at a focal length at a set angle of view, and can reduce the TTL. In the first and second embodiments, preferably, Mathematical expression 24 can satisfy 1.2 < ΣCT / ΣCG < 1.8. In the third and fourth embodiments, preferably, Mathematical expression 24 can satisfy 3 < ΣCT / ΣCG < 4. In the fifth and sixth embodiments, preferably, Mathematical expression 24 can satisfy 2 < ΣCT / ΣCG < 3.

[Mathematical expression 25]

$$10 < \Sigma Index < 15$$

In Mathematical expression 25, ΣIndex means the sum of refractive indices at the d-line of each of the plurality of lenses. When Mathematical expression 25 is satisfied, TTL can be controlled in an optical systems **1000, 1100, 1200, 1300, 1400,** and **1500** in which a plastic lens and a glass lens are mixed, and improved resolution can be achieved. In the first to second embodiments and the fifth to sixth embodiments, Mathematical expression 25 can preferably satisfy 11 < ΣIndex < 13. In the third to fourth embodiments, Mathematical expression 25 can preferably satisfy 10 < ΣIndex < 12.

[Mathematical expression 26]

$$15 < \Sigma Abb / \Sigma Index < 30$$

In Mathematical expression 26, ΣAbb represents the sum of Abbe's numbers of each of the plurality of lenses. When Mathematical expression 26 is satisfied, the optical systems **1000, 1100, 1200, 1300, 1400,** and **1500** can have improved aberration characteristics and resolution. Mathematical expression 26 can control optical characteristics by setting the sum of Abbe's numbers and the sum of refractive indices of the lenses. In the first to second embodiments and the fifth to sixth embodiments, Mathematical expression 26 can preferably satisfy $20 < \Sigma Abb / \Sigma Index < 25$. In the third to fourth embodiments, Mathematical expression 26 can preferably satisfy $25 < \Sigma Abb / \Sigma Index < 30$.

[Mathematical expression 27]

$$1 < \Sigma CT / \Sigma ET < 3$$

In Mathematical expression 27, ΣCT is a sum of center thicknesses of the lenses, and ΣET is a sum of edge thicknesses, that is, ends of the effective areas of the lenses. When Mathematical expression 27 is satisfied, the optical system can have good optical performance at a focal length at a set angle of view, and can reduce the TTL. In the first to second embodiments and the fifth to sixth embodiments, Mathematical expression 27 can preferably satisfy $1 < \Sigma CT / \Sigma ET < 2.5$. In the third to fourth embodiments, Mathematical expression 27 can preferably satisfy $1 < \Sigma CT / \Sigma ET < 1.5$.

[Mathematical expression 28]

$$1 < CA_L3S1 / CA_min < 2$$

In Mathematical expression 28, CA_L3S1 is an effective diameter of the object side fifth surface **S5** of the third lenses **103, 203, 303, 403, 503,** and **603,** and CA_Min represents a minimum effective diameter among the object side surfaces and the sensor side surfaces of the lenses. When Mathematical expression 28 is satisfied, the optical system can provide a slimmer module while controlling incident light and maintaining optical performance. In the first to sixth embodiments, preferably, Mathematical expression 28 can satisfy $1 < CA_L3S1 / CA_min < 1.5$.

[Mathematical expression 29]

$$1 < CA_max / CA_min < 3$$

In Mathematical expression 29, CA_max represents a maximum effective diameter among the object side surfaces and the sensor side surfaces of the lenses, and CA_Min represents a minimum effective diameter among the object side surfaces and the sensor side surfaces of the lenses. When Mathematical expression 29 is satisfied, the optical system can set a size for a slim and compact structure while maintaining optical performance. In the first and second embodiments, Mathematical expression 29 can preferably satisfy $1.3 < CA_max / CA_min < 1.6$. In the third and fourth embodiments, Mathematical expression 29 can preferably satisfy $1.2 < CA_max / CA_min < 1.6$. In the fifth and sixth embodiments, Mathematical expression 29 can preferably satisfy $1 < CA_max / CA_min < 1.5$.

[Mathematical expression 30]

$$1 < CA_max / CA_Aver < 3$$

In Mathematical expression 30, CA_max represents a maximum effective diameter among the object side surfaces and the sensor side surfaces of the lenses, and CA_Aver represents an average of the effective diameters of the object side surfaces and the sensor side surfaces of the lenses. When Mathematical expression 30 is satisfied, the optical system can set a size for a slim and compact structure while maintaining optical performance. In the first to sixth embodiments, Mathematical expression 30 can preferably satisfy $1 < CA_max / CA_Aver < 1.5$.

[Mathematical expression 31]

$$0.5 < CA_min / CA_Aver < 1$$

In Mathematical expression 31, CA_Min represents a minimum effective diameter among the object side surfaces and the sensor side surfaces of the lenses, and CA_Aver represents an average of the effective diameters of the object side surfaces and the sensor side surfaces of the lenses. When Mathematical expression 31 is satisfied, the optical system can set a size for a slim and compact structure while maintaining optical performance. In the first to sixth embodiments, Mathematical expression 31 can preferably satisfy 0.7 < CA_min / CA_Aver < 0.9.

[Mathematical expression 32]

$$1 < CA_max / (2*ImgH) < 2$$

Mathematical expression 32, CA_max represents the maximum effective diameter among the object side surfaces and the sensor side surfaces of the lenses, and Imgh means the distance from an optical axis **OA** to the diagonal end of the image sensor **700** or 1/2 of the maximum diagonal length of the image sensor **700.** When Mathematical expression 32 is satisfied, the optical system can maintain good optical performance and set a size for a slim and compact structure. In the first to sixth embodiments, Mathematical expression 32 can preferably satisfy 1 < CA_max / (2*ImgH) < 1.5.

[Mathematical expression 33]

$$1 < TD / CA_max < 5$$

In Mathematical expression 33, TD is an optical axis distance from the center of the object side surface of the first lenses **101, 201, 301, 401, 501,** and **601** to the center of the sensor side surface of the last lens, and CA_max represents the maximum effective diameter among the object side surfaces and the sensor side surfaces of the lenses. When Mathematical expression 33 is satisfied, the entire optical axis distance and the maximum effective diameter of the lenses can be set, so that the size for good optical performance can be set. In the first and second embodiments, Mathematical expression 33 can preferably satisfy 1.5 < TD / CA_max < 3. In the third and fourth embodiments, Mathematical expression 33 can preferably satisfy 2 < TD / CA_max < 2.2. In the fifth and sixth embodiments, Mathematical expression 33 can preferably satisfy 2 < TD / CA_max < 3.

[Mathematical expression 34]

$$0 < F / L1R1 < 1$$

In Mathematical expression 34, F is an effective focal length of the optical system, and L1R1 is a radius of curvature of the object side surface of the first lenses **101, 201, 301, 401, 501,** and **601.** When Mathematical expression 34 is satisfied, the influence on incident light and TTL can be controlled. In the first to sixth embodiments, Mathematical expression 34 can preferably satisfy 0.1 < F / L1R1 < 0.5.

[Mathematical expression 35]

$$3 < Max_th/Min_th < 8$$

In Mathematical expression 35, Max_th is the thickness of the thickest region of the lens, and Min_th is the thickness of the thinnest region of the lens. The thickest thickness of the lens, Max_th, may be the center thickness CT of the lens, and the thinnest thickness of the lens, Min_th, may be the edge thickness ET of the lens, but the opposite case is also possible. The thickest thickness of the lens, Max_th, may be the edge thickness ET of the lens, and Min_th, the thinnest thickness of the lens, may be the center thickness CT of the lens. The edge thickness ET refers to the thickness at the end of the effective diameter. When Mathematical expression 35 is satisfied, the optical system can control the influence on the effective focal length. In the first and second embodiments, Mathematical expression 35 may preferably satisfy the condition of 4 < Max_th/Min_th < 6. In the third and fourth embodiments, Mathematical expression 35 can preferably satisfy the condition of 7 < Max_th/Min_th < 8. In the fifth and sixth embodiments, Mathematical expression 35 can preferably satisfy the condition of 5.5 < Max_th/Min_th < 6.5.

Here, the ratio of the maximum thickness and the minimum thickness of the plastic lens can satisfy the following conditions. Max_PL_th is the thickness value of the thickest area of the plastic lens, and Min_PL_th is the thickness value of the thinnest area of the plastic lens. Max_PL_th can be the center thickness CT of the plastic lens, and Min_PL_th can be the edge thickness ET of the plastic lens. The edge thickness ET means the thickness at the end of the effective diameter. The opposite case is also possible. Max_PL_th can be the edge thickness ET of the plastic lens, and Min_PL_th can be the center thickness CT of the plastic lens. The edge thickness ET means the thickness at the end of the effective diameter.

$$\text{Condition 1: } 1 < Max_PL_th/Min_PL_th < 2.5$$

If it is smaller than the lower limit of the range of Condition 1, it is difficult to manufacture a plastic lens. That is, it is manufactured by injecting high-temperature resin and curing it at a low temperature, but if the thickness difference is large, the shrinkage of the lens will not be uniform as it cools at a low temperature, which may result in a high surface defect rate. In addition, if it is larger than the range of Condition 1, the plastic lens shrinks and expands as the temperature changes from -40 degrees to 105 degrees, and during this process, the rate of change in the lens shape appears large, which may deteriorate the optical system performance. Preferably, the condition of 1.5 < Max_PL_th / Min_PL_th < 2.2 can be satisfied.

[Mathematical expression 36]

$$0 < EPD / |L1R1| < 1$$

In Mathematical expression 36, EPD represents the size (mm) of the entrance pupil of the optical systems **1000, 1100, 1200, 1300, 1400,** and **1500,** and L1R1 represents the radius of curvature of the first surface **S1** of the first lenses **101, 201, 301, 401, 501,** and **601.** When the optical systems **1000, 1100, 1200, 1300, 1400,** and **1500** according to the embodiment satisfies Mathematical expression 36, the optical systems **1000, 1100, 1200, 1300, 1400,** and **1500** can control the incident light. In the first to sixth embodiments, Mathematical expression 36 preferably satisfies the condition of 0.1 < EPD / |L1R1| ≤ 0.3 can be satisfied.

[Mathematical expression 37]

$$Po4 * Po5 < 0$$

In Mathematical expression 37, Po4 is the refractive power value of the fourth lenses **104, 204, 304, 404, 504,** and **604,** and Po5 is the refractive power value of the fifth lenses **105, 205, 305, 405, 505,** and **605.** That is, the refractive powers of the fourth and fifth lenses have opposite refractive powers, so that aberration can be improved, and light can be effectively guided by the plastic lens. When Po4 * Po5 > 0, the effect of improving chromatic aberration in the cemented lens is not significant.

[Mathematical expression 38]

$$10 < V4\text{-}V5 < 25$$

In Mathematical expression 38, v4 is the Abbe number of the fourth lenses **104, 204, 304, 404, 504,** and **604,** and V5 is the Abbe number of the fifth lenses **105, 205, 305, 405, 505,** and **605.** When Mathematical expression 38 is satisfied, the difference in Abbe numbers of at least two lenses forming the cemented lens can be maintained at a constant value or more, and chromatic aberration can be improved. In the first to fourth embodiments, Mathematical expression 38 can preferably satisfy 15 ≤ V4-V5 ≤ 20. In the fifth to sixth embodiments, Mathematical expression 38 can preferably satisfy 10 ≤ V4-V5 ≤ 15. When the cemented lens is less than the lower limit of Mathematical expression 38, it may be insignificant in improving the aberration characteristics of the optical system. Accordingly, if the difference in Abbe numbers between the object side lens and the sensor side lens within the cemented lens is 15 or more and 20 or less, the aberration characteristics can be improved.

[Mathematical expression 39]

$$0 < |F1| / F < 10$$

Mathematical expression 39 is a formula in which F is an effective focal length of the optical system and F1 is a focal length of the first lenses **101, 201, 301, 401, 501,** and **601.** When Mathematical expression 39 is satisfied, TTL applied to the vehicle optical system can be set. In the first and second embodiments, Mathematical expression 39 can preferably satisfy 5 < |F1| / F < 9. In the third and fourth embodiments, Mathematical expression 39 can preferably satisfy 2 < |F1| / F < 3. In the fifth and sixth embodiments, Mathematical expression 39 can preferably satisfy 1 < |F1| / F < 5.

[Mathematical expression 40]

$$CA_L7 \leq CA_L3 < CA_L1$$

In Mathematical expression 40, CA_L1 is an average effective diameter of the object side surface and the sensor side surface of the first lenses **101, 201, 301, 401, 501,** and **601,** CA_L3 is an average effective diameter of the object side surface and the sensor side surface of the third lenses **103, 203, 303, 403, 503,** and **603,** and CA_L7 is an average effective diameter of the object side surface and the sensor side surface of the seventh lenses **107, 207, 307, 407, 507,** and **607.** When Mathematical expression 40 is satisfied, light can be guided to the center and edge portion of the image sensor **700,** and chromatic aberration can be improved.

[Mathematical expression 41]

$$2 < \Sigma GL_CT / \Sigma PL_CT < 5$$

In Mathematical expression 41, $\Sigma PL_CT$ is a sum of the center thicknesses of the plastic lens (lenses), and $\Sigma GL_CT$ is a sum of the center thicknesses of the glass lenses. When Mathematical expression 41 is satisfied, the overall TTL can be controlled by setting the relationship between the thickness of the plastic lens and the thickness of the glass lens compared to the TTL. In the first and second embodiments, Mathematical expression 41 can preferably satisfy $2.5 < \Sigma GL\ CT / \Sigma PL_CT < 3.5$. In the third and fourth embodiments, Mathematical expression 41 can preferably satisfy $3 < \Sigma GL_CT / \Sigma PL_CT < 5$. In the fifth and sixth embodiments, Mathematical expression 41 can preferably satisfy $2 < \Sigma GL_CT / \Sigma PL_CT < 3.5$.

[Mathematical expression 42]

$$2 < \Sigma GL_Index / \Sigma PL_Index < 5$$

In Mathematical expression 42, $\Sigma PL_Index$ is a sum of refractive indices of the plastic lens (lenses) at the d-line, and $\Sigma GL_Index$ is a sum of refractive indices of the glass lenses at the d-line. When Mathematical expression 42 is satisfied, the refractive index relationship between the plastic lens and the glass lens can be set to control the overall resolution. In the first to sixth embodiments, Mathematical expression 42 can preferably satisfy $2 < \Sigma GL_Index / \Sigma PL_Index < 3$.

[Mathematical expression 43]

$$20 < TTL < 30$$

In Mathematical expression 43, total top length (TTL) means the distance (mm) from the center of the first surface **S1** of the first lenses **101, 201, 301, 401, 501,** and **601** to the upper surface of the image sensor **700** on an optical axis **OA.** By making TTL in Mathematical expression 43 exceed 10 or 20, a vehicle optical system can be provided. In the first to sixth embodiments, Mathematical expression 43 can preferably satisfy the condition of $25 < TTL < 30$ or $TD < TTL$.

[Mathematical expression 44]

$$3 < ImgH < 6$$

Mathematical expression 44 means that ImgH is a distance from an optical axis **OA** to the diagonal end of the image sensor **700** or half of the maximum diagonal length of the image sensor **700.** Mathematical expression 44 can set the diagonal size 2*ImgH of the image sensor **700** and provide an optical system having a vehicle sensor size. In the first to sixth embodiments, Mathematical expression 44 can preferably satisfy $4.5 \leq ImgH < 5.5$.

[Mathematical expression 45]

$$2 < BFL < 3$$

In Mathematical expression 45, BFL is an optical axis distance from the image sensor **700** to the center of the sensor side surface of the last lens. When Mathematical expression 45 is satisfied, the installation space of the filter **900** and the cover glass **800** can be secured, the assembling property of the components can be improved through the gap between the image sensor **700** and the last lens, and the joining reliability can be improved. In the first to sixth embodiments, Mathematical expression 45 can preferably satisfy 2 < BFL < 2.5. When the BFL is less than the range of Mathematical expression 45, a portion of the light that proceeds to the image sensor may not be transmitted to the image sensor, which may cause a decrease in resolution. When the BFL exceeds the range of Mathematical expression 45, stray light may be introduced, which may deteriorate the aberration characteristics of the optical system.

[Mathematical expression 46]

$$10 < F < 20$$

Mathematical expression 46 can set the overall focal length F to suit the vehicle optical system. In the first to sixth embodiments, mathematical expression 46 can satisfy 10 < F < 15.

[Mathematical expression 47]

$$30 < FOV < 40$$

In Mathematical expression 47, field of view (FOV) means the angle of view (degree) of the optical systems **1000, 1100, 1200, 1300, 1400,** and **1500,** and can provide an angle of view suitable for a vehicle optical system. In the first to sixth embodiments, the FOV can preferably satisfy 30 < FOV < 35.

[Mathematical expression 48]

$$1.5 < TTL / CA_max < 3$$

In Mathematical expression 48, CA_max means the largest effective diameter (mm) among the object side surface and the sensor side surface of a plurality of lenses, and total top length (TTL) means the distance (mm) from the vertex of the first surface **S1** of the first lens to the upper surface of the image sensor **700** on an optical axis **OA.** Mathematical expression 48 sets the relationship between the total optical axis length of the optical system and the maximum effective diameter, so as to provide an improved vehicle optical system. In the first to second embodiments and the fifth to sixth embodiments, Mathematical expression 48 can preferably satisfy 1.5 < TTL / CA_max < 2.5. In the third to fourth embodiments, Mathematical expression 48 can preferably satisfy 2 < TTL / CA _max < 2.5.

[Mathematical expression 49]

$$5 < TTL / ImgH < 8$$

Mathematical expression 49: total top length (TTL) means the distance (mm) from the vertex of the first surface **S1** of the first lens to the upper surface of the image sensor **700** on an optical axis **OA,** and ImgH means the distance from an optical axis to the diagonal end of the image sensor **700** or 1/2 of the maximum diagonal length of the image sensor **700.** When Mathematical expression 49 is satisfied, the optical optical systems **1000, 1100, 1200, 1300, 1400,** and **1500** can have TTL for application to the vehicle image sensor **700,** thereby providing further improved image quality. In the first to sixth embodiments, mathematical expression 49 can preferably satisfy 5 < TTL / ImgH < 6.5.

[Mathematical expression 50]

$$0.1 < BFL / ImgH < 1$$

Mathematical expression 50 means that BFL is an optical axis distance from the image sensor 700 to the center of the sensor side surface of the last lens, and ImgH means a distance from an optical axis to the diagonal end of the image sensor 700 or 1/2 of the maximum diagonal length of the image sensor 700. When Mathematical expression 50 is satisfied, the optical systems 1000, 1100, 1200, 1300, 1400, and 1500 can secure a back focal length (BFL) for applying the size of the vehicle image sensor 700, set a gap between the last lens and the image sensor 700, and have good optical characteristics at the center and edge portions of the field of view (FOV). In the first to sixth embodiments, mathematical expression 50 can preferably satisfy 0.3 < BFL / ImgH < 0.6.

[Mathematical expression 51]

$$10 < TTL / BFL < 15$$

Mathematical expression 51: total top length (TTL) means the distance (mm) from the vertex of the first surface **S1** of the first lens to the upper surface of the image sensor **700** on an optical axis **OA,** and BFL means an optical axis distance from the image sensor **700** to the center of the sensor side surface of the last lens. When mathematical expression 51 is satisfied, the optical systems **1000, 1100, 1200, 1300, 1400,** and **1500** can secure BFL. In the first to sixth embodiments, mathematical expression 51 can preferably satisfy 10 < TTL / BFL < 13.

[Mathematical expression 52]

$$1 < TTL / F < 2$$

Mathematical expression 52 total top length (TTL) means the distance (mm) from the vertex of the first surface **S1** of the first lenses **101, 201, 301, 401, 501,** and **601** to the upper surface of the image sensor **700** on an optical axis **OA,** and F is the effective focal length of the optical system. Accordingly, an optical system for a driver assistance system can be provided. In the first to sixth embodiments, Mathematical expression 52 can preferably satisfy 1.5 < TTL / F < 2. When the optical systems **1000, 1100, 1200, 1300, 1400,** and **1500** according to the embodiment satisfies the mathematical expression 52, the optical systems **1000, 1100, 1200, 1300, 1400,** and **1500** can have an appropriate focal length in a set TTL range, and provides an optical system that can form an image while maintaining an appropriate focal length even when the temperature changes from low to high. When it is below the lower limit of Mathematical expression 52, it is necessary to increase the refractive power of the lenses, so that correction of spherical aberration or distortion aberration becomes difficult, and when it exceeds the upper limit of Mathematical expression 52, the effective diameter or TTL of the lenses becomes long, which may cause a problem of a large-sized imaging lens system.

[Mathematical expression 53]

$$5 < F / BFL < 10$$

Mathematical expression 53 means an optical axis distance from the image sensor **700** to the center of the sensor side surface of the last lens, where F is the effective focal length of the optical system. When mathematical expression 53 is satisfied, the optical systems **1000, 1100, 1200, 1300, 1400,** and **1500** can have a set angle of view and an appropriate focal length, and a vehicle optical system can be provided. In addition, the optical systems **1000, 1100, 1200, 1300, 1400,** and **1500** can minimize the gap between the last lens and the image sensor **700,** and thus can have good optical characteristics at the edge portion of the field of view (FOV). In the first to sixth embodiments, mathematical expression 53 can preferably satisfy 5 < F / BFL < 7.

[Mathematical expression 54]

$$2 < F / ImgH < 5$$

Mathematical expression 54 means that F is an effective focal length of the optical system, and ImgH means a distance from an optical axis to the diagonal end of the image sensor **700** or 1/2 of the maximum diagonal length of the image sensor **700.** Such optical systems **1000, 1100, 1200, 1300, 1400,** and **1500** can have improved aberration characteristics in the size of the vehicle image sensor **700.** In the first to sixth embodiments, mathematical expression 54 can preferably satisfy 2 < F / ImgH < 4.

[Mathematical expression 55]

$$1 < F / EPD < 3$$

Mathematical expression 55 means that F is the effective focal length of the optical system and EPD means the size of the entrance pupil. Accordingly, the overall brightness of the optical system can be controlled. In the first to sixth embodiments, mathematical expression 55 can preferably set 1 < F / EPD < 2.

[Mathematical expression 56]

$$0 < BFL/TD < 0.2$$

Mathematical expression 56 means that TD is an optical axis distance of the lenses of the optical systems **1000, 1100, 1200, 1300, 1400,** and **1500,** and BFL means an optical axis distance from the image sensor **700** to the center of the sensor side surface of the last lens. Accordingly, the resolution of the optical system can be maintained while controlling the overall size. In the first to sixth embodiments, Mathematical expression 56 can preferably satisfy 0.01 < BFL/TD < 0.1. When the conditional value of BFL/TD is 0.07 or more, since the BFL is designed to be large compared to the TD, the size of the entire optical system becomes large, making it difficult to miniaturize the optical system, and the distance between the seventh lenses **107, 207, 307, 407, 507,** and **607** and the image sensor becomes longer, which may cause an increase in unnecessary light amount between the seventh lenses **107, 207, 307, 407, 507,** and **607** and the image sensor, resulting in a problem of lowering the resolution, such as deterioration of aberration characteristics.

[Mathematical expression 57]

$$0 < EPD/Imgh/FOV < 0.2$$

Mathematical expression 57 can set the relationship between the entrance pupil size EPD, the length of half the maximum diagonal length of the image sensor Imgh, and the field of view (FOV). Accordingly, the overall size and brightness of the optical system can be controlled. In the first to sixth embodiments, Mathematical expression 57 can preferably satisfy 0.01 < EPD / Imgh / FOV < 0.07.

[Mathematical expression 58]

$$15 < FOV / F\# < 25$$

Mathematical expression 58 can set the relationship between the angle of view and the F number (F#) of the optical system. In the first to sixth embodiments, Mathematical expression 58 can preferably satisfy 20 < FOV / F# < 25. Here, F# is provided to be 1.6 or less, so as to provide a bright image.

[Mathematical expression 59]

$$2 < CA_L1/ImgH < 3$$

Mathematical expression 59 can set the relationship between the size of the effective diameter CA_L1 of the first lenses **101, 201, 301, 401, 501,** and **601** and the length of ImgH, which is half of the maximum diagonal length of the image sensor. If Mathematical expression 59 is satisfied, the TTL suitable for a vehicle optical system is satisfied and the set angle of view can be satisfied. If it is less than the lower limit of Mathematical expression 59, the effective diameter of the lens arranged in the center part of the optical systems **1000, 1100, 1200, 1300, 1400,** and **1500** becomes the largest, which causes a problem that the TTL becomes longer. If it exceeds the upper limit of Mathematical expression 59, there is a problem that the angle of view becomes excessively larger than the angle satisfied by the optical systems **1000, 1100, 1200, 1300, 1400,** and **1500.** In the first and second embodiments, Mathematical expression 59 can preferably satisfy 2.5 < CA_L1/ImgH < 3. In the third and fourth embodiments, Mathematical expression 59 can preferably satisfy 2.2 < CA_L1/ImgH < 2.8. In the fifth and sixth embodiments, Mathematical expression 59 can preferably satisfy 2.2 < CA_L1/ImgH < 2.5.

[Mathematical expression 60]

$$0.1 < CT45 / \Sigma CT < 1$$

Mathematical expression 60 can set the relationship between the center thickness CT45 of the cemented lenses **145, 245, 345, 445, 545,** and **645** and the sum ΣCT of the center thicknesses of the first to seventh lenses **101-107, 201-207, 301-307, 401-407, 501-507** and **601-607.** When mathematical expression 60 is satisfied, it is suitable for a vehicle optical system, satisfies a miniaturized TTL, and can satisfy the set angle of view. When it is less than the lower limit of mathematical expression 60, there is a problem that the thickness of the cemented lens decreases and the refractive power decreases. When it is exceeded the upper limit of mathematical expression 60, there is a problem that the thickness of the cemented lens increases excessively, causing the TTL to increase. In the first to sixth embodiments, mathematical expression 60 can preferably satisfy 0.1 < CT45 / ΣCT < 0.5.

[Mathematical expression 61]

$$0.1 < CT45 / TTL < 1$$

Mathematical expression 61 can set the relationship between the center thickness CT45 of the cemented lenses **145** and **245** and TTL, which is the distance (mm) from an optical axis **OA** from the center of the first surface **S1** of the first lenses **101, 201, 301, 401, 501,** and **601** to the upper surface of the image sensor **700.** When Mathematical expression 61 is satisfied, a miniaturized TTL suitable for a vehicle optical system is satisfied and a set angle of view can be satisfied. When it is less than the lower limit of Mathematical expression 61, there is a problem that the thickness of the cemented lens decreases and the refractive power decreases. When it exceeds the upper limit of Mathematical expression 61, there is a problem that the thickness of the cemented lens increases excessively and the TTL increases. In the first to sixth embodiments, Mathematical expression 61 can preferably satisfy 0.1 < CT45 / TTL < 0.5.

[Mathematical expression 62]

$$0.1 < \Sigma CT / TTL < 1$$

Mathematical expression 62 can set the relationship between the sum ΣCT of the center thicknesses of the first to seventh lenses **101-107, 201-207, 301-307, 401-407, 501-507** and **601-607** and TTL, which is the distance (mm) from the center of the first surface **S1** of the first lenses **101, 201, 301, 401, 501,** and **601** to the upper surface of the image sensor **700** on an optical axis **OA.** To reduce TTL, a lot of light refraction must occur. In order to refract a lot of light, the power of the lenses must increase, and the lenses become thicker to increase the power. When it is less than the lower limit of Mathematical expression 62, the sum of the lens thicknesses decreases and the refractive power becomes weak. If the upper limit of Mathematical expression 62 is exceeded, there is a problem that the sum of the thicknesses of the lenses increases excessively, causing TTL to increase. In the first and second embodiments, Mathematical expression 62 can preferably satisfy 0.4 < ΣCT / TTL < 0.7. In the third to sixth embodiments, Mathematical expression 62 can preferably satisfy 0.5 < ΣCT / TTL < 1.

[Mathematical expression 63]

$$0.1 < \Sigma CG / TTL < 1$$

Mathematical expression 63 can set the relationship between the sum ΣCG of adjacent lens gaps among the first to seventh lenses **101-107, 201-207, 301-307, 401-407, 501-507** and **601-607** and TTL, which is the distance (mm) from the center of the first surface **S1** to the upper surface of the image sensor **700** on an optical axis **OA.** To reduce TTL, a lot of light refraction must occur. In order to refract a lot of light, the power of the lenses must increase, and the lenses become thicker to increase the power. When it is less than the lower limit of Mathematical expression 63, the sum of the thicknesses of the lenses becomes small and the refractive power weakens, becoming weaker than the desired power. When it is more than the upper limit of Mathematical expression 63, there is a problem that the sum of the thicknesses of the lenses increases excessively, which increases TTL. In the first to sixth embodiments, Mathematical expression 63 can preferably satisfy 0.1 < ΣCG / TTL < 0.5.

[Mathematical expression 64]

$$1 < CT45 / CT1 < 4$$

Mathematical expression 64 can set the relationship between the center thickness CT45 of the cemented lens **145** and **245** and the center thickness of the first lenses **101, 201, 301, 401, 501,** and **601.** In order to reduce TTL, a lot of light refraction must occur. In order to refract a lot of light, the power of the lenses must be increased, and in order to increase the power, the lenses become thicker. When it is less than the lower limit of Mathematical expression 64, the sum of the thicknesses of the lenses becomes small and the refractive power becomes weaker than the desired power. When it is more than the upper limit of Mathematical expression 64, there is a problem that the sum of the thicknesses of the lenses increases excessively, which increases TTL. In the first and second embodiments, Mathematical expression 64 can preferably satisfy 2 < CT45 / CT1 < 3.5. In the third and fourth embodiments, Mathematical expression 64 can preferably satisfy 1 < CT45 / CT1 < 1.5. In the fifth and sixth embodiments, Mathematical expression 64 can preferably satisfy 2.5 < CT45 / CT1 < 3.5.

[Mathematical expression 65]

$$z=\frac{cY^2}{1+\sqrt{1-(1+K)c^2Y^2}}+AY^4+BY^5+CY^4+DY^5+EY^4+\ldots$$

In Mathematical expression 65, Z can mean Sag, which is the distance from any location on the aspheric surface to the vertex of the aspheric surface along an optical axis. Y may mean the distance from any location on the aspheric surface to an optical axis in a direction perpendicular to the optical axis. 'c' may mean the curvature of the lens, and K may mean the conic constant. In addition, A, B, C, D, E, and F may mean aspheric constants.

The optical systems **1000, 1100, 1200, 1300, 1400,** and **1500** according to the first to sixth embodiments disclosed above can satisfy at least one or two or more of Mathematical expressions described below. In this case, the optical systems **1000, 1100, 1200, 1300, 1400,** and **1500** can have improved optical characteristics. In detail, when the optical systems **1000, 1100, 1200, 1300, 1400,** and **1500** satisfy at least one or more mathematical expressions from Mathematical expression 1 to Mathematical expression 64, the optical systems **1000, 1100, 1200, 1300, 1400,** and **1500** has improved resolution and can improve aberration and distortion characteristics. In addition, the optical systems **1000, 1100, 1200, 1300, 1400,** and **1500** can secure a back focal length (BFL) for applying a vehicle image sensor **700,** can compensate for optical characteristic degradation due to temperature change, and can minimize the gap between the last lens and the image sensor **700,** thereby having good optical performance at the center and edge portions of the field of view (FOV).

Table 19 shows the result values for Mathematical expression 1 to Mathematical expression 64 described above in the optical system systems **1000, 1100, 1200, 1300, 1400,** and **1500** of the embodiment. Referring to Table 19, it can be seen that the optical systems **1000, 1100, 1200, 1300, 1400,** and **1500** satisfy at least one, two or more, or three or more of Mathematical expression 1 to Mathematical expression 64. In detail, it can be seen that the optical systems **1000, 1100, 1200, 1300, 1400,** and **1500** according to the embodiment satisfies all of Mathematical expression 1 to Mathematical expression 64. Accordingly, the optical systems **1000, 1100, 1200, 1300, 1400,** and **1500** can have good optical performance and excellent optical characteristics at the center and edge portion of the field of view (FOV).

[Table 19]

| Mathematical expression | | First embodiment | Second embodiment | Third embodiment | Fourth embodiment | Fifth embodiment | Sixth embodiment |
|---|---|---|---|---|---|---|---|
| 1 | 0.5 < CT1 / ET1 < 1.5 | 0.8627 | 0.8892 | 1.4445 | 1.4490 | 0.9327 | 0.9366 |
| 2 | 0.1 < CT1/CA_L1S1 < 0.5 | 0.1521 | 0.1555 | 0.164 | 0.162 | 0.4527 | 0.4542 |
| 3-1 | f1 < 0 | - 106.072 | - 126.656 | - | - | -67.060 | -69.441 |
| 3-2 | f1 > 0 | - | - | 40.0928 | 38.9438 | - | - |
| 4 | 1.6 < n1 < 1.9 | 1.8297 | 1.8297 | 1.6966 | 1.6966 | 1.8297 | 1.8297 |
| 5 | 30 <FOV_H < 38 | 34.3055 | 34.2949 | 34.2278 | 34.2549 | 34.216 | 34.606 |
| 6 | 0 < (CT7*CA7)/(CT1*C A1) < 0.7 | 0.4977 | 0.4956 | 0.4685 | 0.5328 | 0.3180 | 0.3216 |
| 7 | 1 < L7S2_max_sag to Sensor < 3 | 2.199 | 2.199 | 2.2001 | 2.1998 | 2.200 | 2.199 |
| 8 | 1 < CT1 / CT7 < 3 | 1.3333 | 1.3333 | 1.538 | 1.305 | 2.4706 | 2.4462 |
| 9 | 2 < CT45 / CT6 < 4 | 2.4996 | 2.8723 | 2.4030 | 2.4492 | 2.0596 | 2.3832 |
| 10 | 0 < (ET45 - CT45) < 0.3 | 0.1683 | 0.07488 | 0.1096 | 0.0882 | 0.0898 | 0.0946 |
| 11 | 0.5 < CA_L1S1 / CA_L4S1 < 2 | 1.3513 | 1.3328 | 1.402 | 1.195 | 0.939 | 0.962 |
| 12 | 1 < CA_L7S2 / CA_L5S2 < 2 | 1.2488 | 1.2653 | 1.1848 | 1.1445 | 1.0258 | 1.0343 |
| 13 | 1 < CA_L1S2 / CA_L2S1<2 | 1.2295 | 1.2399 | 1.0361 | 1.0353 | 1.0151 | 1.0217 |
| 14 | 1 < CA_L4S1 / CA_L5S2 < 2 | 1.3615 | 1.3841 | 1.3282 | 1.3268 | 1.3498 | 1.3479 |
| 15 | 2 < L3R1/(CA_L3S1)/2 < 5 | 2.8664 | 3.6443 | 4.4591 | 4.4417 | 4.4951 | 4.2314 |
| 16 | 1 < CA_GL_AVER/CA _ PL_AVER < 1.5 | 1.2032 | 1.2109 | 1.1852 | 1.2212 | 1.2439 | 1.2276 |
| 17 | 1 < GL_CA1_AVER/PL _CA1_AVER < 1.5 | 1.2928 | 1.3046 | 1.2826 | 1.3199 | 1.3316 | 1.3193 |
| 18 | CG3 < CG5 < CG1 | Satisfy | Satisfy | | | Satisfy | Satisfy |
| -1 | | | | | | | |
| 18 -2 | CG3 < CG1 < CG5 | - | - | Satisfy | Satisfy | - | - |
| 19 | 0.5 < CT7 / CG6 < 2 | 1.0638 | 1.1565 | 0.692 | 0.756 | 0.8804 | 0.9065 |
| 20 | 0.5 < 2(CG5+CG6)/CT45 < 2 | 1.3229 | 0.9159 | 0.6938 | 0.6926 | 1.2521 | 1.3486 |
| 21 | 0 < CT2/CT1 < 4 | 0.800 | 0.741 | 3.2141 | 3.0788 | 0.2744 | 0.2476 |
| 22 | 5 < L7R1 / CT7 < 25 | 13.695 | 8.543 | 11.074 | 16.694 | 21.909 | 13.779 |
| 23 | 0 < CT_Max / CG_Max < 4 | 0.6067 | 0.7985 | 2.8573 | 3.0333 | 1.5469 | 1.7359 |

(continued)

| Mathematical expression | | First embodiment | Second embodiment | Third embodiment | Fourth embodiment | Fifth embodiment | Sixth embodiment |
|---|---|---|---|---|---|---|---|
| 24 | 1 < ∑CT / ΣCG < 5 | 1.436 | 1.714 | 3.70847 | 3.3290 | 2.5798 | 2.4620 |
| 25 | 10 < ∑Index < 15 | 12.0579 | 12.0579 | 11.6521 | 11.6521 | 11.9895 | 11.9895 |
| 26 | 15 < ∑Abb / ∑Index < 30 | 24.197 | 24.197 | 26.9121 7 | 26.9121 7 | 24.3147 | 24.3147 |
| 27 | 1 < ∑CT / ∑ET < 3 | 2.4974 | 1.1074 | 1.06829 | 1.07061 | 1.0799 | 1.0813 |
| 28 | 1 < CA_L3S1 / CA_min < 2 | 1.2154 | 1.2053 | 1.148 | 1.167 | 1.360 | 1.337 |
| 29 | 1 < CA_max / CA_min < 2 | 1.5784 | 1.5753 | 1.395 | 1.425 | 1.3654 | 1.3431 |
| 30 | 1 < CA_max / CA_Aver < 2 | 1.3419 | 1.3431 | 1.2286 | 1.2357 | 1.1350 | 1.1293 |
| 31 | 0.5 < CA_min / CA_Aver < 1 | 0.8501 | 0.8526 | 0.8806 | 0.8673 | 0.8312 | 0.840 |
| 32 | 1 < CA_max / (2*ImgH) < 2 | 1.4194 | 1.3888 | 1.2842 | 1.3040 | 1.2783 | 1.2671 |
| 33 | 1 < TD / CA_max < 5 | 1.9402 | 1.9528 | 2.1425 | 2.1143 | 2.243 | 2.258 |
| 34 | 0 < F / L1R1 < 1 | 0.2821 | 0.2880 | 0.4057 | 0.4057 | 0.3569 | 0.2786 |
| 35 | 3 < Max_th/Min_th < 8 | 4.4616 | 5.9838 | 7.6541 | 7.5216 | 6.0892 | 6.1697 |
| 36 | 0 < EPD / \|L1R1\| < 1 | 0.1750 | 0.1792 | 0.128 | 0.128 | 0.2224 | 0.17371 |
| 37 | Po4 * Po5 < 0 | Satisfy | Satisfy | Satisfy | Satisfy | Satisfy | Satisfy |
| 38 | 10 < V4-V5 < 25 | 18.9364 | 18.9364 | 15.3641 | 15.3641 | 13.5088 | 13.5088 |
| 39 | 0 < \|F1\| / F < 10 | 7.1181 | 8.5621 | 2.7339 | 2.6483 | 4.5357 | 4.7021 |
| 40 | CA_L7 < CA_L3 < CA_L1 | Satisfy | Satisfy | Satisfy | Satisfy | Satisfy | Satisfy |
| 41 | 2 < ∑GL_CT / ∑PL_CT < 5 | 2.9143 | 3.0483 | 4.0172 | 4.0036 | 2.8702 | 3.0798 |
| 42 | 2 < ∑GL_Index / ∑PL_Index < 5 | 2.76167 | 2.76167 | 2.6350 | 2.6350 | 2.7403 | 2.7403 |
| 43 | 20 < TTL < 30 | 27.9 | 27.5 | 27.9000 | 27.9000 | 28.9 | 28.9 |
| 44 | 3 < ImgH < 6 | 4.6300 | 4.6300 | 4.6300 | 4.6300 | 4.63 | 4.63 |
| 45 | 2 < BFL < 3 | 2.3975 | 2.3849 | 2.4195 | 2.3680 | 2.3434 | 2.3988 |
| 46 | 10 < F < 20 | 14.9017 | 14.7925 | 14.6648 | 14.7052 | 14.7849 | 14.7682 |
| 47 | 30 < FOV < 40 | 34.3055 | 34.2949 | 34.2278 | 34.2549 | 34.2163 | 34.6068 |
| 48 | 1.5 < TTL / CA_max < 3 | 2.092 | 2.138 | 2.346 | 2.310 | 2.4413 | 2.4630 |
| 49 | 5 < TTL / ImgH < 8 | 6.02591 | 5.9395 | 6.0259 | 6.0259 | 6.2419 | 6.2419 |

(continued)

| Mathematical expression | | First embodiment | Second embodiment | Third embodiment | Fourth embodiment | Fifth embodiment | Sixth embodiment |
|---|---|---|---|---|---|---|---|
| 50 | 0.1 < BFL / ImgH < 1 | 0.5178 | 0.5150 | 0.5225 | 0.5114 | 0.5061 | 0.5180 |
| 51 | 10 < TTL / BFL < 15 | 11.6372 | 11.531 | 11.5313 | 11.7822 | 12.3325 | 12.0477 |
| 52 | 1 < TTL / F < 2 | 1.8722 | 1.8590 | 1.9025 | 1.8972 | 1.9546 | 1.9569 |
| 53 | 5 < F / BFL < 10 | 6.2155 | 6.2026 | 6.0610 | 6.2100 | 6.3091 | 6.1565 |
| 54 | 2 < F / ImgH < 5 | 3.2185 | 3.1949 | 3.1673 | 3.1760 | 3.1932 | 3.1896 |
| 55 | 1 < F / EPD < 3 | 1.6116 | 1.6064 | 1.6062 | 1.6095 | 1.6045 | 1.6039 |
| 56 | 0 < BFL/TD < 0.2 | 0.0940 | 0.0949 | 0.0949 | 0.0927 | 0.0882 | 0.0905 |
| 57 | 0 < EPD/Imgh/FOV < 0.2 | 0.0582 | 0.0579 | 0.0576 | 0.0576 | 0.0581 | 0.0581 |
| 58 | 15 < FOV / F# < 25 | 21.2854 | 21.3481 | 21.3086 | 21.2816 | 21.3244 | 21.325 |
| 59 | 2 < CA_L1/ImgH < 3 | 2.839 | 2.778 | 2.568 | 2.608 | 2.382 | 2.398 |
| 60 | 0.1 < CT45 / ∑CT < 1 | 0.3892 | 0.438 | 0.296 | 0.298 | 0.308 | 0.313 |
| 61 | 0.1 < CT45 / TTL < 1 | 0.209 | 0.253 | 0.213 | 0.210 | 0.604 | 0.604 |
| 62 | 0.1 < ∑CT / TTL < 1 | 0.538 | 0.577 | 0.719 | 0.704 | 0.662 | 0.652 |
| 63 | 0.1 < ∑CG / TTL < 1 | 0.375 | 0.336 | 0.194 | 0.211 | 0.257 | 0.265 |
| 64 | 1 < CT45 / CT1 < 4 | 2.292 | 3.473 | 2.974 | 2.929 | 1.142 | 1.123 |

FIG. 79 is an example of a plan view of a vehicle to which a camera module or optical system according to an embodiment of the invention is applied. Referring to FIG. 79, a vehicle camera system according to an embodiment of the invention includes an image generating unit **11,** a first information generating unit **12,** second information generating units **21, 22, 23, 24, 25,** and **26,** and a control unit **14.** The image generating unit **11** may include at least one camera module **31** disposed in the vehicle, and may photograph images of the front of the vehicle and/or the driver to generate images of the front or interior of the vehicle. The image generating unit **11** may photograph images of the front of the vehicle as well as the surroundings of the vehicle in one or more directions using the camera module **31,** to generate images of the surroundings of the vehicle. Here, the front image and the surrounding images may be digital images, and may include color images, black-and-white images, infrared images, and the like. In addition, the front image and the surrounding images may include still images and moving images. The image generation unit **11** provides the driver image, the front image, and the surrounding image to the control unit **14.** Next, the first information generation unit **12** may include at least one radar and/or camera disposed in the own vehicle, and detects the front of the own vehicle to generate the first detection information. Specifically, the first information generation unit **12** is disposed in the own vehicle, and detects the position and speed of vehicles located in front of the own vehicle, the presence and position of pedestrians, and the like to generate the first detection information.

By using the first detection information generated by the first information generating unit **12,** the distance between the own vehicle and the vehicle in front can be controlled to be maintained at a constant level, and the stability of vehicle operation can be improved in specific preset cases, such as when the driver wants to change the driving lane of the own vehicle or when parking in reverse. The first information generating unit **12** provides the first detection information to the control unit **14.** The second information generating units **21, 22, 23, 24, 25,** and **26** detects each side of the own vehicle and generates second detection information based on the front image generated by the image generating unit **11** and the first detection information generated by the first information generating unit **12.** Specifically, the second information generating units **21, 22, 23, 24, 25,** and **26** may include at least one radar and/or camera disposed in the own vehicle, and may detect the position and speed of vehicles located on the side of the own vehicle or capture images. Here, the second information generating units **21, 22, 23, 24, 25,** and **26** can be placed at each of the front corners, side mirrors, and the rear center and rear corners of the vehicle.

At least one information generating unit of these vehicle camera systems may be equipped with an optical system and a camera module having the same as described in the embodiments disclosed above, and may provide or process information acquired through the front, rear, each side or corner area of the vehicle to a user to enable autonomous driving or to protect the vehicle and objects from surrounding safety.

The optical system of the camera module according to the embodiment of the invention can be installed in multiple units in a vehicle for safety regulation, reinforcement of autonomous driving function, and increased convenience. In addition, the optical system of the camera module is applied in a vehicle as a component for control such as a lane keeping assistance system (LKAS), a lane departure warning system (LDWS), and a driver monitoring system (DMS). Such a vehicle camera module can implement stable optical performance even under ambient temperature changes and can provide a module with price competitiveness, thereby ensuring the reliability of vehicle components.

The features, structures, effects, and the like described in the embodiments above are included in at least one embodiment and are not necessarily limited to only one embodiment. Furthermore, the features, structures, effects, and the like illustrated in each embodiment can be combined or modified and implemented in other embodiments by a person with ordinary knowledge in the field to which the embodiments belong. Therefore, contents related to such combinations and modifications should be interpreted as being included in the scope of the embodiments.

In addition, although the above has been described with reference to embodiments, these are merely examples and do not limit the present invention, and those with ordinary skill in the art to which the present invention pertains will recognize that various modifications and applications not exemplified above are possible without departing from the essential characteristics of the present invention. For example, each component specifically shown in the examples can be modified and implemented. And, the differences related to such modifications and applications should be interpreted as being included in the scope of the present invention defined in the appended claims.

## Claims

**1.** An optical system comprising:

a first to seventh lenses being disposed along an optical axis,
wherein the first lens has a positive (+) or negative (-) refractive power,
wherein the second lens has a positive (+) or negative (-) refractive power,
wherein the third lens has a positive (+) refractive power,
wherein the fourth lens has a positive (+) refractive power,

wherein the fifth lens has a negative (-) refractive power,
wherein the sixth lens has a positive (+) refractive power,
wherein the seventh lens has a negative (-) refractive power,
wherein the sixth lens and the seventh lens are plastic lenses, and
wherein the radius of curvature of the sensor side surface of the fifth lens among the first to seventh lenses is the smallest.

**2.** The optical system according to claim 1,
wherein among the first to seventh lenses, the fifth lens has the shortest focal length.

**3.** The optical system according to claim 1,

wherein the fifth lens is a lens disposed adjacent to the object side of the plastic lens, and
wherein among the first to seventh lenses, the effective diameter of the sensor side surface of the fifth lens is the smallest.

**4.** The optical system according to claim 1,
wherein a gap between two adjacent lenses among the first to seventh lenses on an optical axis is the largest distance between the fifth lens and the sixth lens.

**5.** The optical system according to claim 1,

wherein the optical system includes a cemented lens, and
wherein excluding a cemented lens surface of the cemented lens, one or less surfaces among an object side surface and a sensor side surface of the first to seventh lenses have a radius of curvature greater than a radius of curvature of an object side surface of the first lens on an optical axis.

**6.** An optical system comprising:

a first to seventh lenses being disposed along an optical axis,
wherein the first lens has a positive (+) or negative (-) refractive power,
wherein the second lens has a positive (+) or negative (-) refractive power,
wherein the third lens has a positive (+) refractive power,
wherein the fourth lens has a positive (+) refractive power,
wherein the fifth lens has a negative (-) refractive power,
wherein the sixth lens has a positive (+) refractive power,
wherein the seventh lens has a negative (-) refractive power,
wherein the fourth lens and the fifth lens are cemented lenses,
wherein among the maximum value of an absolute value of a slope angle of a object side surface and a sensor side surface of each of the first to seventh lenses, excluding cemented surface of each of the cemented lenses, the maximum value of the absolute value of the slope angle of the object side surface of the first lens is the smallest, and
wherein the slope angle is a normal slope at any point on a lens surface.

**7.** The optical system according to claim 6,
wherein among the first to seventh lenses, the difference between a sag value on an optical axis of an object side surface of the first lens and the maximum sag value of an object side surface of the first lens is the smallest.

**8.** An optical system comprising:

a first to seventh lenses being disposed along an optical axis,
wherein the third lens has a positive (+) refractive power,
wherein the fourth lens has a positive (+) refractive power,
wherein the fifth lens has a negative (-) refractive power,
wherein the sixth lens has a positive (+) refractive power,
wherein the seventh lens has a negative (-) refractive power,
wherein the fourth lens and the fifth lens are cemented lenses,
wherein the effective diameter of the first lens among the first to seventh lenses is the largest,

wherein the optical system satisfying a Conditional expression 1.2 < CAL1/ImgH < 1.5, and
wherein CAL1 is the size of an effective diameter of the first lens, and ImgH is 1/2 of the maximum diagonal length of an image sensor on an optical axis.

**9.** The optical system according to claim 8,
wherein among object side surfaces and sensor side surfaces of the first to seventh lenses, there are four or fewer lens surfaces with a radius of curvature greater than 60 mm.

**10.** The optical system according to claim 8,
wherein among object side surfaces and sensor side surfaces of the first to seventh lenses, there are four or more but no more than five lens surfaces with a radius of curvature smaller than 20 mm.

FIG. 1

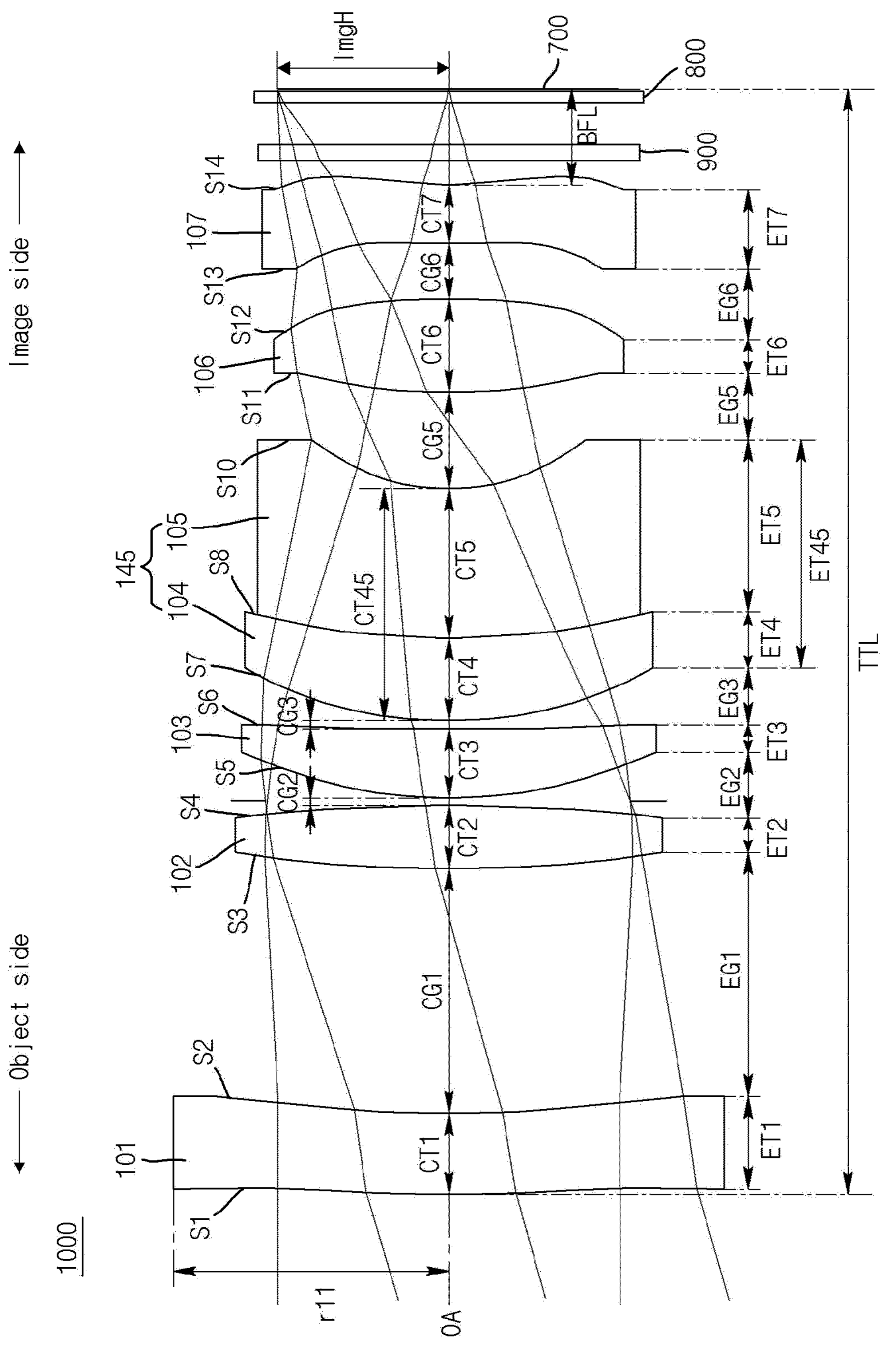
Image side
Object side
1000
101
102
103
104
105
106
107
145
700
800
900
S1
S2
S3
S4
S5
S6
S7
S8
S10
S11
S12
S13
S14
ImgH
BFL
CT1
CT2
CT3
CT4
CT5
CT6
CT7
CT45
CG1
CG2
CG3
CG5
CG6
ET1
ET2
ET3
ET4
ET5
ET6
ET7
ET45
EG1
EG2
EG3
EG5
EG6
TTL
r11
OA

FIG. 2

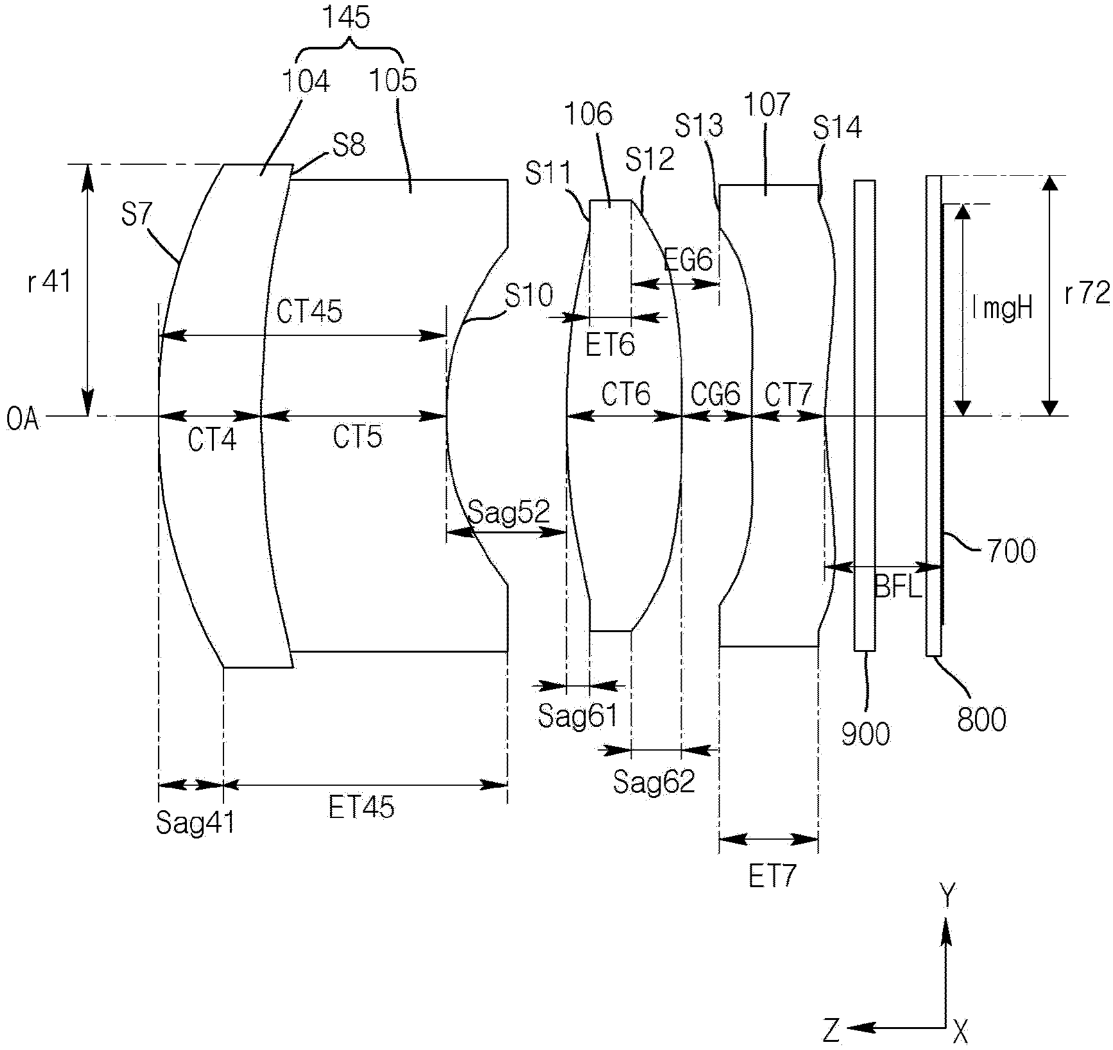
145
104
105
106
107
S7
S8
S10
S11
S12
S13
S14
r41
r72
CT45
CT4
CT5
CT6
CG6
CT7
ET6
EG6
ImgH
OA
Sag52
Sag61
Sag62
Sag41
ET45
ET7
BFL
700
800
900
Y
Z
X

FIG. 3

| | L1 | | L6 | | L7 | |
|---|---|---|---|---|---|---|
| | S1 | S2 | S1 | S2 | S1 | S2 |
| Y | 52.81438 | 32.43989 | 15.3779 | -30.0616 | 20.54211 | 9.063312 |
| K | -12.6152 | -5.57213 | -12.3378 | -59.7936 | 18.82039 | 2.437456 |
| A | -1.90E-04 | -1.60E-04 | 2.78E-04 | -2.32E-03 | -6.58E-03 | -5.91E-03 |
| B | 3.85E-06 | 5.84E-06 | -2.46E-05 | 1.84E-04 | 3.41E-04 | 2.73E-04 |
| C | -5.85E-07 | -1.01E-06 | 8.96E-06 | -1.75E-05 | -3.61E-05 | -2.25E-05 |
| D | 5.78E-08 | 1.11E-07 | -2.00E-06 | 1.75E-06 | 4.98E-06 | 2.50E-06 |
| E | -3.39E-09 | -7.23E-09 | 2.62E-07 | -1.72E-07 | -4.46E-07 | -2.47E-07 |
| F | 1.23E-10 | 2.87E-10 | -2.22E-08 | 1.22E-08 | 1.59E-08 | 1.55E-08 |
| G | -2.66E-12 | -6.84E-12 | 1.17E-09 | -5.38E-10 | 4.22E-10 | -5.83E-10 |
| H | 3.15E-14 | 8.92E-14 | -3.58E-11 | 1.23E-11 | -5.06E-11 | 1.21E-11 |
| J | -1.57E-16 | -4.89E-16 | 4.73E-13 | -1.00E-13 | 1.12E-12 | -1.12E-13 |

FIG. 4

| Y(Height, mm) | 1-2 | 2-3 | 3-4 | 4-5 | 5-6 | 6-7 | 7-8 | 8-9 | 9-10 | 10-11 | 11-12 | 12-13 | 13-14 | 14-15 |
|---|---|---|---|---|---|---|---|---|---|---|---|---|---|---|
| | L1 | Air | L2 | Air | L3 | Air | L4 | Air | L5 | Air | L6 | Air | L7 | Air-filter |
| 0 | 2.000 | 6.196 | 1.600 | 0.200 | 1.742 | 0.200 | 2.093 | 0.000 | 3.760 | 2.461 | 2.341 | 1.410 | 1.500 | 0.597 |
| 0.2 | 2.000 | 6.196 | 1.599 | 0.202 | 1.741 | 0.202 | 2.092 | 0.000 | 3.762 | 2.459 | 2.339 | 1.412 | 1.501 | 0.595 |
| 0.4 | 2.001 | 6.196 | 1.596 | 0.207 | 1.737 | 0.206 | 2.089 | 0.000 | 3.770 | 2.453 | 2.333 | 1.416 | 1.505 | 0.589 |
| 0.6 | 2.002 | 6.195 | 1.592 | 0.216 | 1.731 | 0.214 | 2.085 | 0.000 | 3.782 | 2.443 | 2.323 | 1.424 | 1.511 | 0.578 |
| 0.8 | 2.004 | 6.194 | 1.586 | 0.228 | 1.722 | 0.224 | 2.080 | 0.000 | 3.800 | 2.428 | 2.309 | 1.435 | 1.520 | 0.564 |
| 1 | 2.006 | 6.193 | 1.578 | 0.244 | 1.711 | 0.238 | 2.072 | 0.000 | 3.822 | 2.409 | 2.290 | 1.447 | 1.532 | 0.547 |
| 1.2 | 2.009 | 6.192 | 1.568 | 0.263 | 1.697 | 0.255 | 2.063 | 0.000 | 3.850 | 2.386 | 2.267 | 1.461 | 1.546 | 0.528 |
| 1.4 | 2.010 | 6.192 | 1.563 | 0.274 | 1.690 | 0.264 | 2.058 | 0.000 | 3.866 | 2.373 | 2.253 | 1.468 | 1.555 | 0.518 |
| 1.6 | 2.014 | 6.190 | 1.550 | 0.299 | 1.672 | 0.286 | 2.047 | 0.000 | 3.902 | 2.343 | 2.222 | 1.482 | 1.574 | 0.498 |
| 1.8 | 2.017 | 6.189 | 1.536 | 0.328 | 1.652 | 0.310 | 2.033 | 0.000 | 3.944 | 2.308 | 2.186 | 1.496 | 1.596 | 0.477 |
| 2 | 2.022 | 6.188 | 1.521 | 0.359 | 1.629 | 0.338 | 2.019 | 0.000 | 3.992 | 2.268 | 2.145 | 1.509 | 1.622 | 0.457 |
| 2.2 | 2.027 | 6.186 | 1.503 | 0.395 | 1.604 | 0.369 | 2.002 | 0.000 | 4.046 | 2.223 | 2.097 | 1.519 | 1.652 | 0.439 |
| 2.4 | 2.032 | 6.185 | 1.483 | 0.434 | 1.577 | 0.403 | 1.984 | 0.000 | 4.106 | 2.172 | 2.044 | 1.527 | 1.685 | 0.423 |
| 2.6 | 2.038 | 6.184 | 1.462 | 0.477 | 1.546 | 0.440 | 1.964 | 0.000 | 4.173 | 2.114 | 1.985 | 1.531 | 1.722 | 0.411 |
| 2.8 | 2.045 | 6.183 | 1.439 | 0.523 | 1.513 | 0.481 | 1.942 | 0.000 | 4.247 | 2.050 | 1.919 | 1.531 | 1.764 | 0.403 |
| 3 | 2.052 | 6.183 | 1.415 | 0.573 | 1.478 | 0.525 | 1.918 | 0.000 | 4.329 | 1.979 | 1.847 | 1.527 | 1.810 | 0.400 |
| 3.2 | 2.060 | 6.183 | 1.388 | 0.627 | 1.440 | 0.572 | 1.892 | 0.000 | 4.418 | 1.899 | 1.769 | 1.518 | 1.860 | 0.401 |
| 3.4 | 2.068 | 6.183 | 1.360 | 0.684 | 1.399 | 0.623 | 1.864 | 0.000 | 4.517 | 1.810 | 1.683 | 1.503 | 1.914 | 0.409 |
| 3.6 | 2.077 | 6.184 | 1.330 | 0.745 | 1.355 | 0.677 | 1.835 | 0.000 | 4.626 | 1.710 | 1.591 | 1.484 | 1.974 | 0.424 |
| 3.8 | 2.087 | 6.185 | 1.298 | 0.810 | 1.309 | 0.734 | 1.803 | 0.000 | 3.468 | 2.871 | 1.491 | 1.460 | 2.040 | 0.447 |
| 4 | 2.097 | 6.187 | 1.265 | 0.879 | 1.259 | 0.796 | 1.769 | 0.000 | 3.436 | 2.902 | 1.383 | 1.431 | 2.114 | 0.480 |
| 4.2 | 2.109 | 6.190 | 1.229 | 0.952 | 1.207 | 0.860 | 1.734 | 0.000 | 3.402 | 2.923 | 1.269 | 2.020 | 1.574 | 0.523 |
| 4.4 | 2.121 | 6.193 | 1.192 | 1.028 | 1.153 | 0.929 | 1.695 | 0.000 | 3.365 | | 2.341 | | 1.518 | 0.579 |
| 4.6 | 2.133 | 6.198 | 1.153 | 1.109 | 1.095 | 1.001 | 1.655 | 0.000 | 3.328 | | | | | |
| 4.8 | 2.147 | 6.203 | 1.112 | 1.193 | 1.034 | 1.077 | 1.141 | 0.000 | | | | | | |
| 5 | 2.162 | 6.209 | 1.070 | 1.282 | 0.970 | 1.158 | 1.054 | 0.000 | | | | | | |
| 5.2 | 2.177 | 6.216 | 1.274 | | | | | 0.000 | | | | | | |
| 5.4 | 2.194 | 5.872 | 1.600 | | | | | 0.000 | | | | | | |
| 5.6 | 2.212 | 5.854 | | | | | | | | | | | | |
| 5.8 | 2.230 | 5.836 | | | | | | | | | | | | |
| 6 | 2.250 | 5.818 | | | | | | | | | | | | |
| 6.2 | 2.272 | 5.800 | | | | | | | | | | | | |
| 6.4 | 2.294 | 5.782 | | | | | | | | | | | | |
| 6.6 | 1.887 | | | | | | | | | | | | | |

FIG. 5

| | sag | | | | | | | | | | | | | |
|---|---|---|---|---|---|---|---|---|---|---|---|---|---|---|
| Y(Height, mm) | | | | | | | | | | | | | | |
| | L1S1 | L1S2 | L2S1 | L2S2 | L3S1 | L3S2 | L4S1 | L4S2 | L5S1 | L5S2 | L6S1 | L6S2 | L7S1 | L7S2 |
| 0 | 0 | 0 | 0 | 0 | 0 | 0 | 0 | 0 | 0 | 0 | 0 | 0 | 0 | 0 |
| 0.2 | 0.000 | 0.001 | 0.000 | 0.000 | 0.001 | 0.000 | 0.002 | 0.001 | 0.001 | 0.003 | 0.001 | -0.001 | 0.001 | 0.002 |
| 0.4 | 0.002 | 0.002 | 0.002 | -0.002 | 0.006 | 0.001 | 0.007 | 0.003 | 0.003 | 0.013 | 0.005 | -0.003 | 0.004 | 0.009 |
| 0.6 | 0.003 | 0.006 | 0.004 | -0.003 | 0.012 | 0.001 | 0.015 | 0.008 | 0.008 | 0.030 | 0.012 | -0.006 | 0.008 | 0.019 |
| 0.8 | 0.006 | 0.010 | 0.008 | -0.006 | 0.022 | 0.002 | 0.027 | 0.014 | 0.014 | 0.054 | 0.021 | -0.011 | 0.013 | 0.033 |
| 1 | 0.009 | 0.015 | 0.012 | -0.010 | 0.035 | 0.003 | 0.041 | 0.021 | 0.021 | 0.084 | 0.032 | -0.019 | 0.018 | 0.050 |
| 1.2 | 0.013 | 0.022 | 0.018 | -0.014 | 0.050 | 0.005 | 0.060 | 0.030 | 0.030 | 0.121 | 0.047 | -0.028 | 0.023 | 0.069 |
| 1.4 | 0.015 | 0.026 | 0.021 | -0.016 | 0.058 | 0.006 | 0.070 | 0.036 | 0.036 | 0.143 | 0.055 | -0.033 | 0.025 | 0.079 |
| 1.6 | 0.020 | 0.034 | 0.028 | -0.021 | 0.078 | 0.008 | 0.093 | 0.048 | 0.048 | 0.191 | 0.073 | -0.046 | 0.026 | 0.100 |
| 1.8 | 0.026 | 0.043 | 0.036 | -0.028 | 0.100 | 0.010 | 0.120 | 0.061 | 0.061 | 0.246 | 0.093 | -0.062 | 0.024 | 0.121 |
| 2 | 0.032 | 0.053 | 0.045 | -0.034 | 0.125 | 0.012 | 0.150 | 0.076 | 0.076 | 0.309 | 0.116 | -0.081 | 0.018 | 0.140 |
| 2.2 | 0.038 | 0.065 | 0.055 | -0.042 | 0.153 | 0.015 | 0.184 | 0.093 | 0.093 | 0.380 | 0.141 | -0.103 | 0.007 | 0.158 |
| 2.4 | 0.045 | 0.077 | 0.066 | -0.050 | 0.184 | 0.018 | 0.221 | 0.112 | 0.112 | 0.458 | 0.169 | -0.128 | -0.011 | 0.174 |
| 2.6 | 0.052 | 0.090 | 0.078 | -0.060 | 0.217 | 0.021 | 0.262 | 0.132 | 0.132 | 0.546 | 0.199 | -0.157 | -0.036 | 0.186 |
| 2.8 | 0.059 | 0.104 | 0.091 | -0.069 | 0.254 | 0.025 | 0.306 | 0.155 | 0.155 | 0.642 | 0.231 | -0.191 | -0.069 | 0.194 |
| 3 | 0.066 | 0.118 | 0.105 | -0.080 | 0.293 | 0.028 | 0.353 | 0.178 | 0.178 | 0.747 | 0.265 | -0.228 | -0.112 | 0.198 |
| 3.2 | 0.074 | 0.134 | 0.120 | -0.092 | 0.335 | 0.032 | 0.405 | 0.204 | 0.204 | 0.863 | 0.301 | -0.271 | -0.164 | 0.196 |
| 3.4 | 0.081 | 0.149 | 0.136 | -0.104 | 0.380 | 0.037 | 0.459 | 0.231 | 0.231 | 0.989 | 0.338 | -0.320 | -0.226 | 0.188 |
| 3.6 | 0.088 | 0.166 | 0.153 | -0.117 | 0.429 | 0.041 | 0.518 | 0.260 | 0.260 | 1.127 | 0.375 | -0.375 | -0.301 | 0.173 |
| 3.8 | 0.095 | 0.182 | 0.171 | -0.131 | 0.480 | 0.046 | 0.581 | 0.291 | 0.291 | | 0.410 | -0.440 | -0.390 | 0.150 |
| 4 | 0.102 | 0.199 | 0.190 | -0.145 | 0.534 | 0.051 | 0.647 | 0.324 | 0.324 | | 0.441 | -0.517 | -0.496 | 0.118 |
| 4.2 | 0.108 | 0.217 | 0.210 | -0.160 | 0.592 | 0.057 | 0.717 | 0.358 | 0.358 | | 0.462 | -0.610 | | 0.074 |
| 4.4 | 0.114 | 0.234 | 0.231 | -0.176 | 0.652 | 0.062 | 0.791 | 0.394 | 0.394 | | | | | 0.018 |
| 4.6 | 0.119 | 0.252 | 0.254 | -0.193 | 0.716 | 0.068 | 0.869 | 0.432 | 0.432 | | | | | |
| 4.8 | 0.123 | 0.270 | 0.277 | -0.211 | 0.783 | 0.074 | 0.952 | | | | | | | |
| 5 | 0.126 | 0.288 | 0.301 | -0.229 | 0.853 | 0.081 | 1.038 | | | | | | | |
| 5.2 | 0.129 | 0.306 | 0.326 | | | | | | | | | | | |
| 5.4 | 0.130 | 0.324 | | | | | | | | | | | | |
| 5.6 | 0.131 | 0.342 | | | | | | | | | | | | |
| 5.8 | 0.130 | 0.360 | | | | | | | | | | | | |
| 6 | 0.128 | 0.378 | | | | | | | | | | | | |
| 6.2 | 0.124 | 0.396 | | | | | | | | | | | | |
| 6.4 | 0.119 | 0.414 | | | | | | | | | | | | |
| 6.6 | 0.113 | | | | | | | | | | | | | |

FIG. 6

| slope angle | | | | | | | | | | | | | | |
|---|---|---|---|---|---|---|---|---|---|---|---|---|---|---|
| Y(Height, mm) | | | | | | | | | | | | | | |
| | L1S1 | L1S2 | L2S1 | L2S2 | L3S1 | L3S2 | L4S1 | L4S2 | L5S1 | L5S2 | L6S1 | L6S2 | L7S1 | L7S2 |
| 0 | 0 | 0 | 0 | 0 | 0 | 0 | 0 | 0 | 0 | 0 | 0 | 0 | 0 | 0 |
| 0.2 | 0.162 | 0.265 | 0.215 | -0.164 | 0.593 | 0.058 | 0.711 | 0.363 | 0.363 | 1.433 | 0.559 | -0.288 | 0.413 | 0.944 |
| 0.4 | 0.378 | 0.616 | 0.501 | -0.382 | 1.383 | 0.135 | 1.660 | 0.848 | 0.848 | 3.344 | 1.303 | -0.687 | 0.914 | 2.159 |
| 0.6 | 0.589 | 0.965 | 0.787 | -0.600 | 2.173 | 0.212 | 2.609 | 1.332 | 1.332 | 5.260 | 2.044 | -1.124 | 1.298 | 3.273 |
| 0.8 | 0.794 | 1.308 | 1.073 | -0.819 | 2.964 | 0.289 | 3.559 | 1.817 | 1.817 | 7.181 | 2.781 | -1.614 | 1.507 | 4.238 |
| 1 | 0.992 | 1.644 | 1.359 | -1.037 | 3.755 | 0.366 | 4.510 | 2.301 | 2.301 | 9.110 | 3.511 | -2.171 | 1.492 | 5.013 |
| 1.2 | 1.180 | 1.972 | 1.645 | -1.256 | 4.547 | 0.443 | 5.462 | 2.786 | 2.786 | 11.051 | 4.235 | -2.800 | 1.216 | 5.566 |
| 1.4 | 1.269 | 2.132 | 1.788 | -1.365 | 4.944 | 0.482 | 5.939 | 3.029 | 3.029 | 12.025 | 4.594 | -3.143 | 0.970 | 5.754 |
| 1.6 | 1.439 | 2.444 | 2.075 | -1.583 | 5.737 | 0.559 | 6.894 | 3.514 | 3.514 | 13.986 | 5.306 | -3.885 | 0.252 | 5.941 |
| 1.8 | 1.594 | 2.744 | 2.361 | -1.802 | 6.532 | 0.636 | 7.850 | 3.999 | 3.999 | 15.963 | 6.010 | -4.699 | -0.774 | 5.876 |
| 2 | 1.732 | 3.030 | 2.647 | -2.020 | 7.328 | 0.713 | 8.808 | 4.485 | 4.485 | 17.960 | 6.706 | -5.579 | -2.104 | 5.561 |
| 2.2 | 1.852 | 3.300 | 2.934 | -2.238 | 8.125 | 0.790 | 9.769 | 4.971 | 4.971 | 19.979 | 7.390 | -6.522 | -3.722 | 5.006 |
| 2.4 | 1.952 | 3.554 | 3.220 | -2.457 | 8.924 | 0.867 | 10.734 | 5.458 | 5.458 | 22.025 | 8.058 | -7.527 | -5.600 | 4.224 |
| 2.6 | 2.030 | 3.789 | 3.507 | -2.676 | 9.724 | 0.944 | 11.701 | 5.944 | 5.944 | 24.101 | 8.702 | -8.597 | -7.707 | 3.233 |
| 2.8 | 2.084 | 4.005 | 3.793 | -2.894 | 10.527 | 1.022 | 12.671 | 6.432 | 6.432 | 26.211 | 9.304 | -9.748 | -10.020 | 2.042 |
| 3 | 2.114 | 4.203 | 4.080 | -3.113 | 11.331 | 1.099 | 13.645 | 6.920 | 6.920 | 28.361 | 9.840 | -11.006 | -12.530 | 0.655 |
| 3.2 | 2.117 | 4.380 | 4.367 | -3.331 | 12.138 | 1.176 | 14.624 | 7.407 | 7.407 | 30.554 | 10.267 | -12.417 | -15.237 | -0.938 |
| 3.4 | 2.094 | 4.538 | 4.654 | -3.550 | 12.947 | 1.253 | 15.606 | 7.896 | 7.896 | 32.799 | 10.508 | -14.059 | -18.159 | -2.757 |
| 3.6 | 2.044 | 4.676 | 4.942 | -3.769 | 13.759 | 1.330 | 16.593 | 8.386 | 8.386 | 35.100 | 10.429 | -16.055 | -21.348 | -4.829 |
| 3.8 | 1.966 | 4.795 | 5.229 | -3.988 | 14.574 | 1.407 | 17.585 | 8.876 | 8.876 | | 9.793 | -18.595 | -24.921 | -7.190 |
| 4 | 1.859 | 4.896 | 5.516 | -4.207 | 15.392 | 1.484 | 18.583 | 9.366 | 9.366 | | 8.189 | -21.919 | -28.976 | -9.892 |
| 4.2 | 1.724 | 4.977 | 5.803 | -4.426 | 16.213 | 1.561 | 19.587 | 9.857 | 9.857 | | 5.058 | -26.182 | | -13.021 |
| 4.4 | 1.560 | 5.042 | 6.091 | -4.645 | 17.038 | 1.639 | 20.597 | 10.349 | 10.349 | | | | | -16.669 |
| 4.6 | 1.370 | 5.092 | 6.379 | -4.864 | 17.866 | 1.716 | 21.614 | 10.842 | 10.842 | | | | | 8.914 |
| 4.8 | 1.152 | 5.129 | 6.666 | -5.083 | 18.698 | 1.793 | 22.638 | | | | | | | |
| 5 | 0.909 | 5.154 | 6.955 | -5.302 | 19.534 | 1.870 | 23.669 | | | | | | | |
| 5.2 | 0.642 | 5.166 | 7.243 | | | -40.073 | | | | | | | | |
| 5.4 | 0.349 | 5.162 | | | | | | | | | | | | |
| 5.6 | 0.030 | 5.140 | | | | | | | | | | | | |
| 5.8 | -0.320 | 5.110 | | | | | | | | | | | | |
| 6 | -0.696 | 5.098 | | | | | | | | | | | | |
| 6.2 | -1.082 | 5.140 | | | | | | | | | | | | |
| 6.4 | -1.452 | 5.182 | | | | | | | | | | | | |
| 6.6 | -1.797 | | | | | | | | | | | | | |
| 6.7 | -1.989 | | | | | | | | | | | | | |

FIG. 7

| CRA Data | | | |
|---|---|---|---|
| Field | Room temperature | Low temperature | High temperature |
| 0 | 0.0 | 0.0 | 0.0 |
| 0.1 | 2.7 | 2.7 | 2.6 |
| 0.2 | 5.3 | 5.3 | 5.3 |
| 0.3 | 7.9 | 7.9 | 7.8 |
| 0.4 | 10.3 | 10.4 | 10.3 |
| 0.5 | 12.6 | 12.7 | 12.6 |
| 0.6 | 14.8 | 14.8 | 14.7 |
| 0.7 | 16.7 | 16.8 | 16.7 |
| 0.8 | 18.3 | 18.3 | 18.3 |
| 0.9 | 19.4 | 19.4 | 19.4 |
| 1 | 19.8 | 19.7 | 19.9 |

FIG. 8

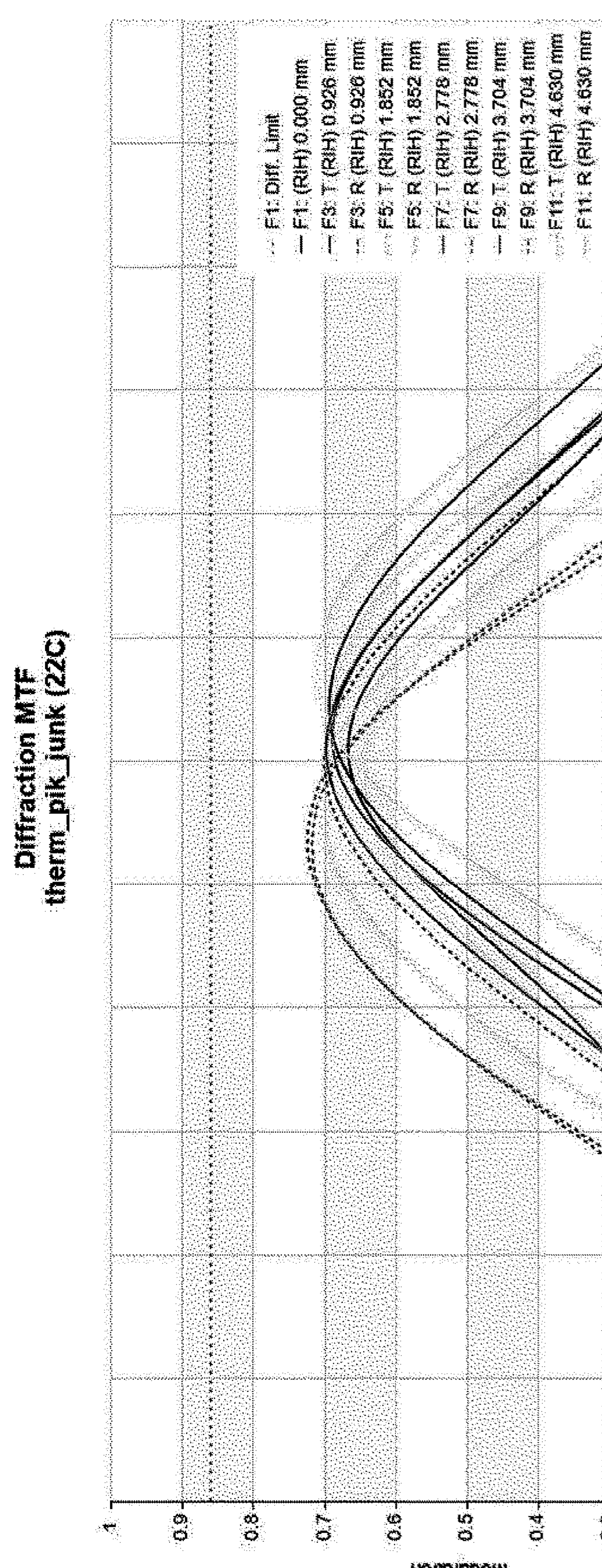
Diffraction MTF
therm_pik_junk (22C)
F1: Diff. Limit
F1: (RIH) 0.000 mm
F3: T (RIH) 0.926 mm
F3: R (RIH) 0.926 mm
F5: T (RIH) 1.852 mm
F5: R (RIH) 1.852 mm
F7: T (RIH) 2.778 mm
F7: R (RIH) 2.778 mm
F9: T (RIH) 3.704 mm
F9: R (RIH) 3.704 mm
F11: T (RIH) 4.630 mm
F11: R (RIH) 4.630 mm
Modulation
Defocusing Position (mm)
1
0.9
0.8
0.7
0.6
0.5
0.4
0.3
0.2
0.1
0
-0.025
-0.02
-0.015
-0.01
-0.005
0
0.005
0.01
0.015
0.02
0.025

FIG. 9

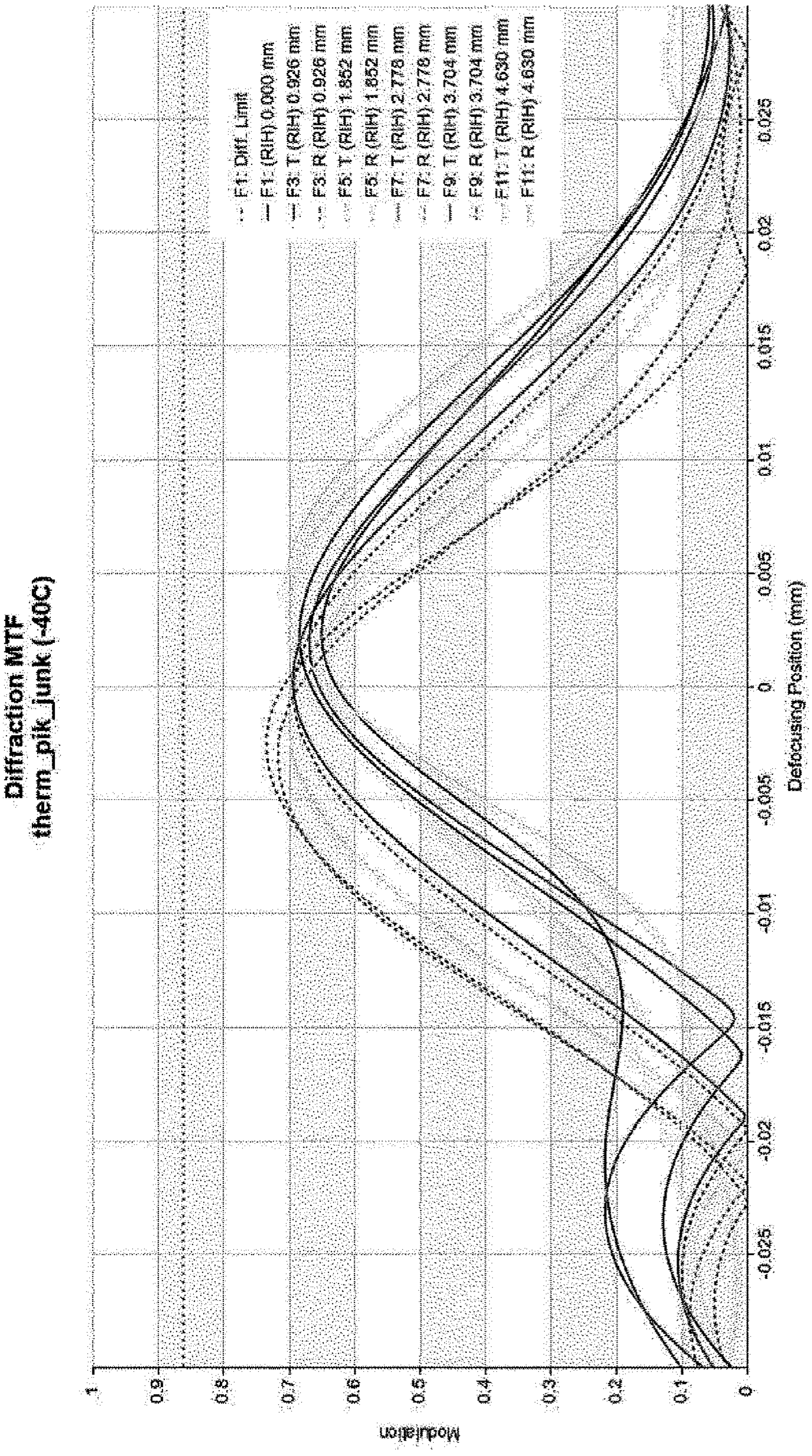
Diffraction MTF
therm_pik_junk (-40C)
Modulation
Defocusing Position (mm)
F1: Diff. Limit
F1: (RIH) 0.000 mm
F3: T (RIH) 0.926 mm
F3: R (RIH) 0.926 mm
F5: T (RIH) 1.852 mm
F5: R (RIH) 1.852 mm
F7: T (RIH) 2.778 mm
F7: R (RIH) 2.778 mm
F9: T (RIH) 3.704 mm
F9: R (RIH) 3.704 mm
F11: T (RIH) 4.630 mm
F11: R (RIH) 4.630 mm

FIG. 10

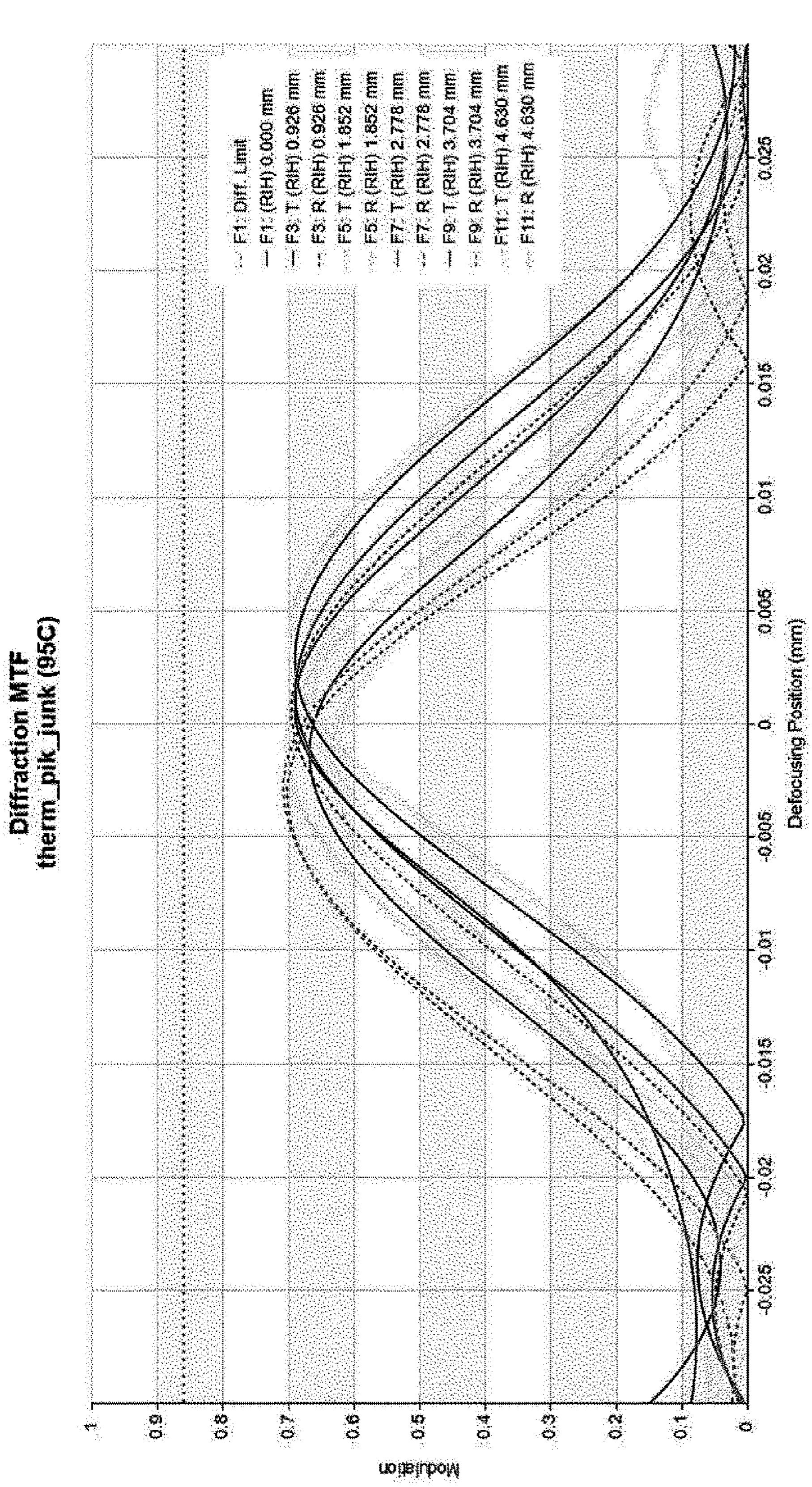
Diffraction MTF
therm_pik_junk (95C)
F1: Diff. Limit
F1: (RIH) 0.000 mm
F3: T (RIH) 0.926 mm
F3: R (RIH) 0.926 mm
F5: T (RIH) 1.852 mm
F5: R (RIH) 1.852 mm
F7: T (RIH) 2.778 mm
F7: R (RIH) 2.778 mm
F9: T (RIH) 3.704 mm
F9: R (RIH) 3.704 mm
F11: T (RIH) 4.630 mm
F11: R (RIH) 4.630 mm
Modulation
Defocusing Position (mm)
1
0.9
0.8
0.7
0.6
0.5
0.4
0.3
0.2
0.1
0
-0.025
-0.02
-0.015
-0.01
-0.005
0
0.005
0.01
0.015
0.02
0.025

FIG. 11

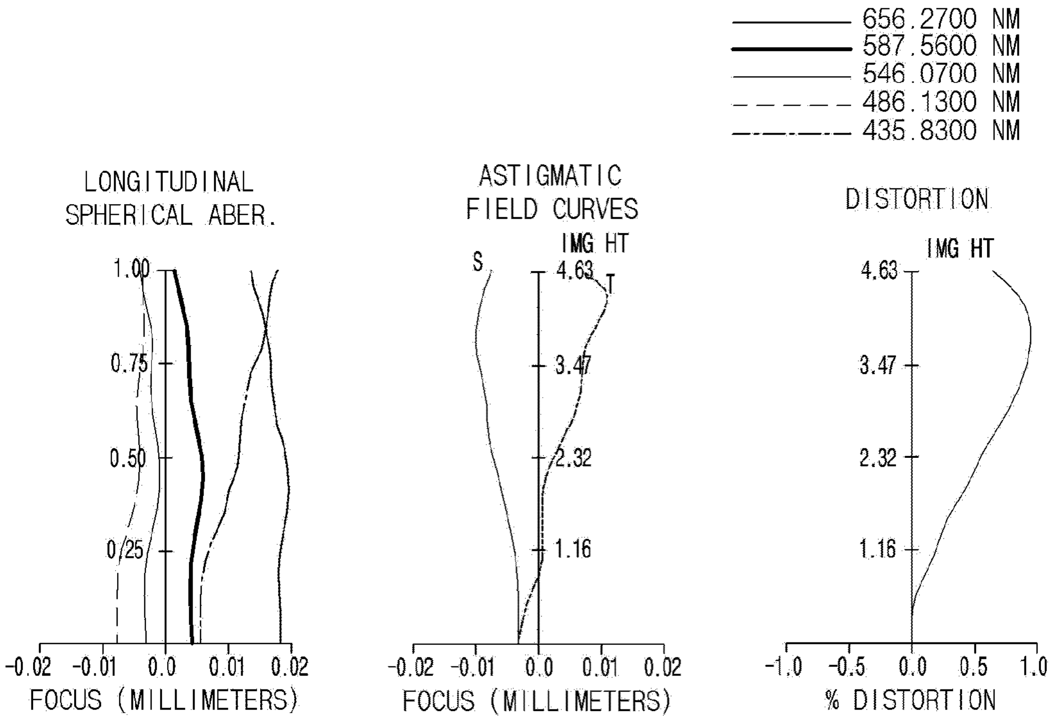
656.2700 NM
587.5600 NM
546.0700 NM
486.1300 NM
435.8300 NM
LONGITUDINAL SPHERICAL ABER.
1.00
0.75
0.50
0.25
-0.02 -0.01 0.0 0.01 0.02
FOCUS (MILLIMETERS)
ASTIGMATIC FIELD CURVES
IMG HT
S
T
4.63
3.47
2.32
1.16
-0.02 -0.01 0.0 0.01 0.02
FOCUS (MILLIMETERS)
DISTORTION
IMG HT
4.63
3.47
2.32
1.16
-1.0 -0.5 0.0 0.5 1.0
% DISTORTION

FIG. 12

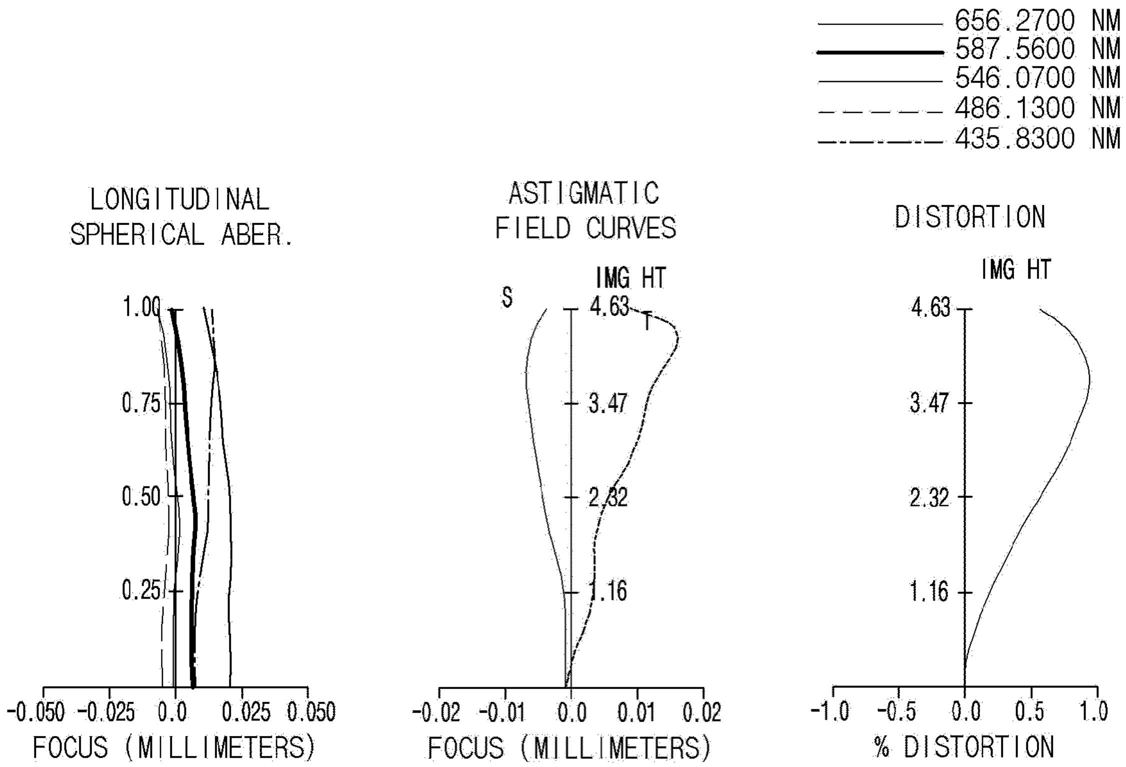
656.2700 NM
587.5600 NM
546.0700 NM
486.1300 NM
435.8300 NM
LONGITUDINAL SPHERICAL ABER.
1.00
0.75
0.50
0.25
-0.050 -0.025 0.0 0.025 0.050
FOCUS (MILLIMETERS)
ASTIGMATIC FIELD CURVES
IMG HT
S
T
4.63
3.47
2.32
1.16
-0.02 -0.01 0.0 0.01 0.02
FOCUS (MILLIMETERS)
DISTORTION
IMG HT
4.63
3.47
2.32
1.16
-1.0 -0.5 0.0 0.5 1.0
% DISTORTION

FIG. 13

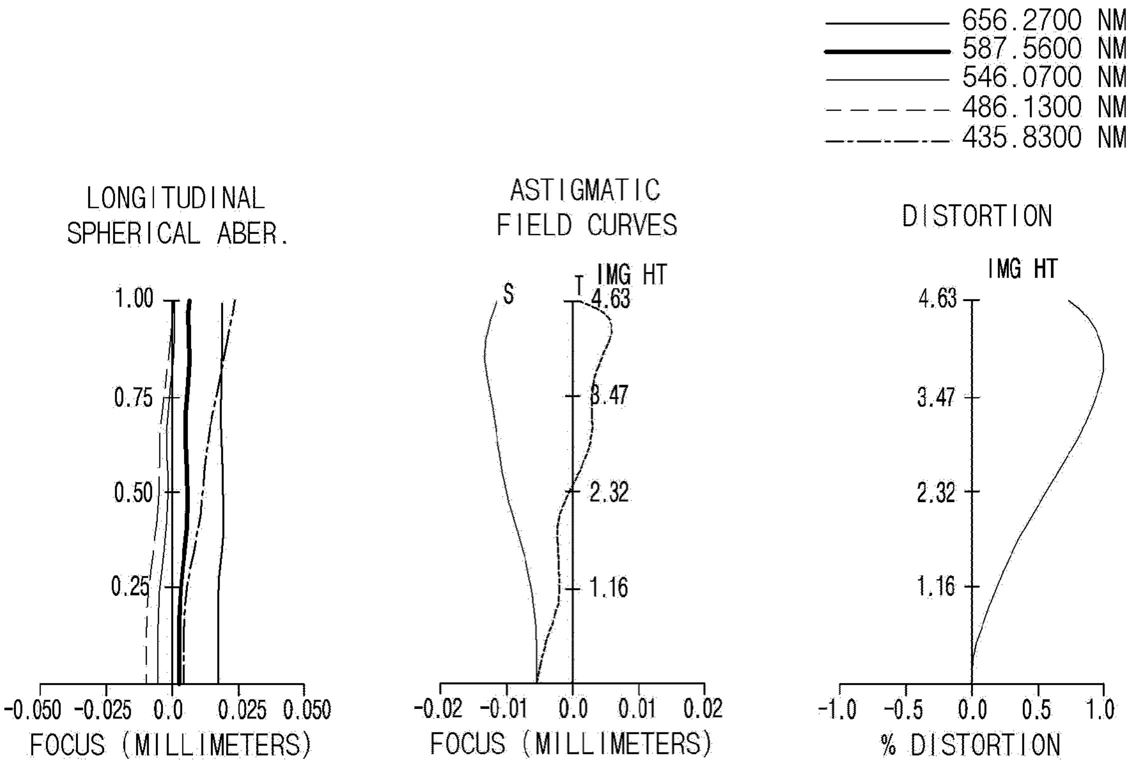
656.2700 NM
587.5600 NM
546.0700 NM
486.1300 NM
435.8300 NM
LONGITUDINAL
SPHERICAL ABER.
1.00
0.75
0.50
0.25
-0.050 -0.025 0.0 0.025 0.050
FOCUS (MILLIMETERS)
ASTIGMATIC
FIELD CURVES
S
T
IMG HT
4.63
3.47
2.32
1.16
-0.02 -0.01 0.0 0.01 0.02
FOCUS (MILLIMETERS)
DISTORTION
IMG HT
4.63
3.47
2.32
1.16
-1.0 -0.5 0.0 0.5 1.0
% DISTORTION

FIG. 14

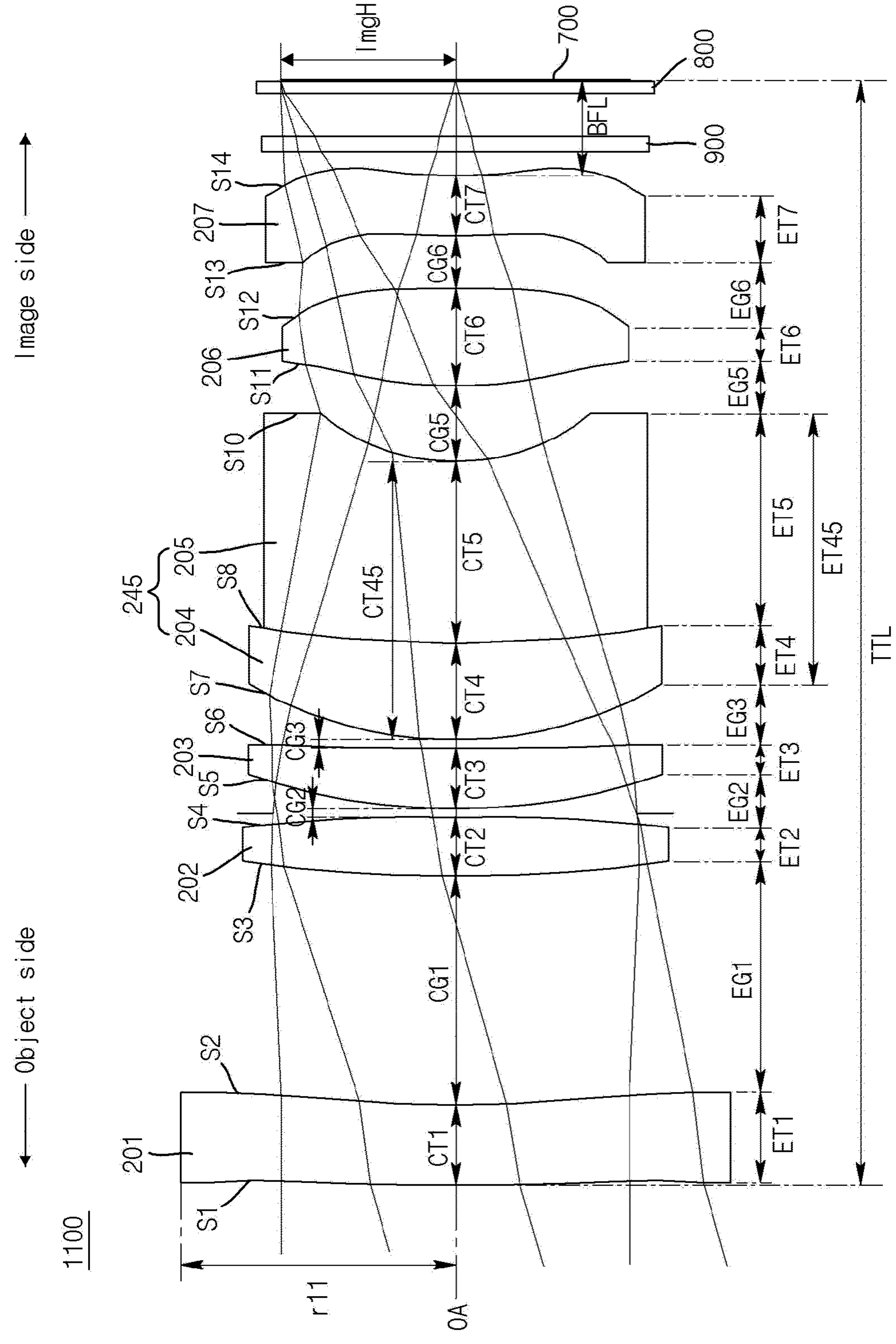
Image side
Object side
ImgH
700
800
BFL
900
S14
207
S13
S12
206
S11
S10
205
245
S8
204
S7
S6
203
S5
S4
202
S3
S2
201
S1
1100
r11
OA
CT1
CT2
CT3
CT4
CT5
CT6
CT7
CT45
CG1
CG2
CG3
CG5
CG6
ET1
ET2
ET3
ET4
ET5
ET6
ET7
ET45
EG1
EG2
EG3
EG5
EG6
TTL

FIG. 15

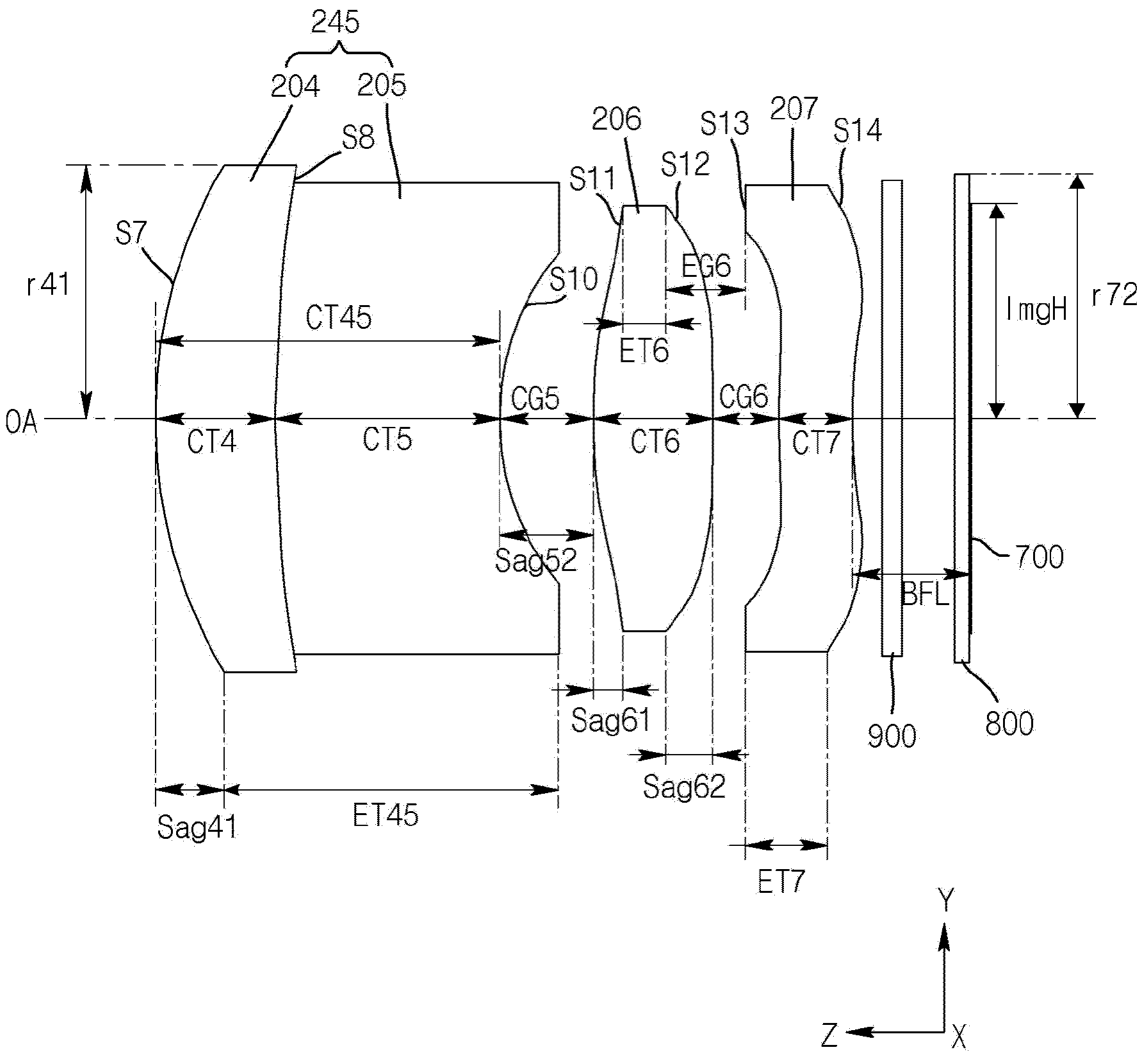
245
204
205
S8
206
S13
207
S14
S12
S11
S7
r41
S10
EG6
ImgH
r72
CT45
ET6
OA
CG5
CG6
CT4
CT5
CT6
CT7
Sag52
700
BFL
Sag61
900
800
Sag62
Sag41
ET45
ET7
Y
Z
X

FIG. 16

| | L1 | | L6 | | L7 | |
|---|---|---|---|---|---|---|
| | S1 | S2 | S1 | S2 | S1 | S2 |
| Y | 51.35969 | 33.88956 | 12.28023 | -116.265 | 12.81507 | 8.544753 |
| K | -19.1537 | -11.292 | -9.87603 | 99 | 7.152192 | 1.947695 |
| A | -2.19E-04 | -1.95E-04 | 2.85E-04 | -3.43E-03 | -8.12E-03 | -6.41E-03 |
| B | 3.73E-06 | 4.27E-06 | -5.19E-06 | 3.09E-04 | 3.66E-04 | 2.09E-04 |
| C | -6.51E-07 | -8.46E-07 | 8.28E-06 | -3.29E-05 | -4.44E-05 | -9.49E-06 |
| D | 7.08E-08 | 1.06E-07 | -2.87E-06 | 2.98E-06 | 5.45E-06 | 7.94E-07 |
| E | -4.51E-09 | -7.59E-09 | 4.60E-07 | -2.31E-07 | -3.04E-07 | -8.80E-08 |
| F | 1.74E-10 | 3.27E-10 | -4.37E-08 | 1.33E-08 | -1.50E-08 | 5.33E-09 |
| G | -4.02E-12 | -8.32E-12 | 2.49E-09 | -4.81E-10 | 3.12E-09 | -1.56E-10 |
| H | 5.05E-14 | 1.15E-13 | -7.99E-11 | 7.51E-12 | -1.65E-10 | 1.42E-12 |
| J | -2.66E-16 | -6.66E-16 | 1.10E-12 | 4.76E-15 | 3.05E-12 | 9.17E-15 |

FIG. 17

| Y(Height, mm) | 1-2 | 2-3 | 3-4 | 4-5 | 5-6 | 6-7 | 7-8 | 8-9 | 9-10 | 10-11 | 11-12 | 12-13 | 13-14 | 14-15 |
|---|---|---|---|---|---|---|---|---|---|---|---|---|---|---|
| | L1 | Air | L2 | Air | L3 | Air | L4 | Air | L5 | Air | L6 | Air | L7 | Air-filter |
| 0 | 2.000 | 5.673 | 1.481 | 0.200 | 1.517 | 0.200 | 2.415 | 0.000 | 4.530 | 1.884 | 2.418 | 1.297 | 1.500 | 0.585 |
| 0.2 | 2.000 | 5.673 | 1.481 | 0.201 | 1.516 | 0.202 | 2.414 | 0.000 | 4.533 | 1.882 | 2.416 | 1.299 | 1.501 | 0.583 |
| 0.4 | 2.001 | 5.672 | 1.478 | 0.206 | 1.513 | 0.207 | 2.411 | 0.000 | 4.541 | 1.877 | 2.411 | 1.304 | 1.503 | 0.576 |
| 0.6 | 2.002 | 5.672 | 1.474 | 0.213 | 1.508 | 0.215 | 2.405 | 0.000 | 4.555 | 1.868 | 2.401 | 1.312 | 1.507 | 0.565 |
| 0.8 | 2.003 | 5.671 | 1.469 | 0.223 | 1.501 | 0.226 | 2.396 | 0.000 | 4.575 | 1.855 | 2.388 | 1.323 | 1.513 | 0.550 |
| 1 | 2.005 | 5.670 | 1.462 | 0.236 | 1.492 | 0.241 | 2.386 | 0.000 | 4.601 | 1.839 | 2.370 | 1.336 | 1.521 | 0.532 |
| 1.2 | 2.007 | 5.668 | 1.454 | 0.252 | 1.481 | 0.259 | 2.373 | 0.000 | 4.633 | 1.818 | 2.347 | 1.351 | 1.532 | 0.512 |
| 1.4 | 2.009 | 5.668 | 1.449 | 0.261 | 1.475 | 0.269 | 2.365 | 0.000 | 4.651 | 1.807 | 2.334 | 1.358 | 1.538 | 0.502 |
| 1.6 | 2.011 | 5.666 | 1.438 | 0.281 | 1.461 | 0.292 | 2.349 | 0.000 | 4.691 | 1.780 | 2.303 | 1.374 | 1.552 | 0.480 |
| 1.8 | 2.015 | 5.665 | 1.426 | 0.304 | 1.445 | 0.318 | 2.330 | 0.000 | 4.739 | 1.749 | 2.267 | 1.388 | 1.569 | 0.460 |
| 2 | 2.018 | 5.663 | 1.412 | 0.329 | 1.427 | 0.348 | 2.308 | 0.000 | 4.792 | 1.713 | 2.224 | 1.401 | 1.590 | 0.440 |
| 2.2 | 2.022 | 5.662 | 1.397 | 0.358 | 1.408 | 0.381 | 2.284 | 0.000 | 4.853 | 1.672 | 2.175 | 1.411 | 1.615 | 0.424 |
| 2.4 | 2.027 | 5.661 | 1.380 | 0.390 | 1.386 | 0.417 | 2.258 | 0.000 | 4.920 | 1.626 | 2.119 | 1.417 | 1.644 | 0.411 |
| 2.6 | 2.032 | 5.660 | 1.362 | 0.424 | 1.362 | 0.457 | 2.229 | 0.000 | 4.996 | 1.573 | 2.055 | 1.418 | 1.678 | 0.403 |
| 2.8 | 2.037 | 5.659 | 1.342 | 0.462 | 1.335 | 0.501 | 2.197 | 0.000 | 5.079 | 1.514 | 1.984 | 1.414 | 1.717 | 0.400 |
| 3 | 2.043 | 5.659 | 1.320 | 0.502 | 1.307 | 0.548 | 2.162 | 0.000 | 5.170 | 1.448 | 1.904 | 1.403 | 1.762 | 0.404 |
| 3.2 | 2.049 | 5.659 | 1.297 | 0.546 | 1.277 | 0.599 | 2.125 | 0.000 | 5.271 | 1.373 | 1.817 | 1.386 | 1.812 | 0.416 |
| 3.4 | 2.056 | 5.660 | 1.273 | 0.592 | 1.245 | 0.653 | 2.086 | 0.000 | 5.382 | 1.288 | 1.720 | 1.361 | 1.870 | 0.436 |
| 3.6 | 2.063 | 5.662 | 1.246 | 0.642 | 1.211 | 0.711 | 2.043 | 0.000 | 5.503 | 1.191 | 1.614 | 1.327 | 1.935 | 0.466 |
| 3.8 | 2.071 | 5.665 | 1.219 | 0.694 | 1.174 | 0.773 | 1.997 | 0.000 | 4.332 | 2.382 | 1.499 | 1.285 | 2.009 | 0.507 |
| 4 | 2.079 | 5.668 | 1.190 | 0.749 | 1.135 | 0.839 | 1.949 | 0.000 | 4.310 | 2.417 | 1.374 | 1.234 | 2.097 | 0.561 |
| 4.2 | 2.088 | 5.673 | 1.159 | 0.808 | 1.095 | 0.908 | 1.897 | 0.000 | 4.287 | | 1.795 | 1.920 | 1.455 | 0.630 |
| 4.4 | 2.098 | 5.678 | 1.127 | 0.869 | 1.052 | 0.982 | 1.843 | 0.000 | 4.262 | | | | 1.368 | 0.716 |
| 4.6 | 2.108 | 5.685 | 1.093 | 0.934 | 1.007 | 1.060 | 1.785 | 0.000 | 4.237 | | | | 1.261 | 0.823 |
| 4.8 | 2.118 | 5.694 | 1.057 | 1.001 | 0.959 | 1.143 | 1.404 | 0.000 | | | | | | |
| 5 | 2.130 | 5.704 | 1.020 | 1.072 | 0.910 | 1.229 | 1.311 | 0.000 | | | | | | |
| 5.2 | 2.142 | 5.421 | | | | | | 0.000 | | | | | | |
| 5.4 | 2.155 | 5.410 | | | | | | 0.000 | | | | | | |
| 5.6 | 2.169 | 5.401 | | | | | | 0.000 | | | | | | |
| 5.8 | 2.183 | 5.392 | | | | | | 0.000 | | | | | | |
| 6 | 2.199 | 5.384 | | | | | | 0.000 | | | | | | |
| 6.2 | 2.215 | 5.376 | | | | | | 0.000 | | | | | | |
| 6.4 | 2.233 | 5.370 | | | | | | | | | | | | |
| 6.6 | 1.943 | | | | | | | | | | | | | |

FIG. 18

| | sag | | | | | | | | | | | | | |
|---|---|---|---|---|---|---|---|---|---|---|---|---|---|---|
| Y(Height, mm) | | | | | | | | | | | | | | |
| | L1S1 | L1S2 | L2S1 | L2S2 | L3S1 | L3S2 | L4S1 | L4S2 | L5S1 | L5S2 | L6S1 | L6S2 | L7S1 | L7S2 |
| 0 | 0.000 | 0.000 | 0.000 | 0.000 | 0.000 | 0.000 | 0.000 | 0.000 | 0.000 | 0.000 | 0.000 | 0.000 | 0.000 | 0.000 |
| 0.2 | 0.000 | 0.001 | 0.000 | 0.000 | 0.001 | 0.000 | 0.002 | 0.001 | 0.001 | 0.003 | 0.002 | 0.000 | 0.002 | 0.002 |
| 0.4 | 0.002 | 0.002 | 0.002 | -0.001 | 0.004 | 0.001 | 0.007 | 0.002 | 0.002 | 0.014 | 0.007 | -0.001 | 0.006 | 0.009 |
| 0.6 | 0.003 | 0.005 | 0.004 | -0.003 | 0.010 | 0.001 | 0.016 | 0.005 | 0.005 | 0.031 | 0.015 | -0.002 | 0.013 | 0.020 |
| 0.8 | 0.006 | 0.009 | 0.007 | -0.005 | 0.018 | 0.002 | 0.028 | 0.009 | 0.009 | 0.054 | 0.026 | -0.004 | 0.022 | 0.035 |
| 1 | 0.010 | 0.015 | 0.011 | -0.008 | 0.028 | 0.003 | 0.044 | 0.014 | 0.014 | 0.085 | 0.040 | -0.007 | 0.032 | 0.053 |
| 1.2 | 0.014 | 0.021 | 0.016 | -0.011 | 0.040 | 0.005 | 0.063 | 0.021 | 0.021 | 0.123 | 0.058 | -0.013 | 0.041 | 0.073 |
| 1.4 | 0.016 | 0.024 | 0.019 | -0.013 | 0.047 | 0.005 | 0.074 | 0.024 | 0.024 | 0.145 | 0.068 | -0.016 | 0.046 | 0.083 |
| 1.6 | 0.021 | 0.032 | 0.025 | -0.018 | 0.063 | 0.007 | 0.099 | 0.032 | 0.032 | 0.194 | 0.090 | -0.024 | 0.053 | 0.105 |
| 1.8 | 0.026 | 0.041 | 0.033 | -0.023 | 0.081 | 0.009 | 0.127 | 0.042 | 0.042 | 0.250 | 0.116 | -0.035 | 0.056 | 0.125 |
| 2 | 0.032 | 0.050 | 0.041 | -0.028 | 0.101 | 0.011 | 0.159 | 0.052 | 0.052 | 0.314 | 0.144 | -0.050 | 0.054 | 0.145 |
| 2.2 | 0.039 | 0.061 | 0.050 | -0.035 | 0.123 | 0.014 | 0.195 | 0.064 | 0.064 | 0.386 | 0.175 | -0.068 | 0.046 | 0.161 |
| 2.4 | 0.045 | 0.072 | 0.060 | -0.042 | 0.148 | 0.017 | 0.234 | 0.076 | 0.076 | 0.467 | 0.209 | -0.090 | 0.030 | 0.174 |
| 2.6 | 0.052 | 0.084 | 0.070 | -0.049 | 0.175 | 0.020 | 0.277 | 0.090 | 0.090 | 0.556 | 0.246 | -0.117 | 0.004 | 0.182 |
| 2.8 | 0.059 | 0.096 | 0.082 | -0.058 | 0.204 | 0.023 | 0.324 | 0.105 | 0.105 | 0.654 | 0.285 | -0.149 | -0.032 | 0.185 |
| 3 | 0.066 | 0.109 | 0.095 | -0.066 | 0.236 | 0.026 | 0.374 | 0.121 | 0.121 | 0.762 | 0.326 | -0.187 | -0.081 | 0.181 |
| 3.2 | 0.073 | 0.122 | 0.108 | -0.076 | 0.270 | 0.030 | 0.429 | 0.139 | 0.139 | 0.880 | 0.369 | -0.232 | -0.143 | 0.169 |
| 3.4 | 0.080 | 0.136 | 0.123 | -0.086 | 0.306 | 0.034 | 0.487 | 0.157 | 0.157 | 1.009 | 0.414 | -0.284 | -0.221 | 0.149 |
| 3.6 | 0.086 | 0.149 | 0.138 | -0.097 | 0.345 | 0.038 | 0.549 | 0.177 | 0.177 | 1.150 | 0.457 | -0.346 | -0.316 | 0.119 |
| 3.8 | 0.092 | 0.163 | 0.154 | -0.108 | 0.386 | 0.043 | 0.616 | 0.198 | 0.198 | | 0.499 | -0.420 | -0.432 | 0.077 |
| 4 | 0.097 | 0.176 | 0.172 | -0.120 | 0.429 | 0.048 | 0.686 | 0.220 | 0.220 | | 0.533 | -0.511 | -0.573 | 0.024 |
| 4.2 | 0.102 | 0.190 | 0.190 | -0.133 | 0.475 | 0.053 | 0.761 | 0.243 | 0.243 | | | -0.623 | | -0.045 |
| 4.4 | 0.106 | 0.203 | 0.209 | -0.146 | 0.523 | 0.058 | 0.840 | 0.268 | 0.268 | | | | | -0.132 |
| 4.6 | 0.108 | 0.216 | 0.229 | -0.160 | 0.574 | 0.063 | 0.924 | 0.293 | 0.293 | | | | | -0.239 |
| 4.8 | 0.110 | 0.229 | 0.249 | -0.174 | 0.627 | 0.069 | 1.012 | | | | | | | |
| 5 | 0.111 | 0.241 | 0.271 | -0.190 | 0.683 | 0.075 | 1.104 | | | | | | | |
| 5.2 | 0.110 | 0.252 | | | | | | | | | | | | |
| 5.4 | 0.108 | 0.263 | | | | | | | | | | | | |
| 5.6 | 0.104 | 0.272 | | | | | | | | | | | | |
| 5.8 | 0.098 | 0.281 | | | | | | | | | | | | |
| 6 | 0.091 | 0.289 | | | | | | | | | | | | |
| 6.2 | 0.081 | 0.297 | | | | | | | | | | | | |
| 6.3 | 0.076 | 0.300 | | | | | | | | | | | | |
| 6.4 | 0.070 | 0.303 | | | | | | | | | | | | |
| 6.6 | 0.057 | | | | | | | | | | | | | |

FIG. 19

| slope angle | | | | | | | | | | | | | | |
|---|---|---|---|---|---|---|---|---|---|---|---|---|---|---|
| Y(Height, mm) | | | | | | | | | | | | | | |
| | L1S1 | L1S2 | L2S1 | L2S2 | L3S1 | L3S2 | L4S1 | L4S2 | L5S1 | L5S2 | L6S1 | L6S2 | L7S1 | L7S2 |
| 0 | 0.000 | 0.000 | 0.000 | 0.000 | 0.000 | 0.000 | 0.000 | 0.000 | 0.000 | 0.000 | 0.000 | 0.000 | 0.000 | 0.000 |
| 0.2 | 0.167 | 0.253 | 0.194 | -0.135 | 0.479 | 0.054 | 0.752 | 0.248 | 0.248 | 1.457 | 0.700 | -0.077 | 0.664 | 1.001 |
| 0.4 | 0.388 | 0.589 | 0.452 | -0.316 | 1.118 | 0.126 | 1.756 | 0.578 | 0.578 | 3.401 | 1.629 | -0.206 | 1.489 | 2.288 |
| 0.6 | 0.605 | 0.921 | 0.710 | -0.497 | 1.758 | 0.197 | 2.760 | 0.909 | 0.909 | 5.349 | 2.553 | -0.398 | 2.171 | 3.464 |
| 0.8 | 0.814 | 1.246 | 0.968 | -0.678 | 2.397 | 0.269 | 3.765 | 1.239 | 1.239 | 7.303 | 3.466 | -0.680 | 2.638 | 4.473 |
| 1 | 1.014 | 1.562 | 1.226 | -0.859 | 3.037 | 0.341 | 4.771 | 1.570 | 1.570 | 9.266 | 4.367 | -1.072 | 2.829 | 5.265 |
| 1.2 | 1.202 | 1.866 | 1.484 | -1.039 | 3.677 | 0.413 | 5.778 | 1.900 | 1.900 | 11.240 | 5.255 | -1.587 | 2.691 | 5.802 |
| 1.4 | 1.291 | 2.014 | 1.613 | -1.130 | 3.997 | 0.449 | 6.282 | 2.065 | 2.065 | 12.232 | 5.693 | -1.892 | 2.485 | 5.966 |
| 1.6 | 1.458 | 2.297 | 1.871 | -1.310 | 4.638 | 0.520 | 7.293 | 2.396 | 2.396 | 14.228 | 6.560 | -2.598 | 1.778 | 6.070 |
| 1.8 | 1.606 | 2.563 | 2.130 | -1.491 | 5.280 | 0.592 | 8.305 | 2.727 | 2.727 | 16.240 | 7.413 | -3.430 | 0.656 | 5.865 |
| 2 | 1.735 | 2.811 | 2.388 | -1.672 | 5.922 | 0.664 | 9.320 | 3.058 | 3.058 | 18.275 | 8.248 | -4.385 | -0.895 | 5.348 |
| 2.2 | 1.841 | 3.037 | 2.646 | -1.853 | 6.565 | 0.736 | 10.339 | 3.389 | 3.389 | 20.333 | 9.060 | -5.464 | -2.870 | 4.522 |
| 2.4 | 1.922 | 3.239 | 2.904 | -2.034 | 7.208 | 0.808 | 11.360 | 3.720 | 3.720 | 22.419 | 9.841 | -6.668 | -5.252 | 3.396 |
| 2.6 | 1.977 | 3.418 | 3.163 | -2.215 | 7.853 | 0.879 | 12.385 | 4.051 | 4.051 | 24.536 | 10.578 | -8.007 | -8.010 | 1.983 |
| 2.8 | 2.003 | 3.570 | 3.421 | -2.395 | 8.499 | 0.951 | 13.414 | 4.382 | 4.382 | 26.691 | 11.253 | -9.496 | -11.113 | 0.291 |
| 3 | 1.999 | 3.694 | 3.680 | -2.576 | 9.146 | 1.023 | 14.448 | 4.713 | 4.713 | 28.886 | 11.836 | -11.163 | -14.529 | -1.674 |
| 3.2 | 1.963 | 3.792 | 3.939 | -2.757 | 9.794 | 1.095 | 15.486 | 5.045 | 5.045 | 31.129 | 12.277 | -13.054 | -18.235 | -3.917 |
| 3.4 | 1.894 | 3.861 | 4.197 | -2.938 | 10.443 | 1.167 | 16.530 | 5.377 | 5.377 | 33.426 | 12.480 | -15.252 | -22.218 | -6.450 |
| 3.6 | 1.791 | 3.901 | 4.456 | -3.119 | 11.093 | 1.238 | 17.579 | 5.709 | 5.709 | 35.788 | 12.271 | -17.894 | -26.528 | -9.287 |
| 3.8 | 1.653 | 3.912 | 4.715 | -3.300 | 11.745 | 1.310 | 18.635 | 6.041 | 6.041 | | 11.328 | -21.202 | -31.328 | -12.453 |
| 4 | 1.479 | 3.893 | 4.974 | -3.482 | 12.399 | 1.382 | 19.697 | 6.374 | 6.374 | | 9.123 | -25.422 | -36.622 | -15.995 |
| 4.2 | 1.267 | 3.844 | 5.233 | -3.662 | 13.054 | 1.454 | 20.766 | 6.706 | 6.706 | | | -30.548 | | -19.999 |
| 4.4 | 1.019 | 3.768 | 5.493 | -3.844 | 13.711 | 1.525 | 21.843 | 7.039 | 7.039 | | | | | -24.535 |
| 4.6 | 0.734 | 3.666 | 5.751 | -4.025 | 14.370 | 1.597 | 22.928 | 7.372 | 7.372 | | | | | -29.305 |
| 4.8 | 0.415 | 3.539 | 6.011 | -4.206 | 15.031 | 1.669 | 24.023 | | | | | | | |
| 5 | 0.061 | 3.387 | 6.271 | -4.387 | 15.693 | 1.741 | 25.127 | | | | | | | |
| 5.2 | -0.328 | 3.206 | | | | | | | | | | | | |
| 5.4 | -0.753 | 2.992 | | | | | | | | | | | | |
| 5.6 | -1.220 | 2.746 | | | | | | | | | | | | |
| 5.8 | -1.729 | 2.489 | | | | | | | | | | | | |
| 6 | -2.267 | 2.256 | | | | | | | | | | | | |
| 6.2 | -2.807 | 2.058 | | | | | | | | | | | | |
| 6.4 | -3.328 | 1.657 | | | | | | | | | | | | |
| 6.6 | -3.914 | | | | | | | | | | | | | |

FIG. 20

| CRA Data | | | |
|---|---|---|---|
| Field | Room temperature | Low temperature | High temperature |
| 0 | 0.0 | 0.0 | 0.0 |
| 0.1 | 2.7 | 2.7 | 2.7 |
| 0.2 | 5.3 | 5.3 | 5.3 |
| 0.3 | 7.9 | 7.9 | 7.9 |
| 0.4 | 10.4 | 10.4 | 10.3 |
| 0.5 | 12.7 | 12.7 | 12.6 |
| 0.6 | 14.8 | 14.8 | 14.7 |
| 0.7 | 16.6 | 16.6 | 16.5 |
| 0.8 | 17.9 | 17.9 | 17.9 |
| 0.9 | 18.8 | 18.7 | 18.8 |
| 1 | 19.0 | 18.9 | 19.1 |

FIG. 21

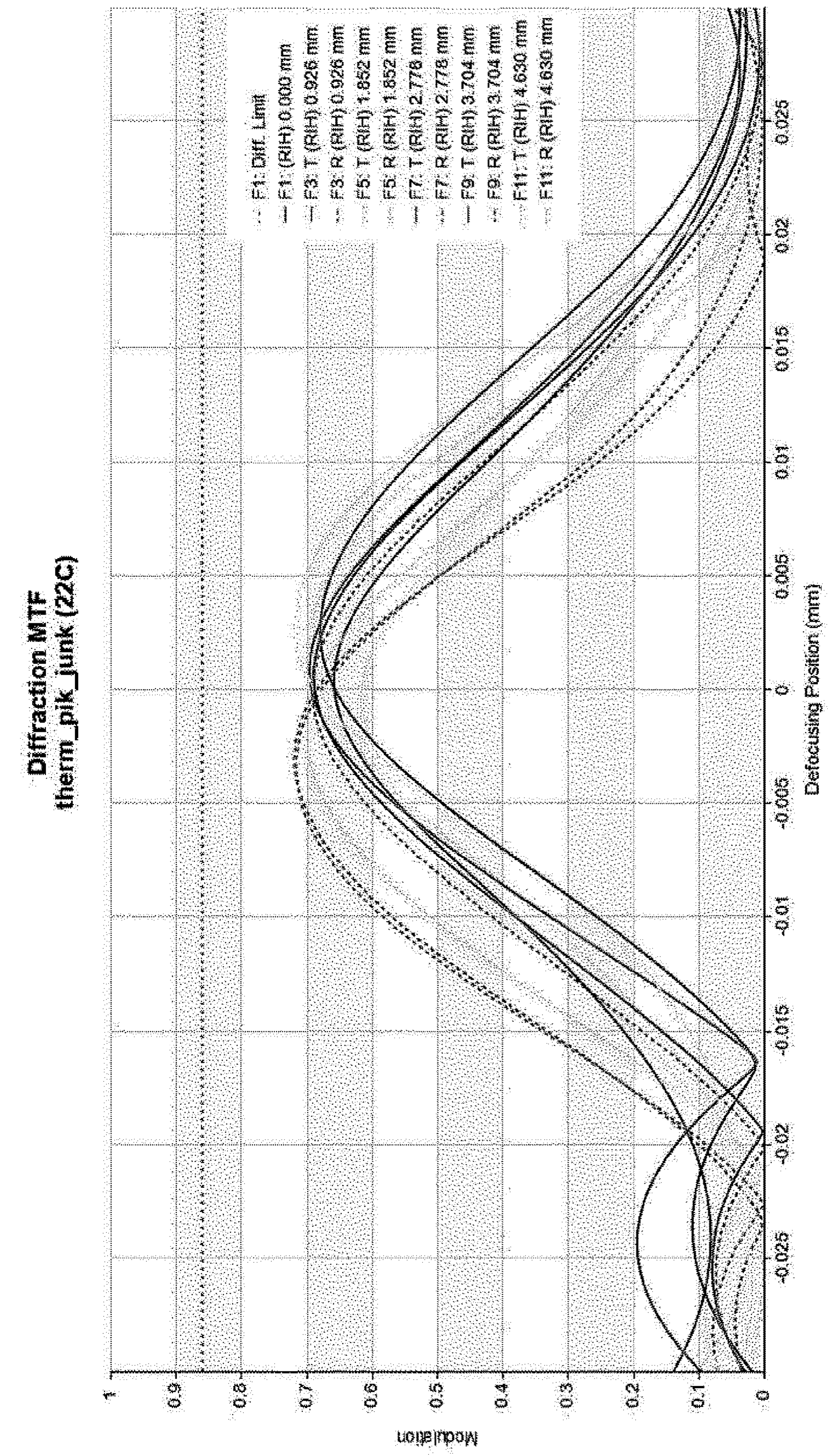
Diffraction MTF
therm_pik_junk (22C)
F1: Diff. Limit
F1: (RIH) 0.000 mm
F3: T (RIH) 0.926 mm
F3: R (RIH) 0.926 mm
F5: T (RIH) 1.852 mm
F5: R (RIH) 1.852 mm
F7: T (RIH) 2.778 mm
F7: R (RIH) 2.778 mm
F9: T (RIH) 3.704 mm
F9: R (RIH) 3.704 mm
F11: T (RIH) 4.630 mm
F11: R (RIH) 4.630 mm
Defocusing Position (mm)
Modulation
-0.025
-0.02
-0.015
-0.01
-0.005
0
0.005
0.01
0.015
0.02
0.025
1
0.9
0.8
0.7
0.6
0.5
0.4
0.3
0.2
0.1
0

FIG. 22

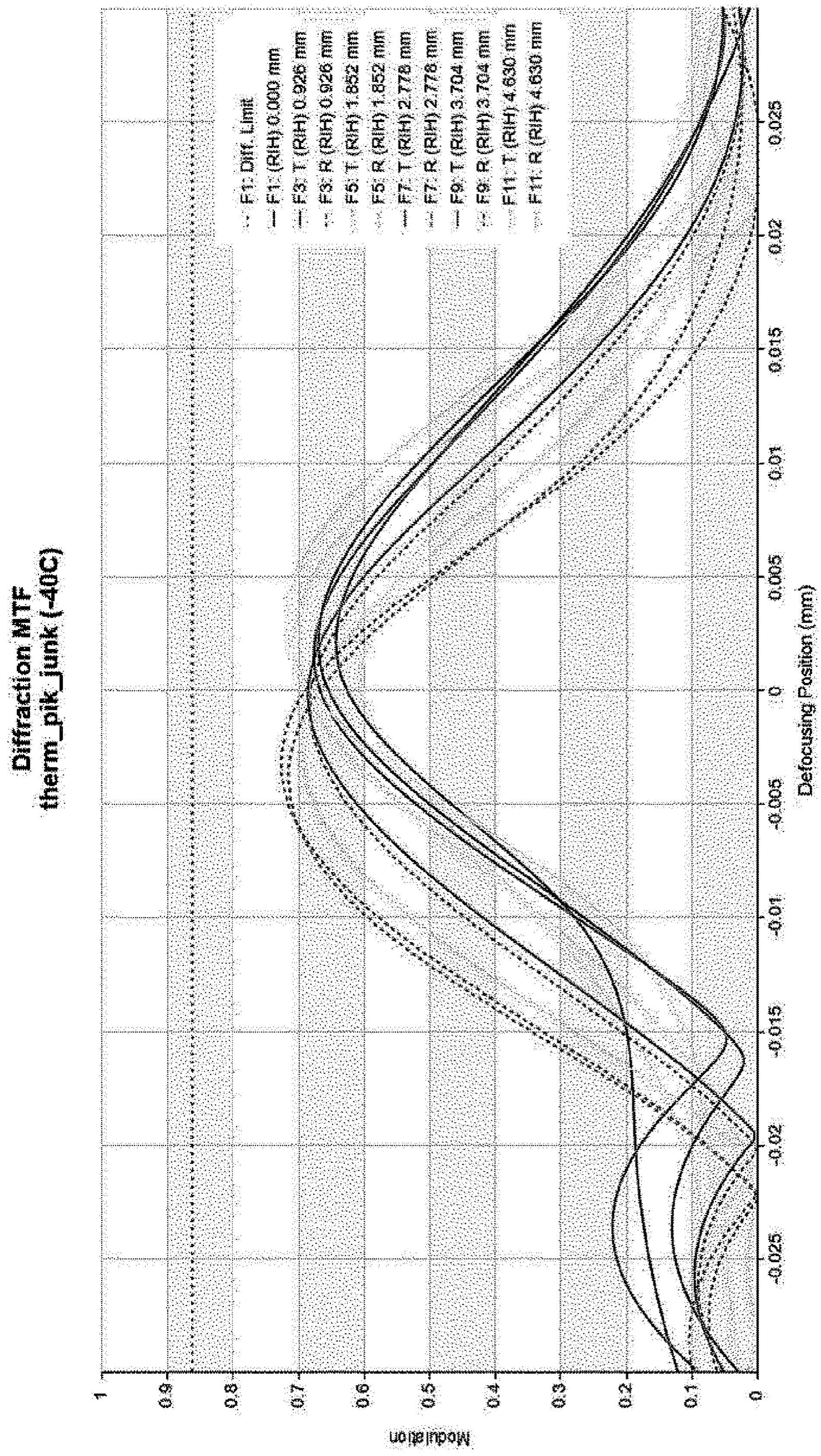
Diffraction MTF
therm_pik_junk (-40C)
F1: Diff. Limit
F1: (RIH) 0.000 mm
F3: T (RIH) 0.926 mm
F3: R (RIH) 0.926 mm
F5: T (RIH) 1.852 mm
F5: R (RIH) 1.852 mm
F7: T (RIH) 2.778 mm
F7: R (RIH) 2.778 mm
F9: T (RIH) 3.704 mm
F9: R (RIH) 3.704 mm
F11: T (RIH) 4.630 mm
F11: R (RIH) 4.630 mm
Modulation
1
0.9
0.8
0.7
0.6
0.5
0.4
0.3
0.2
0.1
0
-0.025
-0.02
-0.015
-0.01
-0.005
0
0.005
0.01
0.015
0.02
0.025
Defocusing Position (mm)

FIG. 23

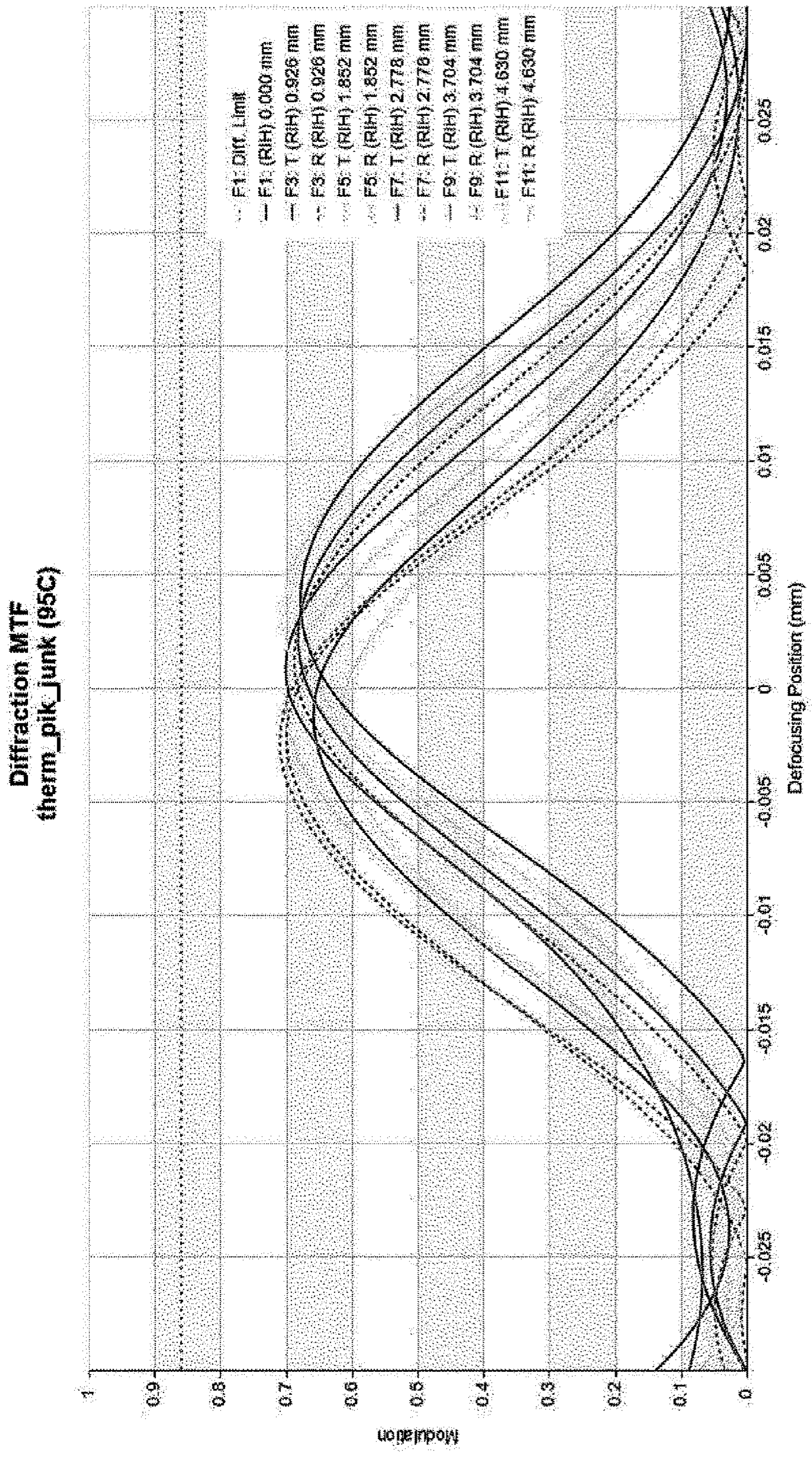
Diffraction MTF
therm_pik_junk (95C)
F1: Diff. Limit
F1: (RIH) 0.000 mm
F3: T (RIH) 0.926 mm
F3: R (RIH) 0.926 mm
F5: T (RIH) 1.852 mm
F5: R (RIH) 1.852 mm
F7: T (RIH) 2.778 mm
F7: R (RIH) 2.778 mm
F9: T (RIH) 3.704 mm
F9: R (RIH) 3.704 mm
F11: T (RIH) 4.630 mm
F11: R (RIH) 4.630 mm
Modulation
1
0.9
0.8
0.7
0.6
0.5
0.4
0.3
0.2
0.1
0
-0.025
-0.02
-0.015
-0.01
-0.005
0
0.005
0.01
0.015
0.02
0.025
Defocusing Position (mm)

FIG. 24

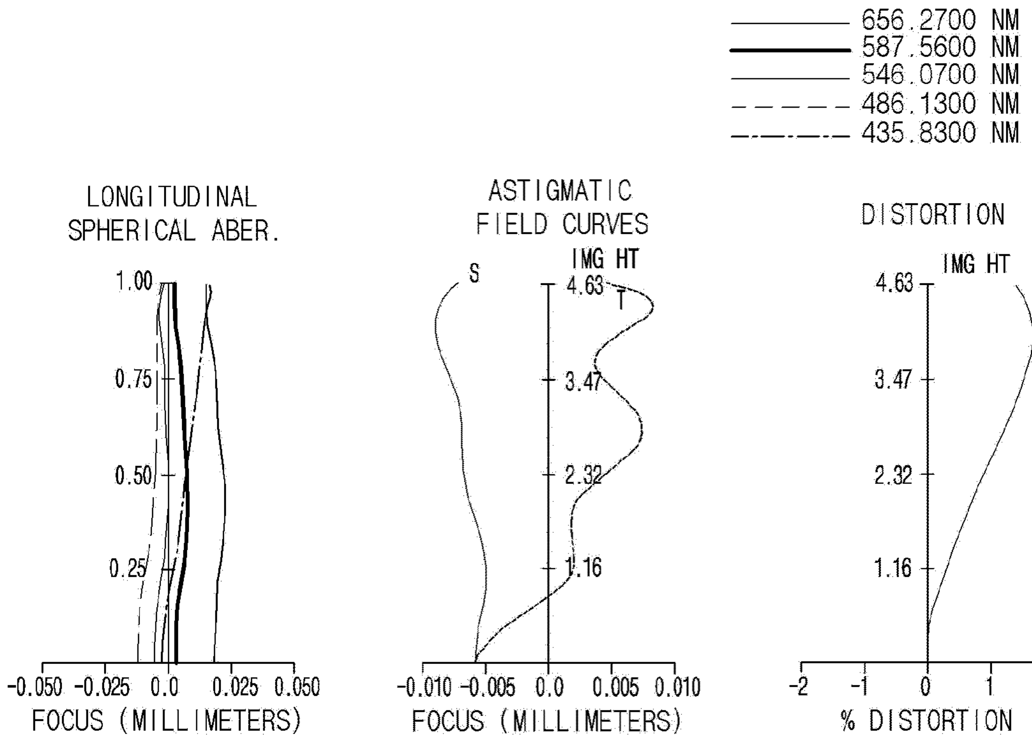
656.2700 NM
587.5600 NM
546.0700 NM
486.1300 NM
435.8300 NM
LONGITUDINAL SPHERICAL ABER.
1.00
0.75
0.50
0.25
-0.050 -0.025 0.0 0.025 0.050
FOCUS (MILLIMETERS)
ASTIGMATIC FIELD CURVES
IMG HT
S
T
4.63
3.47
2.32
1.16
-0.010 -0.005 0.0 0.005 0.010
FOCUS (MILLIMETERS)
DISTORTION
IMG HT
4.63
3.47
2.32
1.16
-2 -1 0 1 2
% DISTORTION

FIG. 25

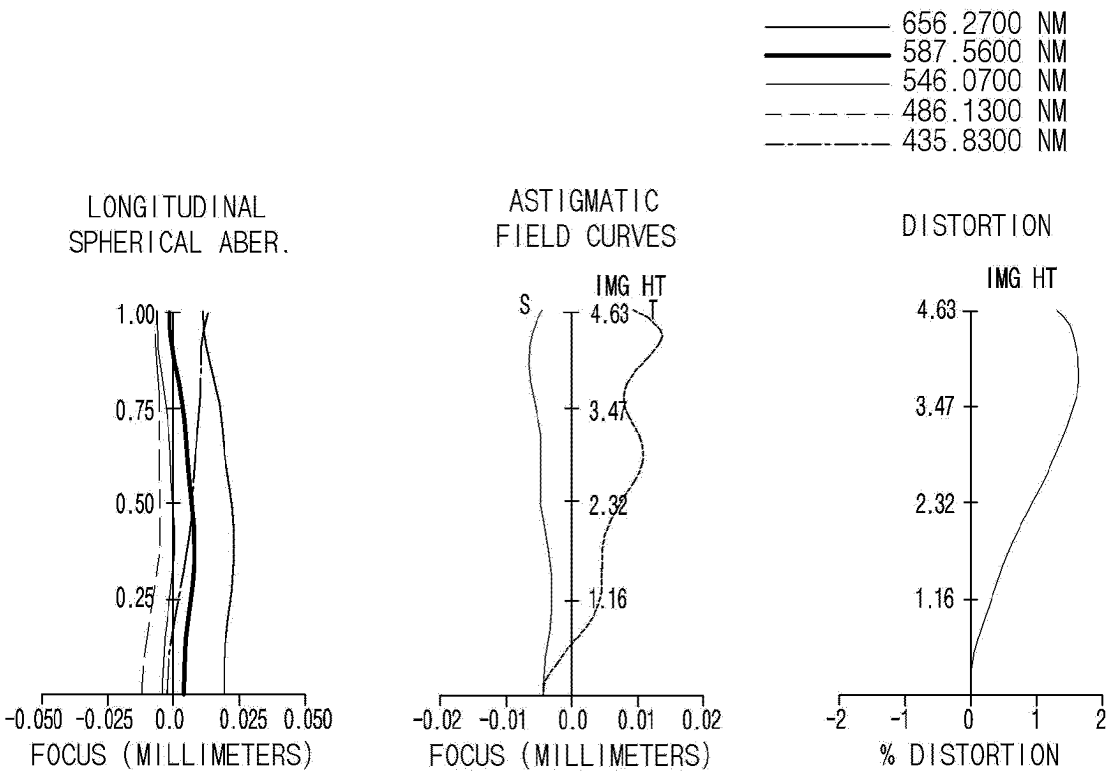
656.2700 NM
587.5600 NM
546.0700 NM
486.1300 NM
435.8300 NM
LONGITUDINAL SPHERICAL ABER.
1.00
0.75
0.50
0.25
-0.050 -0.025 0.0 0.025 0.050
FOCUS (MILLIMETERS)
ASTIGMATIC FIELD CURVES
IMG HT
S
T
4.63
3.47
2.32
1.16
-0.02 -0.01 0.0 0.01 0.02
FOCUS (MILLIMETERS)
DISTORTION
IMG HT
4.63
3.47
2.32
1.16
-2 -1 0 1 2
% DISTORTION

FIG. 26

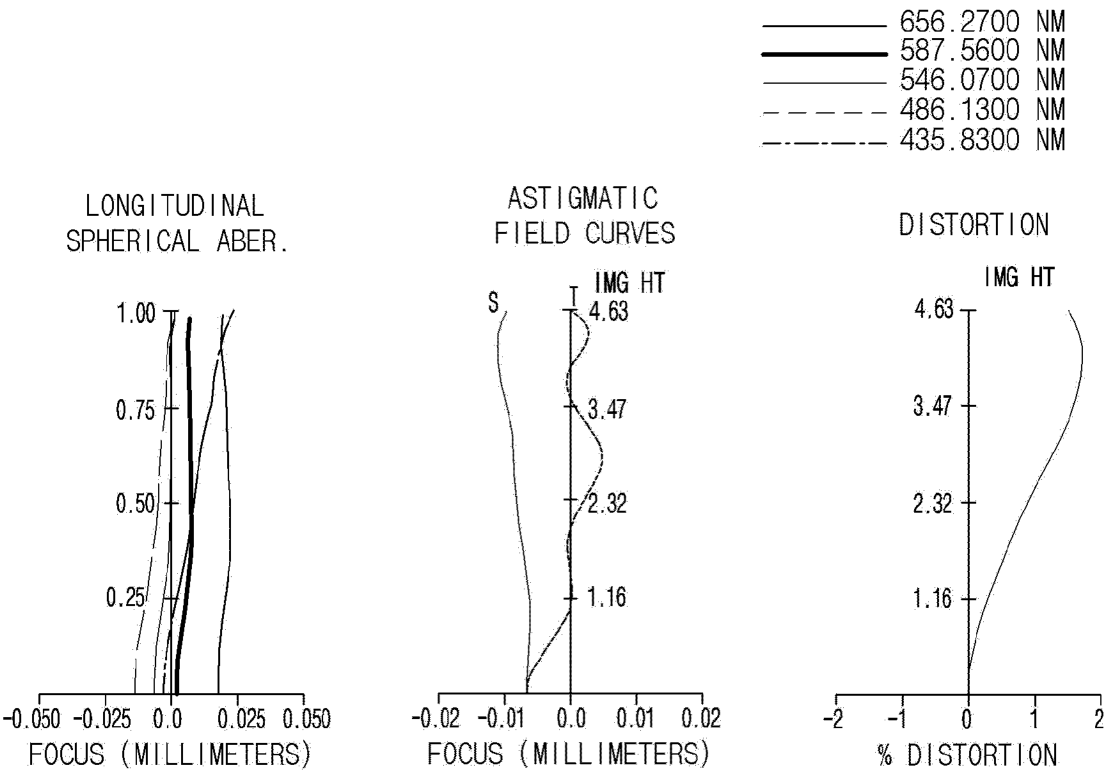

656.2700 NM
587.5600 NM
546.0700 NM
486.1300 NM
435.8300 NM
LONGITUDINAL
SPHERICAL ABER.
1.00
0.75
0.50
0.25
-0.050 -0.025 0.0 0.025 0.050
FOCUS (MILLIMETERS)
ASTIGMATIC
FIELD CURVES
S
T
IMG HT
4.63
3.47
2.32
1.16
-0.02 -0.01 0.0 0.01 0.02
FOCUS (MILLIMETERS)
DISTORTION
IMG HT
4.63
3.47
2.32
1.16
-2 -1 0 1 2
% DISTORTION

FIG. 27

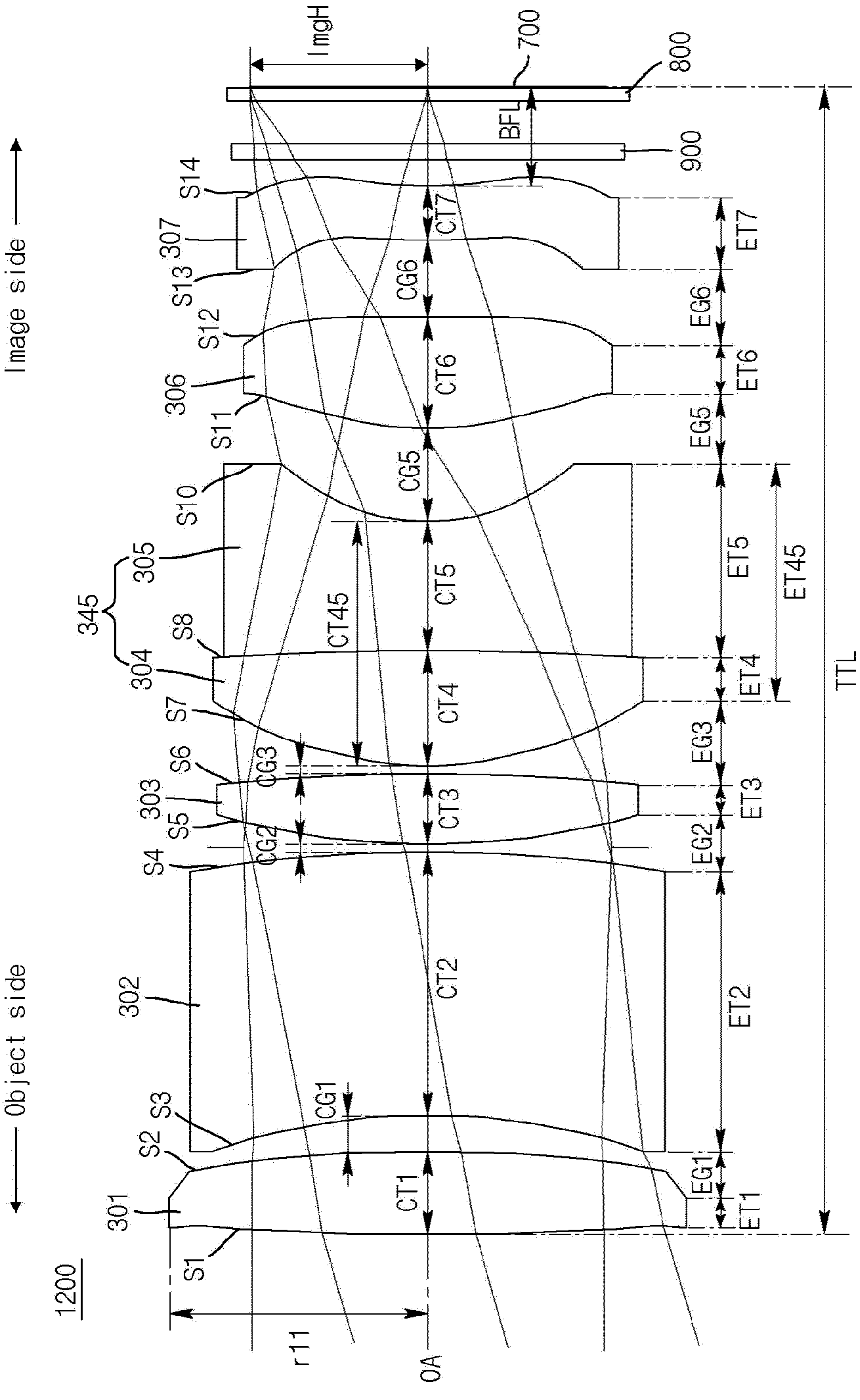

Image side
Object side
1200
ImgH
700
800
900
BFL
S14
307
S13
S12
306
S11
S10
305
345
S8
304
S7
S6
303
S5
S4
302
S3
S2
301
S1
CT1
CG1
CT2
CG2
CT3
CG3
CT4
CT45
CT5
CG5
CT6
CG6
CT7
ET1
EG1
ET2
EG2
ET3
EG3
ET4
ET45
ET5
EG5
ET6
EG6
ET7
TTL
r11
OA

FIG. 28

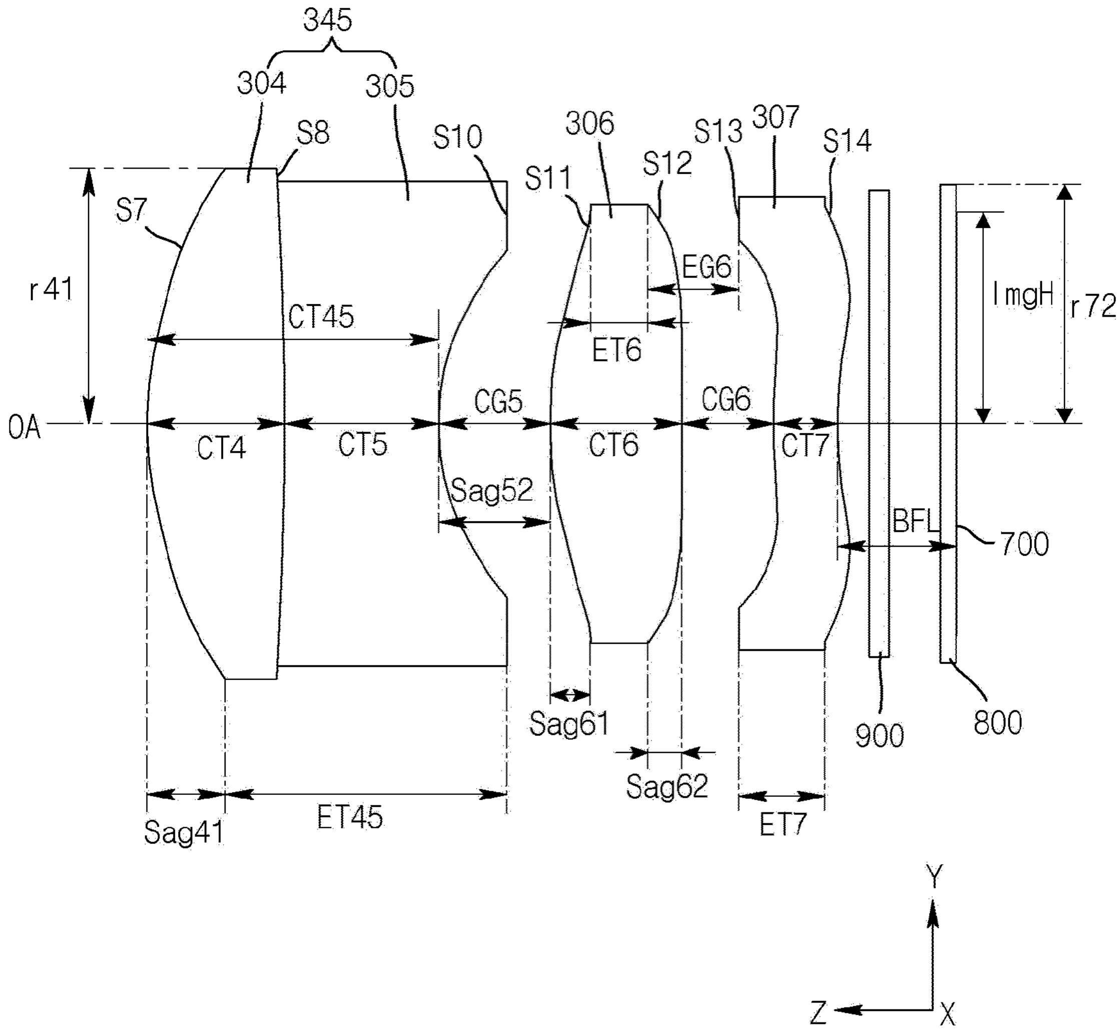


FIG. 29

| | L1 | | L6 | | L7 | |
|---|---|---|---|---|---|---|
| | S1 | S2 | S1 | S2 | S1 | S2 |
| Y | 71.26203 | -45.40027 | 10.71269 | 145.5359 | 14.39657 | 8.546143 |
| K | 70.43941 | -96.0933 | 1.479866 | -99 | -87.37311 | -6.802811 |
| A | -9.52E-05 | -1.73E-04 | -3.07E-04 | -1.48E-03 | -2.23E-03 | -3.26E-03 |
| B | 4.65E-07 | 2.14E-06 | -7.67E-06 | 3.56E-05 | -4.05E-04 | 1.78E-05 |
| C | -2.32E-07 | -2.72E-07 | 7.70E-06 | 8.86E-06 | 4.39E-05 | 1.83E-06 |
| D | 4.33E-08 | 7.21E-08 | -2.14E-06 | -2.76E-06 | -1.45E-06 | 1.82E-07 |
| E | -4.00E-09 | -8.10E-09 | 3.05E-07 | 3.53E-07 | -1.12E-07 | -1.22E-08 |
| F | 2.11E-10 | 4.85E-10 | -2.65E-08 | -2.63E-08 | 5.32E-09 | -3.07E-09 |
| G | -6.34E-12 | -1.62E-11 | 1.38E-09 | 1.18E-09 | 8.34E-10 | 3.83E-10 |
| H | 1.01E-13 | 2.84E-13 | -4.02E-11 | -3.00E-11 | -7.39E-11 | -1.63E-11 |
| J | -6.67E-16 | -2.04E-15 | 4.96E-13 | 3.35E-13 | 1.70E-12 | 2.45E-13 |

FIG. 30

| Y(Height, mm) | 1-2 | 2-3 | 3-4 | 4-5 | 5-6 | 6-7 | 7-8 | 8-9 | 9-10 | 10-11 | 11-12 | 12-13 | 13-14 | 14-15 |
|---|---|---|---|---|---|---|---|---|---|---|---|---|---|---|
| | L1 | Air | L2 | Air | L3 | Air | L4 | Air | L5 | Air | L6 | Air | L7 | Air-filter |
| 0 | 2.000 | 0.884 | 6.428 | 0.200 | 1.692 | 0.200 | 2.783 | 0.000 | 3.165 | 2.250 | 2.700 | 1.877 | 1.300 | 0.619 |
| 0.2 | 1.999 | 0.884 | 6.429 | 0.201 | 1.691 | 0.202 | 2.781 | 0.000 | 3.169 | 2.248 | 2.698 | 1.879 | 1.301 | 0.617 |
| 0.4 | 1.997 | 0.882 | 6.431 | 0.206 | 1.687 | 0.209 | 2.775 | 0.000 | 3.180 | 2.244 | 2.693 | 1.882 | 1.304 | 0.610 |
| 0.6 | 1.994 | 0.879 | 6.434 | 0.213 | 1.681 | 0.220 | 2.764 | 0.000 | 3.198 | 2.236 | 2.684 | 1.888 | 1.309 | 0.599 |
| 0.8 | 1.988 | 0.874 | 6.438 | 0.222 | 1.672 | 0.236 | 2.749 | 0.000 | 3.223 | 2.225 | 2.672 | 1.896 | 1.316 | 0.584 |
| 1 | 1.982 | 0.868 | 6.443 | 0.235 | 1.660 | 0.256 | 2.731 | 0.000 | 3.256 | 2.211 | 2.655 | 1.905 | 1.325 | 0.565 |
| 1.2 | 1.974 | 0.861 | 6.450 | 0.250 | 1.646 | 0.281 | 2.707 | 0.000 | 3.296 | 2.194 | 2.635 | 1.914 | 1.337 | 0.544 |
| 1.4 | 1.970 | 0.857 | 6.454 | 0.259 | 1.638 | 0.295 | 2.694 | 0.000 | 3.319 | 2.184 | 2.623 | 1.919 | 1.344 | 0.533 |
| 1.6 | 1.960 | 0.848 | 6.462 | 0.279 | 1.620 | 0.327 | 2.665 | 0.000 | 3.371 | 2.161 | 2.596 | 1.927 | 1.360 | 0.510 |
| 1.8 | 1.948 | 0.838 | 6.472 | 0.301 | 1.600 | 0.363 | 2.631 | 0.000 | 3.430 | 2.134 | 2.564 | 1.934 | 1.379 | 0.486 |
| 2 | 1.935 | 0.827 | 6.483 | 0.326 | 1.577 | 0.404 | 2.592 | 0.000 | 3.498 | 2.104 | 2.527 | 1.938 | 1.401 | 0.463 |
| 2.2 | 1.921 | 0.814 | 6.495 | 0.355 | 1.551 | 0.450 | 2.550 | 0.000 | 3.574 | 2.069 | 2.485 | 1.937 | 1.428 | 0.442 |
| 2.4 | 1.905 | 0.800 | 6.508 | 0.385 | 1.523 | 0.501 | 2.503 | 0.000 | 3.659 | 2.030 | 2.437 | 1.931 | 1.459 | 0.424 |
| 2.6 | 1.888 | 0.785 | 6.523 | 0.419 | 1.492 | 0.556 | 2.451 | 0.000 | 3.753 | 1.985 | 2.382 | 1.918 | 1.496 | 0.410 |
| 2.8 | 1.870 | 0.769 | 6.539 | 0.456 | 1.459 | 0.616 | 2.395 | 0.000 | 3.856 | 1.936 | 2.321 | 1.896 | 1.539 | 0.402 |
| 3 | 1.850 | 0.751 | 6.556 | 0.495 | 1.423 | 0.681 | 2.335 | 0.000 | 3.970 | 1.880 | 2.253 | 1.865 | 1.588 | 0.400 |
| 3.2 | 1.829 | 0.733 | 6.574 | 0.537 | 1.385 | 0.751 | 2.269 | 0.000 | 4.094 | 1.817 | 2.177 | 1.823 | 1.645 | 0.406 |
| 3.4 | 1.806 | 0.713 | 6.594 | 0.583 | 1.343 | 0.826 | 2.199 | 0.000 | 4.229 | 1.746 | 2.092 | 1.769 | 1.712 | 0.421 |
| 3.6 | 1.782 | 0.692 | 6.615 | 0.631 | 1.300 | 0.906 | 2.124 | 0.000 | 4.377 | 1.666 | 1.997 | 1.702 | 1.788 | 0.445 |
| 3.8 | 1.757 | 0.669 | 6.637 | 0.682 | 1.253 | 0.991 | 2.045 | 0.000 | 4.538 | 1.574 | 1.893 | 1.621 | 1.876 | 0.481 |
| 4 | 1.731 | 0.646 | 6.661 | 0.735 | 1.204 | 1.082 | 1.960 | 0.000 | 3.244 | | 1.776 | 1.525 | 1.979 | 0.529 |
| 4.2 | 1.703 | 0.621 | 6.686 | 0.792 | 1.152 | 1.178 | 1.870 | 0.000 | 3.252 | | 1.648 | 2.185 | | 0.590 |
| 4.4 | 1.674 | 0.595 | 6.712 | 0.852 | 1.098 | 1.279 | 1.775 | 0.000 | 3.260 | | | 2.278 | | 0.667 |
| 4.6 | 1.644 | 0.567 | 6.740 | 0.914 | 1.041 | 1.387 | 1.674 | 0.000 | 3.269 | | | | | 0.759 |
| 4.8 | 1.613 | 0.538 | 6.769 | 0.980 | 0.981 | 1.500 | 1.568 | 0.000 | 3.279 | | | | | |
| 5 | 1.580 | 0.508 | 7.090 | | 1.476 | 1.619 | 1.580 | 0.000 | | | | | | |
| 5.2 | 1.547 | 0.476 | 7.146 | | | | | 0.000 | | | | | | |
| 5.4 | 1.512 | 0.442 | 7.205 | | | | | 0.000 | | | | | | |
| 5.6 | 1.477 | 0.406 | 7.266 | | | | | | | | | | | |
| 5.8 | 1.440 | 1.270 | | | | | | | | | | | | |
| 6 | 1.814 | | | | | | | | | | | | | |

FIG. 31

| | sag | | | | | | | | | | | | | |
|---|---|---|---|---|---|---|---|---|---|---|---|---|---|---|
| Y(Height, mm) | | | | | | | | | | | | | | |
| | L1S1 | L1S2 | L2S1 | L2S2 | L3S1 | L3S2 | L4S1 | L4S2 | L5S1 | L5S2 | L6S1 | L6S2 | L7S1 | L7S2 |
| 0 | 0.000 | 0.000 | 0.000 | 0.000 | 0.000 | 0.000 | 0.000 | 0.000 | 0.000 | 0.000 | 0.000 | 0.000 | 0.000 | 0.000 |
| 0.2 | 0.000 | 0.000 | -0.001 | 0.000 | 0.001 | 0.000 | 0.002 | 0.000 | 0.000 | 0.003 | 0.002 | 0.000 | 0.001 | 0.002 |
| 0.4 | 0.001 | -0.002 | -0.004 | -0.002 | 0.004 | -0.001 | 0.008 | -0.001 | -0.001 | 0.014 | 0.007 | 0.001 | 0.005 | 0.009 |
| 0.6 | 0.003 | -0.004 | -0.010 | -0.004 | 0.008 | -0.003 | 0.017 | -0.002 | -0.002 | 0.031 | 0.017 | 0.001 | 0.012 | 0.020 |
| 0.8 | 0.004 | -0.007 | -0.017 | -0.008 | 0.015 | -0.006 | 0.030 | -0.003 | -0.003 | 0.054 | 0.030 | 0.002 | 0.020 | 0.036 |
| 1 | 0.007 | -0.011 | -0.027 | -0.012 | 0.023 | -0.009 | 0.047 | -0.005 | -0.005 | 0.085 | 0.047 | 0.002 | 0.029 | 0.054 |
| 1.2 | 0.010 | -0.016 | -0.039 | -0.017 | 0.033 | -0.013 | 0.068 | -0.007 | -0.007 | 0.123 | 0.067 | 0.002 | 0.039 | 0.075 |
| 1.4 | 0.012 | -0.019 | -0.046 | -0.020 | 0.039 | -0.015 | 0.080 | -0.009 | -0.009 | 0.145 | 0.079 | 0.002 | 0.043 | 0.087 |
| 1.6 | 0.015 | -0.025 | -0.061 | -0.027 | 0.052 | -0.020 | 0.107 | -0.012 | -0.012 | 0.194 | 0.105 | 0.001 | 0.050 | 0.110 |
| 1.8 | 0.020 | -0.032 | -0.078 | -0.035 | 0.066 | -0.026 | 0.137 | -0.015 | -0.015 | 0.250 | 0.135 | -0.001 | 0.055 | 0.134 |
| 2 | 0.024 | -0.040 | -0.098 | -0.044 | 0.083 | -0.032 | 0.172 | -0.019 | -0.019 | 0.314 | 0.168 | -0.005 | 0.055 | 0.157 |
| 2.2 | 0.030 | -0.050 | -0.120 | -0.053 | 0.101 | -0.040 | 0.211 | -0.023 | -0.023 | 0.386 | 0.205 | -0.010 | 0.050 | 0.178 |
| 2.4 | 0.035 | -0.060 | -0.144 | -0.064 | 0.122 | -0.047 | 0.253 | -0.027 | -0.027 | 0.466 | 0.246 | -0.017 | 0.036 | 0.196 |
| 2.6 | 0.041 | -0.071 | -0.170 | -0.075 | 0.144 | -0.056 | 0.300 | -0.032 | -0.032 | 0.555 | 0.291 | -0.027 | 0.013 | 0.209 |
| 2.8 | 0.047 | -0.083 | -0.198 | -0.088 | 0.168 | -0.065 | 0.350 | -0.037 | -0.037 | 0.653 | 0.339 | -0.040 | -0.021 | 0.218 |
| 3 | 0.054 | -0.096 | -0.229 | -0.102 | 0.194 | -0.076 | 0.405 | -0.043 | -0.043 | 0.761 | 0.391 | -0.056 | -0.069 | 0.219 |
| 3.2 | 0.061 | -0.110 | -0.262 | -0.116 | 0.221 | -0.086 | 0.464 | -0.049 | -0.049 | 0.879 | 0.446 | -0.077 | -0.132 | 0.213 |
| 3.4 | 0.068 | -0.126 | -0.297 | -0.132 | 0.251 | -0.098 | 0.528 | -0.056 | -0.056 | 1.008 | 0.504 | -0.104 | -0.213 | 0.199 |
| 3.6 | 0.076 | -0.142 | -0.335 | -0.148 | 0.283 | -0.110 | 0.596 | -0.063 | -0.063 | 1.149 | 0.565 | -0.138 | -0.314 | 0.174 |
| 3.8 | 0.084 | -0.159 | -0.374 | -0.165 | 0.316 | -0.123 | 0.668 | -0.070 | -0.070 | 1.303 | 0.626 | -0.181 | -0.438 | 0.138 |
| 4 | 0.092 | -0.178 | -0.416 | -0.184 | 0.352 | -0.137 | 0.745 | -0.078 | -0.078 | | 0.688 | -0.236 | -0.588 | 0.091 |
| 4.2 | 0.100 | -0.197 | -0.461 | -0.203 | 0.389 | -0.151 | 0.827 | -0.086 | -0.086 | | 0.744 | -0.308 | | 0.029 |
| 4.4 | 0.108 | -0.218 | -0.508 | -0.224 | 0.428 | -0.166 | 0.913 | -0.095 | -0.095 | | | -0.401 | | -0.047 |
| 4.6 | 0.117 | -0.240 | -0.557 | -0.245 | 0.469 | -0.182 | 1.005 | -0.104 | -0.104 | | | | | -0.140 |
| 4.8 | 0.125 | -0.262 | -0.608 | -0.267 | 0.512 | -0.199 | 1.101 | -0.114 | -0.114 | | | | | |
| 5 | 0.134 | -0.285 | -0.662 | | | -0.216 | 1.203 | | | | | | | |
| 5.2 | 0.144 | -0.310 | -0.718 | | | | | | | | | | | |
| 5.4 | 0.153 | -0.335 | -0.777 | | | | | | | | | | | |
| 5.6 | 0.163 | -0.360 | -0.838 | | | | | | | | | | | |
| 5.8 | 0.174 | -0.386 | | | | | | | | | | | | |
| 6 | 0.186 | | | | | | | | | | | | | |

FIG. 32

| slope angle | | | | | | | | | | | | | | |
|---|---|---|---|---|---|---|---|---|---|---|---|---|---|---|
| Y(Height, mm) | | | | | | | | | | | | | | |
| | L1S1 | L1S2 | L2S1 | L2S2 | L3S1 | L3S2 | L4S1 | L4S2 | L5S1 | L5S2 | L6S1 | L6S2 | L7S1 | L7S2 |
| 0 | 0.000 | 0.000 | 0.000 | 0.000 | 0.000 | 0.000 | 0.000 | 0.000 | 0.000 | 0.000 | 0.000 | 0.000 | 0.000 | 0.000 |
| 0.2 | 0.121 | -0.189 | -0.465 | -0.207 | 0.394 | -0.154 | 0.812 | -0.089 | -0.089 | 1.455 | 0.802 | 0.058 | 0.592 | 1.002 |
| 0.4 | 0.281 | -0.442 | -1.086 | -0.484 | 0.920 | -0.360 | 1.896 | -0.206 | -0.206 | 3.398 | 1.871 | 0.123 | 1.335 | 2.301 |
| 0.6 | 0.440 | -0.696 | -1.707 | -0.760 | 1.445 | -0.566 | 2.980 | -0.324 | -0.324 | 5.344 | 2.937 | 0.160 | 1.969 | 3.514 |
| 0.8 | 0.596 | -0.951 | -2.328 | -1.036 | 1.971 | -0.771 | 4.065 | -0.442 | -0.442 | 7.296 | 3.999 | 0.155 | 2.437 | 4.594 |
| 1 | 0.750 | -1.208 | -2.949 | -1.313 | 2.497 | -0.977 | 5.152 | -0.560 | -0.560 | 9.257 | 5.057 | 0.094 | 2.686 | 5.498 |
| 1.2 | 0.900 | -1.468 | -3.570 | -1.589 | 3.023 | -1.183 | 6.240 | -0.677 | -0.677 | 11.229 | 6.111 | -0.033 | 2.662 | 6.186 |
| 1.4 | 0.974 | -1.599 | -3.881 | -1.727 | 3.286 | -1.286 | 6.785 | -0.736 | -0.736 | 12.219 | 6.636 | -0.124 | 2.532 | 6.438 |
| 1.6 | 1.117 | -1.863 | -4.503 | -2.004 | 3.812 | -1.491 | 7.877 | -0.854 | -0.854 | 14.212 | 7.683 | -0.364 | 2.001 | 6.739 |
| 1.8 | 1.255 | -2.132 | -5.126 | -2.280 | 4.339 | -1.697 | 8.972 | -0.972 | -0.972 | 16.223 | 8.726 | -0.686 | 1.070 | 6.748 |
| 2 | 1.386 | -2.405 | -5.749 | -2.557 | 4.866 | -1.903 | 10.070 | -1.090 | -1.090 | 18.255 | 9.766 | -1.098 | -0.301 | 6.444 |
| 2.2 | 1.511 | -2.684 | -6.373 | -2.833 | 5.394 | -2.109 | 11.173 | -1.208 | -1.208 | 20.311 | 10.798 | -1.609 | -2.141 | 5.817 |
| 2.4 | 1.628 | -2.967 | -6.998 | -3.110 | 5.922 | -2.315 | 12.278 | -1.325 | -1.325 | 22.394 | 11.821 | -2.234 | -4.466 | 4.859 |
| 2.6 | 1.737 | -3.255 | -7.624 | -3.387 | 6.450 | -2.520 | 13.390 | -1.443 | -1.443 | 24.510 | 12.827 | -2.992 | -7.285 | 3.570 |
| 2.8 | 1.839 | -3.547 | -8.250 | -3.664 | 6.979 | -2.726 | 14.505 | -1.561 | -1.561 | 26.661 | 13.808 | -3.910 | -10.597 | 1.951 |
| 3 | 1.932 | -3.843 | -8.877 | -3.941 | 7.509 | -2.932 | 15.627 | -1.679 | -1.679 | 28.854 | 14.748 | -5.022 | -14.383 | 0.005 |
| 3.2 | 2.018 | -4.143 | -9.506 | -4.218 | 8.039 | -3.138 | 16.755 | -1.797 | -1.797 | 31.094 | 15.622 | -6.378 | -18.591 | -2.270 |
| 3.4 | 2.095 | -4.445 | -10.136 | -4.495 | 8.571 | -3.344 | 17.890 | -1.915 | -1.915 | 33.386 | 16.387 | -8.050 | -23.141 | -4.865 |
| 3.6 | 2.165 | -4.750 | -10.767 | -4.772 | 9.101 | -3.550 | 19.031 | -2.033 | -2.033 | 35.746 | 16.966 | -10.151 | -27.971 | -7.760 |
| 3.8 | 2.229 | -5.056 | -11.399 | -5.050 | 9.635 | -3.757 | 20.181 | -2.151 | -2.151 | 38.174 | 17.214 | -12.847 | -33.076 | -10.920 |
| 4 | 2.287 | -5.360 | -12.033 | -5.327 | 10.168 | -3.963 | 21.340 | -2.268 | -2.268 | | 16.844 | -16.350 | -38.279 | -14.323 |
| 4.2 | 2.343 | -5.657 | -12.668 | -5.604 | 10.702 | -4.168 | 22.507 | -2.386 | -2.386 | | 15.327 | -20.859 | | -17.995 |
| 4.4 | 2.399 | -5.944 | -13.304 | -5.882 | 11.238 | -4.375 | 23.685 | -2.504 | -2.504 | | | -26.309 | | -21.946 |
| 4.6 | 2.460 | -6.218 | -13.943 | -6.160 | 11.774 | -4.581 | 24.872 | -2.622 | -2.622 | | | | | -25.566 |
| 4.8 | 2.528 | -6.480 | -14.583 | -6.438 | 12.311 | -4.788 | 26.073 | -2.740 | -2.740 | | | | | |
| 5 | 2.603 | -6.731 | -15.225 | | | -4.994 | 27.285 | | | | | | | |
| 5.2 | 2.689 | -6.964 | -15.870 | | | | | | | | | | | |
| 5.4 | 2.792 | -7.150 | -16.515 | | | | | | | | | | | |
| 5.6 | 2.933 | -7.250 | -17.164 | | | | | | | | | | | |
| 5.8 | 3.146 | -7.305 | | | | | | | | | | | | |
| 6 | 3.427 | | | | | | | | | | | | | |

FIG. 33

| CRA Data | | | |
|---|---|---|---|
| Field | Room temperature | Low temperature | High temperature |
| 0 | 0.0 | 0.0 | 0.0 |
| 0.1 | 2.5 | 2.6 | 2.5 |
| 0.2 | 5.1 | 5.1 | 5.1 |
| 0.3 | 7.6 | 7.7 | 7.6 |
| 0.4 | 10.1 | 10.2 | 10.1 |
| 0.5 | 12.6 | 12.6 | 12.5 |
| 0.6 | 14.8 | 14.9 | 14.8 |
| 0.7 | 16.9 | 16.9 | 16.8 |
| 0.8 | 18.5 | 18.6 | 18.5 |
| 0.9 | 19.7 | 19.7 | 19.7 |
| 1 | 20.4 | 20.4 | 20.4 |

FIG. 34

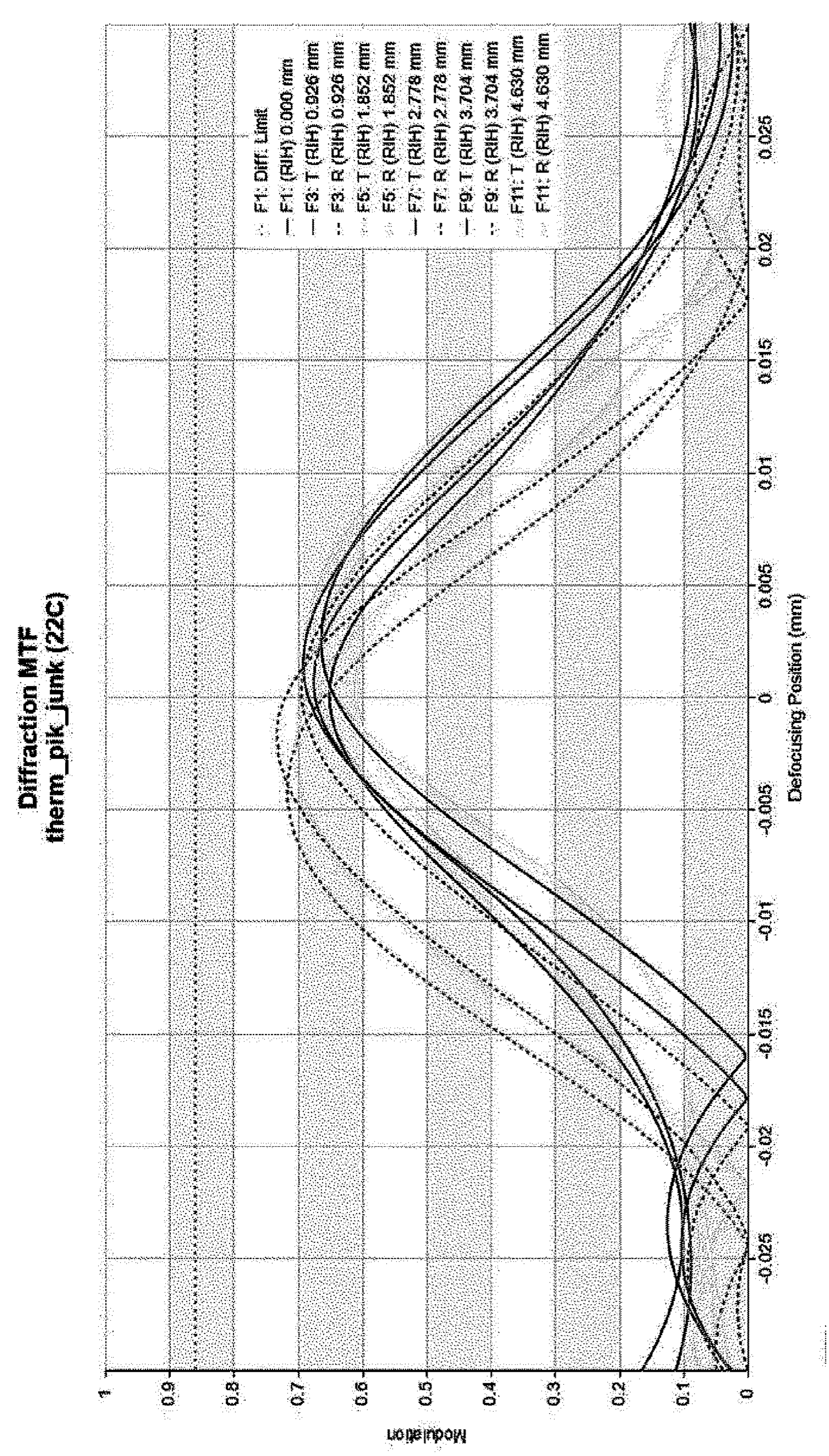
Diffraction MTF
therm_pik_junk (22C)
F1: Diff. Limit
F1: (RIH) 0.000 mm
F3: T (RIH) 0.926 mm
F3: R (RIH) 0.926 mm
F5: T (RIH) 1.852 mm
F5: R (RIH) 1.852 mm
F7: T (RIH) 2.778 mm
F7: R (RIH) 2.778 mm
F9: T (RIH) 3.704 mm
F9: R (RIH) 3.704 mm
F11: T (RIH) 4.630 mm
F11: R (RIH) 4.630 mm
Modulation
Defocusing Position (mm)

FIG. 35

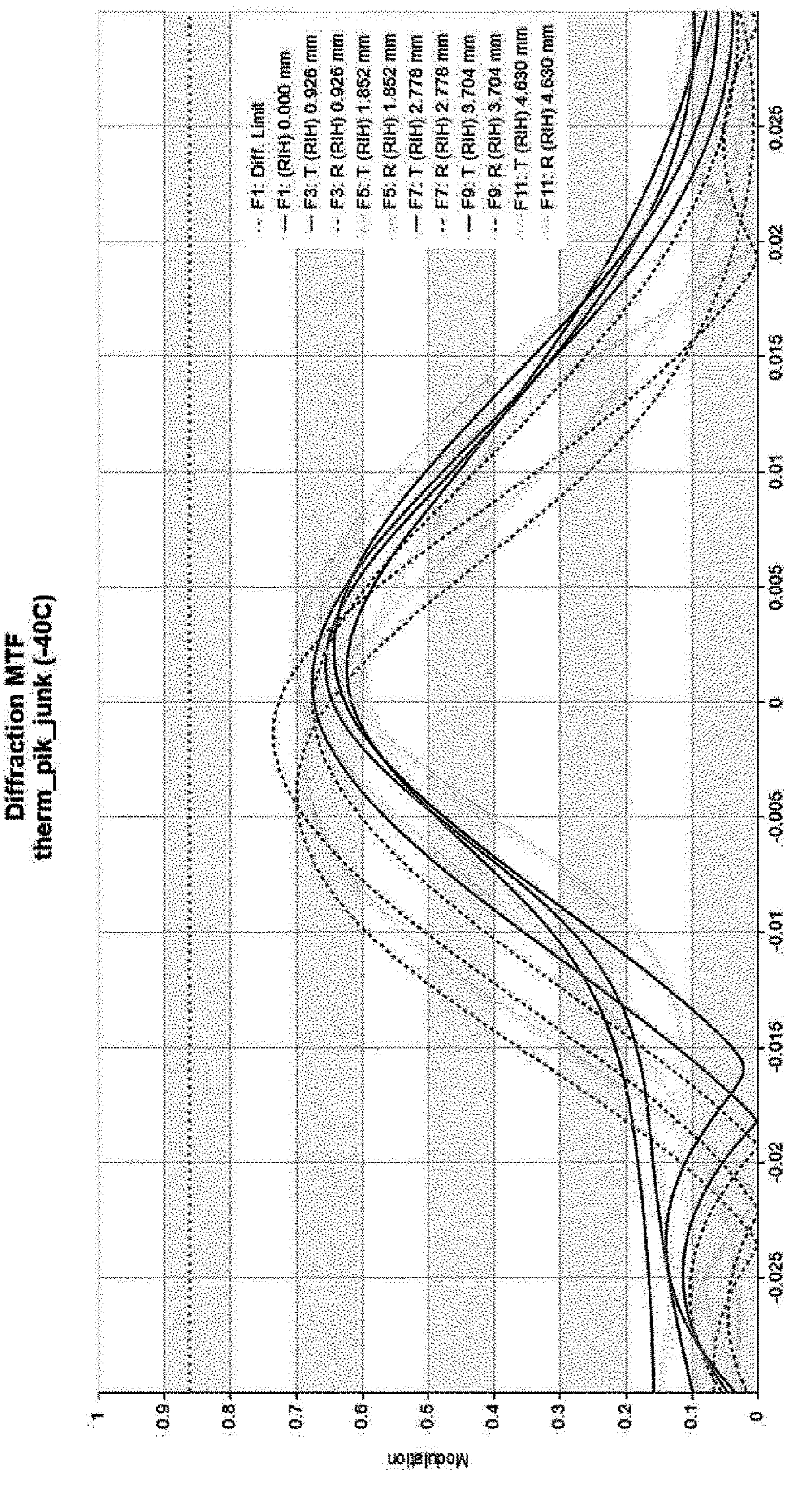
Diffraction MTF
therm_pik_junk (-40C)
F1: Diff. Limit
F1: (RIH) 0.000 mm
F3: T (RIH) 0.926 mm
F3: R (RIH) 0.926 mm
F5: T (RIH) 1.852 mm
F5: R (RIH) 1.852 mm
F7: T (RIH) 2.778 mm
F7: R (RIH) 2.778 mm
F9: T (RIH) 3.704 mm
F9: R (RIH) 3.704 mm
F11: T (RIH) 4.630 mm
F11: R (RIH) 4.630 mm
Modulation
1
0.9
0.8
0.7
0.6
0.5
0.4
0.3
0.2
0.1
0
-0.025
-0.02
-0.015
-0.01
-0.005
0
0.005
0.01
0.015
0.02
0.025
Defocusing Position (mm)

FIG. 36

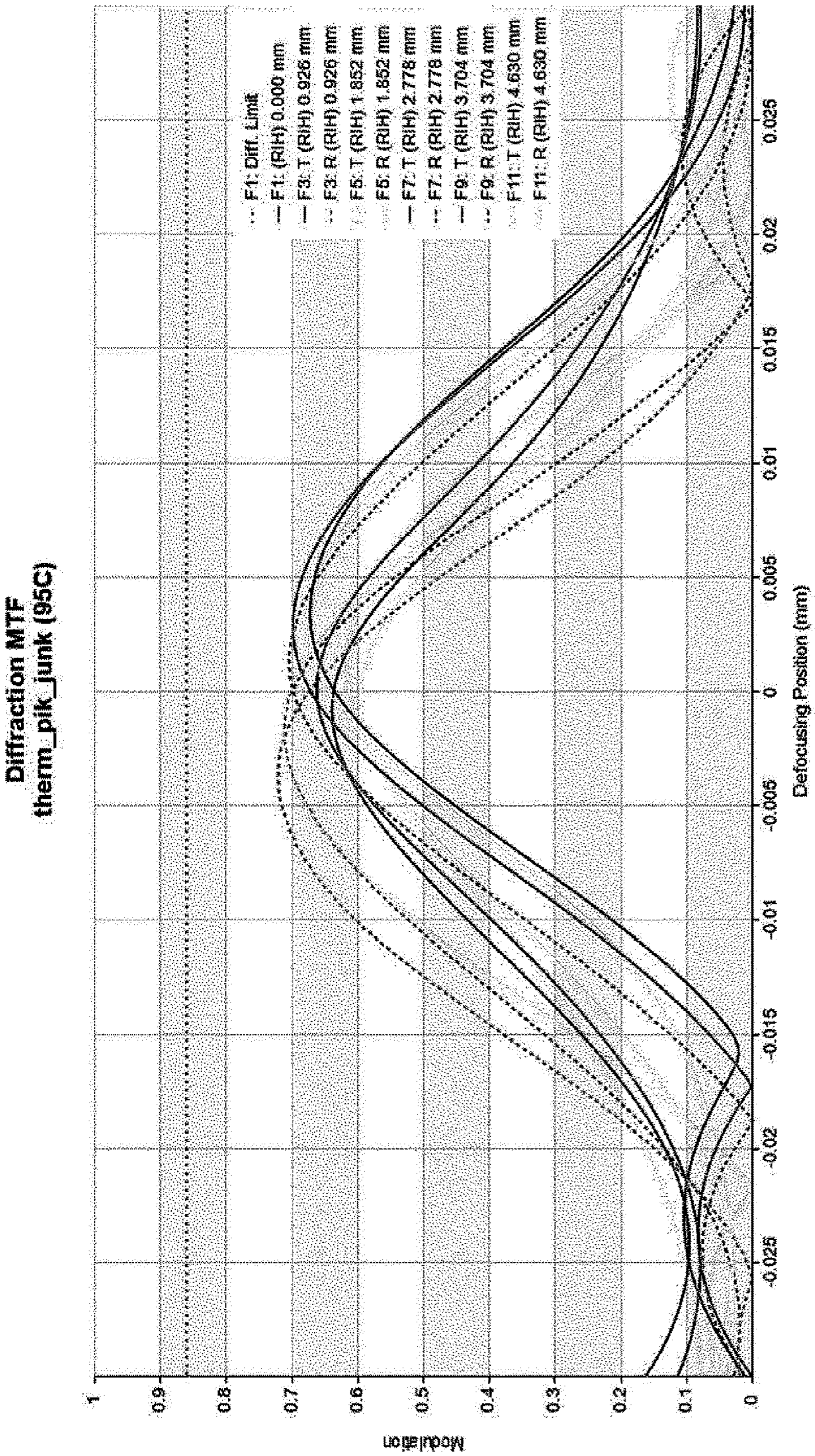
Diffraction MTF
therm_plk_junk (95C)
F1: Diff. Limit
F1: (RIH) 0.000 mm
F3: T (RIH) 0.926 mm
F3: R (RIH) 0.926 mm
F5: T (RIH) 1.852 mm
F5: R (RIH) 1.852 mm
F7: T (RIH) 2.778 mm
F7: R (RIH) 2.778 mm
F9: T (RIH) 3.704 mm
F9: R (RIH) 3.704 mm
F11: T (RIH) 4.630 mm
F11: R (RIH) 4.630 mm
Modulation
Defocusing Position (mm)
1
0.9
0.8
0.7
0.6
0.5
0.4
0.3
0.2
0.1
0
-0.025
-0.02
-0.015
-0.01
-0.005
0
0.005
0.01
0.015
0.02
0.025

FIG. 37

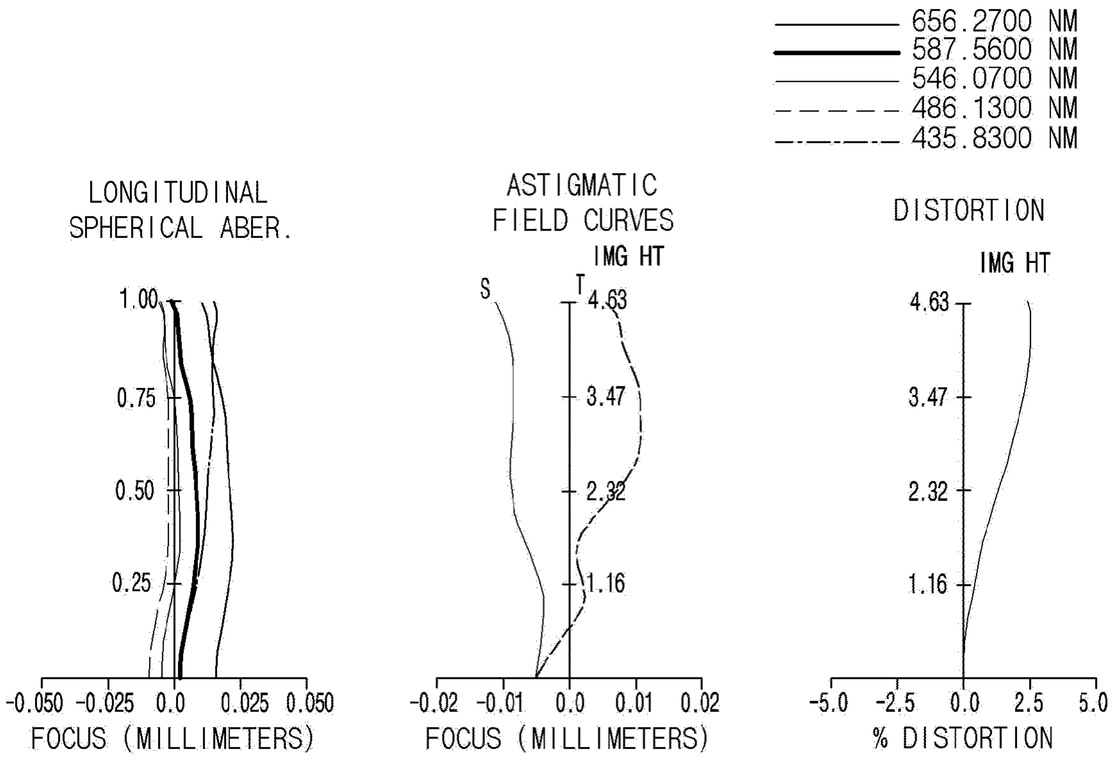
656.2700 NM
587.5600 NM
546.0700 NM
486.1300 NM
435.8300 NM
LONGITUDINAL SPHERICAL ABER.
1.00
0.75
0.50
0.25
-0.050 -0.025 0.0 0.025 0.050
FOCUS (MILLIMETERS)
ASTIGMATIC FIELD CURVES
IMG HT
S
T
4.63
3.47
2.32
1.16
-0.02 -0.01 0.0 0.01 0.02
FOCUS (MILLIMETERS)
DISTORTION
IMG HT
4.63
3.47
2.32
1.16
-5.0 -2.5 0.0 2.5 5.0
% DISTORTION

FIG. 38

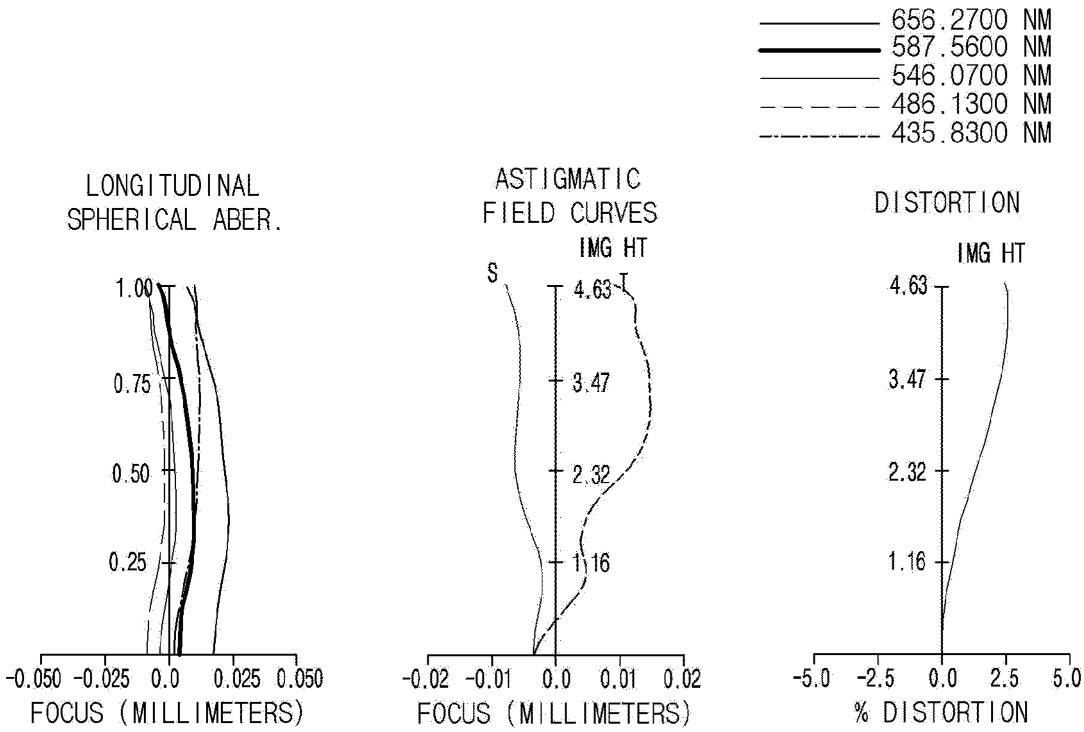
656.2700 NM
587.5600 NM
546.0700 NM
486.1300 NM
435.8300 NM
LONGITUDINAL SPHERICAL ABER.
1.00
0.75
0.50
0.25
-0.050 -0.025 0.0 0.025 0.050
FOCUS (MILLIMETERS)
ASTIGMATIC FIELD CURVES
IMG HT
S
T
4.63
3.47
2.32
1.16
-0.02 -0.01 0.0 0.01 0.02
FOCUS (MILLIMETERS)
DISTORTION
IMG HT
4.63
3.47
2.32
1.16
-5.0 -2.5 0.0 2.5 5.0
% DISTORTION

FIG. 39

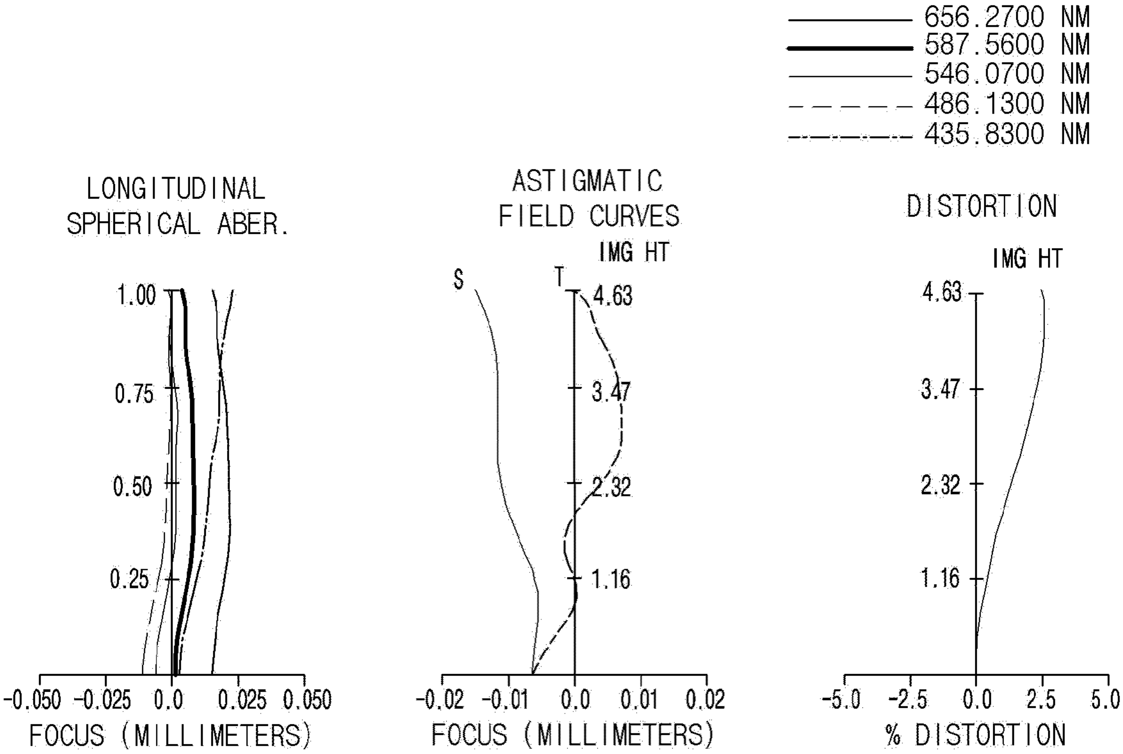
656.2700 NM
587.5600 NM
546.0700 NM
486.1300 NM
435.8300 NM
LONGITUDINAL
SPHERICAL ABER.
1.00
0.75
0.50
0.25
-0.050 -0.025 0.0 0.025 0.050
FOCUS (MILLIMETERS)
ASTIGMATIC
FIELD CURVES
IMG HT
S
T
4.63
3.47
2.32
1.16
-0.02 -0.01 0.0 0.01 0.02
FOCUS (MILLIMETERS)
DISTORTION
IMG HT
4.63
3.47
2.32
1.16
-5.0 -2.5 0.0 2.5 5.0
% DISTORTION

FIG. 40

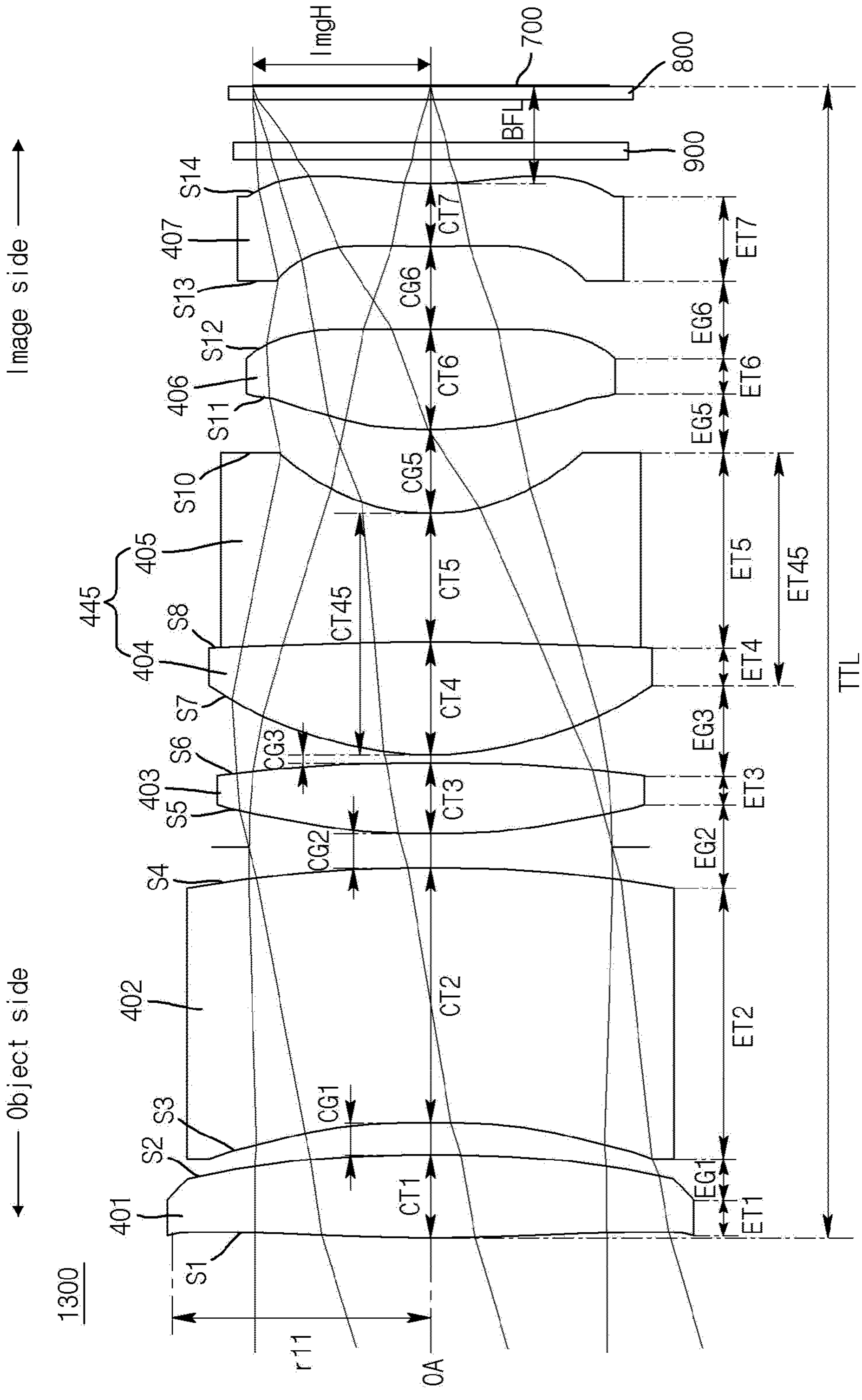
Image side
Object side
ImgH
700
800
900
BFL
TTL
1300
r11
OA
S1
S2
S3
S4
S5
S6
S7
S8
S10
S11
S12
S13
S14
401
402
403
404
405
406
407
445
CT1
CT2
CT3
CT4
CT5
CT6
CT7
CT45
CG1
CG2
CG3
CG5
CG6
ET1
ET2
ET3
ET4
ET5
ET6
ET7
ET45
EG1
EG2
EG3
EG5
EG6

FIG. 41

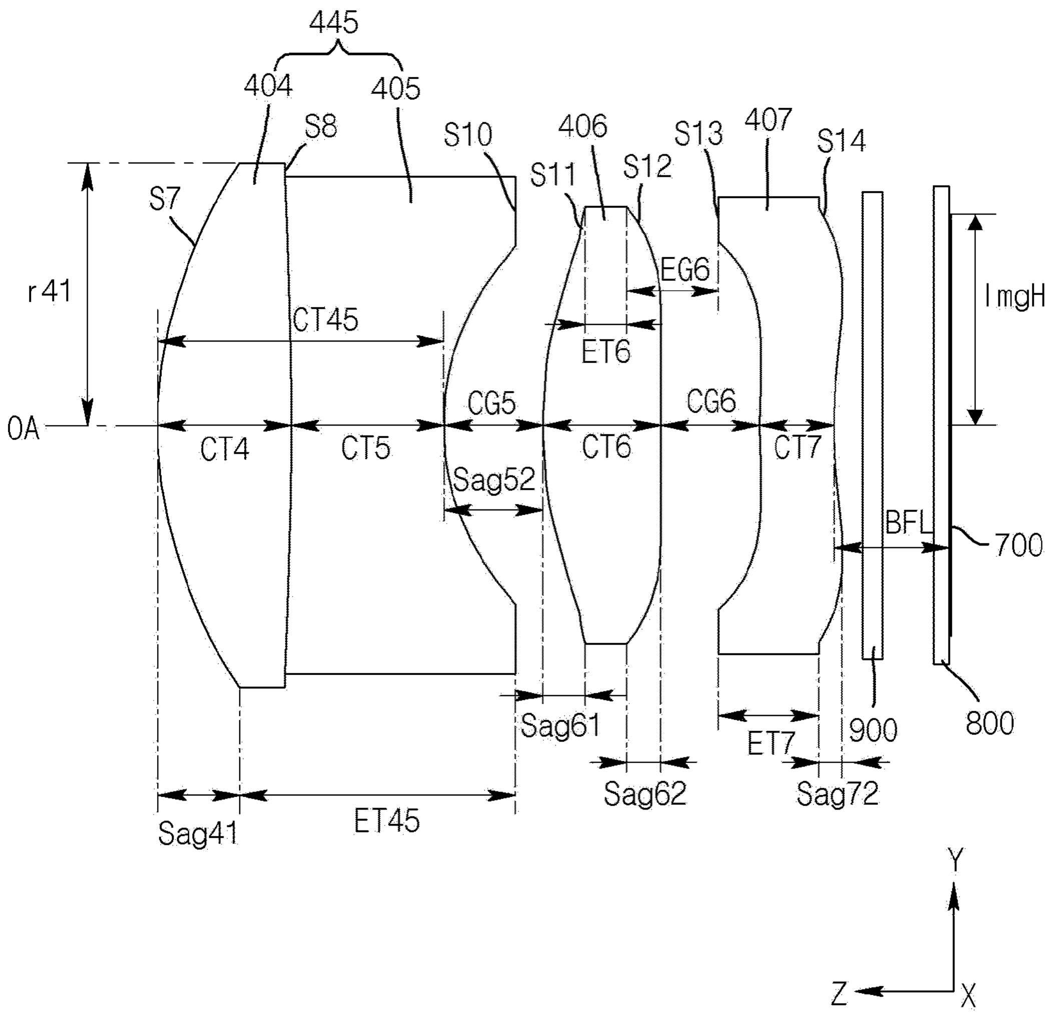


FIG. 42

| | L1 | | L6 | | L7 | |
|---|---|---|---|---|---|---|
| | S1 | S2 | S1 | S2 | S1 | S2 |
| Y | 71.48503 | -43.21821 | 10.49773 | 113.4159 | 25.57781 | 10.93923 |
| K | 37.18196 | -98.95516 | 1.357023 | 96.90643 | -97.8344 | -5.026458 |
| A | -1.10E-04 | -2.20E-04 | -2.95E-04 | -1.18E-03 | -3.98E-03 | -2.85E-03 |
| B | -1.12E-06 | -1.15E-06 | -1.31E-05 | -8.40E-06 | 1.58E-04 | -1.71E-05 |
| C | -5.06E-09 | 5.46E-07 | 9.08E-06 | 1.38E-05 | -7.50E-05 | 5.48E-06 |
| D | 1.86E-08 | -3.53E-08 | -2.47E-06 | -3.30E-06 | 1.71E-05 | -2.27E-07 |
| E | -2.26E-09 | 3.53E-10 | 3.57E-07 | 3.95E-07 | -2.19E-06 | 1.05E-08 |
| F | 1.32E-10 | 7.40E-11 | -3.14E-08 | -2.85E-08 | 1.60E-07 | -3.12E-09 |
| G | -4.15E-12 | -4.15E-12 | 1.67E-09 | 1.24E-09 | -6.32E-09 | 3.27E-10 |
| H | 6.77E-14 | 8.97E-14 | -4.96E-11 | -3.10E-11 | 1.07E-10 | -1.38E-11 |
| J | -4.48E-16 | -7.15E-16 | 6.29E-13 | 3.48E-13 | -1.53E-13 | 2.10E-13 |

FIG. 43

| Y(Height, mm) | 1-2 | 2-3 | 3-4 | 4-5 | 5-6 | 6-7 | 7-8 | 8-9 | 9-10 | 10-11 | 11-12 | 12-13 | 13-14 | 14-15 |
|---|---|---|---|---|---|---|---|---|---|---|---|---|---|---|
| | L1 | Air | L2 | Air | L3 | Air | L4 | Air | L5 | Air | L6 | Air | L7 | Air-filter |
| 0 | 2.000 | 0.798 | 6.158 | 0.843 | 1.694 | 0.200 | 2.737 | 0.000 | 3.121 | 2.030 | 2.392 | 2.028 | 1.532 | 0.568 |
| 0.2 | 1.999 | 0.797 | 6.158 | 0.844 | 1.693 | 0.202 | 2.735 | 0.000 | 3.125 | 2.029 | 2.390 | 2.028 | 1.533 | 0.566 |
| 0.4 | 1.997 | 0.795 | 6.160 | 0.848 | 1.689 | 0.209 | 2.729 | 0.000 | 3.135 | 2.024 | 2.385 | 2.030 | 1.536 | 0.561 |
| 0.6 | 1.993 | 0.792 | 6.163 | 0.855 | 1.683 | 0.220 | 2.718 | 0.000 | 3.153 | 2.017 | 2.376 | 2.033 | 1.542 | 0.552 |
| 0.8 | 1.988 | 0.788 | 6.167 | 0.865 | 1.674 | 0.236 | 2.704 | 0.000 | 3.178 | 2.007 | 2.364 | 2.036 | 1.549 | 0.540 |
| 1 | 1.981 | 0.783 | 6.173 | 0.877 | 1.662 | 0.256 | 2.685 | 0.000 | 3.210 | 1.994 | 2.348 | 2.039 | 1.560 | 0.525 |
| 1.2 | 1.973 | 0.776 | 6.179 | 0.892 | 1.648 | 0.281 | 2.662 | 0.000 | 3.249 | 1.977 | 2.327 | 2.042 | 1.572 | 0.509 |
| 1.4 | 1.969 | 0.773 | 6.183 | 0.901 | 1.640 | 0.296 | 2.649 | 0.000 | 3.272 | 1.968 | 2.316 | 2.044 | 1.580 | 0.500 |
| 1.6 | 1.958 | 0.765 | 6.191 | 0.920 | 1.622 | 0.327 | 2.620 | 0.000 | 3.322 | 1.946 | 2.289 | 2.045 | 1.597 | 0.481 |
| 1.8 | 1.947 | 0.755 | 6.201 | 0.942 | 1.602 | 0.364 | 2.586 | 0.000 | 3.381 | 1.921 | 2.258 | 2.044 | 1.618 | 0.463 |
| 2 | 1.933 | 0.745 | 6.211 | 0.967 | 1.579 | 0.405 | 2.548 | 0.000 | 3.447 | 1.893 | 2.222 | 2.039 | 1.643 | 0.445 |
| 2.2 | 1.919 | 0.734 | 6.223 | 0.994 | 1.553 | 0.451 | 2.506 | 0.000 | 3.522 | 1.860 | 2.180 | 2.030 | 1.671 | 0.429 |
| 2.4 | 1.902 | 0.721 | 6.237 | 1.024 | 1.525 | 0.501 | 2.459 | 0.000 | 3.605 | 1.823 | 2.133 | 2.015 | 1.705 | 0.415 |
| 2.6 | 1.885 | 0.708 | 6.251 | 1.057 | 1.494 | 0.557 | 2.408 | 0.000 | 3.697 | 1.781 | 2.080 | 1.993 | 1.744 | 0.405 |
| 2.8 | 1.866 | 0.693 | 6.267 | 1.093 | 1.460 | 0.617 | 2.353 | 0.000 | 3.798 | 1.734 | 2.020 | 1.964 | 1.790 | 0.400 |
| 3 | 1.845 | 0.678 | 6.284 | 1.132 | 1.424 | 0.682 | 2.293 | 0.000 | 3.909 | 1.681 | 1.953 | 1.924 | 1.842 | 0.401 |
| 3.2 | 1.823 | 0.662 | 6.302 | 1.173 | 1.386 | 0.752 | 2.228 | 0.000 | 4.030 | 1.621 | 1.879 | 1.874 | 1.903 | 0.409 |
| 3.4 | 1.800 | 0.644 | 6.321 | 1.217 | 1.344 | 0.827 | 2.158 | 0.000 | 4.162 | 1.554 | 1.795 | 1.812 | 1.973 | 0.426 |
| 3.6 | 1.776 | 0.626 | 6.342 | 1.264 | 1.300 | 0.908 | 2.084 | 0.000 | 4.307 | 1.477 | 1.703 | 1.737 | 2.055 | 0.452 |
| 3.8 | 1.750 | 0.607 | 6.364 | 1.314 | 1.254 | 0.993 | 2.005 | 0.000 | 4.464 | 1.388 | 1.599 | 1.648 | 2.149 | 0.488 |
| 4 | 1.722 | 0.588 | 6.388 | 1.367 | 1.205 | 1.084 | 1.921 | 0.000 | 3.194 | | 1.484 | 1.545 | 2.259 | 0.537 |
| 4.2 | 1.694 | 0.567 | 6.412 | 1.422 | 1.153 | 1.180 | 1.832 | 0.000 | 3.202 | | 1.358 | 2.314 | | 0.598 |
| 4.4 | 1.664 | 0.546 | 6.438 | 1.481 | 1.098 | 1.282 | 1.737 | 0.000 | 3.210 | | | | | 0.675 |
| 4.6 | 1.633 | 0.523 | 6.465 | 1.542 | 1.041 | 1.390 | 1.638 | 0.000 | 3.218 | | | | | |
| 4.8 | 1.601 | 0.501 | 6.494 | 1.606 | 0.981 | 1.503 | 1.533 | 0.000 | | | | | | |
| 5 | 1.567 | 0.477 | 6.524 | 1.673 | 0.918 | 1.622 | 1.422 | 0.000 | | | | | | |
| 5.2 | 1.533 | 0.453 | 6.856 | | | | 1.430 | 0.000 | | | | | | |
| 5.4 | 1.497 | 0.428 | 6.913 | | | | | 0.000 | | | | | | |
| 5.6 | 1.461 | 0.402 | 6.972 | | | | | | | | | | | |
| 5.8 | 1.423 | 0.374 | 7.034 | | | | | | | | | | | |
| 6 | 1.385 | 1.287 | | | | | | | | | | | | |
| 6.2 | 1.872 | | | | | | | | | | | | | |

FIG. 44

| | sag | | | | | | | | | | | | | |
|---|---|---|---|---|---|---|---|---|---|---|---|---|---|---|
| Y(Height, mm) | | | | | | | | | | | | | | |
| | L1S1 | L1S2 | L2S1 | L2S2 | L3S1 | L3S2 | L4S1 | L4S2 | L5S1 | L5S2 | L6S1 | L6S2 | L7S1 | L7S2 |
| 0 | 0.000 | 0.000 | 0.000 | 0.000 | 0.000 | 0.000 | 0.000 | 0.000 | 0.000 | 0.000 | 0.000 | 0.000 | 0.000 | 0.000 |
| 0.2 | 0.000 | 0.000 | -0.001 | 0.000 | 0.001 | 0.000 | 0.002 | 0.000 | 0.000 | 0.003 | 0.002 | 0.000 | 0.001 | 0.002 |
| 0.4 | 0.001 | -0.002 | -0.004 | -0.002 | 0.004 | -0.001 | 0.008 | -0.001 | -0.001 | 0.013 | 0.008 | 0.001 | 0.003 | 0.007 |
| 0.6 | 0.003 | -0.004 | -0.009 | -0.004 | 0.008 | -0.003 | 0.017 | -0.002 | -0.002 | 0.030 | 0.017 | 0.001 | 0.006 | 0.016 |
| 0.8 | 0.004 | -0.007 | -0.017 | -0.007 | 0.015 | -0.006 | 0.030 | -0.003 | -0.003 | 0.054 | 0.030 | 0.002 | 0.011 | 0.028 |
| 1 | 0.007 | -0.012 | -0.026 | -0.011 | 0.023 | -0.009 | 0.047 | -0.005 | -0.005 | 0.084 | 0.048 | 0.003 | 0.015 | 0.042 |
| 1.2 | 0.010 | -0.017 | -0.038 | -0.017 | 0.033 | -0.013 | 0.068 | -0.007 | -0.007 | 0.121 | 0.068 | 0.004 | 0.019 | 0.059 |
| 1.4 | 0.012 | -0.020 | -0.045 | -0.019 | 0.039 | -0.016 | 0.080 | -0.008 | -0.008 | 0.143 | 0.080 | 0.004 | 0.020 | 0.068 |
| 1.6 | 0.015 | -0.026 | -0.059 | -0.026 | 0.051 | -0.021 | 0.107 | -0.011 | -0.011 | 0.191 | 0.107 | 0.004 | 0.021 | 0.086 |
| 1.8 | 0.019 | -0.034 | -0.076 | -0.033 | 0.066 | -0.027 | 0.137 | -0.014 | -0.014 | 0.246 | 0.137 | 0.003 | 0.019 | 0.105 |
| 2 | 0.024 | -0.043 | -0.095 | -0.041 | 0.082 | -0.033 | 0.172 | -0.017 | -0.017 | 0.309 | 0.172 | 0.001 | 0.013 | 0.123 |
| 2.2 | 0.029 | -0.053 | -0.117 | -0.051 | 0.101 | -0.041 | 0.210 | -0.021 | -0.021 | 0.380 | 0.210 | -0.002 | 0.000 | 0.139 |
| 2.4 | 0.034 | -0.063 | -0.140 | -0.061 | 0.121 | -0.049 | 0.252 | -0.025 | -0.025 | 0.458 | 0.251 | -0.008 | -0.020 | 0.153 |
| 2.6 | 0.040 | -0.076 | -0.165 | -0.072 | 0.143 | -0.058 | 0.299 | -0.030 | -0.030 | 0.546 | 0.297 | -0.015 | -0.049 | 0.163 |
| 2.8 | 0.046 | -0.089 | -0.193 | -0.084 | 0.167 | -0.067 | 0.350 | -0.035 | -0.035 | 0.642 | 0.346 | -0.026 | -0.090 | 0.168 |
| 3 | 0.052 | -0.103 | -0.223 | -0.097 | 0.192 | -0.078 | 0.404 | -0.040 | -0.040 | 0.747 | 0.398 | -0.040 | -0.144 | 0.167 |
| 3.2 | 0.058 | -0.119 | -0.255 | -0.111 | 0.220 | -0.089 | 0.463 | -0.046 | -0.046 | 0.863 | 0.454 | -0.059 | -0.213 | 0.159 |
| 3.4 | 0.064 | -0.136 | -0.289 | -0.125 | 0.249 | -0.101 | 0.527 | -0.052 | -0.052 | 0.989 | 0.513 | -0.084 | -0.299 | 0.142 |
| 3.6 | 0.070 | -0.154 | -0.325 | -0.141 | 0.281 | -0.113 | 0.594 | -0.059 | -0.059 | 1.127 | 0.574 | -0.116 | -0.406 | 0.116 |
| 3.8 | 0.077 | -0.174 | -0.364 | -0.158 | 0.314 | -0.127 | 0.667 | -0.066 | -0.066 | 1.277 | 0.635 | -0.158 | -0.537 | 0.080 |
| 4 | 0.083 | -0.195 | -0.405 | -0.175 | 0.349 | -0.141 | 0.743 | -0.073 | -0.073 | | 0.694 | -0.213 | -0.696 | 0.031 |
| 4.2 | 0.089 | -0.217 | -0.448 | -0.194 | 0.386 | -0.156 | 0.825 | -0.081 | -0.081 | | 0.747 | -0.287 | | -0.030 |
| 4.4 | 0.094 | -0.241 | -0.494 | -0.213 | 0.425 | -0.171 | 0.911 | -0.089 | -0.089 | | | | | -0.107 |
| 4.6 | 0.100 | -0.267 | -0.541 | -0.233 | 0.466 | -0.187 | 1.002 | -0.097 | -0.097 | | | | | |
| 4.8 | 0.105 | -0.294 | -0.591 | -0.255 | 0.509 | -0.204 | 1.099 | -0.106 | -0.106 | | | | | |
| 5 | 0.110 | -0.323 | -0.643 | -0.277 | 0.554 | -0.222 | 1.200 | -0.115 | -0.115 | | | | | |
| 5.2 | 0.114 | -0.353 | -0.698 | | | | 1.307 | | | | | | | |
| 5.4 | 0.118 | -0.385 | -0.755 | | | | | | | | | | | |
| 5.6 | 0.121 | -0.418 | -0.814 | | | | | | | | | | | |
| 5.8 | 0.124 | -0.453 | -0.876 | | | | | | | | | | | |
| 6 | 0.126 | -0.489 | | | | | | | | | | | | |
| 6.2 | 0.128 | | | | | | | | | | | | | |

FIG. 45

| slope angle | | | | | | | | | | | | | | |
|---|---|---|---|---|---|---|---|---|---|---|---|---|---|---|
| Y(Height, mm) | | | | | | | | | | | | | | |
| | L1S1 | L1S2 | L2S1 | L2S2 | L3S1 | L3S2 | L4S1 | L4S2 | L5S1 | L5S2 | L6S1 | L6S2 | L7S1 | L7S2 |
| 0 | 0 | 0 | 0 | 0 | 0 | 0 | 0 | 0 | 0 | 0 | 0 | 0 | 0 | 0 |
| 0.2 | 0.120 | -0.199 | -0.453 | -0.198 | 0.391 | -0.159 | 0.811 | -0.083 | -0.083 | 1.433 | 0.819 | 0.075 | 0.332 | 0.783 |
| 0.4 | 0.280 | -0.465 | -1.057 | -0.461 | 0.913 | -0.371 | 1.892 | -0.193 | -0.193 | 3.344 | 1.909 | 0.165 | 0.737 | 1.800 |
| 0.6 | 0.437 | -0.732 | -1.661 | -0.724 | 1.435 | -0.582 | 2.973 | -0.303 | -0.303 | 5.260 | 2.997 | 0.233 | 1.054 | 2.754 |
| 0.8 | 0.592 | -1.001 | -2.265 | -0.988 | 1.957 | -0.794 | 4.056 | -0.413 | -0.413 | 7.181 | 4.082 | 0.265 | 1.237 | 3.609 |
| 0.9 | 0.667 | -1.137 | -2.567 | -1.119 | 2.218 | -0.900 | 4.598 | -0.468 | -0.468 | 8.145 | 4.623 | 0.264 | 1.263 | 3.988 |
| 1 | 0.742 | -1.274 | -2.869 | -1.251 | 2.479 | -1.006 | 5.140 | -0.523 | -0.523 | 9.110 | 5.162 | 0.250 | 1.238 | 4.329 |
| 1.2 | 0.887 | -1.551 | -3.474 | -1.514 | 3.001 | -1.218 | 6.226 | -0.633 | -0.633 | 11.051 | 6.238 | 0.177 | 1.013 | 4.881 |
| 1.4 | 0.957 | -1.691 | -3.776 | -1.646 | 3.263 | -1.323 | 6.770 | -0.688 | -0.688 | 12.025 | 6.773 | 0.116 | 0.800 | 5.084 |
| 1.6 | 1.092 | -1.977 | -4.381 | -1.910 | 3.785 | -1.535 | 7.860 | -0.798 | -0.798 | 13.986 | 7.841 | -0.061 | 0.143 | 5.323 |
| 1.8 | 1.219 | -2.270 | -4.987 | -2.173 | 4.308 | -1.747 | 8.952 | -0.908 | -0.908 | 15.963 | 8.905 | -0.316 | -0.862 | 5.320 |
| 2 | 1.336 | -2.570 | -5.593 | -2.437 | 4.832 | -1.959 | 10.048 | -1.018 | -1.018 | 17.960 | 9.961 | -0.661 | -2.257 | 5.052 |
| 2.2 | 1.442 | -2.880 | -6.200 | -2.700 | 5.356 | -2.171 | 11.148 | -1.128 | -1.128 | 19.979 | 11.009 | -1.109 | -4.074 | 4.501 |
| 2.4 | 1.536 | -3.198 | -6.808 | -2.964 | 5.880 | -2.383 | 12.252 | -1.238 | -1.238 | 22.025 | 12.042 | -1.677 | -6.337 | 3.655 |
| 2.6 | 1.617 | -3.526 | -7.416 | -3.228 | 6.405 | -2.595 | 13.360 | -1.348 | -1.348 | 24.101 | 13.053 | -2.390 | -9.067 | 2.501 |
| 2.8 | 1.685 | -3.864 | -8.026 | -3.491 | 6.930 | -2.807 | 14.473 | -1.458 | -1.458 | 26.211 | 14.031 | -3.278 | -12.278 | 1.034 |
| 3 | 1.738 | -4.213 | -8.636 | -3.755 | 7.455 | -3.019 | 15.592 | -1.568 | -1.568 | 28.361 | 14.958 | -4.379 | -15.965 | -0.757 |
| 3.2 | 1.776 | -4.572 | -9.247 | -4.019 | 7.982 | -3.231 | 16.717 | -1.678 | -1.678 | 30.554 | 15.805 | -5.751 | -20.083 | -2.879 |
| 3.4 | 1.797 | -4.944 | -9.860 | -4.283 | 8.509 | -3.443 | 17.850 | -1.788 | -1.788 | 32.799 | 16.517 | -7.479 | -24.561 | -5.330 |
| 3.6 | 1.800 | -5.327 | -10.473 | -4.547 | 9.038 | -3.655 | 18.988 | -1.898 | -1.898 | 35.100 | 16.994 | -9.701 | -29.365 | -8.094 |
| 3.8 | 1.785 | -5.721 | -11.088 | -4.812 | 9.566 | -3.867 | 20.135 | -2.008 | -2.008 | 37.470 | 17.044 | -12.621 | -34.498 | -11.139 |
| 4 | 1.753 | -6.126 | -11.703 | -5.076 | 10.095 | -4.079 | 21.291 | -2.118 | -2.118 | | 16.294 | -16.492 | -39.589 | -14.447 |
| 4.2 | 1.702 | -6.538 | -12.320 | -5.340 | 10.626 | -4.291 | 22.455 | -2.228 | -2.228 | | 14.097 | -21.497 | | -18.054 |
| 4.4 | 1.635 | -6.957 | -12.939 | -5.605 | 11.157 | -4.504 | 23.630 | -2.338 | -2.338 | | | | | -21.982 |
| 4.6 | 1.551 | -7.384 | -13.560 | -5.869 | 11.690 | -4.716 | 24.813 | -2.448 | -2.448 | | | | | |
| 4.8 | 1.451 | -7.819 | -14.181 | -6.134 | 12.223 | -4.929 | 26.012 | -2.559 | -2.559 | | | | | |
| 5 | 1.333 | -8.265 | -14.805 | -6.399 | 12.757 | -5.142 | 27.221 | -2.669 | -2.669 | | | | | |
| 5.2 | 1.195 | -8.720 | -15.431 | | | | 28.440 | | | | | | | |
| 5.4 | 1.039 | -9.166 | -16.058 | | | | | | | | | | | |
| 5.6 | 0.881 | -9.572 | -16.687 | | | | | | | | | | | |
| 5.8 | 0.749 | -9.920 | -17.318 | | | | | | | | | | | |
| 6 | 0.669 | -10.334 | | | | | | | | | | | | |
| 6.2 | 0.556 | | | | | | | | | | | | | |

FIG. 46

| CRA Data | | | |
|---|---|---|---|
| Field | Room temperature | Low temperature | High temperature |
| 0 | 0.0 | 0.0 | 0.0 |
| 0.1 | 2.6 | 2.6 | 2.6 |
| 0.2 | 5.2 | 5.2 | 5.2 |
| 0.3 | 7.8 | 7.8 | 7.7 |
| 0.4 | 10.3 | 10.4 | 10.3 |
| 0.5 | 12.8 | 12.8 | 12.7 |
| 0.6 | 15.1 | 15.1 | 15.0 |
| 0.7 | 17.1 | 17.2 | 17.0 |
| 0.8 | 18.8 | 18.8 | 18.7 |
| 0.9 | 19.9 | 19.9 | 19.9 |
| 1 | 20.5 | 20.5 | 20.6 |

FIG. 47

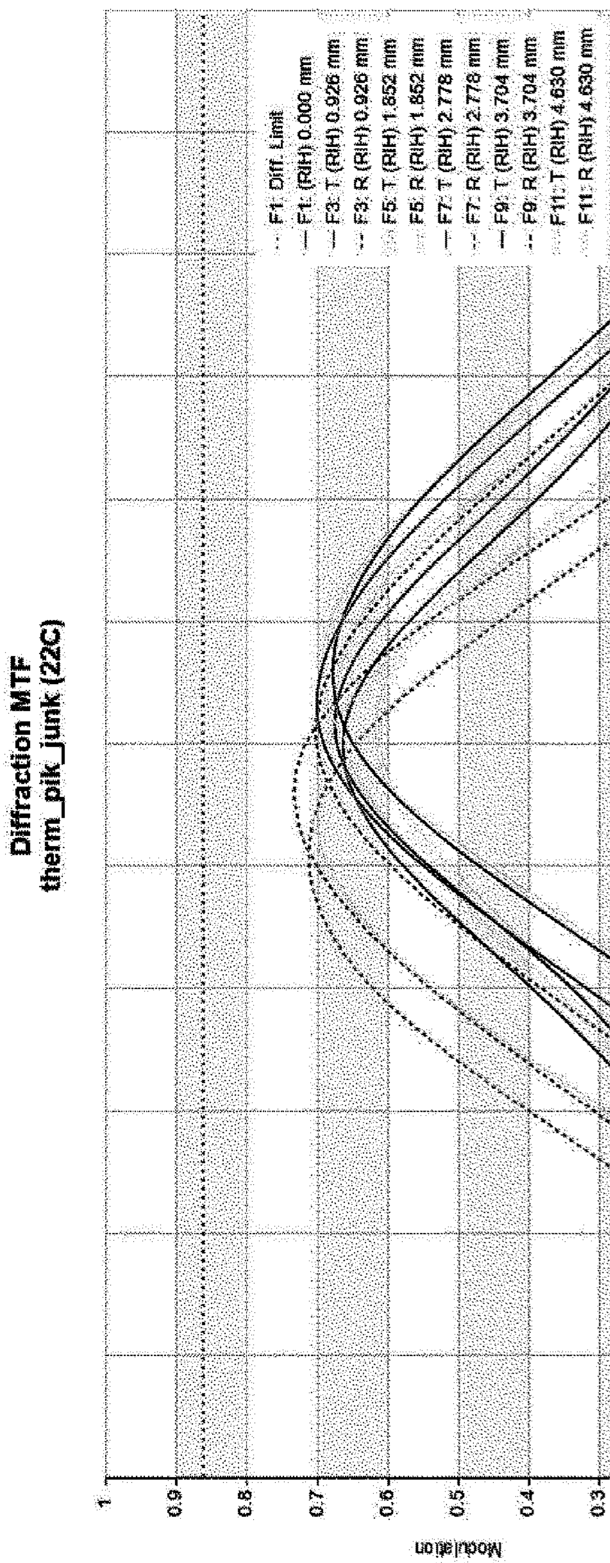
Diffraction MTF
therm_pik_junk (22C)
F1: Diff. Limit
F1: (RIH) 0.000 mm
F3: T (RIH) 0.926 mm
F3: R (RIH) 0.926 mm
F5: T (RIH) 1.852 mm
F5: R (RIH) 1.852 mm
F7: T (RIH) 2.778 mm
F7: R (RIH) 2.778 mm
F9: T (RIH) 3.704 mm
F9: R (RIH) 3.704 mm
F11: T (RIH) 4.630 mm
F11: R (RIH) 4.630 mm
Modulation
Defocusing Position (mm)

FIG. 48

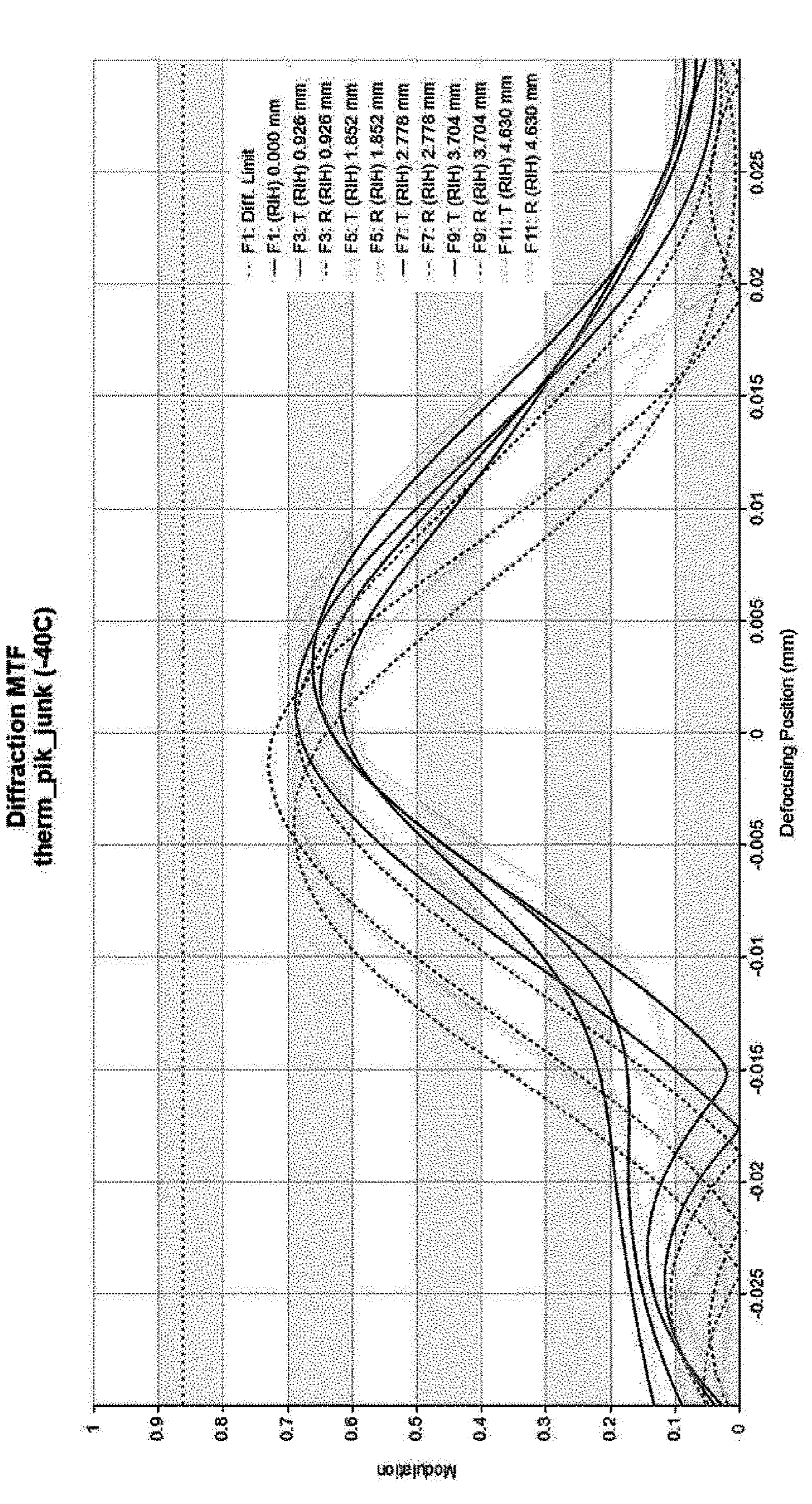
Diffraction MTF
therm_pik_junk (-40C)
F1: Diff. Limit
F1: (RIH) 0.000 mm
F3: T (RIH) 0.926 mm
F3: R (RIH) 0.926 mm
F5: T (RIH) 1.852 mm
F5: R (RIH) 1.852 mm
F7: T (RIH) 2.778 mm
F7: R (RIH) 2.778 mm
F9: T (RIH) 3.704 mm
F9: R (RIH) 3.704 mm
F11: T (RIH) 4.630 mm
F11: R (RIH) 4.630 mm
Modulation
Defocusing Position (mm)

FIG. 49

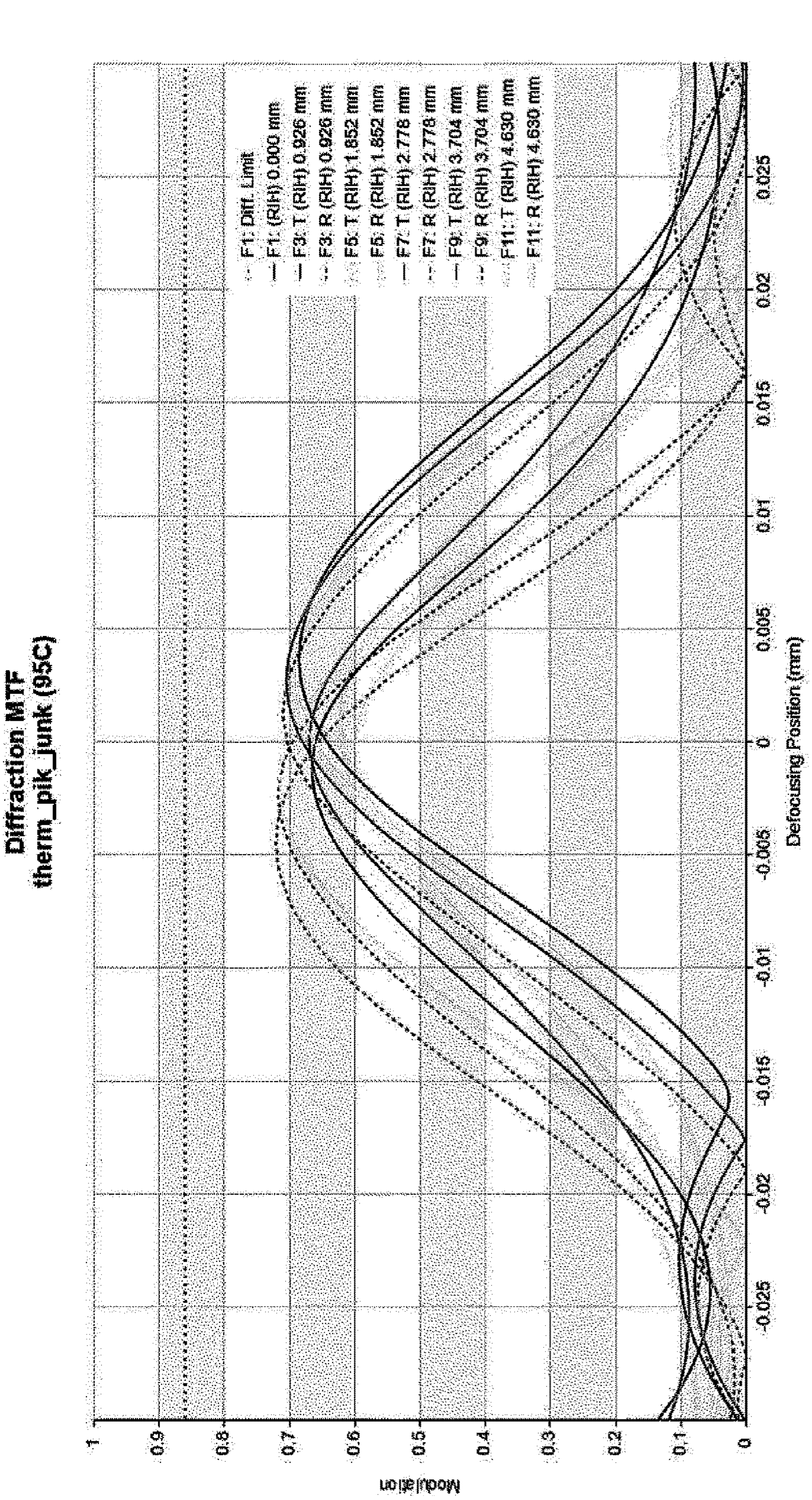
Diffraction MTF
therm_pik_junk (95C)
F1: Diff. Limit
F1: (RIH) 0.000 mm
F3: T (RIH) 0.926 mm
F3: R (RIH) 0.926 mm
F5: T (RIH) 1.852 mm
F5: R (RIH) 1.852 mm
F7: T (RIH) 2.778 mm
F7: R (RIH) 2.778 mm
F9: T (RIH) 3.704 mm
F9: R (RIH) 3.704 mm
F11: T (RIH) 4.630 mm
F11: R (RIH) 4.630 mm
Modulation
Defocusing Position (mm)

FIG. 50

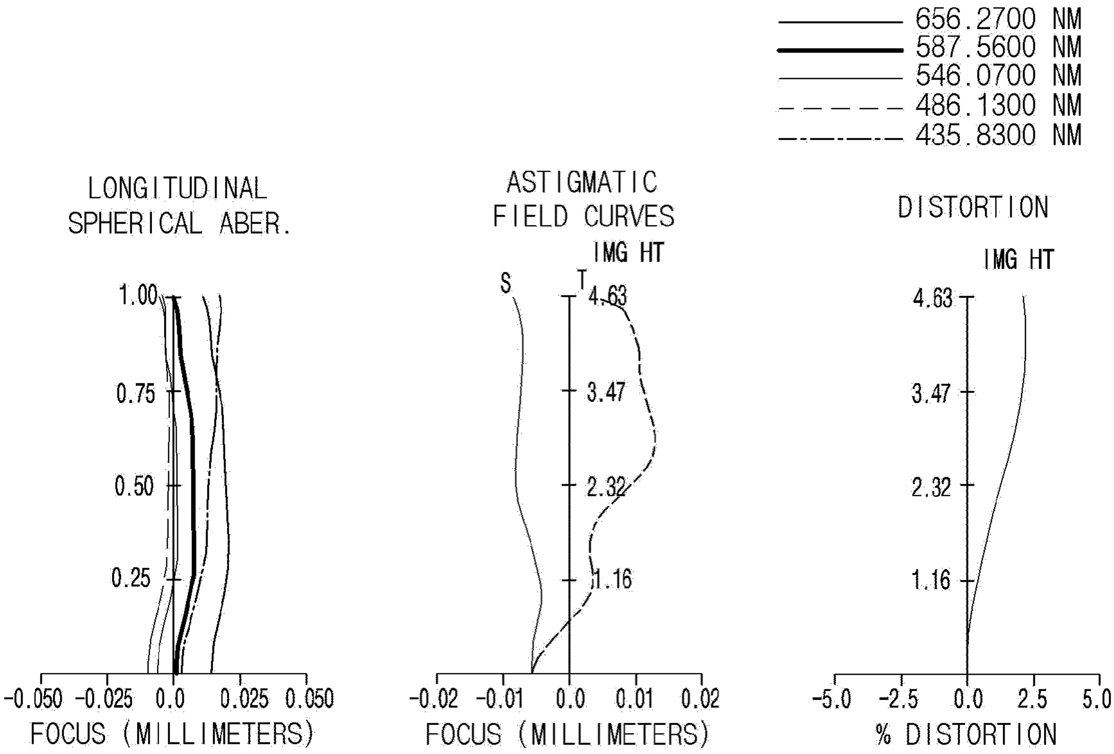
656.2700 NM
587.5600 NM
546.0700 NM
486.1300 NM
435.8300 NM
LONGITUDINAL SPHERICAL ABER.
1.00
0.75
0.50
0.25
-0.050 -0.025 0.0 0.025 0.050
FOCUS (MILLIMETERS)
ASTIGMATIC FIELD CURVES
IMG HT
S
T
4.63
3.47
2.32
1.16
-0.02 -0.01 0.0 0.01 0.02
FOCUS (MILLIMETERS)
DISTORTION
IMG HT
4.63
3.47
2.32
1.16
-5.0 -2.5 0.0 2.5 5.0
% DISTORTION

FIG. 51

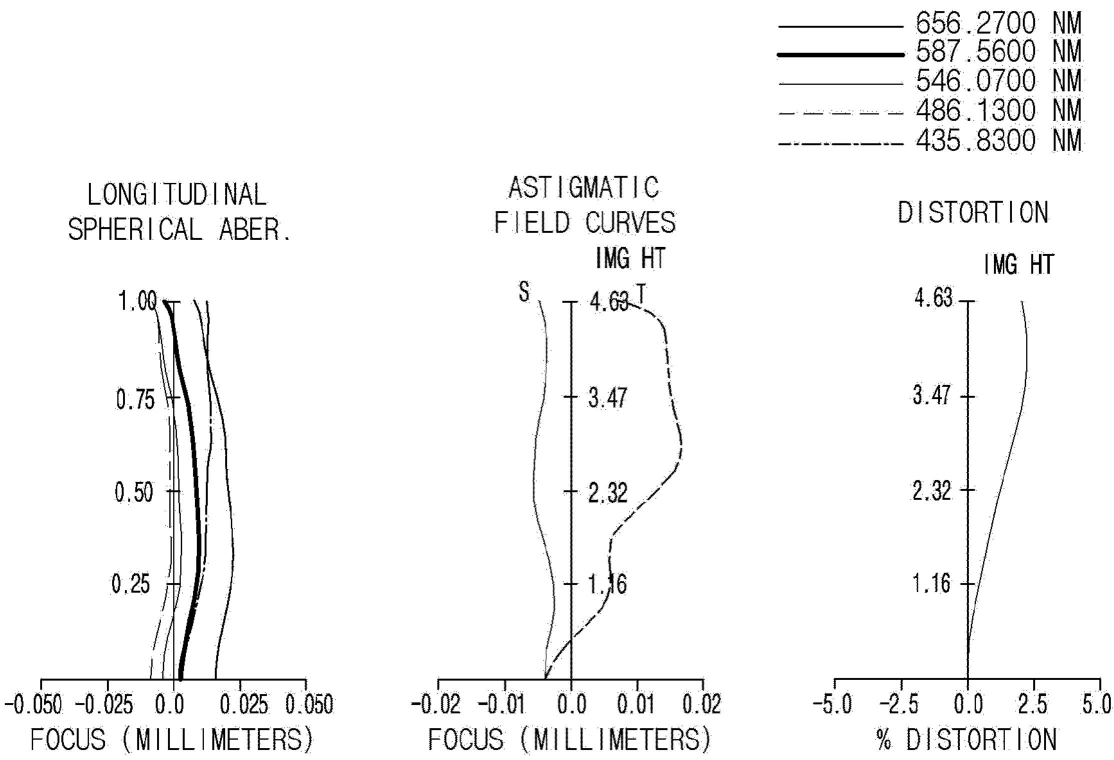
656.2700 NM
587.5600 NM
546.0700 NM
486.1300 NM
435.8300 NM
LONGITUDINAL SPHERICAL ABER.
1.00
0.75
0.50
0.25
-0.050 -0.025 0.0 0.025 0.050
FOCUS (MILLIMETERS)
ASTIGMATIC FIELD CURVES
IMG HT
S
T
4.63
3.47
2.32
1.16
-0.02 -0.01 0.0 0.01 0.02
FOCUS (MILLIMETERS)
DISTORTION
IMG HT
4.63
3.47
2.32
1.16
-5.0 -2.5 0.0 2.5 5.0
% DISTORTION

FIG. 52

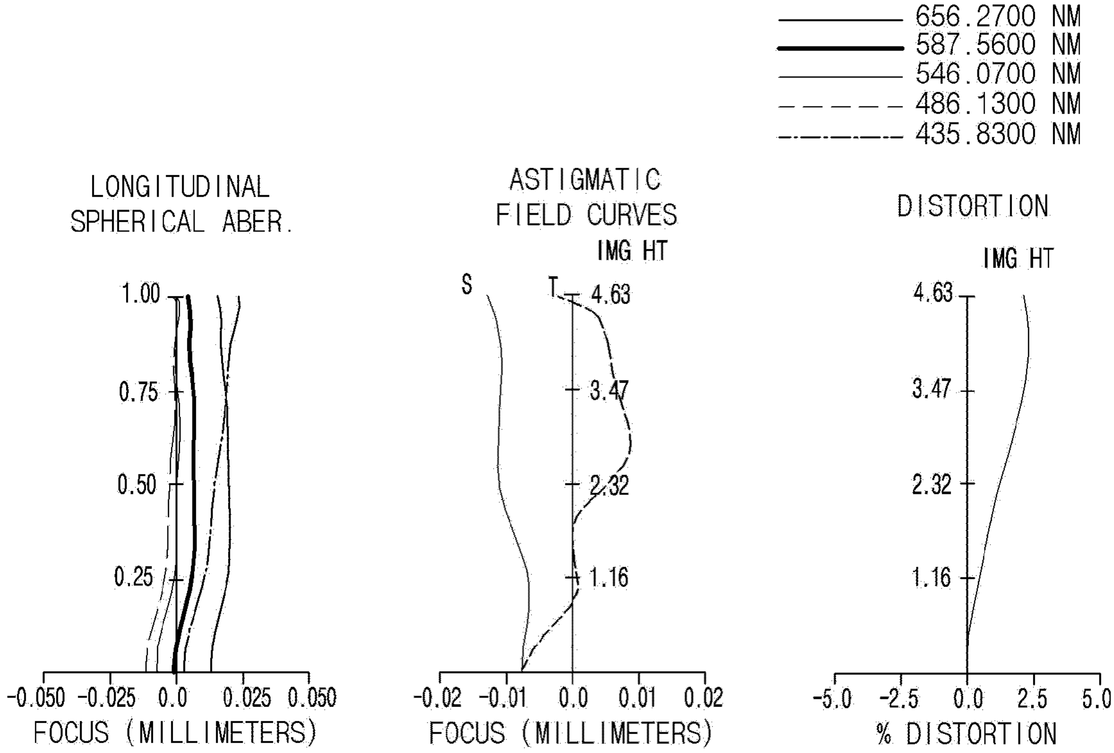
656.2700 NM
587.5600 NM
546.0700 NM
486.1300 NM
435.8300 NM
LONGITUDINAL
SPHERICAL ABER.
1.00
0.75
0.50
0.25
-0.050 -0.025 0.0 0.025 0.050
FOCUS (MILLIMETERS)
ASTIGMATIC
FIELD CURVES
IMG HT
S
T
4.63
3.47
2.32
1.16
-0.02 -0.01 0.0 0.01 0.02
FOCUS (MILLIMETERS)
DISTORTION
IMG HT
4.63
3.47
2.32
1.16
-5.0 -2.5 0.0 2.5 5.0
% DISTORTION

FIG. 53

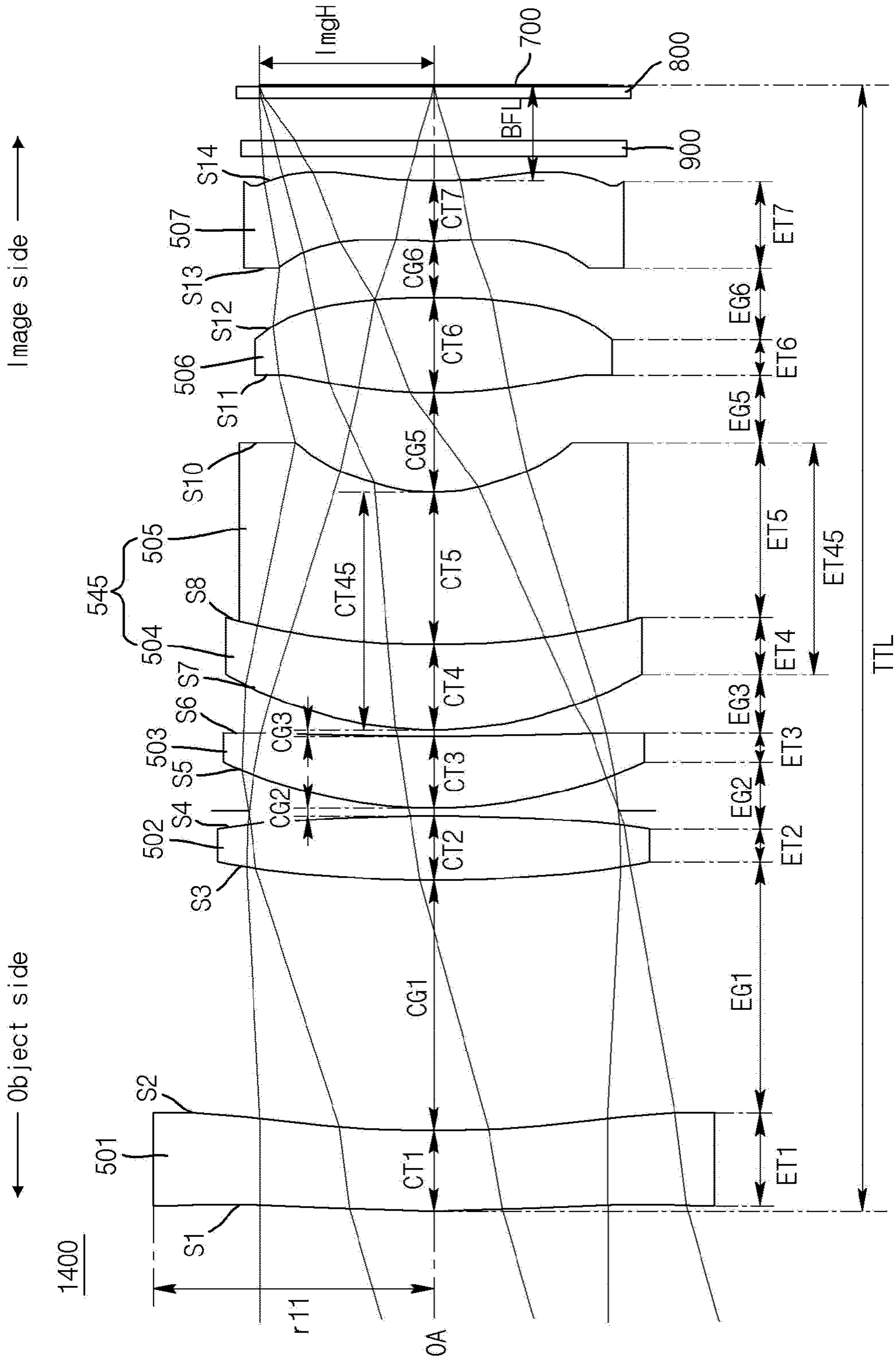

Image side
Object side
1400
ImgH
700
800
900
BFL
S1
S2
S3
S4
S5
S6
S7
S8
S10
S11
S12
S13
S14
501
502
503
504
505
506
507
545
CT1
CT2
CT3
CT4
CT5
CT6
CT7
CT45
CG1
CG2
CG3
CG5
CG6
ET1
ET2
ET3
ET4
ET5
ET6
ET7
ET45
EG1
EG2
EG3
EG5
EG6
TTL
r11
OA

FIG. 54

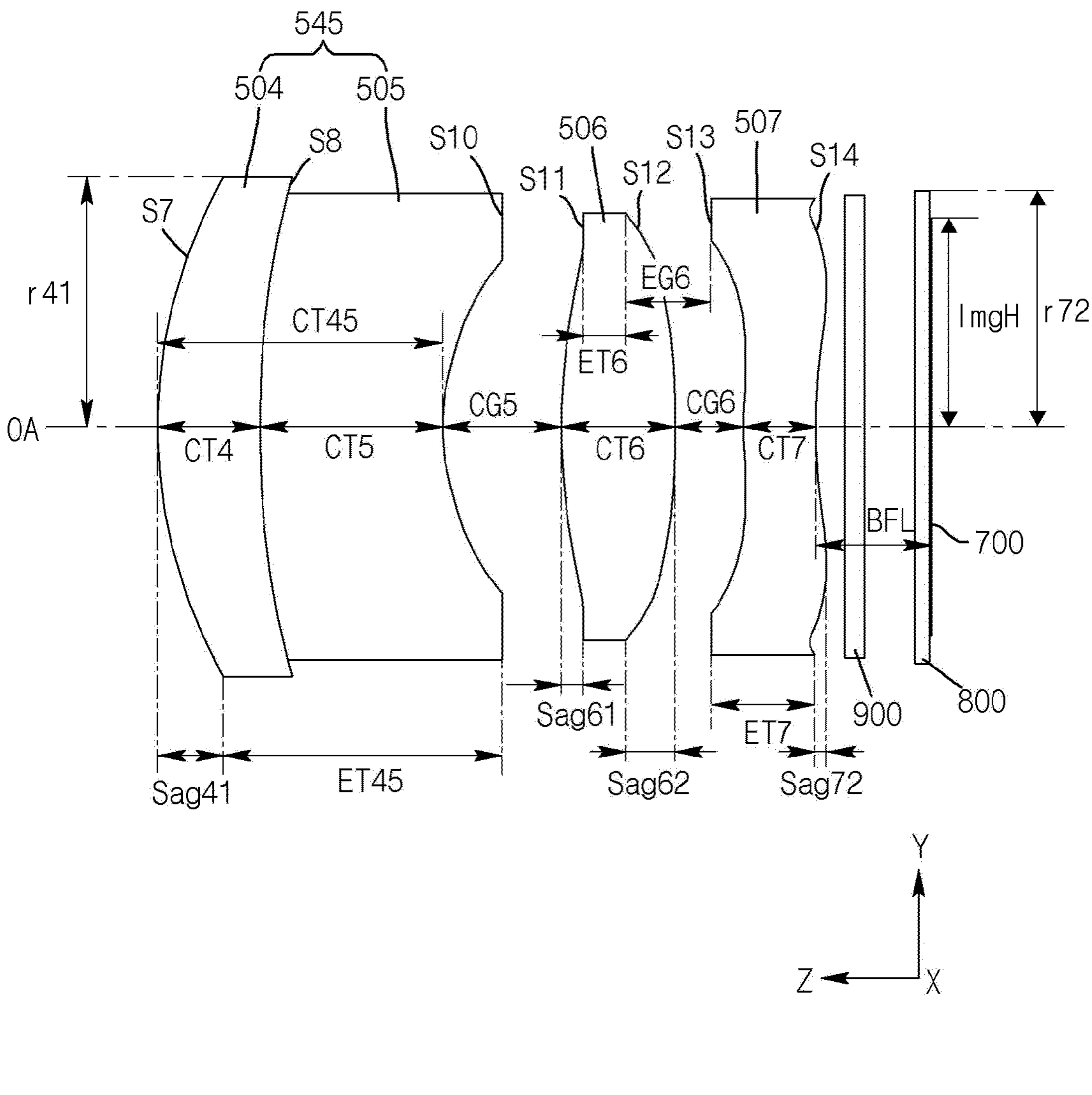
545
504
505
S8
S10
506
S13
507
S11
S12
S14
S7
r41
EG6
CT45
ImgH
r72
ET6
CG5
CG6
OA
CT4
CT5
CT6
CT7
BFL
700
900
800
Sag61
ET7
ET45
Sag62
Sag72
Sag41
Y
Z
X

FIG. 55

| | L1 | | L6 | | L7 | |
|---|---|---|---|---|---|---|
| | S1 | S2 | S1 | S2 | S1 | S2 |
| Y | -41.417 | -171.171 | 11.90766 | 55.88286 | 45.71372 | 14.19258 |
| K | -70.5986 | -23.914 | -7.14247 | -29.8415 | -11.5026 | 7.275486 |
| A | -2.48E-04 | -6.32E-05 | 3.08E-04 | -1.01E-03 | -3.20E-03 | -2.38E-03 |
| B | 2.07E-06 | -4.22E-06 | -7.39E-06 | 1.59E-05 | 2.48E-05 | -6.02E-05 |
| C | 2.50E-07 | 1.01E-06 | 2.79E-07 | -2.10E-06 | -1.60E-05 | 7.05E-06 |
| D | -4.68E-08 | -1.19E-07 | -7.54E-08 | 1.79E-07 | 2.78E-06 | -4.75E-07 |
| E | 4.13E-09 | 8.49E-09 | 5.45E-09 | -1.93E-08 | -2.19E-07 | 1.37E-08 |
| F | -2.11E-10 | -3.73E-10 | -8.67E-11 | 1.69E-09 | 8.12E-10 | -2.68E-11 |
| G | 6.27E-12 | 9.83E-12 | -9.09E-12 | -9.53E-11 | 1.12E-09 | -1.32E-12 |
| H | -1.01E-13 | -1.43E-13 | 3.63E-13 | 2.72E-12 | -7.40E-11 | -3.49E-13 |
| J | 6.81E-16 | 8.70E-16 | -3.64E-15 | -2.90E-14 | 1.53E-12 | 7.20E-15 |

FIG. 56

| Y(Height, mm) | 1-2 | 2-3 | 3-4 | 4-5 | 5-6 | 6-7 | 7-8 | 8-9 | 9-10 | 10-11 | 11-12 | 12-13 | 13-14 | 14-15 |
|---|---|---|---|---|---|---|---|---|---|---|---|---|---|---|
| | L1 | Air | L2 | Air | L3 | Air | L4 | Air | L5 | Air | L6 | Air | L7 | Air-filter |
| 0 | 5.155 | 0.200 | 1.415 | 3.332 | 1.736 | 0.200 | 3.725 | 0.000 | 2.162 | 1.316 | 2.858 | 2.370 | 2.086 | 0.543 |
| 0.2 | 5.155 | 0.200 | 1.414 | 3.334 | 1.735 | 0.202 | 3.723 | 0.000 | 2.166 | 1.315 | 2.857 | 2.370 | 2.087 | 0.542 |
| 0.4 | 5.157 | 0.201 | 1.413 | 3.337 | 1.732 | 0.208 | 3.715 | 0.000 | 2.177 | 1.311 | 2.853 | 2.370 | 2.090 | 0.538 |
| 0.6 | 5.158 | 0.203 | 1.409 | 3.343 | 1.727 | 0.218 | 3.703 | 0.000 | 2.194 | 1.305 | 2.846 | 2.370 | 2.095 | 0.531 |
| 0.8 | 5.161 | 0.205 | 1.405 | 3.351 | 1.721 | 0.231 | 3.686 | 0.000 | 2.220 | 1.297 | 2.837 | 2.370 | 2.102 | 0.522 |
| 1 | 5.164 | 0.208 | 1.400 | 3.362 | 1.712 | 0.249 | 3.665 | 0.000 | 2.252 | 1.285 | 2.825 | 2.369 | 2.112 | 0.510 |
| 1.2 | 5.168 | 0.211 | 1.393 | 3.375 | 1.702 | 0.270 | 3.638 | 0.000 | 2.291 | 1.271 | 2.809 | 2.368 | 2.124 | 0.497 |
| 1.4 | 5.171 | 0.213 | 1.389 | 3.382 | 1.696 | 0.283 | 3.623 | 0.000 | 2.314 | 1.263 | 2.800 | 2.367 | 2.131 | 0.490 |
| 1.6 | 5.176 | 0.218 | 1.380 | 3.399 | 1.682 | 0.310 | 3.589 | 0.000 | 2.365 | 1.245 | 2.780 | 2.363 | 2.147 | 0.475 |
| 1.8 | 5.182 | 0.223 | 1.370 | 3.417 | 1.667 | 0.342 | 3.550 | 0.000 | 2.423 | 1.224 | 2.756 | 2.357 | 2.166 | 0.459 |
| 2 | 5.189 | 0.229 | 1.359 | 3.439 | 1.650 | 0.377 | 3.506 | 0.000 | 2.489 | 1.199 | 2.728 | 2.348 | 2.189 | 0.444 |
| 2.2 | 5.196 | 0.236 | 1.347 | 3.462 | 1.631 | 0.417 | 3.457 | 0.000 | 2.563 | 1.171 | 2.696 | 2.334 | 2.215 | 0.430 |
| 2.4 | 5.205 | 0.244 | 1.333 | 3.488 | 1.610 | 0.460 | 3.403 | 0.000 | 2.645 | 1.140 | 2.660 | 2.316 | 2.246 | 0.417 |
| 2.6 | 5.214 | 0.252 | 1.318 | 3.516 | 1.587 | 0.508 | 3.344 | 0.000 | 2.735 | 1.104 | 2.619 | 2.292 | 2.282 | 0.408 |
| 2.8 | 5.225 | 0.261 | 1.302 | 3.547 | 1.562 | 0.560 | 3.280 | 0.000 | 2.833 | 1.065 | 2.573 | 2.261 | 2.325 | 0.402 |
| 3 | 5.236 | 0.271 | 1.285 | 3.580 | 1.535 | 0.616 | 3.211 | 0.000 | 2.941 | 1.020 | 2.521 | 2.221 | 2.373 | 0.400 |
| 3.2 | 5.248 | 0.282 | 1.266 | 3.616 | 1.507 | 0.676 | 3.137 | 0.000 | 3.057 | 0.970 | 2.463 | 2.171 | 2.430 | 0.404 |
| 3.4 | 5.261 | 0.294 | 1.246 | 3.653 | 1.476 | 0.741 | 3.057 | 0.000 | 3.183 | 0.915 | 2.398 | 2.109 | 2.496 | 0.415 |
| 3.6 | 5.275 | 0.306 | 1.225 | 3.694 | 1.443 | 0.810 | 2.972 | 0.000 | 3.319 | 0.853 | 2.326 | 2.035 | 2.573 | 0.434 |
| 3.8 | 5.290 | 0.320 | 1.203 | 3.736 | 1.409 | 0.884 | 2.881 | 0.000 | 3.465 | 0.783 | 2.245 | 1.945 | 2.663 | 0.462 |
| 4 | 5.307 | 0.335 | 1.179 | 3.781 | 1.373 | 0.962 | 2.785 | 0.000 | 3.623 | 0.704 | 2.155 | 1.838 | 2.769 | 0.500 |
| 4.2 | 5.324 | 0.350 | 1.155 | 3.829 | 1.334 | 1.044 | 2.684 | 0.000 | 3.792 | 0.613 | 2.056 | 2.525 | | 0.550 |
| 4.4 | 5.343 | 0.367 | 1.129 | 3.879 | 1.294 | 1.132 | 2.577 | 0.000 | 3.973 | 0.508 | 1.946 | 2.587 | | 0.611 |
| 4.6 | 5.363 | 0.384 | 1.101 | 3.931 | 1.251 | 1.224 | 2.464 | 0.000 | 2.499 | | 1.826 | 2.667 | | 0.686 |
| 4.8 | 5.384 | 0.403 | 1.073 | 3.985 | 1.207 | 1.321 | 2.345 | 0.000 | 2.530 | | | | | |
| 5 | 5.406 | 0.423 | 1.043 | 4.043 | 1.161 | 1.423 | 2.220 | 0.000 | 2.562 | | | | | |
| 5.2 | 5.430 | 0.444 | 1.012 | 4.102 | 1.113 | 1.531 | 2.089 | 0.000 | 2.595 | | | | | |
| 5.4 | 5.455 | 0.326 | | 3.868 | 1.062 | 1.643 | 1.952 | 0.000 | 2.630 | | | | | |
| 5.6 | 5.621 | | | 3.910 | 1.010 | 1.761 | 1.808 | 0.000 | 2.667 | | | | | |
| 5.8 | | | | 3.953 | 0.956 | 1.885 | 1.658 | 0.000 | 2.704 | | | | | |
| 6 | | | | | 1.565 | 2.015 | 2.081 | 0.000 | | | | | | |

FIG. 57

| | sag | | | | | | | | | | | | | |
|---|---|---|---|---|---|---|---|---|---|---|---|---|---|---|
| Y(Height, mm) | | | | | | | | | | | | | | |
| | L1S1 | L1S2 | L2S1 | L2S2 | L3S1 | L3S2 | L4S1 | L4S2 | L5S1 | L5S2 | L6S1 | L6S2 | L7S1 | L7S2 |
| 0 | 0.000 | 0.000 | 0.000 | 0.000 | 0.000 | 0.000 | 0.000 | 0.000 | 0.000 | 0.000 | 0.000 | 0.000 | 0.000 | 0.000 |
| 0.2 | 0.000 | 0.000 | 0.000 | 0.000 | 0.001 | 0.000 | 0.002 | -0.001 | -0.001 | 0.003 | 0.002 | 0.000 | 0.000 | 0.001 |
| 0.4 | -0.002 | 0.000 | 0.001 | -0.002 | 0.003 | -0.001 | 0.007 | -0.003 | -0.003 | 0.012 | 0.007 | 0.001 | 0.002 | 0.006 |
| 0.6 | -0.004 | -0.001 | 0.002 | -0.004 | 0.007 | -0.002 | 0.016 | -0.006 | -0.006 | 0.026 | 0.015 | 0.003 | 0.004 | 0.012 |
| 0.8 | -0.008 | -0.002 | 0.003 | -0.007 | 0.012 | -0.003 | 0.028 | -0.011 | -0.011 | 0.047 | 0.027 | 0.005 | 0.006 | 0.022 |
| 1 | -0.012 | -0.003 | 0.005 | -0.011 | 0.019 | -0.005 | 0.044 | -0.017 | -0.017 | 0.073 | 0.042 | 0.008 | 0.008 | 0.033 |
| 1.2 | -0.018 | -0.004 | 0.007 | -0.015 | 0.027 | -0.007 | 0.063 | -0.024 | -0.024 | 0.105 | 0.060 | 0.011 | 0.009 | 0.046 |
| 1.4 | -0.021 | -0.005 | 0.008 | -0.018 | 0.032 | -0.008 | 0.074 | -0.028 | -0.028 | 0.124 | 0.071 | 0.012 | 0.009 | 0.054 |
| 1.6 | -0.028 | -0.007 | 0.011 | -0.024 | 0.043 | -0.011 | 0.099 | -0.037 | -0.037 | 0.165 | 0.094 | 0.015 | 0.008 | 0.069 |
| 1.8 | -0.036 | -0.009 | 0.014 | -0.030 | 0.055 | -0.014 | 0.127 | -0.048 | -0.048 | 0.213 | 0.120 | 0.018 | 0.005 | 0.084 |
| 2 | -0.045 | -0.011 | 0.018 | -0.038 | 0.068 | -0.018 | 0.159 | -0.060 | -0.060 | 0.267 | 0.150 | 0.019 | -0.003 | 0.099 |
| 2.2 | -0.056 | -0.014 | 0.022 | -0.046 | 0.083 | -0.022 | 0.195 | -0.073 | -0.073 | 0.327 | 0.182 | 0.020 | -0.015 | 0.114 |
| 2.4 | -0.067 | -0.017 | 0.026 | -0.056 | 0.100 | -0.026 | 0.234 | -0.088 | -0.088 | 0.395 | 0.218 | 0.020 | -0.034 | 0.126 |
| 2.6 | -0.080 | -0.021 | 0.031 | -0.066 | 0.118 | -0.031 | 0.277 | -0.103 | -0.103 | 0.469 | 0.257 | 0.017 | -0.060 | 0.136 |
| 2.8 | -0.094 | -0.025 | 0.036 | -0.077 | 0.138 | -0.036 | 0.324 | -0.121 | -0.121 | 0.550 | 0.299 | 0.013 | -0.096 | 0.142 |
| 3 | -0.110 | -0.029 | 0.042 | -0.089 | 0.159 | -0.041 | 0.375 | -0.139 | -0.139 | 0.639 | 0.343 | 0.005 | -0.144 | 0.143 |
| 3.2 | -0.127 | -0.034 | 0.048 | -0.101 | 0.182 | -0.047 | 0.429 | -0.159 | -0.159 | 0.736 | 0.390 | -0.006 | -0.205 | 0.139 |
| 3.4 | -0.146 | -0.040 | 0.054 | -0.115 | 0.206 | -0.053 | 0.488 | -0.181 | -0.181 | 0.840 | 0.439 | -0.022 | -0.282 | 0.128 |
| 3.6 | -0.166 | -0.046 | 0.061 | -0.129 | 0.232 | -0.060 | 0.550 | -0.203 | -0.203 | 0.954 | 0.490 | -0.043 | -0.378 | 0.109 |
| 3.8 | -0.188 | -0.052 | 0.068 | -0.144 | 0.260 | -0.067 | 0.617 | -0.227 | -0.227 | 1.076 | 0.543 | -0.071 | -0.496 | 0.081 |
| 4 | -0.211 | -0.059 | 0.075 | -0.160 | 0.289 | -0.075 | 0.687 | -0.252 | -0.252 | 1.208 | 0.595 | -0.108 | -0.639 | 0.043 |
| 4.2 | -0.236 | -0.067 | 0.083 | -0.177 | 0.319 | -0.082 | 0.762 | -0.279 | -0.279 | 1.350 | 0.647 | -0.156 | | -0.006 |
| 4.4 | -0.263 | -0.075 | 0.092 | -0.195 | 0.351 | -0.091 | 0.841 | -0.307 | -0.307 | 1.504 | 0.695 | -0.218 | | -0.068 |
| 4.6 | -0.292 | -0.084 | 0.100 | -0.213 | 0.385 | -0.099 | 0.925 | -0.337 | -0.337 | | 0.735 | -0.297 | | -0.142 |
| 4.8 | -0.323 | -0.094 | 0.109 | -0.233 | 0.420 | -0.108 | 1.013 | -0.367 | -0.367 | | | | | |
| 5 | -0.355 | -0.104 | 0.119 | -0.253 | 0.457 | -0.118 | 1.106 | -0.400 | -0.400 | | | | | |
| 5.2 | -0.390 | -0.115 | 0.129 | -0.274 | 0.496 | -0.128 | 1.203 | -0.433 | -0.433 | | | | | |
| 5.4 | -0.427 | -0.126 | | | 0.536 | -0.138 | 1.305 | -0.468 | -0.468 | | | | | |
| 5.6 | -0.466 | | | | 0.577 | -0.148 | 1.413 | -0.504 | -0.504 | | | | | |
| 5.8 | | | | | 0.620 | -0.159 | 1.526 | -0.542 | -0.542 | | | | | |
| 6 | | | | | | -0.171 | 1.644 | | | | | | | |

FIG. 58

| slope angle | | | | | | | | | | | | | | |
|---|---|---|---|---|---|---|---|---|---|---|---|---|---|---|
| Y(Height, mm) | | | | | | | | | | | | | | |
| | L1S1 | L1S2 | L2S1 | L2S2 | L3S1 | L3S2 | L4S1 | L4S2 | L5S1 | L5S2 | L6S1 | L6S2 | L7S1 | L7S2 |
| 0 | 0.000 | 0.000 | 0.000 | 0.000 | 0.000 | 0.000 | 0.000 | 0.000 | 0.000 | 0.000 | 0.000 | 0.000 | 0.000 | 0.000 |
| 0.2 | -0.208 | -0.050 | 0.085 | -0.181 | 0.324 | -0.084 | 0.753 | -0.284 | -0.284 | 1.246 | 0.722 | 0.153 | 0.185 | 0.604 |
| 0.4 | -0.485 | -0.118 | 0.199 | -0.422 | 0.757 | -0.197 | 1.758 | -0.663 | -0.663 | 2.908 | 1.682 | 0.349 | 0.406 | 1.392 |
| 0.6 | -0.766 | -0.187 | 0.312 | -0.663 | 1.190 | -0.309 | 2.763 | -1.042 | -1.042 | 4.572 | 2.639 | 0.524 | 0.566 | 2.141 |
| 0.8 | -1.050 | -0.257 | 0.426 | -0.904 | 1.622 | -0.422 | 3.769 | -1.421 | -1.421 | 6.240 | 3.590 | 0.670 | 0.629 | 2.825 |
| 1 | -1.339 | -0.331 | 0.539 | -1.145 | 2.055 | -0.534 | 4.776 | -1.800 | -1.800 | 7.914 | 4.533 | 0.774 | 0.559 | 3.421 |
| 1.2 | -1.634 | -0.409 | 0.652 | -1.386 | 2.488 | -0.646 | 5.784 | -2.179 | -2.179 | 9.594 | 5.467 | 0.827 | 0.321 | 3.902 |
| 1.4 | -1.785 | -0.449 | 0.709 | -1.506 | 2.704 | -0.703 | 6.289 | -2.368 | -2.368 | 10.437 | 5.930 | 0.832 | 0.126 | 4.092 |
| 1.6 | -2.092 | -0.534 | 0.823 | -1.747 | 3.138 | -0.815 | 7.300 | -2.748 | -2.748 | 12.131 | 6.846 | 0.789 | -0.440 | 4.353 |
| 1.8 | -2.409 | -0.624 | 0.936 | -1.989 | 3.571 | -0.927 | 8.314 | -3.127 | -3.127 | 13.836 | 7.748 | 0.670 | -1.277 | 4.437 |
| 2 | -2.736 | -0.720 | 1.050 | -2.230 | 4.004 | -1.040 | 9.330 | -3.506 | -3.506 | 15.552 | 8.634 | 0.463 | -2.426 | 4.320 |
| 2.2 | -3.075 | -0.823 | 1.163 | -2.471 | 4.438 | -1.152 | 10.350 | -3.886 | -3.886 | 17.284 | 9.500 | 0.156 | -3.929 | 3.981 |
| 2.4 | -3.427 | -0.932 | 1.277 | -2.712 | 4.872 | -1.265 | 11.372 | -4.266 | -4.266 | 19.032 | 10.345 | -0.264 | -5.825 | 3.399 |
| 2.6 | -3.792 | -1.048 | 1.390 | -2.953 | 5.306 | -1.377 | 12.398 | -4.646 | -4.646 | 20.799 | 11.161 | -0.816 | -8.151 | 2.559 |
| 2.8 | -4.172 | -1.171 | 1.504 | -3.195 | 5.741 | -1.490 | 13.429 | -5.026 | -5.026 | 22.586 | 11.943 | -1.517 | -10.937 | 1.442 |
| 3 | -4.567 | -1.302 | 1.617 | -3.436 | 6.175 | -1.602 | 14.463 | -5.406 | -5.406 | 24.397 | 12.680 | -2.394 | -14.203 | 0.035 |
| 3.2 | -4.978 | -1.441 | 1.731 | -3.678 | 6.611 | -1.714 | 15.503 | -5.787 | -5.787 | 26.235 | 13.361 | -3.477 | -17.947 | -1.676 |
| 3.4 | -5.406 | -1.587 | 1.844 | -3.919 | 7.047 | -1.827 | 16.548 | -6.168 | -6.168 | 28.101 | 13.965 | -4.811 | -22.144 | -3.694 |
| 3.6 | -5.850 | -1.741 | 1.958 | -4.161 | 7.483 | -1.939 | 17.598 | -6.549 | -6.549 | 30.001 | 14.456 | -6.460 | -26.768 | -6.014 |
| 3.8 | -6.311 | -1.902 | 2.071 | -4.403 | 7.920 | -2.052 | 18.655 | -6.931 | -6.931 | 31.939 | 14.769 | -8.518 | -31.794 | -8.618 |
| 4 | -6.790 | -2.069 | 2.185 | -4.644 | 8.356 | -2.164 | 19.718 | -7.313 | -7.313 | 33.917 | 14.796 | -11.103 | -36.983 | -11.484 |
| 4.2 | -7.285 | -2.241 | 2.299 | -4.886 | 8.793 | -2.277 | 20.788 | -7.695 | -7.695 | 35.946 | 14.348 | -14.339 | | -14.597 |
| 4.4 | -7.798 | -2.419 | 2.412 | -5.128 | 9.232 | -2.389 | 21.867 | -8.077 | -8.077 | 38.022 | 13.127 | -18.274 | | -17.946 |
| 4.6 | -8.328 | -2.602 | 2.526 | -5.370 | 9.670 | -2.502 | 22.953 | -8.460 | -8.460 | | 10.687 | -22.732 | | -21.322 |
| 4.8 | -8.873 | -2.788 | 2.639 | -5.612 | 10.109 | -2.614 | 24.050 | -8.843 | -8.843 | | | | | |
| 5 | -9.431 | -2.977 | 2.753 | -5.855 | 10.549 | -2.727 | 25.150 | -9.227 | -9.227 | | | | | |
| 5.2 | -10.002 | -3.168 | 2.866 | -6.097 | 10.989 | -2.840 | 26.266 | -9.611 | -9.611 | | | | | |
| 5.4 | -10.589 | -3.370 | | | 11.431 | -2.952 | 27.393 | -9.995 | -9.995 | | | | | |
| 5.6 | -11.200 | | | | 11.872 | -3.065 | 28.529 | -10.380 | -10.380 | | | | | |
| 5.8 | | | | | 12.314 | -3.177 | 29.679 | -10.766 | -10.766 | | | | | |
| 6 | | | | | | -3.290 | 30.841 | | | | | | | |

FIG. 59

| CRA Data | | | |
|---|---|---|---|
| Field | Room temperature | Low temperature | High temperature |
| 0 | 0.0 | 0.0 | 0.0 |
| 0.1 | 2.3 | 2.3 | 2.3 |
| 0.2 | 4.6 | 4.7 | 4.6 |
| 0.3 | 6.9 | 7.0 | 6.9 |
| 0.4 | 9.2 | 9.3 | 9.2 |
| 0.5 | 11.5 | 11.5 | 11.4 |
| 0.6 | 13.6 | 13.6 | 13.5 |
| 0.7 | 15.5 | 15.5 | 15.4 |
| 0.8 | 17.0 | 17.1 | 17.0 |
| 0.9 | 18.1 | 18.2 | 18.1 |
| 1 | 18.9 | 18.9 | 18.9 |

FIG. 60

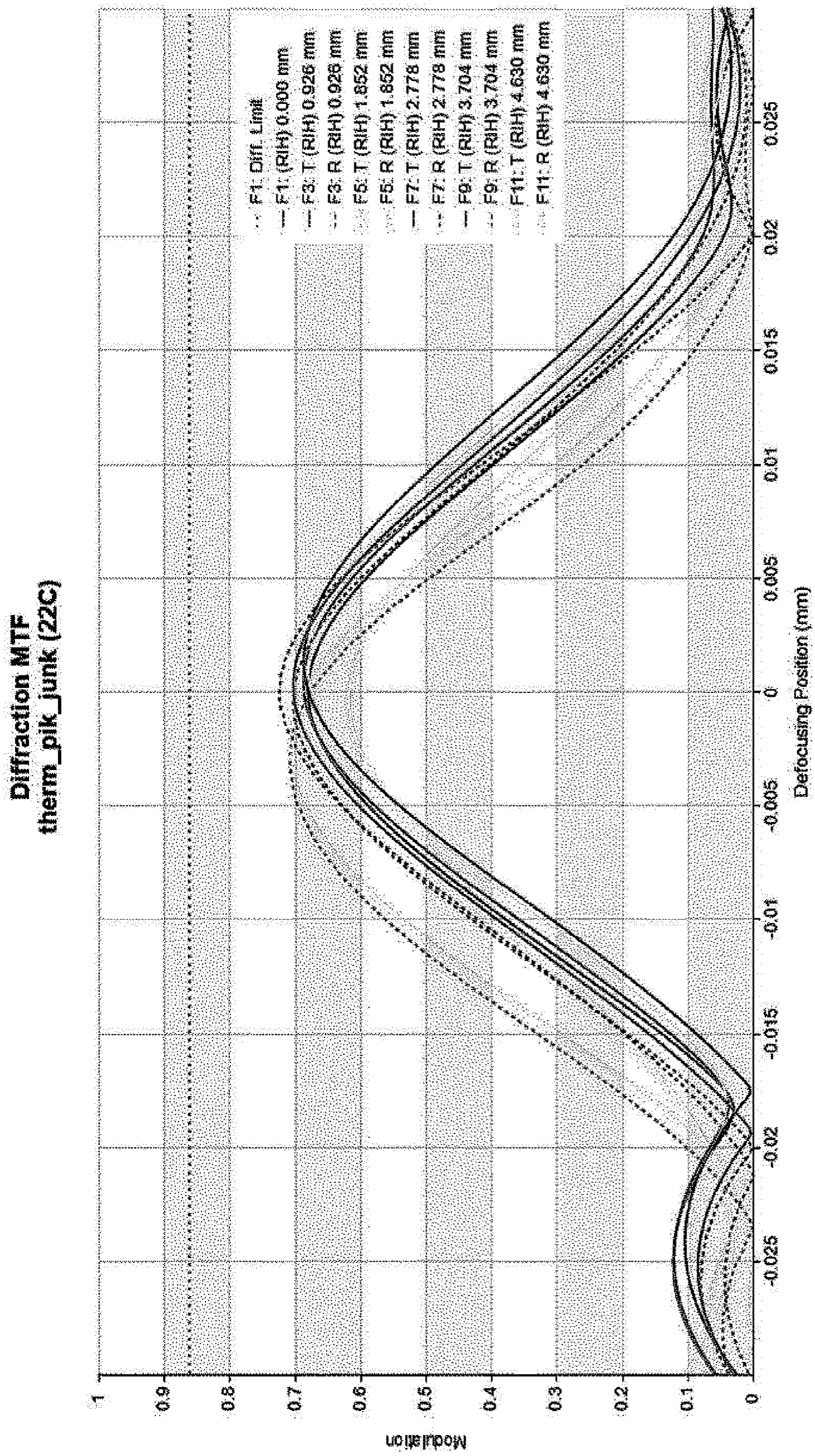
Diffraction MTF
therm_pik_junk (22C)
F1: Diff. Limit
F1: (RIH) 0.000 mm
F3: T (RIH) 0.926 mm
F3: R (RIH) 0.926 mm
F5: T (RIH) 1.852 mm
F5: R (RIH) 1.852 mm
F7: T (RIH) 2.778 mm
F7: R (RIH) 2.778 mm
F9: T (RIH) 3.704 mm
F9: R (RIH) 3.704 mm
F11: T (RIH) 4.630 mm
F11: R (RIH) 4.630 mm
Modulation
1
0.9
0.8
0.7
0.6
0.5
0.4
0.3
0.2
0.1
0
-0.025
-0.02
-0.015
-0.01
-0.005
0
0.005
0.01
0.015
0.02
0.025
Defocusing Position (mm)

FIG. 61

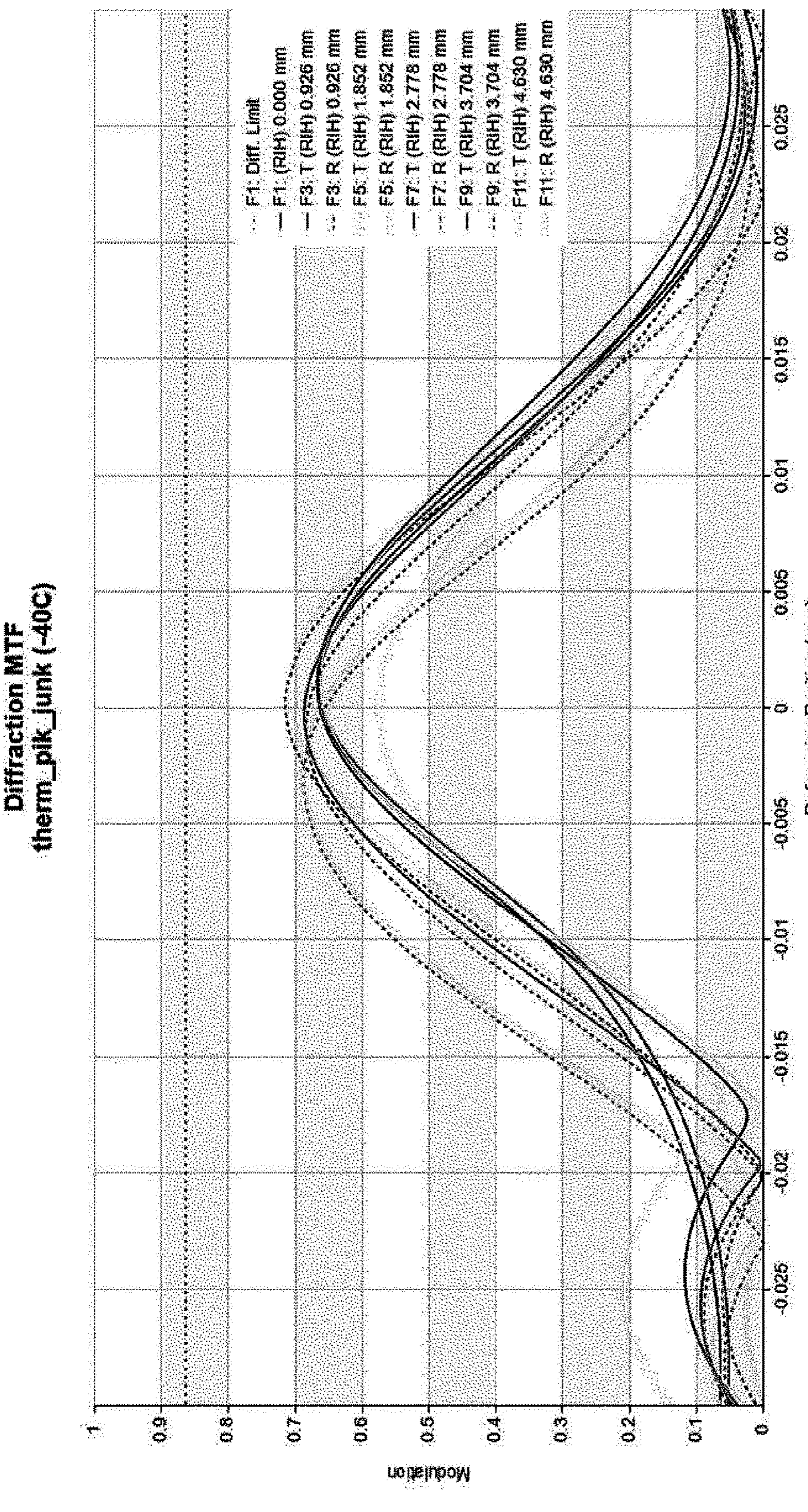
Diffraction MTF
therm_pik_junk (-40C)
F1: Diff. Limit
F1: (RIH) 0.000 mm
F3: T (RIH) 0.926 mm
F3: R (RIH) 0.926 mm
F5: T (RIH) 1.852 mm
F5: R (RIH) 1.852 mm
F7: T (RIH) 2.778 mm
F7: R (RIH) 2.778 mm
F9: T (RIH) 3.704 mm
F9: R (RIH) 3.704 mm
F11: T (RIH) 4.630 mm
F11: R (RIH) 4.630 mm
Modulation
1
0.9
0.8
0.7
0.6
0.5
0.4
0.3
0.2
0.1
0
-0.025
-0.02
-0.015
-0.01
-0.005
0
0.005
0.01
0.015
0.02
0.025
Defocusing Position (mm)

FIG. 62

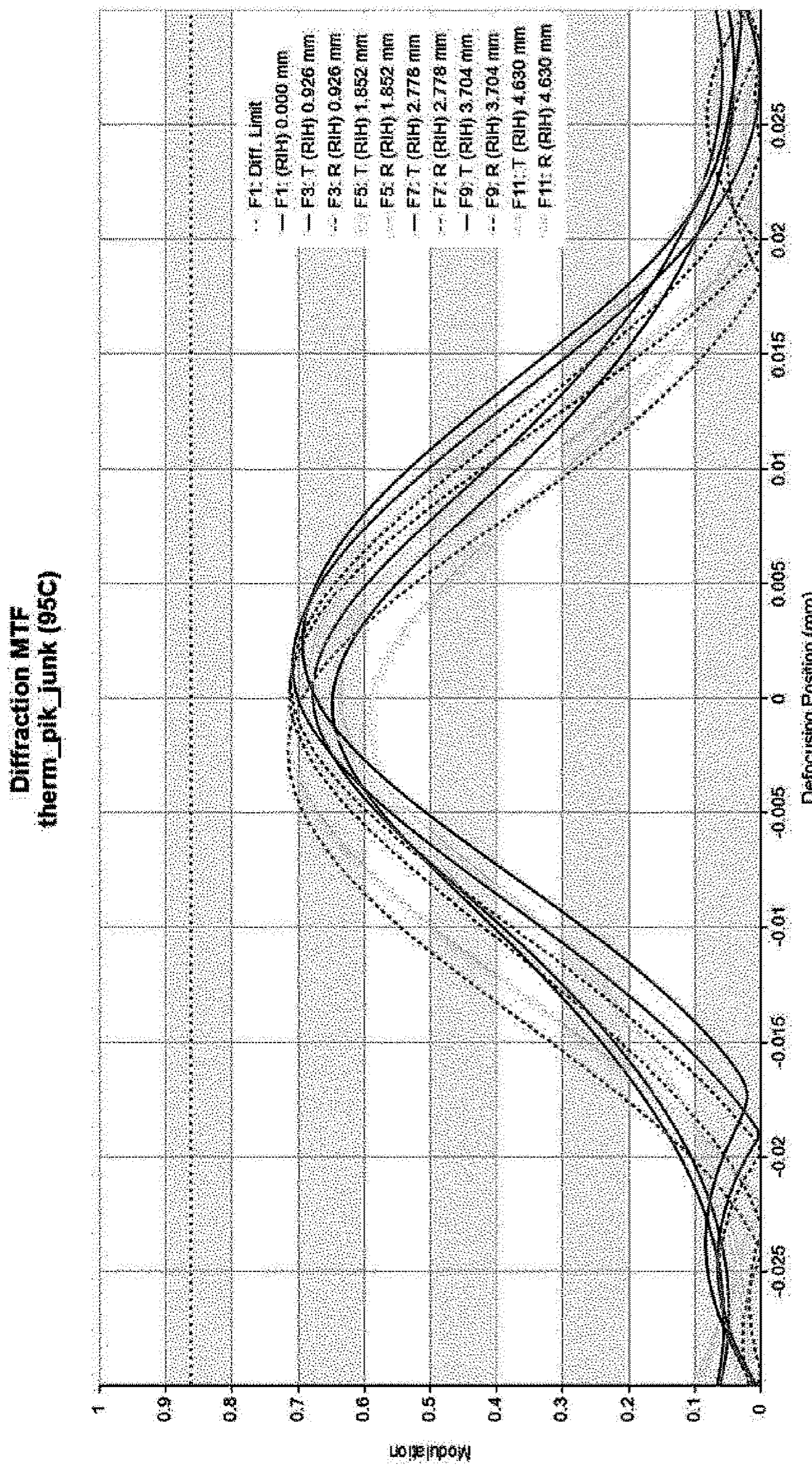
Diffraction MTF
therm_pik_junk (95C)
F1: Diff. Limit
F1: (RIH) 0.000 mm
F3: T (RIH) 0.926 mm
F3: R (RIH) 0.926 mm
F5: T (RIH) 1.852 mm
F5: R (RIH) 1.852 mm
F7: T (RIH) 2.778 mm
F7: R (RIH) 2.778 mm
F9: T (RIH) 3.704 mm
F9: R (RIH) 3.704 mm
F11: T (RIH) 4.630 mm
F11: R (RIH) 4.630 mm
Modulation
1
0.9
0.8
0.7
0.6
0.5
0.4
0.3
0.2
0.1
0
Defocusing Position (mm)
-0.025
-0.02
-0.015
-0.01
-0.005
0
0.005
0.01
0.015
0.02
0.025

FIG. 63

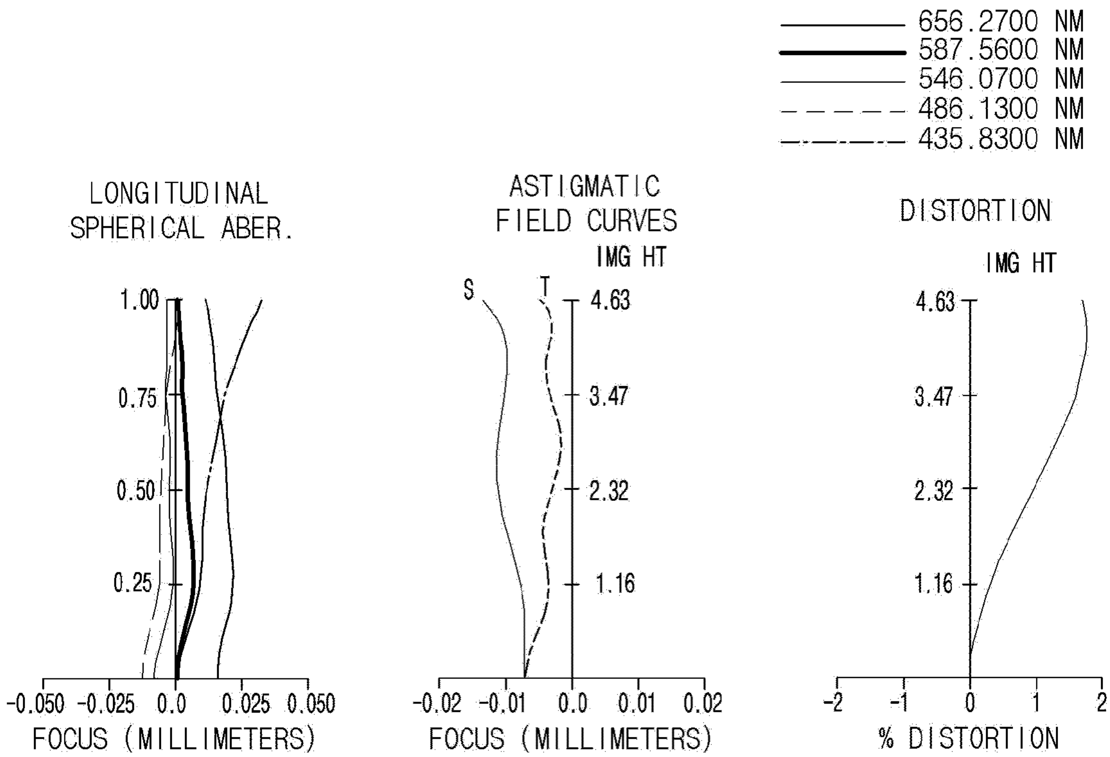
656.2700 NM
587.5600 NM
546.0700 NM
486.1300 NM
435.8300 NM
LONGITUDINAL SPHERICAL ABER.
1.00
0.75
0.50
0.25
-0.050 -0.025 0.0 0.025 0.050
FOCUS (MILLIMETERS)
ASTIGMATIC FIELD CURVES
IMG HT
S
T
4.63
3.47
2.32
1.16
-0.02 -0.01 0.0 0.01 0.02
FOCUS (MILLIMETERS)
DISTORTION
IMG HT
4.63
3.47
2.32
1.16
-2 -1 0 1 2
% DISTORTION

FIG. 64

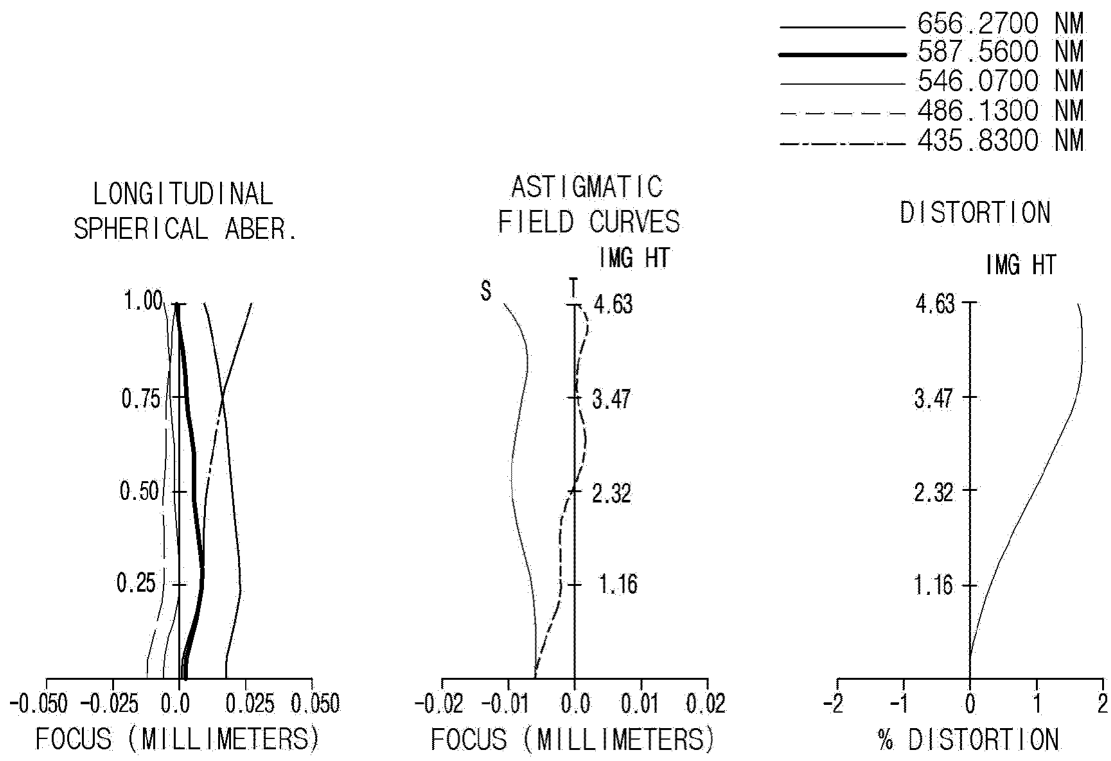
656.2700 NM
587.5600 NM
546.0700 NM
486.1300 NM
435.8300 NM
LONGITUDINAL SPHERICAL ABER.
1.00
0.75
0.50
0.25
-0.050 -0.025 0.0 0.025 0.050
FOCUS (MILLIMETERS)
ASTIGMATIC FIELD CURVES
IMG HT
S
T
4.63
3.47
2.32
1.16
-0.02 -0.01 0.0 0.01 0.02
FOCUS (MILLIMETERS)
DISTORTION
IMG HT
4.63
3.47
2.32
1.16
-2 -1 0 1 2
% DISTORTION

FIG. 65

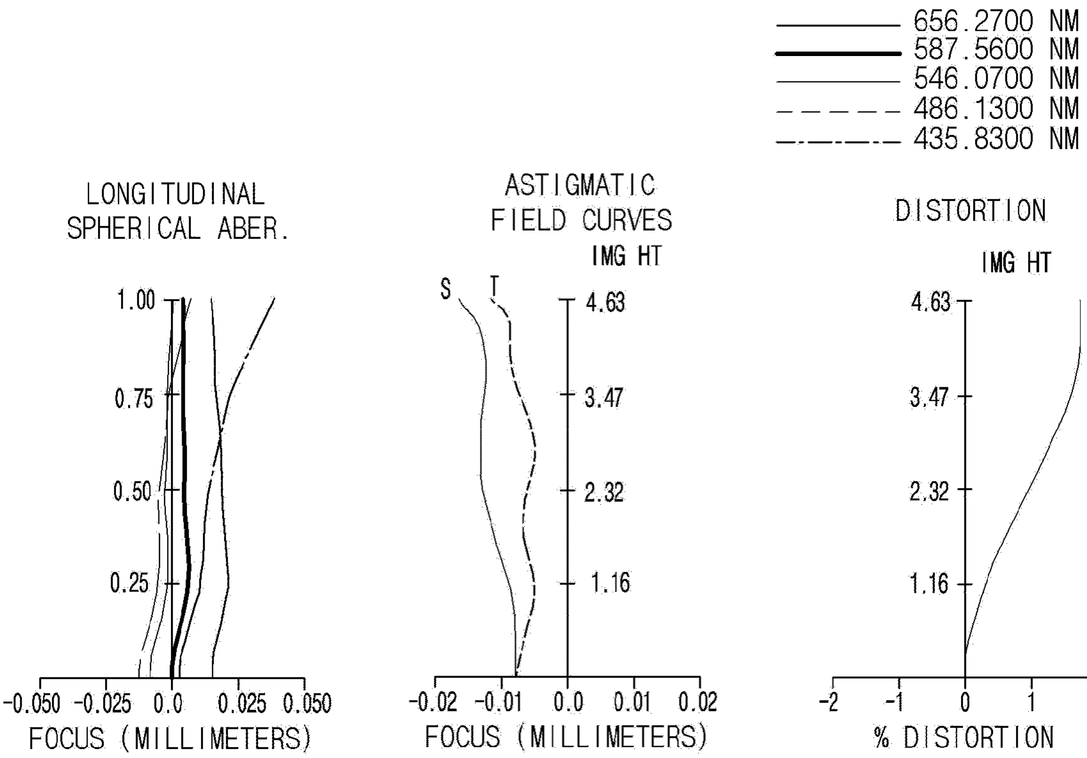
656.2700 NM
587.5600 NM
546.0700 NM
486.1300 NM
435.8300 NM
LONGITUDINAL
SPHERICAL ABER.
1.00
0.75
0.50
0.25
-0.050 -0.025 0.0 0.025 0.050
FOCUS (MILLIMETERS)
ASTIGMATIC
FIELD CURVES
IMG HT
S T
4.63
3.47
2.32
1.16
-0.02 -0.01 0.0 0.01 0.02
FOCUS (MILLIMETERS)
DISTORTION
IMG HT
4.63
3.47
2.32
1.16
-2 -1 0 1 2
% DISTORTION

FIG. 66

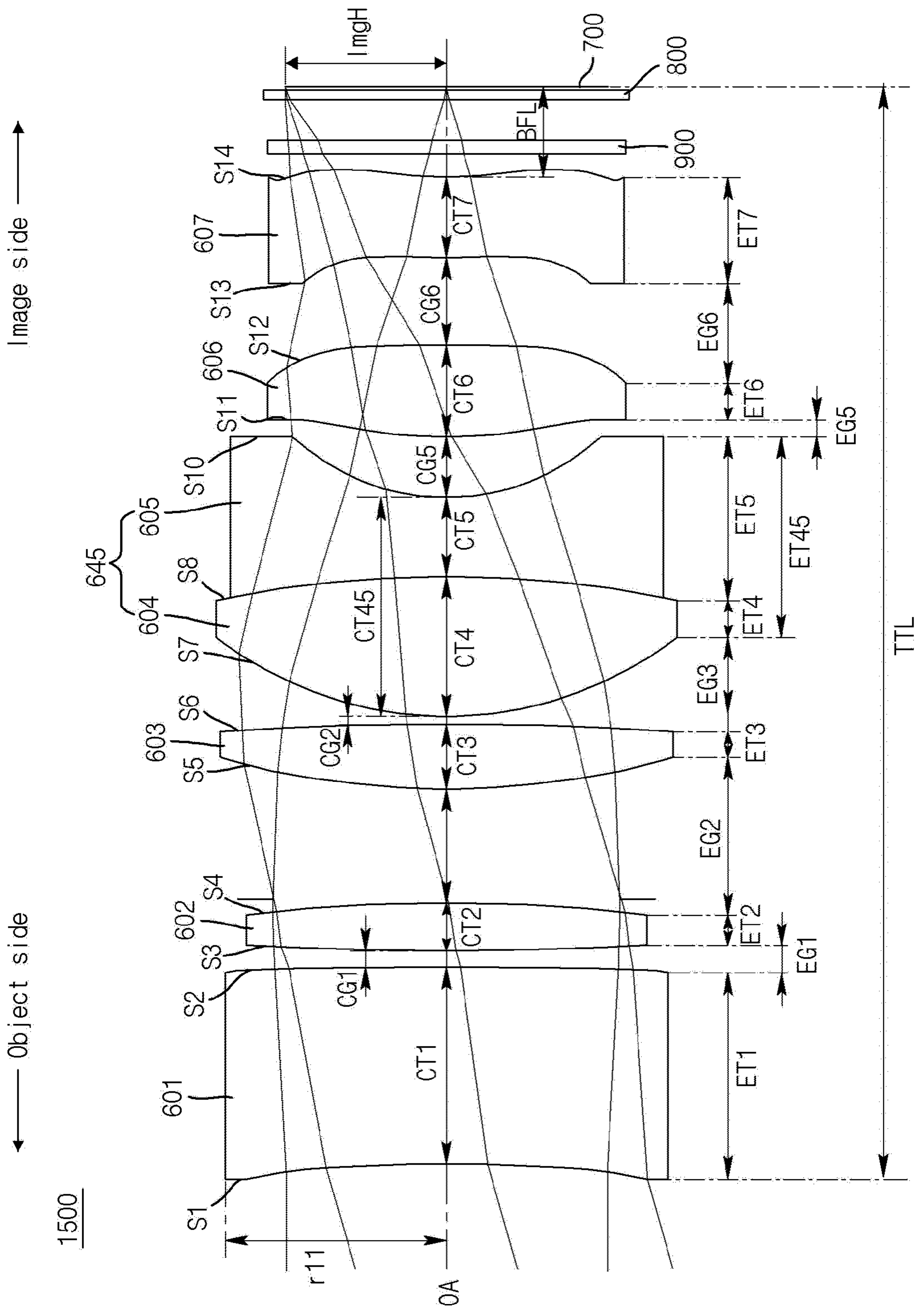
Image side
Object side
1500
ImgH
700
800
900
BFL
S1
S2
S3
S4
S5
S6
S7
S8
S10
S11
S12
S13
S14
601
602
603
604
605
606
607
645
CT1
CT2
CT3
CT4
CT5
CT6
CT7
CT45
CG1
CG2
CG5
CG6
ET1
ET2
ET3
ET4
ET5
ET6
ET7
ET45
EG1
EG2
EG3
EG5
EG6
TTL
r11
OA

FIG. 67

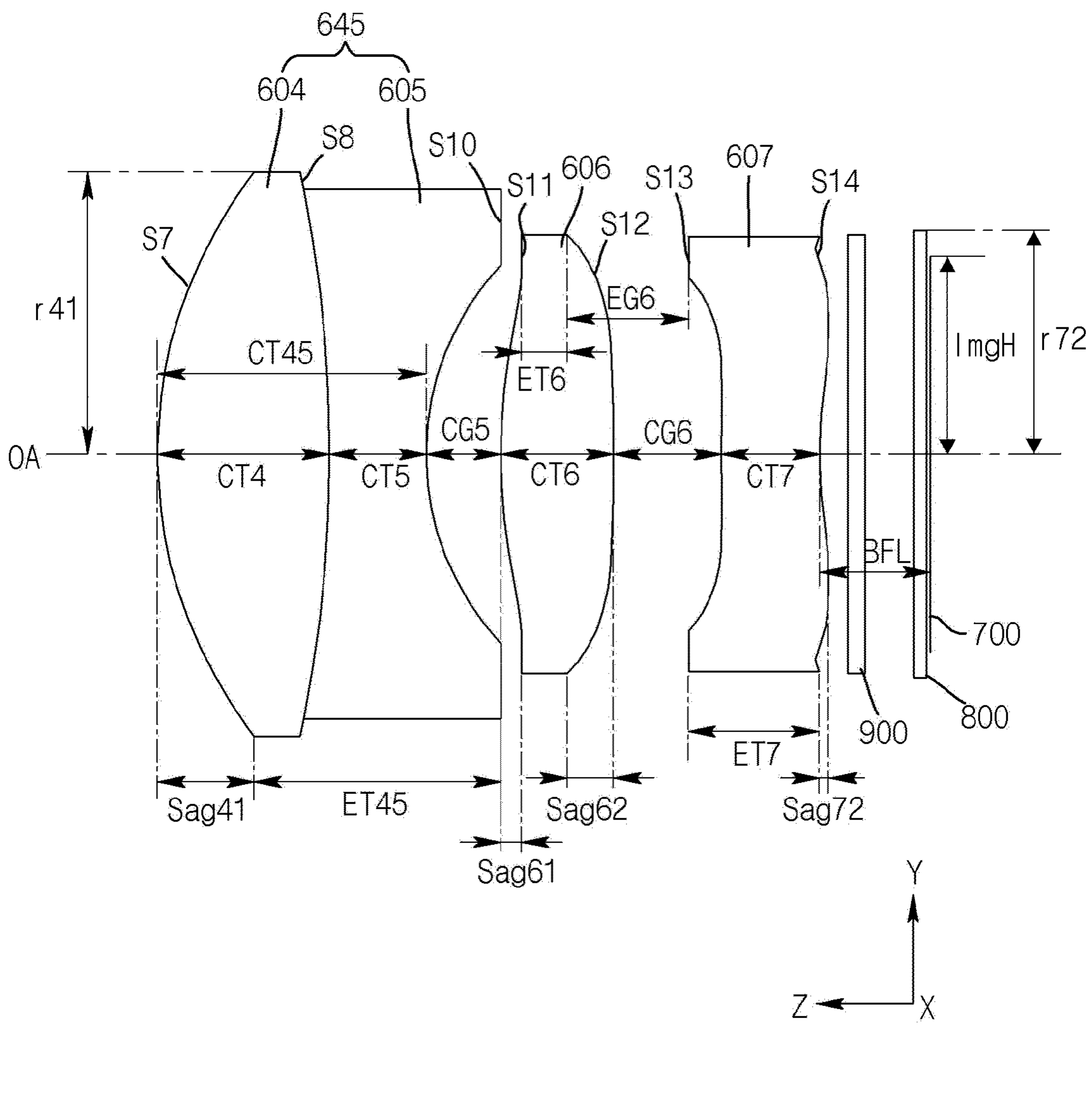
645
604
605
S8
S10
S11
606
S13
607
S14
S12
S7
r41
EG6
CT45
ET6
ImgH
r72
CG5
CG6
OA
CT4
CT5
CT6
CT7
BFL
700
800
900
ET7
Sag41
ET45
Sag62
Sag72
Sag61
Y
Z
X

FIG. 68

| | L1 | | L6 | | L7 | |
|---|---|---|---|---|---|---|
| | S1 | S2 | S1 | S2 | S1 | S2 |
| Y | -53 | -691.337 | 14.42045 | 1230.902 | 29.56331 | 11.86295 |
| K | -99 | 99 | -11.6856 | 99 | 4.239783 | 4.822953 |
| A | -1.92E-04 | -5.25E-05 | 8.63E-05 | -1.35E-03 | -3.36E-03 | -2.55E-03 |
| B | 7.82E-07 | -4.83E-06 | -2.32E-06 | 2.95E-05 | 2.32E-05 | -8.92E-05 |
| C | 3.32E-07 | 1.15E-06 | -1.88E-06 | -2.98E-06 | -1.15E-05 | 1.67E-05 |
| D | -5.48E-08 | -1.39E-07 | 2.26E-07 | 1.52E-07 | 2.06E-06 | -1.95E-06 |
| E | 4.70E-09 | 1.01E-08 | -2.49E-08 | -4.32E-09 | -1.62E-07 | 1.52E-07 |
| F | -2.35E-10 | -4.53E-10 | 1.90E-09 | 4.95E-11 | 6.74E-10 | -8.29E-09 |
| G | 6.87E-12 | 1.21E-11 | -8.83E-11 | -4.26E-12 | 8.09E-10 | 3.01E-10 |
| H | -1.08E-13 | -1.78E-13 | 2.04E-12 | 1.50E-13 | -5.29E-11 | -6.49E-12 |
| J | 7.14E-16 | 1.10E-15 | -1.76E-14 | -3.20E-16 | 1.08E-12 | 5.92E-14 |

FIG. 69

| Y(Height, mm) | 1-2 | 2-3 | 3-4 | 4-5 | 5-6 | 6-7 | 7-8 | 8-9 | 9-10 | 10-11 | 11-12 | 12-13 | 13-14 | 14-15 |
|---|---|---|---|---|---|---|---|---|---|---|---|---|---|---|
| | L1 | Air | L2 | Air | L3 | Air | L4 | Air | L5 | Air | L6 | Air | L7 | Air-filter |
| 0 | 5.248 | 0.456 | 1.300 | 3.023 | 1.783 | 0.200 | 3.757 | 0.000 | 2.139 | 1.609 | 2.474 | 2.367 | 2.146 | 0.599 |
| 0.2 | 5.249 | 0.456 | 1.299 | 3.025 | 1.782 | 0.202 | 3.755 | 0.000 | 2.142 | 1.608 | 2.472 | 2.367 | 2.147 | 0.597 |
| 0.4 | 5.250 | 0.456 | 1.298 | 3.028 | 1.778 | 0.208 | 3.748 | 0.000 | 2.153 | 1.603 | 2.468 | 2.369 | 2.150 | 0.592 |
| 0.6 | 5.252 | 0.458 | 1.295 | 3.034 | 1.773 | 0.218 | 3.736 | 0.000 | 2.170 | 1.596 | 2.461 | 2.372 | 2.155 | 0.584 |
| 0.8 | 5.254 | 0.459 | 1.291 | 3.043 | 1.766 | 0.232 | 3.720 | 0.000 | 2.195 | 1.585 | 2.452 | 2.376 | 2.162 | 0.573 |
| 1 | 5.257 | 0.461 | 1.286 | 3.053 | 1.757 | 0.249 | 3.698 | 0.000 | 2.226 | 1.571 | 2.439 | 2.381 | 2.172 | 0.559 |
| 1.2 | 5.261 | 0.463 | 1.279 | 3.067 | 1.746 | 0.271 | 3.672 | 0.000 | 2.265 | 1.554 | 2.423 | 2.386 | 2.184 | 0.543 |
| 1.4 | 5.263 | 0.465 | 1.276 | 3.074 | 1.739 | 0.284 | 3.658 | 0.000 | 2.287 | 1.544 | 2.413 | 2.389 | 2.191 | 0.534 |
| 1.6 | 5.268 | 0.468 | 1.268 | 3.091 | 1.725 | 0.312 | 3.625 | 0.000 | 2.336 | 1.521 | 2.392 | 2.393 | 2.208 | 0.515 |
| 1.8 | 5.274 | 0.472 | 1.259 | 3.110 | 1.708 | 0.343 | 3.587 | 0.000 | 2.393 | 1.495 | 2.367 | 2.397 | 2.228 | 0.496 |
| 2 | 5.281 | 0.476 | 1.248 | 3.132 | 1.690 | 0.379 | 3.544 | 0.000 | 2.457 | 1.464 | 2.338 | 2.399 | 2.251 | 0.476 |
| 2.2 | 5.288 | 0.480 | 1.237 | 3.156 | 1.669 | 0.419 | 3.497 | 0.000 | 2.530 | 1.429 | 2.305 | 2.399 | 2.278 | 0.457 |
| 2.4 | 5.296 | 0.486 | 1.224 | 3.182 | 1.647 | 0.464 | 3.444 | 0.000 | 2.610 | 1.390 | 2.267 | 2.396 | 2.309 | 0.439 |
| 2.6 | 5.305 | 0.491 | 1.210 | 3.211 | 1.622 | 0.512 | 3.387 | 0.000 | 2.698 | 1.345 | 2.225 | 2.388 | 2.346 | 0.424 |
| 2.8 | 5.315 | 0.498 | 1.195 | 3.242 | 1.595 | 0.565 | 3.325 | 0.000 | 2.794 | 1.295 | 2.177 | 2.375 | 2.388 | 0.411 |
| 3 | 5.325 | 0.505 | 1.179 | 3.276 | 1.566 | 0.621 | 3.257 | 0.000 | 2.899 | 1.238 | 2.124 | 2.356 | 2.436 | 0.403 |
| 3.2 | 5.337 | 0.513 | 1.162 | 3.312 | 1.535 | 0.683 | 3.185 | 0.000 | 3.013 | 1.175 | 2.065 | 2.330 | 2.492 | 0.400 |
| 3.4 | 5.349 | 0.521 | 1.144 | 3.350 | 1.502 | 0.748 | 3.107 | 0.000 | 3.136 | 1.103 | 2.000 | 2.296 | 2.555 | 0.403 |
| 3.6 | 5.362 | 0.530 | 1.124 | 3.391 | 1.467 | 0.818 | 3.025 | 0.000 | 3.268 | 1.023 | 1.929 | 2.253 | 2.628 | 0.413 |
| 3.8 | 5.377 | 0.540 | 1.104 | 3.435 | 1.430 | 0.893 | 2.937 | 0.000 | 3.411 | 0.931 | 1.851 | 2.200 | 2.710 | 0.431 |
| 4 | 5.392 | 0.550 | 1.082 | 3.481 | 1.391 | 0.972 | 2.843 | 0.000 | 3.565 | 0.827 | 1.766 | 2.137 | 2.805 | 0.458 |
| 4.2 | 5.409 | 0.561 | 1.059 | 3.529 | 1.349 | 1.056 | 2.744 | 0.000 | 3.730 | 0.705 | 1.675 | 2.065 | 2.910 | 0.495 |
| 4.4 | 5.426 | 0.573 | 1.035 | 3.580 | 1.306 | 1.144 | 2.640 | 0.000 | 3.907 | 0.562 | 1.579 | 2.813 | | 0.544 |
| 4.6 | 5.445 | 0.586 | 1.009 | 3.633 | 1.260 | 1.238 | 2.530 | 0.000 | 2.438 | | | 2.919 | | 0.604 |
| 4.8 | 5.465 | 0.599 | 0.983 | 3.689 | 1.212 | 1.336 | 2.414 | 0.000 | 2.465 | | | | | |
| 5 | 5.486 | 0.614 | 0.955 | 3.747 | 1.162 | 1.440 | 2.293 | 0.000 | 2.494 | | | | | |
| 5.2 | 5.508 | 0.629 | 0.926 | 3.808 | 1.110 | 1.548 | 2.165 | 0.000 | 2.523 | | | | | |
| 5.4 | 5.532 | 0.514 | | 3.598 | 1.056 | 1.662 | 2.031 | 0.000 | 2.554 | | | | | |
| 5.6 | 5.622 | | | 3.643 | 0.999 | 1.782 | 1.891 | 0.000 | 2.587 | | | | | |
| 5.8 | 5.656 | | | 3.690 | 0.940 | 1.907 | 2.226 | 0.000 | | | | | | |
| 6 | | | | | | 1.850 | 2.107 | 0.000 | | | | | | |

FIG. 70

| | sag | | | | | | | | | | | | | |
|---|---|---|---|---|---|---|---|---|---|---|---|---|---|---|
| Y(Height, mm) | | | | | | | | | | | | | | |
| | L1S1 | L1S2 | L2S1 | L2S2 | L3S1 | L3S2 | L4S1 | L4S2 | L5S1 | L5S2 | L6S1 | L6S2 | L7S1 | L7S2 |
| 0 | 0.000 | 0.000 | 0.000 | 0.000 | 0.000 | 0.000 | 0.000 | 0.000 | 0.000 | 0.000 | 0.000 | 0.000 | 0.000 | 0.000 |
| 0.2 | 0.000 | 0.000 | 0.000 | 0.000 | 0.001 | 0.000 | 0.002 | -0.001 | -0.001 | 0.003 | 0.001 | 0.000 | 0.001 | 0.002 |
| 0.4 | -0.002 | 0.000 | 0.001 | -0.002 | 0.003 | -0.001 | 0.007 | -0.002 | -0.002 | 0.012 | 0.006 | 0.000 | 0.003 | 0.007 |
| 0.6 | -0.003 | 0.000 | 0.002 | -0.003 | 0.007 | -0.002 | 0.016 | -0.005 | -0.005 | 0.026 | 0.012 | 0.000 | 0.006 | 0.015 |
| 0.8 | -0.006 | 0.000 | 0.003 | -0.006 | 0.013 | -0.003 | 0.028 | -0.009 | -0.009 | 0.046 | 0.022 | 0.000 | 0.009 | 0.026 |
| 1 | -0.010 | -0.001 | 0.005 | -0.010 | 0.020 | -0.005 | 0.044 | -0.015 | -0.015 | 0.073 | 0.034 | -0.001 | 0.014 | 0.040 |
| 1.2 | -0.014 | -0.001 | 0.007 | -0.014 | 0.029 | -0.008 | 0.063 | -0.021 | -0.021 | 0.105 | 0.049 | -0.002 | 0.017 | 0.056 |
| 1.4 | -0.016 | -0.001 | 0.008 | -0.016 | 0.034 | -0.009 | 0.075 | -0.025 | -0.025 | 0.123 | 0.058 | -0.003 | 0.019 | 0.065 |
| 1.6 | -0.022 | -0.002 | 0.010 | -0.022 | 0.046 | -0.012 | 0.099 | -0.033 | -0.033 | 0.164 | 0.076 | -0.006 | 0.021 | 0.084 |
| 1.8 | -0.028 | -0.003 | 0.013 | -0.028 | 0.059 | -0.016 | 0.128 | -0.043 | -0.043 | 0.212 | 0.097 | -0.010 | 0.021 | 0.103 |
| 2 | -0.035 | -0.003 | 0.017 | -0.035 | 0.073 | -0.020 | 0.160 | -0.053 | -0.053 | 0.266 | 0.121 | -0.015 | 0.018 | 0.123 |
| 2.2 | -0.044 | -0.004 | 0.020 | -0.043 | 0.089 | -0.024 | 0.196 | -0.065 | -0.065 | 0.326 | 0.146 | -0.023 | 0.010 | 0.142 |
| 2.4 | -0.053 | -0.006 | 0.025 | -0.051 | 0.107 | -0.029 | 0.235 | -0.078 | -0.078 | 0.393 | 0.174 | -0.033 | -0.004 | 0.160 |
| 2.6 | -0.063 | -0.007 | 0.029 | -0.061 | 0.127 | -0.034 | 0.278 | -0.092 | -0.092 | 0.467 | 0.203 | -0.046 | -0.025 | 0.175 |
| 2.8 | -0.074 | -0.008 | 0.034 | -0.071 | 0.148 | -0.039 | 0.325 | -0.107 | -0.107 | 0.548 | 0.233 | -0.063 | -0.055 | 0.187 |
| 3 | -0.087 | -0.010 | 0.039 | -0.082 | 0.171 | -0.045 | 0.376 | -0.124 | -0.124 | 0.636 | 0.265 | -0.085 | -0.095 | 0.196 |
| 3.2 | -0.100 | -0.012 | 0.045 | -0.093 | 0.195 | -0.052 | 0.431 | -0.142 | -0.142 | 0.732 | 0.298 | -0.111 | -0.147 | 0.199 |
| 3.4 | -0.115 | -0.015 | 0.051 | -0.106 | 0.221 | -0.059 | 0.489 | -0.161 | -0.161 | 0.836 | 0.331 | -0.143 | -0.214 | 0.196 |
| 3.6 | -0.131 | -0.017 | 0.057 | -0.119 | 0.249 | -0.066 | 0.552 | -0.181 | -0.181 | 0.949 | 0.363 | -0.183 | -0.296 | 0.186 |
| 3.8 | -0.149 | -0.020 | 0.064 | -0.133 | 0.279 | -0.074 | 0.619 | -0.202 | -0.202 | 1.071 | 0.393 | -0.230 | -0.397 | 0.168 |
| 4 | -0.168 | -0.024 | 0.071 | -0.148 | 0.310 | -0.082 | 0.690 | -0.224 | -0.224 | 1.202 | 0.419 | -0.289 | -0.519 | 0.141 |
| 4.2 | -0.188 | -0.028 | 0.078 | -0.163 | 0.342 | -0.091 | 0.765 | -0.248 | -0.248 | 1.343 | 0.439 | -0.359 | -0.661 | 0.103 |
| 4.4 | -0.209 | -0.032 | 0.086 | -0.180 | 0.377 | -0.100 | 0.844 | -0.273 | -0.273 | 1.496 | 0.449 | -0.446 | | 0.055 |
| 4.6 | -0.233 | -0.036 | 0.094 | -0.197 | 0.413 | -0.110 | 0.928 | -0.299 | -0.299 | | | -0.552 | | -0.005 |
| 4.8 | -0.257 | -0.041 | 0.103 | -0.215 | 0.451 | -0.120 | 1.017 | -0.326 | -0.326 | | | | | |
| 5 | -0.284 | -0.046 | 0.111 | -0.233 | 0.491 | -0.130 | 1.110 | -0.355 | -0.355 | | | | | |
| 5.2 | -0.312 | -0.052 | 0.121 | -0.253 | 0.532 | -0.141 | 1.208 | -0.385 | -0.385 | | | | | |
| 5.4 | -0.342 | -0.058 | | | 0.575 | -0.152 | 1.310 | -0.416 | -0.416 | | | | | |
| 5.6 | -0.374 | | | | 0.620 | -0.164 | 1.418 | -0.448 | -0.448 | | | | | |
| 5.8 | -0.407 | | | | 0.666 | -0.176 | 1.531 | | | | | | | |
| 6 | | | | | | | 1.650 | | | | | | | |

FIG. 71

| slope angle | | | | | | | | | | | | | | |
|---|---|---|---|---|---|---|---|---|---|---|---|---|---|---|
| Y(Height, mm) | | | | | | | | | | | | | | |
| | L1S1 | L1S2 | L2S1 | L2S2 | L3S1 | L3S2 | L4S1 | L4S2 | L5S1 | L5S2 | L6S1 | L6S2 | L7S1 | L7S2 |
| 0 | 0.000 | 0.000 | 0.000 | 0.000 | 0.000 | 0.000 | 0.000 | 0.000 | 0.000 | 0.000 | 0.000 | 0.000 | 0.000 | 0.000 |
| 0.2 | -0.162 | -0.013 | 0.080 | -0.167 | 0.348 | -0.093 | 0.756 | -0.253 | -0.253 | 1.240 | 0.596 | 0.006 | 0.288 | 0.723 |
| 0.4 | -0.379 | -0.029 | 0.186 | -0.389 | 0.811 | -0.217 | 1.763 | -0.590 | -0.590 | 2.895 | 1.387 | 0.003 | 0.645 | 1.669 |
| 0.6 | -0.599 | -0.048 | 0.293 | -0.611 | 1.275 | -0.341 | 2.772 | -0.927 | -0.927 | 4.553 | 2.171 | -0.026 | 0.938 | 2.572 |
| 0.8 | -0.821 | -0.068 | 0.399 | -0.833 | 1.739 | -0.465 | 3.781 | -1.264 | -1.264 | 6.214 | 2.943 | -0.094 | 1.130 | 3.407 |
| 1 | -1.049 | -0.090 | 0.505 | -1.056 | 2.203 | -0.589 | 4.791 | -1.601 | -1.601 | 7.881 | 3.700 | -0.215 | 1.186 | 4.148 |
| 1.2 | -1.282 | -0.116 | 0.612 | -1.278 | 2.667 | -0.713 | 5.803 | -1.938 | -1.938 | 9.554 | 4.439 | -0.401 | 1.068 | 4.767 |
| 1.4 | -1.400 | -0.130 | 0.665 | -1.389 | 2.899 | -0.775 | 6.310 | -2.107 | -2.107 | 10.394 | 4.800 | -0.522 | 0.932 | 5.022 |
| 1.6 | -1.644 | -0.162 | 0.771 | -1.611 | 3.363 | -0.899 | 7.324 | -2.444 | -2.444 | 12.080 | 5.502 | -0.829 | 0.482 | 5.410 |
| 1.8 | -1.896 | -0.199 | 0.878 | -1.834 | 3.828 | -1.023 | 8.341 | -2.781 | -2.781 | 13.776 | 6.175 | -1.229 | -0.239 | 5.614 |
| 2 | -2.157 | -0.242 | 0.984 | -2.056 | 4.293 | -1.146 | 9.361 | -3.119 | -3.119 | 15.486 | 6.812 | -1.737 | -1.270 | 5.616 |
| 2.2 | -2.428 | -0.289 | 1.090 | -2.278 | 4.758 | -1.270 | 10.384 | -3.456 | -3.456 | 17.209 | 7.405 | -2.365 | -2.645 | 5.397 |
| 2.4 | -2.711 | -0.343 | 1.197 | -2.501 | 5.223 | -1.394 | 11.410 | -3.794 | -3.794 | 18.949 | 7.946 | -3.127 | -4.398 | 4.941 |
| 2.6 | -3.005 | -0.402 | 1.303 | -2.723 | 5.688 | -1.518 | 12.440 | -4.132 | -4.132 | 20.708 | 8.423 | -4.040 | -6.555 | 4.235 |
| 2.8 | -3.313 | -0.468 | 1.410 | -2.946 | 6.154 | -1.642 | 13.474 | -4.470 | -4.470 | 22.486 | 8.819 | -5.122 | -9.134 | 3.265 |
| 3 | -3.634 | -0.540 | 1.516 | -3.168 | 6.621 | -1.766 | 14.512 | -4.808 | -4.808 | 24.288 | 9.113 | -6.395 | -12.139 | 2.020 |
| 3.2 | -3.970 | -0.619 | 1.622 | -3.391 | 7.088 | -1.890 | 15.555 | -5.146 | -5.146 | 26.116 | 9.276 | -7.884 | -15.551 | 0.492 |
| 3.4 | -4.320 | -0.704 | 1.729 | -3.613 | 7.556 | -2.014 | 16.604 | -5.485 | -5.485 | 27.973 | 9.264 | -9.625 | -19.329 | -1.323 |
| 3.6 | -4.685 | -0.796 | 1.835 | -3.837 | 8.024 | -2.138 | 17.658 | -5.823 | -5.823 | 29.862 | 9.010 | -11.666 | -23.433 | -3.417 |
| 3.8 | -5.065 | -0.893 | 1.942 | -4.059 | 8.493 | -2.262 | 18.718 | -6.162 | -6.162 | 31.786 | 8.396 | -14.079 | -27.841 | -5.778 |
| 4 | -5.460 | -0.994 | 2.048 | -4.282 | 8.962 | -2.386 | 19.786 | -6.501 | -6.501 | 33.755 | 7.224 | -16.956 | -32.427 | -8.387 |
| 4.2 | -5.871 | -1.100 | 2.155 | -4.505 | 9.431 | -2.511 | 20.860 | -6.841 | -6.841 | 35.769 | 5.172 | -20.402 | -36.244 | -11.247 |
| 4.4 | -6.297 | -1.209 | 2.261 | -4.728 | 9.901 | -2.634 | 21.942 | -7.180 | -7.180 | 37.836 | 1.754 | -24.484 | | -14.374 |
| 4.6 | -6.738 | -1.322 | 2.367 | -4.951 | 10.372 | -2.759 | 23.032 | -7.520 | -7.520 | | | -29.137 | | -17.562 |
| 4.8 | -7.193 | -1.438 | 2.474 | -5.174 | 10.844 | -2.882 | 24.132 | -7.861 | -7.861 | | | | | |
| 5 | -7.660 | -1.554 | 2.581 | -5.397 | 11.316 | -3.007 | 25.244 | -8.200 | -8.200 | | | | | |
| 5.2 | -8.137 | -1.672 | 2.687 | -5.620 | 11.790 | -3.131 | 26.358 | -8.541 | -8.541 | | | | | |
| 5.4 | -8.627 | -1.806 | | | 12.264 | -3.255 | 27.492 | -8.882 | -8.882 | | | | | |
| 5.6 | -9.139 | | | | 12.738 | -3.379 | 28.635 | -9.224 | -9.224 | | | | | |
| 5.8 | -9.674 | | | | 13.214 | -3.503 | 29.787 | | | | | | | |
| 6 | | | | | | | 30.951 | | | | | | | |

FIG. 72

| CRA Data | | | |
|---|---|---|---|
| Field | Room temperature | Low temperature | High temperature |
| 0 | 0.0 | 0.0 | 0.0 |
| 0.1 | 2.3 | 2.3 | 2.3 |
| 0.2 | 4.6 | 4.6 | 4.6 |
| 0.3 | 6.9 | 7.0 | 6.9 |
| 0.4 | 9.2 | 9.3 | 9.2 |
| 0.5 | 11.5 | 11.5 | 11.4 |
| 0.6 | 13.6 | 13.7 | 13.5 |
| 0.7 | 15.5 | 15.6 | 15.5 |
| 0.8 | 17.1 | 17.1 | 17.0 |
| 0.9 | 18.3 | 18.3 | 18.2 |
| 1 | 19.0 | 19.0 | 19.0 |

FIG. 73

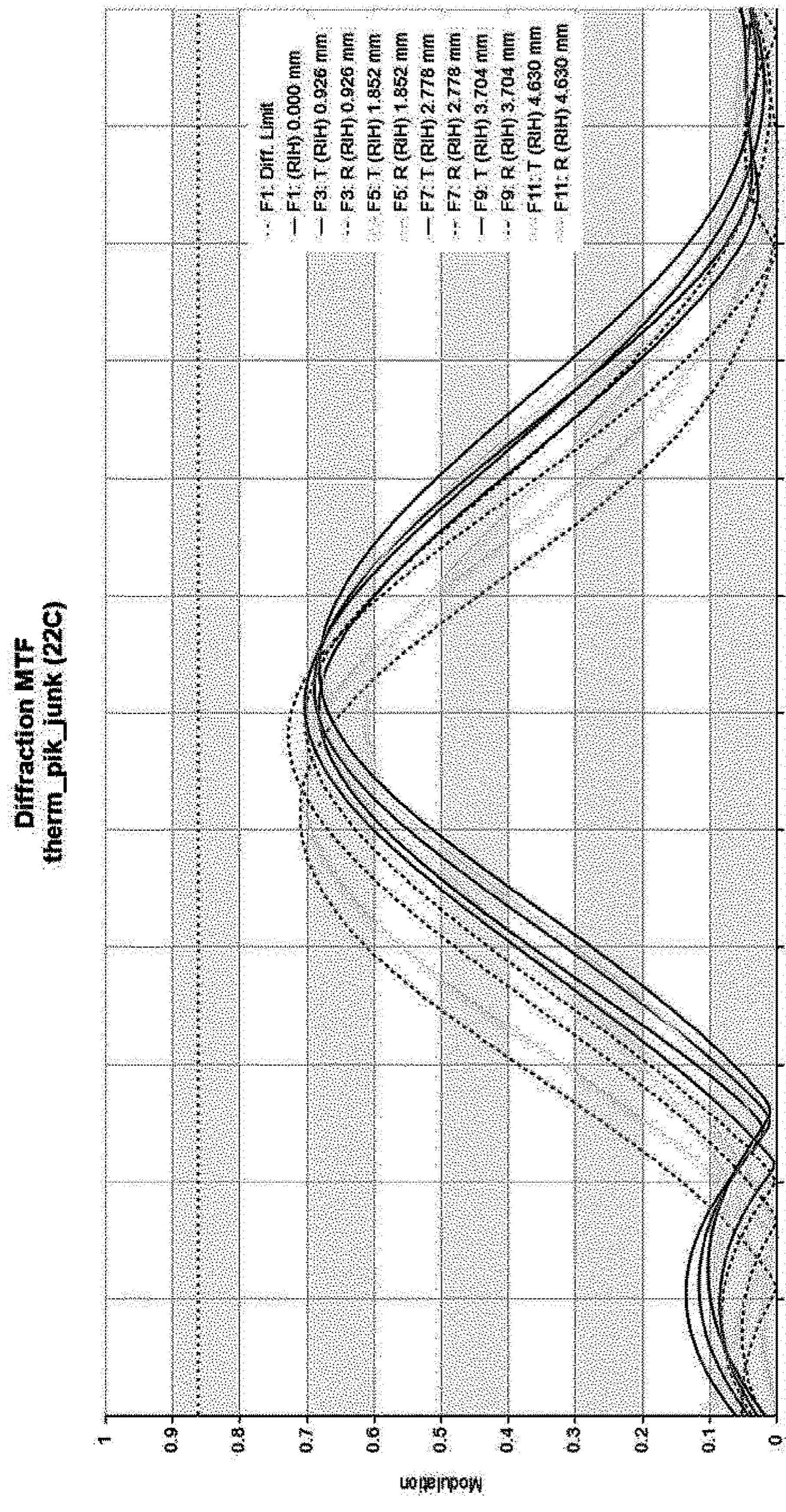
Diffraction MTF
therm_pik_junk (22C)
F1: Diff. Limit
F1: (RIH) 0.000 mm
F3: T (RIH) 0.926 mm
F3: R (RIH) 0.926 mm
F5: T (RIH) 1.852 mm
F5: R (RIH) 1.852 mm
F7: T (RIH) 2.778 mm
F7: R (RIH) 2.778 mm
F9: T (RIH) 3.704 mm
F9: R (RIH) 3.704 mm
F11: T (RIH) 4.630 mm
F11: R (RIH) 4.630 mm
Modulation
1
0.9
0.8
0.7
0.6
0.5
0.4
0.3
0.2
0.1
0
Defocusing Position (mm)
-0.025
-0.02
-0.015
-0.01
-0.005
0
0.005
0.01
0.015
0.02
0.025

FIG. 74

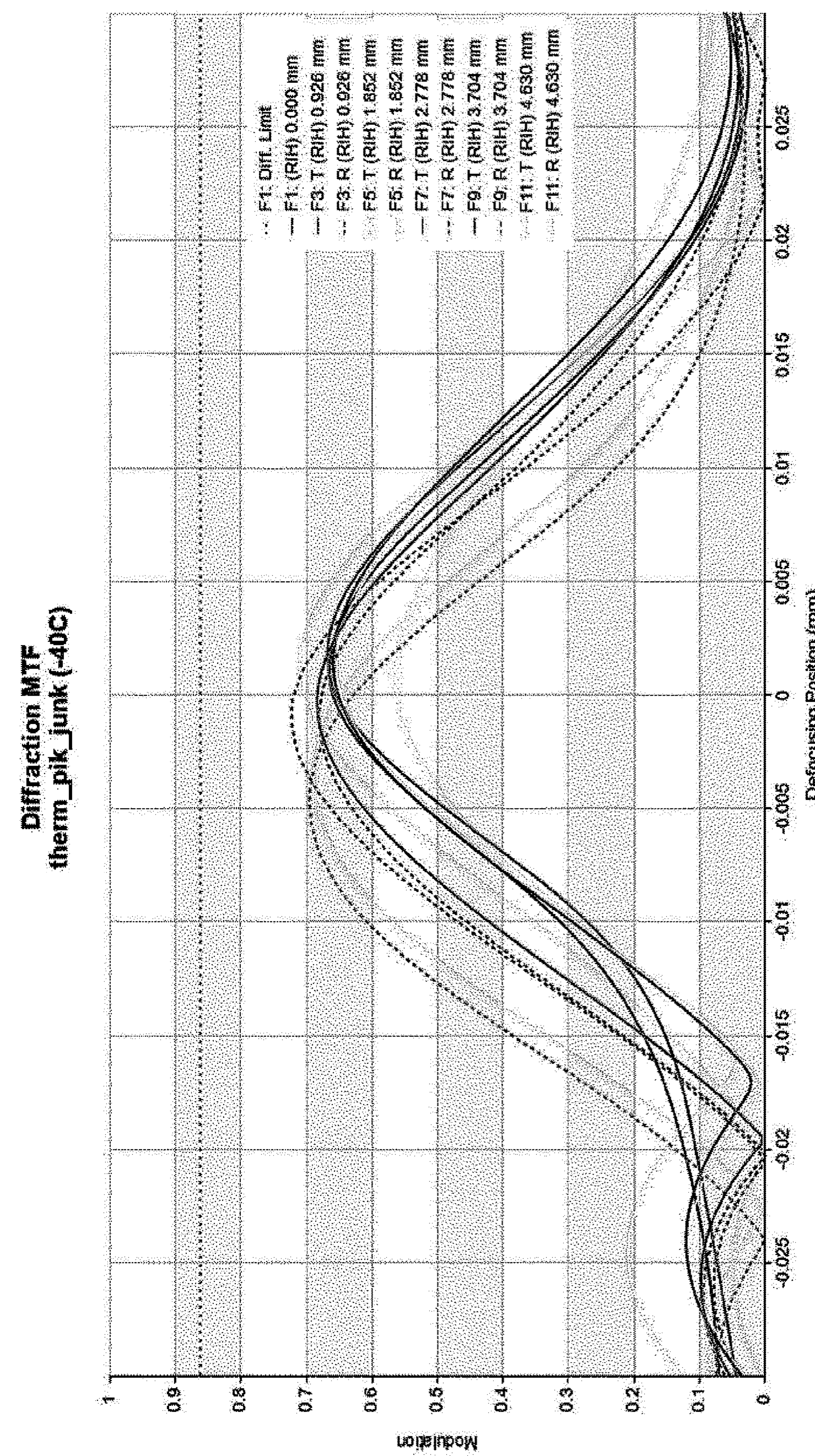
Diffraction MTF
therm_pik_junk (-40C)
F1: Diff. Limit
F1: (RIH) 0.000 mm
F3: T (RIH) 0.926 mm
F3: R (RIH) 0.926 mm
F5: T (RIH) 1.852 mm
F5: R (RIH) 1.852 mm
F7: T (RIH) 2.778 mm
F7: R (RIH) 2.778 mm
F9: T (RIH) 3.704 mm
F9: R (RIH) 3.704 mm
F11: T (RIH) 4.630 mm
F11: R (RIH) 4.630 mm
Modulation
Defocusing Position (mm)

FIG. 75

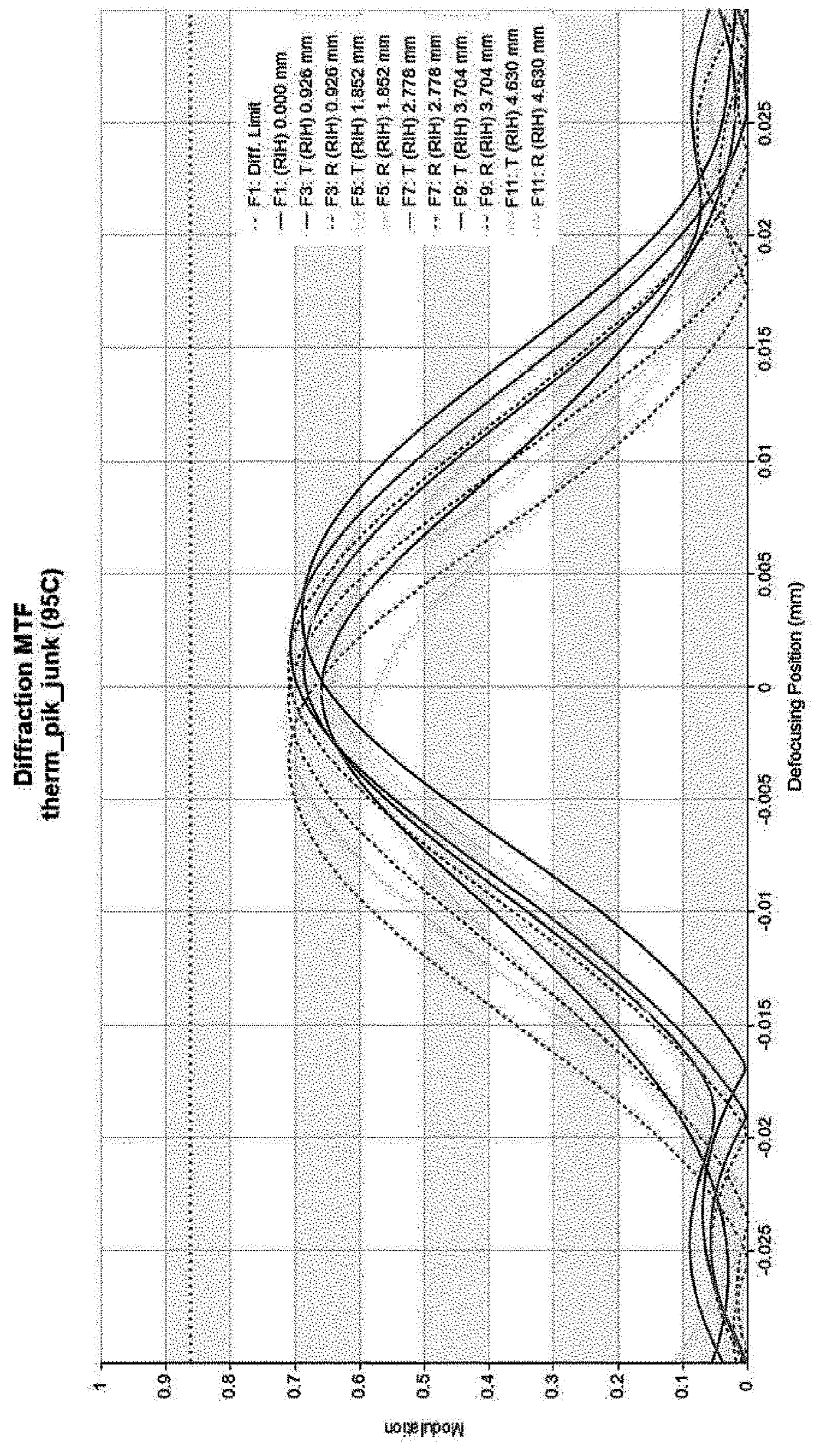
Diffraction MTF
therm_pik_junk (95C)
F1: Diff. Limit
F1: (RIH) 0.000 mm
F3: T (RIH) 0.926 mm
F3: R (RIH) 0.926 mm
F5: T (RIH) 1.852 mm
F5: R (RIH) 1.852 mm
F7: T (RIH) 2.778 mm
F7: R (RIH) 2.778 mm
F9: T (RIH) 3.704 mm
F9: R (RIH) 3.704 mm
F11: T (RIH) 4.630 mm
F11: R (RIH) 4.630 mm
Modulation
1
0.9
0.8
0.7
0.6
0.5
0.4
0.3
0.2
0.1
0
-0.025
-0.02
-0.015
-0.01
-0.005
0
0.005
0.01
0.015
0.02
0.025
Defocusing Position (mm)

FIG. 76

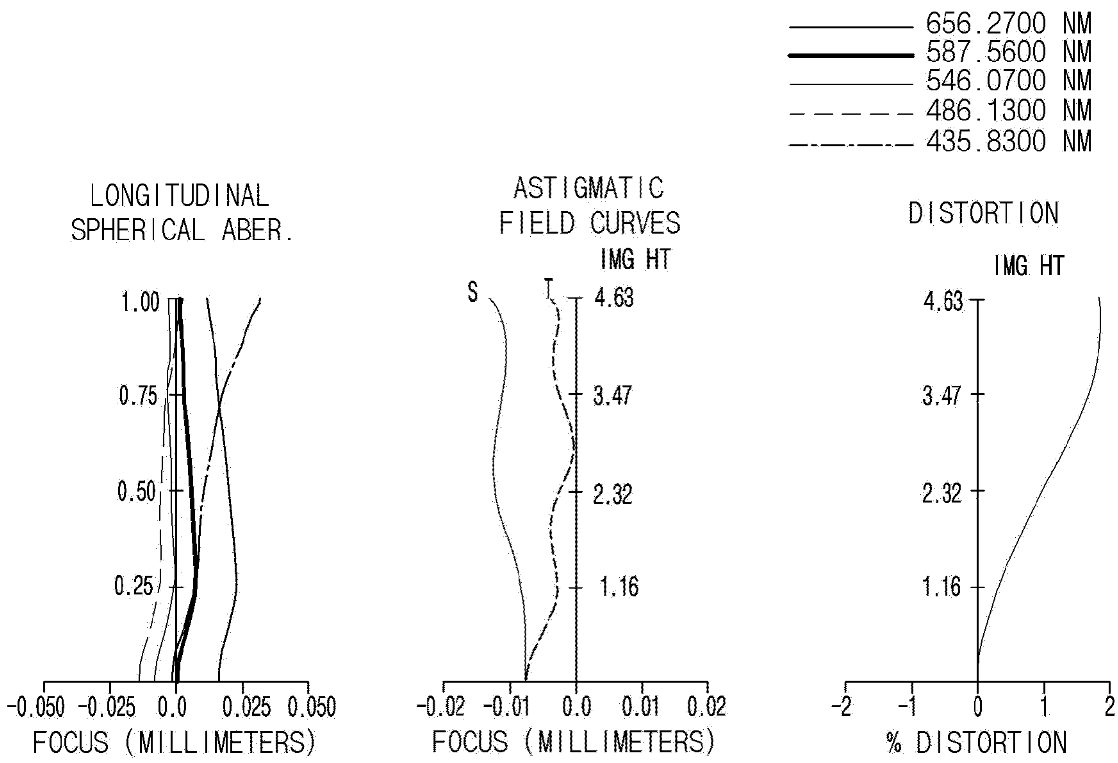
656.2700 NM
587.5600 NM
546.0700 NM
486.1300 NM
435.8300 NM
LONGITUDINAL SPHERICAL ABER.
1.00
0.75
0.50
0.25
-0.050 -0.025 0.0 0.025 0.050
FOCUS (MILLIMETERS)
ASTIGMATIC FIELD CURVES
IMG HT
S
T
4.63
3.47
2.32
1.16
-0.02 -0.01 0.0 0.01 0.02
FOCUS (MILLIMETERS)
DISTORTION
IMG HT
4.63
3.47
2.32
1.16
-2 -1 0 1 2
% DISTORTION

FIG. 77

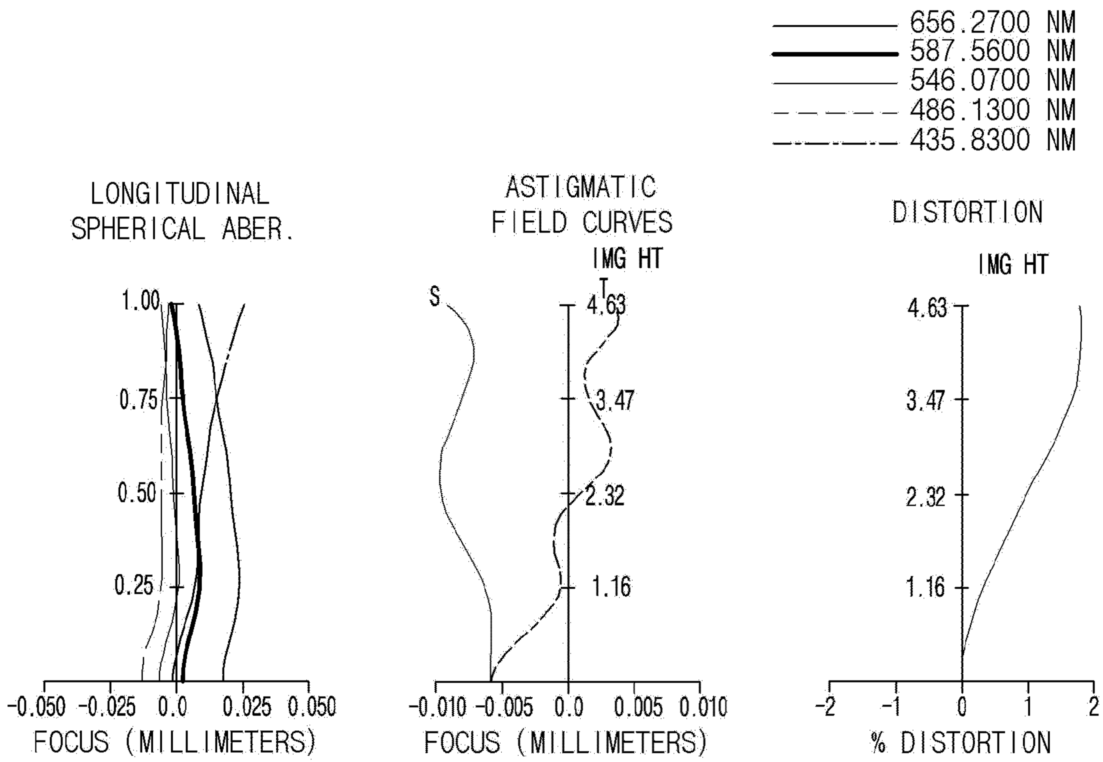
656.2700 NM
587.5600 NM
546.0700 NM
486.1300 NM
435.8300 NM
LONGITUDINAL SPHERICAL ABER.
1.00
0.75
0.50
0.25
-0.050 -0.025 0.0 0.025 0.050
FOCUS (MILLIMETERS)
ASTIGMATIC FIELD CURVES
IMG HT
S
T
4.63
3.47
2.32
1.16
-0.010 -0.005 0.0 0.005 0.010
FOCUS (MILLIMETERS)
DISTORTION
IMG HT
4.63
3.47
2.32
1.16
-2 -1 0 1 2
% DISTORTION

FIG. 78

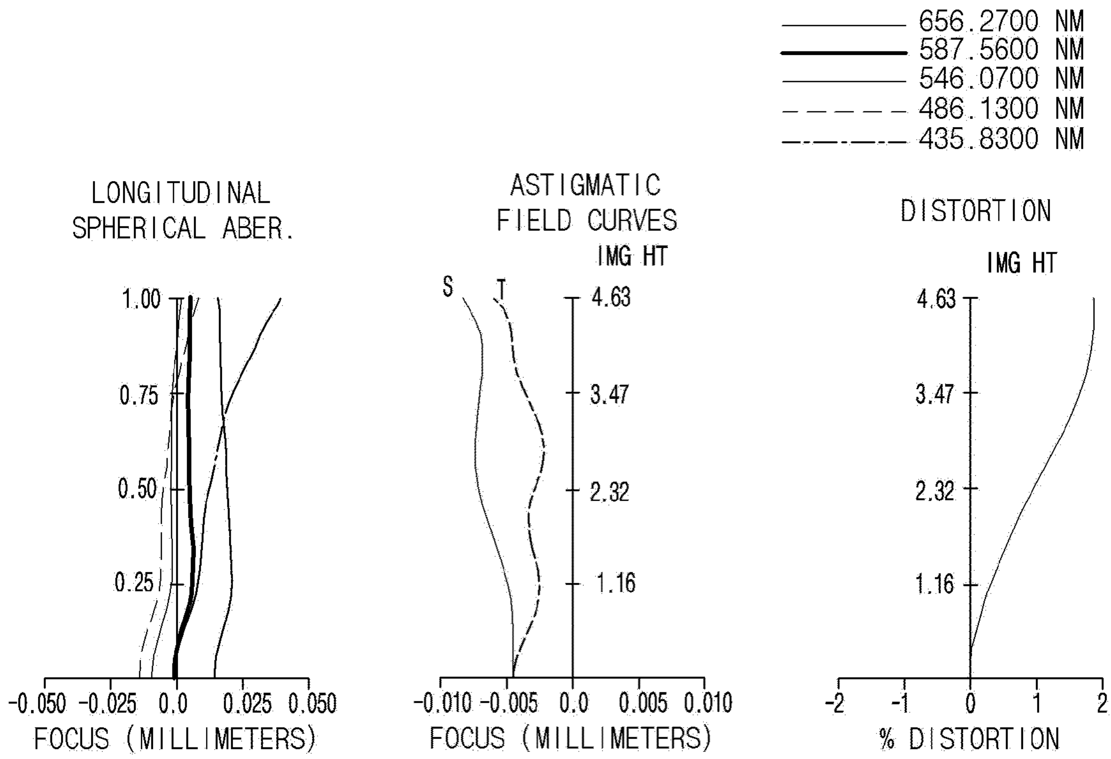

656.2700 NM
587.5600 NM
546.0700 NM
486.1300 NM
435.8300 NM
LONGITUDINAL SPHERICAL ABER.
1.00
0.75
0.50
0.25
-0.050 -0.025 0.0 0.025 0.050
FOCUS (MILLIMETERS)
ASTIGMATIC FIELD CURVES
IMG HT
S
T
4.63
3.47
2.32
1.16
-0.010 -0.005 0.0 0.005 0.010
FOCUS (MILLIMETERS)
DISTORTION
IMG HT
4.63
3.47
2.32
1.16
-2 -1 0 1 2
% DISTORTION


FIG. 79

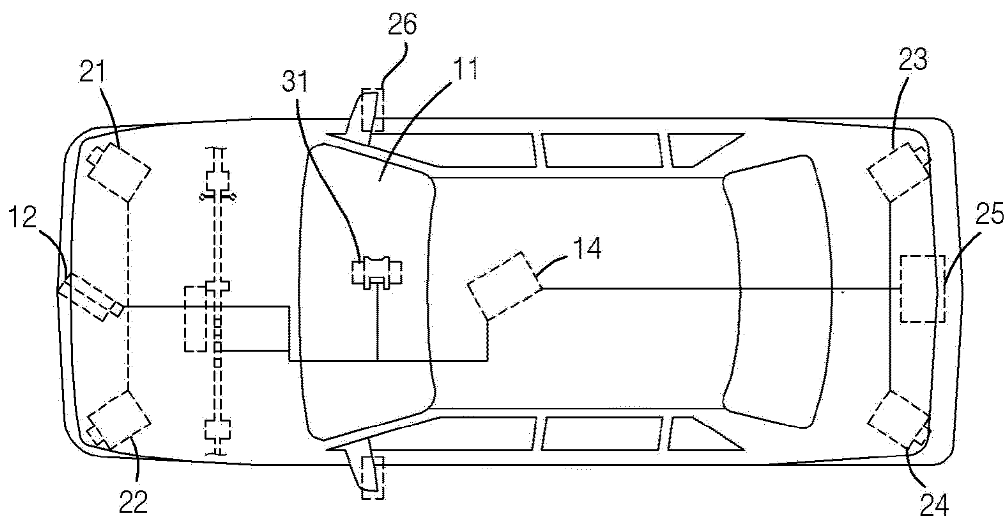

26
21
31
11
23
12
25
14
22
24

## INTERNATIONAL SEARCH REPORT

International application No. **PCT/KR2024/002609**

**A. CLASSIFICATION OF SUBJECT MATTER**

**G02B 9/64**(2006.01)i; **G03B 17/12**(2006.01)i; **H04N 23/55**(2023.01)i; **G02B 13/00**(2006.01)i; **G02B 1/04**(2006.01)i; **G02B 3/00**(2006.01)i

According to International Patent Classification (IPC) or to both national classification and IPC

**B. FIELDS SEARCHED**

Minimum documentation searched (classification system followed by classification symbols)

G02B 9/64(2006.01); G02B 13/00(2006.01); G02B 13/18(2006.01); G02B 15/20(2006.01); G03B 11/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 제7 렌즈(seventh lens), 굴절력(refractive power), 초점거리(focal length), 두께(thickness), 유효경(aperture-stop), 경사각도(slope-angle)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 2011-095328 A (SONY CORP.) 12 May 2011 (2011-05-12)<br>See paragraphs [0213]-[0231] and figures 16-18. | 1,3-4<br>2,5-10 |
| A | CN 113514940 B (JIANGXI LIANCHUANG ELECTRONIC CO., LTD.) 11 February 2022 (2022-02-11)<br>See paragraphs [0087]-[0105] and figure 1. | 1-10 |
| A | KR 10-1837371 B1 (DIOSTECH) 12 March 2018 (2018-03-12)<br>See claim 4 and figure 1a. | 1-10 |
| A | CN 115616737 A (FUJIAN FORECAM OPTICS CO., LTD.) 17 January 2023 (2023-01-17)<br>See claim 1 and figure 1. | 1-10 |
| A | KR 10-2018-0070870 A (LG INNOTEK CO., LTD.) 27 June 2018 (2018-06-27)<br>See claim 1 and figure 1. | 1-10 |

☐ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **10 June 2024** | **10 June 2024** |
| Name and mailing address of the ISA/KR<br>**Korean Intellectual Property Office**<br>**Government Complex-Daejeon Building 4, 189 Cheongsa-ro, Seo-gu, Daejeon 35208**<br>Facsimile No. **+82-42-481-8578** | Authorized officer<br><br>Telephone No. |

Form PCT/ISA/210 (second sheet) (July 2022)

**INTERNATIONAL SEARCH REPORT**
**Information on patent family members**

International application No.
**PCT/KR2024/002609**

| Patent document cited in search report | | | Publication date (day/month/year) | Patent family member(s) | | | Publication date (day/month/year) |
|---|---|---|---|---|---|---|---|
| JP | 2011-095328 | A | 12 May 2011 | CN | 102053350 | A | 11 May 2011 |
| | | | | JP | 2011-095329 | A | 12 May 2011 |
| | | | | JP | 2011-095330 | A | 12 May 2011 |
| | | | | JP | 5499628 | B2 | 21 May 2014 |
| | | | | US | 2011-0096407 | A1 | 28 April 2011 |
| | | | | US | 8289632 | B2 | 16 October 2012 |
| CN | 113514940 | B | 11 February 2022 | CN | 113514940 | A | 19 October 2021 |
| KR | 10-1837371 | B1 | 12 March 2018 | | None | | |
| CN | 115616737 | A | 17 January 2023 | CN | 115616737 | B | 05 April 2024 |
| KR | 10-2018-0070870 | A | 27 June 2018 | | None | | |

Form PCT/ISA/210 (patent family annex) (July 2022)